(19) Europäisches Patentamt
European Patent Office
Office européen des brevets

(11) EP 3 866 095 A1

(12) EUROPEAN PATENT APPLICATION
published in accordance with Art. 153(4) EPC

(43) Date of publication:
**18.08.2021 Bulletin 2021/33**

(21) Application number: **18937316.0**

(22) Date of filing: **27.12.2018**

(51) Int Cl.:
***G06Q 50/10*** *(2012.01)*

(86) International application number:
**PCT/JP2018/048118**

(87) International publication number:
**WO 2020/079861 (23.04.2020 Gazette 2020/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.10.2018 JP 2018194387**

(71) Applicant: **Asanuma Holdings Co., Ltd.**
**Tokyo 102-0084 (JP)**

(72) Inventor: **ASANUMA Katsuhide**
**Fujiyoshida-shi Yamanashi 403-0011 (JP)**

(74) Representative: **Grünecker Patent- und Rechtsanwälte**
**PartG mbB**
**Leopoldstraße 4**
**80802 München (DE)**

# (54) EVENT MANAGEMENT SYSTEM

(57) Provided is a user interface for both event generation and participation.

An event management system includes: an API database that stores an event execution management API and a resource management API; an event database that stores an event execution program and log data; an API registration processing unit; an event generation processing unit; an event registration processing unit; and a communication processing unit. The event management system treats a module as a nested scenario; uses a time zone and a field zone, a transition arrow, an icon, and a descriptor; interprets, in a completed chart diagram, a structure of the time zone, field zone information, an inclusion relationship of contents and a descriptor with respect to the time zone, portion arrangement information of contents and the descriptor on another icon, and a connection relationship of a transition arrow; generates an analysis structure to set as a structure unique to a chart and a module; and realizes chart interpretation equivalent to programming in a markup language.

FIG. 58

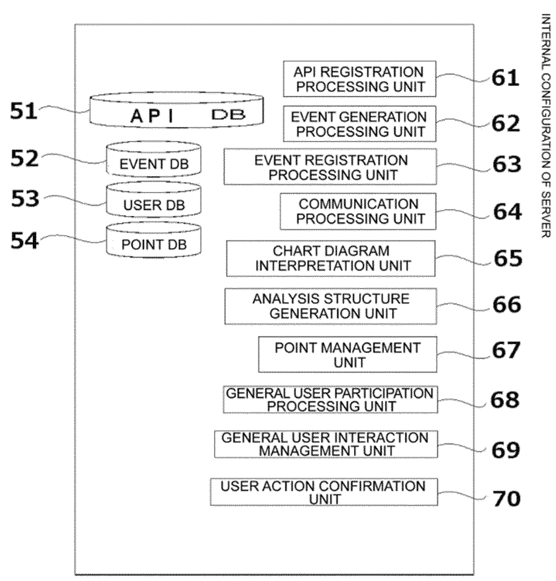


EP 3 866 095 A1

## Description

### Technical Field

The present invention relates to an event management system for organizing and managing an event by using a computer network.

### Background Art

When events are held such as traveling in parties, a group tour, a publication party, a meeting for exchanging congratulatory greetings, a meeting for exchanging business cards, a birthday party, an offline meeting, a quiz competition, a music concert, a live concert, a stamp rally, an orienteering, and a wedding reception, participants have a desire to search for personal information that is statistically highly correlated with personal information such as their own hobbies and preferences. Further, in many cases, the search operation is performed using mobile terminal equipment such as a mobile phone or a smartphone having a relatively small screen. Therefore, it is devised to enable an efficient search even with a small display screen. Patent Literature 1 discloses an information provision system that enables such a search.

In addition, an event management system and a method are desired in which both an organizer and participants of an event are registered as members, the event is held smoothly, and the organizer and the participants can be appropriately managed. Patent Literature 2 discloses, in order to deal with such a problem, an event management system that includes a member terminal and an event management server, and manages progress of an event on the event management server side. The event management server includes member information storage means, event holding/participation condition information receiving means, extraction means to extract members who can participate, event holding notification means, participation application receiving means, participation point granting means, questionnaire implementation means, and questionnaire point granting means. The member terminal has event holding information receiving means, event participation application transmitting means, and questionnaire response means.

Furthermore, since it is difficult to use an event management program that runs on an event management server for other events, cost-effectiveness of holding an event cannot be obtained as expected. A system design for enabling additional functions of a user terminal, such as a barcode reader, a moving image capturing function, and an infrared transmission/reception function, is complicated and time-consuming. Patent Literature 3 proposes, in order to deal with such a problem, constructing of a basic function of a server in event management and operation as an application program interface (API). Examples are a communication function API, a participant information management API, a scene node management API (API for each scene generation of an event, API for scene execution, and the like), a market API for buying and selling a commodity, an advertisement distribution API, an interface corresponding to a participant terminal accessory equipment, and the like.

Further, in Patent Literature 3, there is provided a function of accumulating participant attribute information and action information as a life log, and using this to promote communication between participants, in order to increase motivation of participants by using attribute information of the participants obtained through the event.

Patent Literature 4 discloses an event management system including event plan preparation management means that constructs an event plan or event plan components with a structured document and combines them to prepare an executable event plan, and event implementing means that controls progress of an event by distributing messages to and receiving responses from participant terminals.

### Citation List

#### Patent Literature

Patent Literature 1: JP 5158302 B2
Patent Literature 2: JP 5072003 B2
Patent Literature 3: JP 5182854 B2
Patent Literature 4: JP 2009-176269 A

### Summary of Invention

#### Technical Problem

However, a simpler user interface has been desired from those who create an event and participate in an event.

Whereas, a system is required to be structured in accordance with a structured document such as HTML.

The present invention has been made in view of the above circumstances, and it is an object of the present invention to provide an event management system that allows a user to easily create and participate in an event and that can realize an excellent program as an analysis structure.

#### Solution to Problem

As a result of diligent research in view of the above technical problem, the present inventor has conceived that the problem can be solved by treating a module of a program as a nested scenario.

That is, the present invention is to provide an event management system that uses scenarios, zones, transition arrows, icons, descriptors, and the like to realize advanced programming while maintaining a graphical user interface, and that is also excellent as a structure by interpretation and analysis processing.

An event management system of the present invention is an event management system including:

an API database that stores
an event execution management API that performs execution management of at least one or more of execution of a scenario that is a constituent unit of an event, transmission and reception of a message with an event participant terminal, position information processing of an event participant terminal, event progress recording, log data collection, or advertisement distribution,
and
a resource management API that identifies and manages each physical resource including at least one or more of a terminal that is an operation target by the event execution management API, equipment, a commodity, a building, a place, transportation means, or communication means;
an event database that stores an event execution program and log data generated during execution of the event;
an API registration processing unit that receives an API conforming to a predetermined API definition specification from an API provider terminal and registers in the API database;
an event generation processing unit that transmits, to an event creator terminal, a predetermined event definition specification and an API freely selected from APIs stored in the API database, and receives an event execution program that is generated with, as a component, an API received in accordance with the predetermined event definition specification in the event creator terminal;
an event registration processing unit that registers, in the event database, an event execution program conforming to a predetermined criterion of feasibility in the event management system and a validity criterion of an event freely set by a manager, from among the generated event execution programs; and
a communication processing unit that transmits and receives information necessary for event execution or related to event execution between with an event participant terminal through a network.

A module of the event execution program is treated as a nested scenario, and the event creator graphically describes an operation of an object layered by a module in a scenario chart attached to each module,
an object called a zone including a time zone and a field zone is used as the object,
an icon and a descriptor for graphical description of the scenario chart are used,
the event management system further includes a chart diagram interpretation unit, and
the chart diagram interpretation unit
interprets an inclusion relationship of contents and the descriptor with respect to the time zone, in a completed chart diagram.

As a result, chart interpretation equivalent to programming in a markup language is realized. This makes it possible to provide an event management system having a structure conforming to a structured document such as HTML, while making a user interface easy to understand at a time of scenario creation and scenario participation.

Here, the icon and descriptor for graphical description of the scenario chart can include a transition arrow. Embodiments that do not include transition arrows are also possible. In that case, the above functions can also be realized graphically through arrangement of objects in an adapter, by dividing a chart screen into object adapters instead of transition arrows regarding arrangement of the objects, or adding an additional description form or a small screen, to give an inclusion relationship of zones or connection relationship information of transition arrows, to a relationship between the adapters or an adjacency relationship of objects.

Specifically, the following can be considered as an embodiment that does not include a transition arrow (see Fig. 59).

In a chart, a top-level time zone or field zone is allocated to one or more columns. The columns are divided into an object allocation area and a lower-level column allocation area. In the lower-level column allocation area, it is possible to further allocate and divide a zone of a same type that has a relationship of being included. In the object allocation area, object adapters are arranged, and objects can be arranged. By controlling, for individual objects, a positional relationship in the allocation area (a sequence arrangement order and an adjacency relationship) or an implementation order, and arranging a descriptor object that describes transition information and an object addition marker at appropriate positions, interpretation structured by zones similar to those by transition arrows and zones is performed. In addition, this screen can be display-controlled for each column for easy viewing. For this display control, a subscreen or a window may be opened.

Further, as information to be interpreted by the chart diagram interpretation unit may include, in addition to "the inclusion relationship of contents and the descriptor with respect to the time zone", a structure of the time zone, field zone information arranged in the chart, portion arrangement information of contents and the descriptor on other icons, and a connection relationship (the icon and the icon portion).

Furthermore, the event management system further includes an analysis structure generation unit.

The analysis structure generation unit,
in accordance with information interpreted by the chart diagram interpretation unit,
analyzes a nested relationship of the time zone or the field zone to structure a plain field as a top-level time zone or a top-level field zone together with property information,

adds, as reference information, a field zone in a case where a top level is the time zone, and a time zone in a case where a top level is the field zone,

lists contents and a descriptor included in each of the time zones as elements at a corresponding position in a structure together with property information,

adds the icon subjected to portion arrangement, as a child element of each element (property), and

adds transition information as a property and instruction information from both directions.

As a result, an analysis structure is generated and set as a structure unique to a chart, that is, a module, and chart interpretation equivalent to programming in a markup language is realized.

This makes it possible to provide an event management system having a structure conforming to a structured document such as HTML, while making a user interface easy to understand at a time of scenario creation and scenario participation.

Note that "adds, as reference information, a field zone in a case where a top level is the time zone, and a time zone in a case where a top level is the field zone"

can be rewritten as "gives field zone inclusion relationship information of an included element to both sides in a case where a structuring element is the time zone, and gives time zone inclusion relationship information of an included element to both sides in a case where the structuring element is the field zone".

There is further provided a log analyzing unit and a log generation unit that generates a participation log of a participant of the event as a log structured with time and a location classified with a context for the event, in a form of corresponding to the generated analysis structure and inheriting a structure of the generated analysis structure,

the log generation unit generates, as a log, zone and module passage information and service usage information of a participant, and

the log analysis unit can

aggregate passage information of all participants to analyze importance of a specific node and analyze related information between with a transition destination and a transition source, or

analyze an action of a specific participant from contents information of a node or context information given to a node of a manager, to extract an action characteristic and preference of a participant. This enables utilization of big data or manage specific participants.

Embodiment of log generation

1: Zone and module passage information and service usage information of a participant are generated as a log (this may be a list for each participant, or may be stored as passing participant information of an original structure).

The passage information has a correspondence with the original structure.

2: At a time of analysis, passage information of all participants is aggregated, importance of a specific node is analyzed, and related information between with a transition destination and a transition source is analyzed.

3: Alternatively, an action of a certain participant may be analyzed from contents information of a node or context information given to a node of a manager, and an action characteristic and preference of the participant may be extracted.

There is further provided an event monitor unit and an emergency response unit corresponding to the above structuring.

The event monitor unit

grasps event participant passing information for each node collectively (statistically) for each context in real time in an event monitor (see the relevant section), or detects an occurrence of emergency, and

the emergency response unit

can control progress of an event for responding to emergency in each node. This allows real-time event management for each node.

A log structured with time and a location classified in the context of the event is easy to analyze and manage participants in the event, and can be effectively used in big data.

Furthermore, there is further provided a user check unit, and

an event participant generates and selects a two-dimensional barcode page corresponding to a node through which the event participant is passing. This enables announcement of an own situation to a manager and other users in a form that can be handled by the manager and other user.

By providing the user check unit (2-11, 2-12), in event management, it is possible to grasp the event participant passing information for each node collectively for each context in real time in an event monitor (see the relevant section), or to detect an occurrence of emergency. Therefore, the progress of the event can be controlled by a manager trigger or an emergency response means of the event monitor.

In addition, by generating and selecting the two-dimensional barcode page corresponding to a node the participant is passing through in 2-11, the participant can announce the manager and another user about an own situation in a form that can be handled by the system categorized by User check 2-12.

There are a plurality of the event creators, and they are treated as manager users, and a general user who uses an event and a manager user who creates an event are treated with discrimination,

the event management system further includes a point management unit that manages a point and a title that are profits given by a manager user to a general user, and the point management unit

can carry over a point and a title set by a manager user at a time of using an individual event to an event created by another manager.

This enables points and titles to be shared in a situation where a plurality of events and a plurality of event creators are mixed.

The event generation processing unit

enables graphical scenario creation performed by a manager user as if arranging a flowchart when creating the event, and realizes an operation by drag and drop from a palette block that stores an object, to a field block where a chart is arranged.

This enables intuitive programming.

The event generation processing unit

captures, at a time of an operation by the drag and drop, limitation on time and a location that cause a problem during actual distribution, and visually notifies an operator that the operation is impossible when it is not feasible.

This makes it possible to avoid generation of an event that disables operation.

Here, "visually notifying the operator" includes, not only a case of actively displaying a display indicating the warning to the operator, but also passive display through disabling placement of the icon or the like at that location even if attempt is made to perform the drag and drop operation (disabling placement even if attempt is made to place).

The event management system further includes a general user participation processing unit that processes participation of the general user in the event when the event is being executed.

The general user participation processing unit can execute, by arranging an icon on a screen, processing in which the general user acts as a participant and causes a trigger in an event created by a manager user.

This makes it easy for the general user to recognize and be aware that the general user will participate in the event.

The event generation processing unit

enables execution of calculation processing and condition processing necessary for an event, through a transition between objects by using a condition evaluation arrow and an assignment arrow, that is, joining operation.

This can expand a range of visualized programming.

The event management system further includes a general user interaction management unit that manages interaction of the general users who participate in the event.

The general user interaction management unit can confirm a service target person at that time through each time evaluation in a transition sequence of a member scope, by using a graphical creation icon for overall processing (see Figs. 30 and 31) of managing interaction between multiple participants.

This makes it possible to intuitively narrow down a range of service provision to the participants of the event.

The event management system further includes a user action confirmation unit that confirms an action of the general user who participates in the event.

The user action confirmation unit

can confirm an action of the general user when the general user reads and transmits any one of a two-dimensional barcode, a one-dimensional barcode, an IC chip, an RFID, infrared information, or the like with a terminal, and

the event generation processing unit can incorporate action confirmation of the general user into a scenario by using an icon, in order to enable the processing.

This enables further reliable action confirmation of a user in a relationship with any one of the two-dimensional barcode, the one-dimensional barcode, the IC chip, the RFID, the infrared information, and the like that have been established in the land.

The event generation processing unit can create a scenario so that a user recognizes message distribution necessary for action management of the general user in accordance with importance, and

the user action confirmation unit can manage an action transition of the general user during scenario execution so that the user recognizes message distribution necessary for action management of the general user in accordance with importance.

This makes it possible to attract attention of the general users who participate in the event, by providing guidance according to their hobbies and preferences and situations through the message distribution.

The event generation processing unit has a user interface that enables event creation or event participation through a mobile touch panel operation with only a thumb by using a tab and a scroll management icon.

This enables operation while holding the mobile terminal with one hand.

The event generation processing unit

can be configured to control, with a user interface or a user qualification, limitation of three-layer levels of a basic description of level 1, advanced management introduction of level 2, and overall processing (see Figs. 30 and 31) introduction of level 3, when describing the above scenario,

can provide guidance according to an action without restricting an action of a user in the basic description of level 1, and control an action of a user for progress of an event in the advanced management introduction of level 2, and

can control interaction between multiple users in the overall processing (see Figs. 30 and 31) introduction of level 3. This enables control on a programmable level with the interface used by the user or the user qualification.

Here, there is no higher difficulty degree between level 2 and level 3. Both are descriptions having a higher difficulty degree than that of level 1 in parallel. That is, the action management and the participant interaction management are descriptions having a higher difficulty degree than that of the basic description.

The event generation processing unit
can convert a scenario component that is graphically created, into a shared module for library registration.

This enables a part of the program to be a template.

The event generation processing unit
can perform editing by mutually switching between a normal edit screen showing a structure of the time zone and a map-type edit screen showing a structure of the field zone.

This enables editing work that is easily understood intuitively, by switching the time zone and the field zone depending on the situation.

The event generation processing unit,
in addition to generating an individual instance of a user by an entry trigger given with a function of generating an individual scenario instance of a user in any of a global trigger, RSS, RSS with user information, data from a cooperation system, data with user information, or a scenario status,
can start a local entry process with a local entry that is an entry trigger for receiving only an action and field-in of a terminal carried by a user. This allows participants to participate in events that can be easily participated geographically, via signboards, posters, or digital signage with a two-dimensional barcode, or through terminal operation when they are in sight.

Position designation information of the local entry can specify position point information in addition to range information, and
position point information is derived from position designation information such as user designation or a barycenter of a range. This enables handling with discrimination from a normal entry.

On a trigger map that is a map used to realize the local entry process, local entry position information being in operation for which a context is specified is displayed, in addition to a specified field zone information of a context being participated, and
displayed local entry information is limited to one point information of a local entry to prevent unlimited range designation by a manager side, and position point information provided by one scenario or a manager user is limited. This enables handling of local entries on the map.

Furthermore, there is further provided a user check unit, and
an event participant generates and selects a two-dimensional barcode page corresponding to a node through which the event participant is passing. This enables announcement of an own situation to a manager and other users in a form that can be handled by the manager and other user.

The general user participation processing unit categorizes a tag registered by a user with an alternative official tag, and registers as a participant attribute. This enables an attribute of the participant to be checked.

An attribute and data handled by the event processing unit during calculation processing
include matrix calculation and query calculation using a table of a spreadsheet or a column of a database. This enables wide utilization of external information and the like.

Furthermore,
the module, the time zone, and the field zone have an expected time element according to internal logic,
the event generation processing unit
further includes an expected time calculation processing unit, and
based on a result calculated by the expected time calculation processing unit, validity of a scenario is determined. This enables determination in advance whether or not the scenario can be executed.

Advantageous Effects of Invention

As described above, the event management system of the present invention can provide an event management system having a structure conforming to a structured document such as HTML, while making a user interface easy to understand at a time of scenario creation and scenario participation.

Brief Description of Drawings

Fig. 1 is a view showing a scenario implementation flow.

Fig. 2 is a view for comparing and explaining a general user account and a director account.

Fig. 3 is a view for explaining levels of a scenario chart description.

Fig. 4 is a view for explaining triggers.

Fig. 5 is a view for explaining a relationship between a scope of contents and attributes, and instances.

Fig. 6 is a view for explaining transitions of a user screen.

Fig. 7 is a view showing individual examples of User home, Participation event home, and Full contents display.

Fig. 8 is a view of Attribute holder and Persona management.

Fig. 9 is a screen for scenario creation.

Fig. 10 is a screen for scenario management.

Fig. 11 is a screen for an event monitor.

Fig. 12 is a view of a feasible scenario.

Fig. 13 is an explanatory view of a current state of a scenario and a start option.

Fig. 14 is a view for explaining participant management and attribute management.

Fig. 15 is an explanatory view of a chart monitor.
Fig. 16 is a view of an exception module monitor (see Fig. 16) and manager trigger management (see Fig. 16).
Fig. 17 is a view of an article state transition.
Fig. 18 is an explanatory view of an article (see Fig. 18) viewed from a user side.
Fig. 19 is a view for explaining creation of an article.
Fig. 20 is a view for explaining an icon and the like for creation of an article.
Fig. 21 is a view for explaining how to create a scenario chart.
Fig. 22 shows that, in principle, a scenario attribute is a transition control mode on a chart.
Fig. 23 is a view showing processing icons.
Fig. 24 is an explanatory view of a field zone.
Fig. 25 is a view showing a time zone.
Fig. 26 is a view for explaining a calculation submodule.
Fig. 27 is a view for explaining a nest type module chart description screen.
Fig. 28 is a view for explaining that a module is basically a nested scenario.
Fig. 29 is a view for explaining a property screen of an external module.
Fig. 30 is a view for explaining overall processing.
Fig. 31 is a view with an additional description for overall processing.
Fig. 32 is a view showing a content list (see Fig. 32) .
Fig. 33 is a view showing participant attribute management.
Fig. 34 is a view showing a participant type.
Fig. 35 is a view for explaining a time zone A and a field zone A of a stamp rally.
Fig. 36 is a view for explaining time zones A and B of a stamp rally.
Fig. 37 is a view for explaining tour guiding.
Fig. 38 is a view for explaining an event after party.
Fig. 39 is a view for explaining guiding to a restaurant and a quiz competition.
Fig. 40 is a view showing a time zone of climax viewing and quiz standby.
Fig. 41 is a view showing a time zone of movement preparation and movement.
Fig. 42 is a view showing a live quiz module.
Fig. 43 is a view for explaining quiz processing.
Fig. 44 is a view for explaining winner determination.
Fig. 45 is a view for explaining a user screen design.
Fig. 46 is an explanation (continuation) of the user screen design.
Fig. 47 is a view for explaining an app unique screen.
Fig. 48 is a view for explaining a map-type chart.
Fig. 49 is a view for explaining scenario creation.
Fig. 50 is a view for organizing and explaining triggers.
Fig. 51 is a view for organizing and explaining special charts.
Fig. 52 is a view for organizing and explaining library data usage and requirements regarding a global trigger.
Fig. 53 is a view for organizing and explaining setting designation for objects.
Fig. 54 is a view for organizing and explaining input methods other than a setting bar.
Fig. 55 is a view for explaining organization between elements.
Fig. 56 is a view for explaining a type and a structure of a field object.
Fig. 57 is a diagram showing a hardware configuration of an event management system.
Fig. 58 is a diagram showing a configuration of a server computer included in the event management system.
Fig. 59 is a view showing an embodiment of graphically describing a scenario chart without using transition arrows.
Fig. 60 is a view for explaining expected time calculation.
Fig. 61 is a view for explaining a target/comparison zone transition replacement work.
Fig. 62 is a view for explaining a transition arrow developing work.
Fig. 63 is a view for explaining a time series of a transition control mode.
Fig. 64 is a view for explaining a category of an element in the expected time calculation.
Fig. 65 is a view for explaining transition sequence expected time calculation.
Fig. 66 is a view for explaining expected time composition.
Fig. 67 is a view for explaining a focus comparison zone inside/outside transition check.
Fig. 68 is a view for explaining actual-action expected time addition.
Fig. 69 is an example of a field edit screen.
Fig. 70 is a field structure schematic view.
Fig. 71 is a view showing control module property details.
Fig. 72 is a view for explaining designation of location/time restrictions.
Fig. 73 is a view showing an interaction body, an interaction field, and an interaction aspect.
Fig. 74 is a view showing a scenario (overall processing) attribute.
Fig. 75 is a view showing a key structure, and MS and a key at a time of attribute conformance.
Fig. 76 is a view showing transitions in overall processing.
Fig. 77 is a view showing a new article specification.
Fig. 78 is a view showing an emitter and a status, and range designation of a field zone.
Fig. 79 is a view showing a user screen design (browser, app).
Fig. 80 is a view for explaining a region of a user screen.

Description of Embodiments

Hereinafter, a best mode for implementing a management system of the present invention will be described in detail with reference to the accompanying drawings. Until then, there are views illustrating an embodiment of the present invention. In these figures, parts denoted by the same reference numerals represent the same things, and basic configurations and operations are similar.

Fig. 57 is a diagram showing a hardware configuration of an event management system. In the Internet network indicated by an ellipse in a center of Fig. 57, there are shown a server (server computer) 10, manager user terminals 21, 22, 23, and 24 through which a manager user who creates an event acquires a manager user account to access the server 10, and general user terminals 31, 32, 33, and 34. The manager user terminal and the general user terminal may be so-called smartphones or tablet computers. Fig. 57 illustrates the terminal directly communicating with the Internet, but the terminal may be connected to the Internet via Wi-Fi equipment. Further, the terminal may also be connected to the Internet via a mobile phone network.

Fig. 58 is a diagram showing a configuration of the server computer 10 included in the event management system. The server computer 10 includes: an API database device 51 that stores an event execution management application program interface (API) that performs execution management of a scenario that is a constituent unit of an event, transmission and reception of a message with an event participant terminal, position information processing of an event participant terminal, event progress recording, log data collection, advertisement distribution, and the like, and stores a resource management API that identifies and manages each physical resource such as a terminal, equipment, a commodity, a building, a place, transportation means, or communication means; an event database device 52 that stores an event execution program and log data generated during the event execution; a user database device 53 having user account information and the like; and a point database device 54 having information about points.

Furthermore, there is provided an API registration processing unit 61 that receives an API conforming to a predetermined API definition specification from an API provider terminal and registers in the API database.

In addition, there is provided an event generation processing unit 62 that transmits, to an event creator terminal, a predetermined event definition specification and an API freely selected from APIs stored in the API database, and receives an event execution program that is generated with, as a component, an API received in accordance with the event definition specification in the event creator terminal.

There is provided an event registration processing unit 63 that registers, in the event database, an event execution program conforming to a predetermined criterion of feasibility in this system and a validity criterion of an event freely set by a manager, from among the generated event execution programs,

There is provided a communication processing unit 64 that transmits and receives information necessary for event execution or related to event execution between with an event participant terminal through a network.

There is provided a chart diagram interpretation unit 65 that interprets, in a completed chart diagram, a structure of the time zone, field zone information arranged in the chart, an inclusion relationship of contents and the descriptor with respect to the time zone, portion arrangement information of contents and the descriptor on other icons, and a connection relationship of the transition arrow (the icon and the icon portion).

There is provided an analysis structure generation unit 66 that,

in accordance with information interpreted by the chart diagram interpretation unit,

analyzes a nested relationship of the time zone to structure a plain field as a top-level time zone together with property information,

adds the field zone as a top-level element,

lists contents and a descriptor included in each of the time zones as elements at a corresponding position in the structure together with property information,

adds the icon subjected to portion arrangement, as a child element of each element (property), and

adds transition information as a property and instruction information from both directions.

As a result, an analysis structure is generated and set as a structure unique to a chart, that is, a module, and chart interpretation equivalent to programming in a markup language is realized. Note that, it is also possible to provide one having a function as an interpreter language in module units, without generating the analysis structure.

There is provided a point management unit 67 that manages a point and a title that are profits given by a manager user to a general user. Here, the points have a monetary value, for example, they can be converted into electronic money. The title is an honorary title.

There is provided a general user participation processing unit 68 that processes that the general user participates in the event when an event is being executed.

There is provided a general user interaction management unit 69 that manages interaction of general users participating in an event.

There is provided a user action confirmation unit 70 that confirms an action of a general user who participates in an event.

Hereinafter, an explanation is mainly given to a specification of a computer program to be installed mainly in a server computer in a case where the management system of the present invention is configured by connecting the server computer and a user's terminal via the Internet.

<< Table of contents >>

1: Concept description
1-1: Service use cases (see Figs. 38, 39, 40, 41, 42, 43, 44, 45, and 46)
1-2: Scenario usage flow (manager/user)
1-3: Account (manager/user)
1-4: Features
1-4-1: Scenario structure and object scope
1-5: System configuration
1-6: Important/common logic/business logic
2: User screen
2-1: Screen transition
2-1-1: Behavior of navigation bar
2-2: Management system screen
2-2-1: Login screen
2-2-2: New registration
2-2-3: Account
2-2-4: Persona management
2-2-5: User home
2-2-6: Attribute holder #Save attribute management
2-3: Event home (transition when using event)
2-3-1: Basic form
2-3-2: About transition when using event (event start screen and invited event participation authentication process)
2-3-3: Invited event individual home
2-3-4: Participation event home (unstarted)
2-3-5: Participation event home (started)
2-3-6: Participation end event home (after end)
2-4: Contents
2-4-1: Full display
2-4-2: Special article
2-4-3: External service
2-5: List
2-5-1: Displayed content list (see Fig. 32)
2-5-2: Standby content list (see Fig. 32)
2-5-3: Participating event list
2-5-4: Invited event list
2-5-5: Event log list
2-5-6: Participation event displayed contents
2-5-7: Participation event standby contents
2-5-8: Participation event contents log
2-6: Trigger checker and local entry
2-6-1: Trigger checker entry
2-6-2: Available local entry
2-6-3: Trigger map
2-6-4: Local entry
2-7: About tags
2-8: About save attributes
2-8-1: Attributes and save attributes
2-8-2: Official attributes
2-8-3: Tag-related attributes
2-8-4: Save recommendation attributes
2-9: E-mail delivery
2-9-1: Content distribution
2-9-2: Announcement distribution
2-9-3: Warning distribution
2-9-4: Push link
2-10: Trigger (user side)
2-11: Identification two-dimensional barcode
2-12: User check
2-13: Termination margin
3: Manager screen
3-1: Screen transition
3-2: Main part/management system screen
3-2-1: Login/logout #Login/logout
3-2-2: New registration
3-2-3: Account
3-2-4: Welcome page
3-3: Main part/scenario creation
3-3-1: Concept explanation
3-3-1-1-1: Chart operation
3-3-1-1-1-1: Palette icon drag
3-3-1-1-1-1-1: Arrangement on chart field
3-3-1-1-1-1-2: Arrangement on icon and icon portion
3-3-1-1-1-2: Zone arrangement
3-3-1-1-1-3: Movement of icon within screen and transformation of icon
3-3-1-1-1-4: Joining operation of transition arrows
3-3-1-1-1-5: Icon detailed operation (click)
3-3-1-1-1-6: Movement limitation
3-3-1-1-1-7: Portion
3-3-1-1-2: Interpretation and analysis
3-3-1-1-2-1: Information to be interpreted
3-3-1-1-2-2: Analysis structure
3-3-1-2: Content
3-3-1-2-1: Definition, editing, and operation
3-3-1-2-1-1: Template and fill-up
3-3-1-2-1-2: Content state
3-3-1-2-2: Articles and messages
3-3-1-2-3: Normal module and exception management
3-3-1-2-4: Nest type module and external module
3-3-1-2-5: Exception termination margin
3-3-1-2-6: Individual explanation of behavior on content chart
3-3-1-3: Attributes
3-3-1-3-1: Scope
3-3-1-3-2: Type
3-3-1-3-3: Scenario attributes
3-3-1-3-4: Participant attributes
3-3-1-3-5: Overall processing (see Figs. 30 and 31) attributes
3-3-1-3-5-1: Member scope of overall processing (see Figs. 30 and 31) attributes
3-3-1-3-6: Attribute property attribution icon
3-3-1-3-7: Individual explanation of behavior on attribute chart
3-3-1-4: Zone
3-3-1-4-1: Zone classification
3-3-1-4-2: Time zone
3-3-1-4-2-1: Termination of time zone
3-3-1-4-2-2: Calculation zone

3-3-1-4-3: Field zone
3-3-1-4-3-1: Affiliation field zone
3-3-1-4-3-2: Range setting
3-3-1-4-4: Zone out margin
3-3-1-4-5: Individual explanation of behavior on zone and accompanying icon chart
3-3-1-4-5-1-: Time zone
3-3-1-4-5-2: Field zone
3-3-1-5: Descriptor (processing icon, transition arrow, and trigger icon)
3-3-1-5-1: Individual explanation of behavior on descriptor chart (other than overall processing)
3-3-1-6: Timing setting
3-3-1-7: Terminal status and status emitter
3-3-1-8: Palette
3-3-1-9: Overall description
3-3-1-9-1: Overall processing (see Figs. 30 and 31) description and overall processing (see Figs. 30 and 31) area
3-3-1-9-2: Overall processing (see Figs. 30 and 31) instance
3-3-1-9-3: Member scope
3-3-1-9-4: Overall processing (see Figs. 30 and 31) module
3-3-1-9-5: Overall processing (see Figs. 30 and 31) time zone
3-3-1-9-6: Overall processing (see Figs. 30 and 31) arrangement chart individual processing
3-3-1-9-7: Interaction between overall processing (see Figs. 30 and 31) and individual processing within overall processing (see Figs. 30 and 31) area
3-3-1-9-8: Group processing
3-3-1-9-9: Calculation including member calculation time zone and overall processing (see Figs. 30 and 31)
3-3-1-9-10: Overall processing (see Figs. 30 and 31) descriptor
3-3-1-10: Calculation module #Scenario/calculation chart #Calculation zone
3-3-1-10-1: (Individual) Calculation chart or calculation zone
3-3-1-10-2: Attribute calculation including overall processing (see Figs. 30 and 31)
3-3-1-10-3: Timing setting chart and attribute condition chart
3-3-1-11: Contents log
3-3-1-12: Log record
3-3-1-13: Participant type (see Fig. 34) #Participant type (see Fig. 34) determination process
3-3-2: Scenario (main screen)
3-3-3: Scenario chart
3-3-3-1: Basic structure of screen
3-3-3-2: Chart area (chart explanation)
3-3-3-3: Palette area (palette explanation)
3-3-3-4: Utility bar
3-3-3-5: Scenario attribute registration process
3-3-4: Module
3-3-4-1: Nest type module
3-3-4-2: Exception management
3-3-4-3: External module
3-3-4-3-1: Outside trigger description module
3-3-4-3-1-1: Entry trigger and local entry
3-3-4-3-1-2: User check related module and usage process
3-3-4-3-2: Guide module
3-3-4-3-3: Page adapter
3-3-4-3-4: Venue equipment management system
3-3-4-3-5: Scenario status receptor module
3-3-4-4: Forming template
3-3-4-5: Library use
3-3-5: Article/message
3-3-5-1: User screen
3-3-5-2: Article state transition
3-3-5-3: Terminal status/check/selection restraint
3-3-5-4: Article description screen
3-3-5-4-1: Screen parts
3-3-5-4-1-1: Type of screen parts
3-3-5-5: Article main part
3-3-5-6: Palette area
3-3-5-7: Utility bar
3-3-5-8: Main part description
3-3-5-9: Forming template
3-3-5-10: Special article
3-3-6: Participant attribute management (see Fig. 33)
3-3-6-1: Main screen explanation
3-3-6-2: Attribute registration/edit screen
3-3-6-3: Participant type (see Fig. 34) registration/edit screen
3-3-7: Contents list
3-3-7-1: Contents list (main)
3-3-7-2: Scenario attribute list
3-3-7-3: Sub-element list
3-3-7-4: Library registration
3-3-7-5: Scenario structure display screen
3-3-8: Two-dimensional barcode generation
3-3-9: Outline check
3-4: Main part/scenario management
3-4-1: Overview
3-4-1-1: Feasible scenario
3-4-1-2: Registration recommendation attributes
3-4-2: Feasible scenario
3-4-3: Participant management
3-4-4: Registration recommendation attribute management
3-4-4-1: Attribute approval management
3-4-5: Library
3-4-5-1: Private library
3-4-5-2: Standardized library
3-4-5-3: Library screen
3-4-5-4: Data upload
3-4-6: Utility
3-4-6-1: Announcement e-mail delivery
3-4-6-2: Two-dimensional barcode generation
3-5: Main part/event monitor
3-5-1: Overview

3-5-1-1: Manager trigger
3-5-1-2: Manager call
3-5-2: Chart monitor (see Fig. 15)
3-5-2-1: Chart monitor main
3-5-2-2: Sub-monitor (attribute monitor, participant monitor, log monitor)
3-5-2-3: Utility bar
3-5-3: Exception module monitor (see Fig. 16)
3-5-4: Manager call
3-5-5: Manager trigger management (see Fig. 16)
3-6: New registration
3-7: External cooperation
X-1: Modification of library specification at beta
X-2: Specification change of user screen
X-3: Preparation of multilingual specification
Y-1: Organization and integration of trigger functions (collectively at end of document)
Y-2: Clarification of numbering function for list type and numeric type attributes (corrected in document)
Y-3: Organization of wildcard icon function (corrected in document)
Y-4: Re-modification of specification of user screen (re-examination of optimization for small screen) (corrected in document)
Y-5: Identification of candidate items for outline check (#Outline check/recheck when defining requirements)
Y-6: Identification of icon property items (recheck when defining requirements)
Y-7: Integration of option specifications of executable event into timing setting chart (corrected in document)
Z-1: Organization of participant screens (collectively at end of document)
Z-2: Addition of map-type chart edit screen (collectively at end of document)
Z-3: Sub chart window for reference
Z-4: Expected time calculation (see Fig. 60)
Z-5: Target/comparison zone transition replacement work (see Fig. 61)
Z-6: Transition arrow developing work (see Fig. 62)
Z-7: Transition control mode time series (see Fig. 63)
Z-8: Category of element in expected time calculation (see Fig. 64)
Z-9: Transition sequence expected time calculation (see Fig. 65)
Z-10: Expected time composition (see Fig. 66)
Z-11: Focus comparison zone inside/outside transition check (see Fig. 67)
Z-12: Actual-action expected time addition (see Fig. 68)

<< Details>>

1: Concept description

This service is a visual programming system for construction of a simple app for an event organizer (manager user) to provide a distribution service according to a location and a real situation (context), to a participant (general user) having a mobile terminal, with use of terminal distribution.

Therefore, the manager user creates an event scenario or imports an event scenario from a library, and then localizes to implement the event. Therefore, the system provides the following services to the manager user and general user.

Manager user

1: Event scenario creation
2: Event scenario implementation management
3: Event implementation
4: Management, disclosure, and association of a value (attribute) generated in an event
5: Storage and library provision for scenarios and scenario materials
6: Distribution of materials in the above library
7: Local guidance means with an event property, for an own service and a facility

General user

1: Receiving a distribution service constituting an event as a whole, through a mobile terminal and an installed terminal (participation in the event)
2: Management of values generated in an event and use in other events
3: Local entrance with an event property, to other cooperating services

A target commercial function is as follows.

1: Tour support app (L1)
2: Outdoor event user guidance progress management (L1)
3: Tour, outdoor event group action, attraction, and rarity management (L2 to 3)
4: Live RPG (game) making (module asset formation) (L1 to 3 + app)
5: Direct commercial facility guidance (L1 to 2)
6: Business tutorial in outdoor city (L2 + app)
See 1-4-1: scenario level for the above levels. (Skill level required for a manager user or a developer)
1-1: Service use cases (see Figs. 38, 39, 40, 41, 42, 43, 44, 45, and 46)

Using a sample after party

There is a live show at a nearby arena, and a bar owner has considered to use this system to guide guests returning from the live show to the own shop by using materials provided by a promoter.

1: A search is performed for modules and data related to the live show provided by the promoter, in a standardized library.
2: As a result of the search, climax viewing, a live quiz, and a local entry (including field zone definition data) near the venue have been provided, so that use permission is acquired. There are also event main templates using these, so that modules that are likely to fit time and a size of the shop are checked.
3: Scenario creation (see Fig. 49) on a manager page is opened, and new creation is checked from a list of scenarios being created.
4: A scenario page for a new scenario is opened.
5: A procedure of the event is considered.

a) Since the live show ends at five o'clock, a design is made so that a main quiz event will start at the shop after eight o'clock.
b) With about one hour for moving, six o'clock is set for deadline for reception.
c) A start time of the quiz is determined by the manager (shop manager).
d) The event ends when the scenario main of the template ends.

6: A scenario chart page is opened and a scenario is created.

a) The checked materials in the standardized library is downloaded to a template palette.
b) Since there are three stages: reception, movement, and an event at the shop, a corresponding time zone is dragged from a processing palette and arranged on a chart. A timeout is individually set to one hour from the start of the event, two hours from the start of the event, or four and a half hours from a trigger or the event start.
c) For the location, a range of a live venue and a moving area, which is a range of the local entry, is determined on this side, and there are created restaurant guiding for checking leaving in the middle, and a restaurant for determining arrival at the venue. The result is dragged from the processing palette and arranged on the chart. Note that the range of the live venue is received as library data from the promoter.
d) A new trigger is dragged from the processing palette for creating a quiz start trigger, and arranged as a manager trigger.
e) A message and an article to be arranged is created (see Fig. 18).
f) Required user attributes are defined in participant attribute management (see Fig. 33).
g) Contents such as articles (see Fig. 18) and modules are arranged in a time zone appropriate for scenario progress, or in a plain field. Further, processing icons and scenario attributes for transition control are arranged.
h) Required transition arrows are connected from status triggers to status receptors, and all the endings are defined.
i) A special article is edited from a scenario screen.
j) Outline check is performed. If there is a problem, the process returns to the previous step and the scenario is corrected.

7: The created scenario is registered in Feasible scenario, and options are set. (The start time is fixed at 17:00 on the day, and advertisement is from one week before to 1:00 after the start)
8: (A test is conducted)
9: Advertisement is started.
10: The event starts when the time comes.
11: Participants from advance advertisement start a transition from a normal entry at the start. Further, during one hour after the start, registration can be made from a local entry near the live venue, and a transition starts from there.
12: Distribution is performed to participants' terminals in accordance with the scenario.
13: An attribute value of each participant is operated depending on an action of the participant, in accordance with the scenario.
14: The event ends in accordance with an ending condition.
15: Among the used user attributes, a quiz point and a winner are defined as save recommendation attributes, so that distribution is made to the participant as to whether registration is to be made in an attribute holder of an own persona.
16: When the participant registers, the save recommendation attribute is registered in the attribute holder of the participant.
17: The used scenario is registered in a private library for preparation for reuse. Alternatively, a defect is fixed.
18: Specifications are adjusted, and the scenario is registered in the standardized library, to aim for usage fees.

This service will be explained with reference to a case of "live event after party" prepared as a sample.

A rock concert is held at a municipal stadium. Suppose that there is a sports bar that provides a venue for an after party at a facility attached to the venue or an adjacent place. A general user enters from a local entry (poster and the like) of the sports bar.

A concert organizer provides information materials about today's concert to an event of an associated advertiser (who has set up a local entry (LE) in the stadium by paying an advertising fee). The sports bar is installed with an audio visual (AV) terminal, and can broadcast distributed data. The shop has position information that can be confirmed by GPS.

At a time of entry, seats are reserved, and guiding to the shop is made. Entrance check is made at the shop. There are two information materials. First one is edited video of today's concert. Second one is a quiz based on today's details. Three different questions are distributed in each group. The shop can accommodate up to three after-party groups. The quiz must be conducted fairly and at the time desired by the group members. The results for individual groups are displayed. When the party starts, the edited material is broadcast except during the quiz.

Addition 1: A climax scene broadcasting module can be added.
Addition 2: Competition among individual groups: A total of nine quizzes are sequentially presented, and accumulated points are compared in a form in which a person who has a correct answer and has pressed a button first gets a point. Failed questions are left for other groups to answer.
Addition 3: The shop has a check module capable of entrance check of users' mobile terminals at a restaurant.

1-2: Scenario usage flow (manager/user)

A scenario usage flow will be described with reference to Fig. 1.

A manager user creates an event in accordance with an implementer-side routine, and manages by distribution.

1: By using a scenario creation function (see Fig. 49) or importing and localizing library data, an event scenario is created.
2: Outline check is performed, and the scenario is registered in a feasible list when registration becomes possible. A work is started.
3: Detailed settings are performed in the list, advertisement is made for collecting users when it becomes a feasible state, and an event is implemented.
4: Attribute registration distribution is performed after the end of the event.
5: The created data is registered in the library as an executed scenario, or reused.

A general user participates in an event by a procedure of a user-side participation routine.

1: An invitation is received, or an event page for the invited event is accessed.
2: An invitation reception on the invited event page is checked, and participation is made through an invited event participation authentication process.
3: When an entry trigger occurs, participation in the ongoing event is confirmed.
4: When the event ends, an attribute desired to be registered is registered in an attribute holder through attribute registration distribution.

In addition to the entry by the general user from the local entry, this service can be made available to a general user through distribution by the event organizer to a terminal of a participant who has a mobile terminal.

Fig. 1 is a view showing a scenario implementation flow. The scenario can be configured as a program module that constitutes this system. As shown on a left side of an upper half of Fig. 1, the implementer side creates a scenario from scratch by accessing the system, or creates a scenario by calling and re-editing an executed scenario. This scenario creation (see Fig. 49) can be performed by drag and drop (DD) and the like of an icon with a predetermined procedure, even by other than a programmer. It is possible to modularize a scenario in a middle of creation, call the module, and continue the creation work again.

When the created scenario satisfies predetermined outer requirements, it is possible to register as a "feasible scenario". The feasible scenario is "tested", and returned to the creator side to re-edit when there is a problem. The procedure of re-edit, registration, and testing is carried out until a defect is eliminated, and the feasible scenario is completed.

The feasible scenario has information on a period for advertising for collecting users to participate (advertisement start, advertisement deadline). An implementation trigger causes a start of scenario execution, and an entry trigger causes realization of user's participation in the scenario. When the implementation is ended, the scenario becomes an executed scenario after the attribute registration, and modularized. Those registered by attribute registration are subjected to attribute saving after validity verification.

General users apply after seeing advertisement announcement. After the invitation reception and the invited event participation authentication process (attribute check, participant type (see Fig. 34) determination), invitation registration is made, and it becomes possible to use the ongoing scenario by the entry trigger.

In the attribute check, an attribute value of an attribute holder that can be referred to by the manager is compared with an attribute condition of the participant type (see Fig. 34). In a case of being unable to participate, such as being unconformable due to age, gender, and the like, or being excluded because it is a competitor, that fact is announced to the general user who has applied. In the participant type (see Fig. 34) determination, after the attribute check is ended, a list (radio type) of available participant types (see Fig. 34) is displayed, and the type is set when selected by the user who has applied. In the attribute saving, it is determined whether or not to register the attribute recommended to be saved by the event manager, in the attribute holder.

Participation of general users from a local entry (LE), such as access from a two-dimensional barcode provided on a poster, is also accepted by a similar procedure.

Invitation registration can be performed until a timing of the deadline for advertisement of the scenario.

1-3: Account (manager/user)

Accounts will be described with reference to Fig. 2.

Accounts are classified into a general user account and a manager user account.

Both are identified by an authentication e-mail address and a password.

While items are as shown in the figure, the manager user can issue a certain number of general user accounts for testing.

Rating: By rating, general users can limit events that can be participated. If a scenario tag has a relevant rating, the user cannot apply for that event. (Lockable with password).

Persona: General users can control personality to be disclosed at the event with a persona. In this system, the manager and other general users can only know information set in a persona, other than information specifically determined to be disclosed. It is possible to have a plurality of personas. However, personas other than a main persona cannot be used at an event unless they are linked to an app.

Ideally, anyone having an account may become any of a person who invites and a person who is invited for an event. However, demanding an ability for running an event from everyone is harsh. An entrance of general users who are only invited is made easy as possible. For this reason, a general user account and a director account are provided.

Fig. 2 is a view for comparing and explaining the general user account and the director account. A general user can perform identity authentication with an authentication e-mail address and a password. In addition, identification can also be performed by a persona account. Authentication by a persona is appropriate when the director side (scenario implementation side) permits participation only on the basis of age and gender.

The user account has information such as an authentication e-mail address, a password, private information (name, age, gender), rating (selected from unlimited, R18 inhibited, R15 inhibited), a persona (although it is set for each terminal, it is also possible to use the same persona for multiple terminals. For example, when the same user uses a smartphone and a tablet together), a registered terminal (may be one or more), a persona tag, self-introduction text, various histories, and the like. In Fig. 2, the private information, the persona tag, and the self-introduction text are attached with an icon of "registration selection". It is confirmed intention of the general user about whether or not registration is possible in a save attribute holder (an attribute holder automatically generated at a time of tag registration and at the end of event) in advance or each time, and the attribute is saved when permitted by the general user. In a case where the attribute is essential to the event, there may be a procedure of permitting participation on condition that the attribute is saved.

General users may be allowed to participate for free without charge at the beginning, but charging information can be registered from the beginning and a payment method and billing-related information can be registered in advance.

The director account performs identity authentication with an authentication e-mail address and a password. A director may be an individual or a company. In a case of an individual, private information (name, age, gender, address, phone number, used e-mail address) is registered. In a case of a company, company information (company name, name of person in charge, department name, address, phone number, used e-mail address) is registered. In addition, for example, by providing grades such as grade 1 to grade 5 to the account, and making a difference in a scale of events that can be held, it is possible to enable upgrade according to actual results (results of the number of visitors, sales results, payment results, and the like). Account grade information about which grade each director has is registered.

In addition, information about charging information (payment method, billing-related information), a director name, a director tag, director introduction text, and various histories is registered.

A profit model assumes monthly charging (according to a usage capacity) to the director account, pay module usage fees, advertising revenue, and communication board creation fees. In the future, a fee proxy collection fee to the director when using a charging module for users, a usage amount when expanding an attribute holder capacity, priority user charges, module market transaction fees, and the like can be considered.

Regarding general user accounts, basically, the director side and the advertising side identify the persona (only age and gender can be used with user permission).

When the director charges the user in the own system, registration is required after transition to the own system (cooperation is searched for within a possible range) .

1-4: Features

Control is performed by graphically describing an operation of an object layered by a module into a scenario chart attached to each module. Interpretation and analysis are performed on a completed chart diagram to realize programming equivalent to programming in a markup language.

Feature 1: This is a free system that allows carrying over of points and titles set by a manager user when using the event, to events of other managers.

Feature 2: Scenario creation (see Fig. 49) can be performed graphically as if arranging a flowchart. Most operations are realized by drag and drop (DD) from a palette block that stores an object to a field block where a chart is arranged.

Feature 2-1: With a simple operation, limitations of time and a location that cause problems during actual distribution can be captured.

Feature 2-2: Processing of an event (trigger) occurrence according to an action of a participant can be easily and freely performed by arranging a simple icon on a screen.

Feature 2-3-1: Calculation processing and condition processing required for the event can be performed through a simple transition (joining operation) between objects by using condition evaluation arrows and assignment arrows.

Feature 2-3-2: By using a graphical creation icon for overall processing (see Figs. 30 and 31) of managing interaction between multiple participants, it is possible to easily confirm a service target person at that time through each time evaluation in a transition sequence of a member scope.

2-4: A user action confirmation system using a two-dimensional barcode can be easily incorporated into a scenario by using an icon.

2-5: A system allows a user to recognize message distribution necessary for user action management in accordance with importance, and can manage an action transition in the scenario.

3: A user interface enables a mobile touch panel operation with only a thumb by using a tab and a scroll management icon.

1-4-1: Scenario structure and object scope

There are levels of complexity depending on things to be done with a constructed scenario, in producing the scenario.

Everything is allowed when a manager account is acquired, but the level should serve as a guide in modularizing tutorials and officials.

The first level is suitable for scenarios where actions of participants are not controlled by the system, but guided in accordance with real world situations.

At this level, only individual processing of participants is performed, and no interaction or overall processing (see Figs. 30 and 31) is performed on the system. In addition, action management by distribution is not performed, and no exception processing is basically described in a scenario description. In this case, interaction and exception processing are processed using external modules. An individual scenario instance is generated by an entry trigger, and individual user management is performed. For a terminal status, only regular is used.

The second level is a level for performing action management of participants (progress support of an event).

This level is for scenarios based on the premise that actions of participants are guided and controlled by the system. Therefore, a mechanism is introduced in which important decision and selection of participants are supported, and multiple guidance is made for participants who take actions outside the purpose of the event by extending a range of exception management.

A status type at the end is classified and managed depending on how user's reaction in content processing is strictly managed.

Regular action is assigned to selection of a participant who is making a desired choice in progress of the event, and is issued by assigning a regular terminal status at the ending and important progress points.

Irregular action is assigned when a participant makes a choice that should be particularly controlled by the manager user in progress of the event, and is issued by assigning an irregular terminal status at the ending and important progress points.

Exceptional action occurs when a systematic exception occurs, a timeout occurs at a time of advanced management selection, or a field-out that causes an exceptional action occurs. When advanced management is selected in content processing, when a timeout trigger occurs without the participant performing a prescribed action, a timeout occurs and exception management is performed.

A module designated for the exception management is managed particularly on the event monitor (see Fig. 11), and it becomes also possible to communicate with the manager user.

The third level is a level for performing interaction of participants and overall processing (see Figs. 30 and 31).

In order to realize scenarios including an attraction that assumes interaction between participants, communication, rarity management, and grouping, a concept of overall processing (see Figs. 30 and 31) and groups is introduced.

Processing targets are organized through an overall processing (see Figs. 30 and 31) description, and processing related to interaction and the entire event, and grouping and processing of participants are performed by using overall processing (see Figs. 30 and 31) attributes and an overall processing (see Figs. 30 and 31) calculation chart.

#Scenario behavior

1-4-2: Trigger (see Y-1)

An event proceeds by the manager describing interaction between a trigger and participant's reaction into the scenario.

A factor that causes the trigger is to be a start point of a transition arrow as a status trigger, and is linked to a status receptor described in detail in 3-3-1-5: Descriptor (processing icon, transition arrow, and trigger icon) to drive the scenario.

Entry processing: A start of the event and an entry of participants are controlled by a start option of Fig. 12 and an entry trigger of Fig. 4, which will be described later.

Event start is started by being specified in the start option of a feasible scenario. An overall processing (see Figs. 30 and 31) scenario instance (if any) is created, and reception of the entry of the participant is enabled.

When the participant's entry is performed depends on whether an ETM is arranged in a first-layer non-overall processing (see Figs. 30 and 31) description.

In a case without the arrangement, an event implementation timing is the same as the participant entry timing, and all entries up to the advertisement deadline receive the same processing (at different timings).

In a case with the arrangement, details of processing differ depending on whether or not the entry with ID information is performed.

For participants who have already participated, processing is performed in accordance with a transition line by a trigger of the ETM issued first regardless of the first layer or lower layers. For subsequent entries, processing is also performed by the ETM that occurs each time (for participants who have participated after the previous (general) ETM event).

The ETM that receives an individual ID processes the participant in accordance with the transition line.

An ETM associated with local communication means (including QR) of a terminal is called a local entry, and is specially managed.

The local entry is registered on various screens of a trigger checker, and is shown to general users as a point where the entry is possible.

An individual ETM of a second layer or lower functions as long as an overall processing (see Figs. 30 and 31) instance with a description thereof is generated. Otherwise it is ignored (as an ETM).

Further, an ETM in an opened individual processing instance functions as an OSTM.

1-4-3: Scenario structure and object scope See Fig. 5

Scenarios may have a layered structure depending on an arrangement relationship of modules.

A module arranged in a chart description of a certain layer or a property of an external module (see Fig. 29) is regarded as a module of a layer therebelow. A top-level layer is a scenario chart, which is created first.

The layers therebelow are generated when a generation trigger receptor of individual and overall processing (see Figs. 30 and 31) is evaluated. Even in a case of being individual, only the ETM follows a behavior of the overall processing (see Figs. 30 and 31) instance of the same module.

When there are multiple generation triggers, multiple contents instances may be generated at the same level.

Contents described in each chart and property screen are regarded as child elements of the module.

A content, classified zones, and attributes have a definition module, and can be referenced and arranged in a layer therebelow. In addition, attributes share an attribute value (contents behaviors differ for each arrangement module).

User attributes belong to a scenario.

1-5: System configuration

A network service provides the following services to each of a manager user (user who has a director account) who creates a scenario and manages an event to be participated by a general user (user who has a general user account), and a general user who participates in an event by using functions of a mobile terminal.

Services to be provided to the manager user

1: Event scenario creation (see Fig. 49)
2: Event scenario implementation management
3: Event implementation
4: Management and disclosure of values generated in an event
5: Storage and library provision for scenarios and scenario materials
6: Distribution of materials in the above library
7: Local guidance means with an event property, for an own service and a facility

Services to be provided to the general user

1: Receiving a distribution service constituting an event as a whole, through a mobile terminal or an installed terminal, by using a participant authentication function of the mobile terminal
2: Management of values generated in an event and use in other events
3: Local entrance with an event property, to other cooperating services

1-5-1: Means of provision

To the manager user, provision is made as a web service using a browser, by using a manager screen and call equipment for emergency response.

To the general user, provision is made through a web service using a browser of a mobile terminal, or an app in a terminal having a function of 1-5-2. The functions 1 to 4) can also be realized by a browser.

1-5-2: App Features

1) GPS position periodical check
2) Two-dimensional barcode reading
3) Photo upload
4) Push notification at e-mail delivery
5) User check code binding (for manager)
6) Page browsing

1-6: Important/common logic/business logic

Important common logics and business logics are listed here.

#Login/logout
#Contents list (cut out)
#Form input verification
#Veracity confirmation by authentication e-mail
#Terminal registration process
#App download
#Tag-attribute conversion mechanism
#Hot contents display order calculation process
#Event/contents user list display mode set
#Log contents display
#Referenceable user confirmation process
#Invited event participation authentication process
#Content state control
#Two-dimensional barcode page generation
#Emergency processing
#Location trigger acquisition display
#Local entry process
#Save attribute management
#Termination margin
#Outline check
#Scenario transition control
#Library transition
#Article description-User image conversion
#Importable attribute list
#Scenario/calculation chart
#E-mail delivery
#Chart monitor (see Fig. 15)
#Log management
#Event activity
#Mouse pointer mode
#Chart interpretation
#Member restriction
#Palette
#Definition/scope
#Class/template
#External cooperation
#Member scope
#Group management
#Instance management
#External data usage
#Transition control
#Representative value
#Calculation zone
#Timing setting
#Participant type (see Fig. 34) determination process
#Scenario attribute registration process
#Temporal search edit form
#Overall processing (see Figs. 30 and 31)
#Continue setting

Fig. 3 is a view for explaining levels of a scenario chart description.

In a basic description, there is no participant interaction, there is no overall processing (see Figs. 30 and 31) attribute, and there is a certain limitation in a uniform description. In the basic description, a feasible scenario, an implementation trigger, an entry trigger, an individual scenario instance of a participant who satisfies conditions, and a module (individual) described inside individual scenario instance are handled.

In overall processing (see Figs. 30 and 31) introduction, there are an overall processing (see Figs. 30 and 31) module, interaction using an overall processing attribute, uniform distribution processing, and processing for instance.

A first-layer overall processing time zone (TZ) behaves as a TZ on an overall processing scenario instance starting from a time when the implementation trigger occurs.

The overall processing module drives the overall processing and issues a signal to members forming a member scope.

The overall processing (see Figs. 30 and 31) functions on the overall processing (see Figs. 30 and 31) scenario instance. The overall processing is performed with use of an overall processing description.

The overall processing (instance) is connected to individual instances through some connection descriptions, but basically is driven by transitions by overall processing transition arrows.

A module instance (individual) is processing for an individual instance (an instance is targeted rather than a member).

Since the description of the overall processing introduction level becomes more complicated, it is necessary to provide a gate for an interface to take confirmation (in simple processing, the overall processing description is limited to arrangement of the overall processing module).

Fig. 4 is a view for explaining triggers.

As triggers, an implementation trigger and an entry trigger are prepared.

In a case where the entry trigger is not arranged in a first-layer description, the implementation trigger and the entry trigger have the same meaning. When the implementation trigger occurs, the scenario instance and the overall processing instance are generated for all the registrants.

In a case where the entry trigger is arranged in the first-layer description, the implementation trigger and the entry trigger have different meanings. The overall processing instance is generated when the implementation trigger occurs, and the scenario instances are sequentially generated when the entry trigger occurs.

An outside trigger description module (OSTM) designs a selection occurrence condition from a list of events that can be designated as an outside trigger. It is an external module. An OSTM having a function of adding an individual user ID ignores other IDs in an individual event.

An entry trigger description module (ETM) is an outside trigger description module (OSTM) given with a function of generating an entry trigger of a user. In some cases, an individual user ID can be given.

A local entry (LE) is an ETM having a function of adding an individual user ID to a trigger by local means (terminal action). The LE has functions of participation registration and individual instance generation.

When an entry trigger icon is made available, a degree of freedom in soliciting users is increased, and a complicated system can be realized.

Alternatively, a specification relating to the entry description may be determined depending on whether the first layer is the overall processing module or is for performing an individual normal processing (only).

When the first layer is the individual processing (only), the entry trigger is processed as a simple outside trigger, all invited participants are entered when the implementation trigger occurs in the entry processing (a scenario instance generation process for individual participants), and processing for participants in a subsequent advertisement period starts from the first layer when receiving an entry trigger at any time. Participant routes are distinguished only by the participant attributes given at the time of participation).

When the first layer is the overall processing, a participant will be incorporated into the member scope if there is no entry trigger. Individual processing will be received as needed in accordance with progress of the overall processing by the implementation trigger. When there is an entry trigger, an invited person (standby person) at a time of entry trigger generation, or a bound individual ID holder will receive a service according to a transition starting from the trigger.

Among triggers that can be described as an outside trigger, ones that are bound with an individual user as a terminal action include the following three.

Barcode detection: Reading an exclusive two-dimensional barcode and the like such as a poster.

App input: Entry input of an app of a cooperation system. IC reading, terminal proximity communication means, and the like.

Position information (location trigger): When the app acquires position information associated with a field zone.

The triggers that can be described as an outside trigger also include a global trigger. For example, it is distribution (RSS) of an article (see Fig. 18) including a specific keyword or a tag of a designated URL.

The triggers that can be described as an outside trigger include a signal from a cooperation system. There is possibility of being bound with an individual user.

A trigger that is not associated with an individual ID causes individual instances of all users registered at the time of an occurrence.

An entry trigger of the second layer or lower when the entry trigger is not arranged in the first layer is regarded as a simple outside trigger.

In the individual instance, handling of the ETM that has not caused the entry is to be OSTM handling.

Fig. 5 is a view for explaining a relationship between a scope of contents and attributes, and instances. As shown in Fig. 5, there are layers of a first layer, a second layer (first-layer chart), a third layer (second-layer chart), and a fourth layer (third-layer chart), and a scenario is described in the first layer. Contents such as articles (see Fig. 18) are described in other layers.

In the first layer, a module template, a scenario, an implementation trigger, an entry trigger, an individual scenario instance, and an overall scenario instance are described. A definition module can also be attached to the template. This is to reduce a module operation in a library and palette reflection.

A content can be used in a chart of a scenario attribute definition module or in a layer therebelow.

Even if definition is made with the same name, the definition can be added on an icon to be used as another attribute, in a case of being on another module.

Basically, a scenario attribute is one value for a defined module. All inputs in layers below are put into one place.

For definition of a content, reference possibility is basically defined. The contents that have become a child element regardless of a defined position generate an instance when receiving a generation trigger. (A behavior of an external module is not guaranteed = allowed even when being unique to the definition).

In Fig. 5, in the third layer, a P instance is defined in a B article instance, and a P' instance is defined in another B article instance. Further, in the fourth layer, a plurality of D nest module instances are described, for one of which, a P instance is defined, and for another of which, a P' instance is defined. In such a case, a scenario attribute is stored in another instance when being inputted through a form and the like. This is because the scenario attribute is unique to the definition.

2: User screen

2-1: Screen transition

Fig. 6 is a view for explaining transitions of a user screen.

An unauthenticated user who accesses a site enters a login page. An authenticated user and a logged-in user enter User home of a main persona (Fig. 7). #Login/logout

The unauthenticated user on the login page logs in if an account can be inputted, otherwise transitions to New registration page.

A user who succeeded in creating an account on the New registration page transitions to Account page. Each page has an all-screen common navigation and a category common navigation.

A login (out) screen, content full display, and a local entry do not have the all-screen common navigation.

The all-screen common navigation causes a transition to each of Account, User home (a user home of a main persona when a persona is not specified), Trigger checker entry, and Logout.

- A transition is made from Account to Persona management.

A transition is made from a list of contents to Persona management.

- A persona-management-related page transitions to each of Persona management, User home, Attribute holder, Displayed content list of a persona comprehensive list page (see Fig. 32), Standby content list (see Fig. 32), Participating event list, Invited event list, and Event log list.

Persona-management-related common navigation causes a transition to each persona-management-related page.

A transition from a main block occurs as follows.

- Possible transition destinations from User home (including sub)
  From the list of contents (lower part of the corresponding figure in Fig. 7)
  From Hot contents
  In Participation event home (started), a tab of the corresponding contents is displayed on the top
  From a participation event with recent action
  (Depending on details)
  Participation event home (started)
  Participation event home (unstarted)
  From Invited event pickup!
  Invited event individual home
- From a list of contents in the Displayed content list (see Fig. 32)
  Participation event home (started) relevant sub-screen
- From a list of contents in the Standby content list (see Fig. 32)
  Participation event home (started) relevant sub-screen
- From a list of contents of the Participating event list
  Participation event home (according to a transition, see section *2-3, Participation event home (started), Participation event home (unstarted))
- From a list of contents of the Invited event list
  Participation event home (according to a transition, see section *2-3, Invited event individual home)
- Participation end event home from a list of contents of the Event log list
- Depending on a state of the event, the Event home changes to three states (in a center of Fig. 6, Invited event individual home, Participation event home (unstarted), and Participation event home (started)). See *2-3 Event home section.
- Invited-event-related pages are as follows.
  Invited event individual home
  Invited event participation authentication process
  In addition to transitioning to each of the Invited-event-related pages, the Common navigation causes a transition to the following.
  Invited event list
  Participating event list
- Invited event individual home
  From sub-screen
  Event explanation page full screen
  The following may be added to the sub-screen depending on the event.

Invitation

- Invited event participation authentication process
  Further, through a state transition,
  Participation event home (unstarted)
- From Participation event home (unstarted)
  From Common navigation
  Participating event list
  Invited event list
  Participation event leaving
  From sub-screen
  Event explanation page full screen
  Further, through a state transition,
  Event start screen
- Event start screen
  Participation event home (unstarted) to Participation event home (started) through a state transition
- Started-event-related pages are as follows.
  Participation event home (started)
  Participation event contents log
  Participation event standby contents
  Participation event displayed contents (list format)
  In addition to transitioning to each of the Invited-event-related pages, the Common navigation causes a transition to the following.
  Participating event list
  Participation event leaving
- For Participation event home (started)
  From sub-screen
  Full screen of displayed contents
  Event explanation page full screen
- From Participation end event home
  From Common navigation
  Participation event contents log

Event log list
From sub-screen
Event log full page
The following may be added to the sub-screen depending on the event.

Save recommendation attribute registration screen
Follow-up screen

- An event-related list is associated with a participation event of a transition source (there is a page for each participating event).
- From a list of contents of a participation event contents log
  Full contents display/log
- From a list of participation event standby contents
  Full contents display/standby contents
- From a list of contents of Participation event displayed contents (list format)
  Full contents display
- From Full contents display
  By clicking a header
  Participation event home/a tab of the corresponding contents is displayed on the top
- Event explanation page full display
  By clicking a header
  Explanation is made in section *2-3 according to a state transition of Event home/Event
- Trigger-checker-related pages are as follows.
  Entry screen
  Trigger map
  Available local entry
  The common navigation causes a transition to each of the Invited-event-related pages
- From Trigger map
  Invited event individual home
- Available local entry
  Invited event individual home
- From Local entry
  Invited event individual home

2-1-1: Behavior of navigation bar

A behavior of the navigation bar is common to all screens. A screen-related navigation bar is arranged on the header as an icon.

Clicking causes a bar to appear between with the sub-screen, and clicking the icon causes a transition. For arrangement, all-screen common and screen-related should be aligned on the bar in parallel if both are called efficiently. When the icon on the header is clicked again, the bar disappears.

The remaining screen appears by scrolling down.

2-2: Management system screen

2-2-1: Login screen

Binding

None

Essential screen elements

1) Input form for an authentication e-mail address and a password
2) Link to New registration page (with explanation)

When an input to 1) matches an account, a login session is started. If there is no match, a warning alert is inserted on the screen and the process returns. #Login/logout

2-2-2: New registration

Binding

New registration

Essential screen elements

1) Input form for an e-mail address and a password

a) Process of ensuring veracity of the e-mail address is essential. #Veracity confirmation by authentication e-mail
b) Password strength check is considered. #Form input verification
For an inputted password, for example, the following is scanned and confirmed.

* Is there an upper-case letter?
* Is there a lower-case letter?
* Is there a number?

It may be simply be described that it is OK when each condition is satisfied and there are eight or more characters (for example).
If the input is successful in checking of a and b, an account is created and a transition is made to the Account page.
c) Passwords are not stored in plain text, but saved after being hashed with SHA-256 and the like (since this kind of hash cannot be decrypted, even the system manager cannot see the password of each user)

2-2-3: Account

Binding

User ID (omitted in the screen explanation below)

Essential screen elements

1) Authentication e-mail address display #E-mail delivery
2) Password change input form
3) Link destination when password is forgotten
4) Private information input form (selection) and display of inputted information

3-1) Name
3-2) Gender
3-3) Date of birth

5) Rating
Three-choice radio type of: unlimited, R18 inhibited, and R15 inhibited
6) Charging information, No detailed explanation, Appropriate API is used (PayPal API payment)
7) Registered persona list (link)
8) New persona registration (link)
9) All-screen common navigation (that functions after registration of a persona)

a) In 2), normally, only the character string "Password change" is displayed. #Form input verification
Clicking causes one row of a current password input form.
Two rows of new password input form when inputted.
Password change is made when correct input is successful.
b) In 4), after the input, the input form for reediting is hidden, and a re-edit button is arranged at the end of the section. Regarding 3-3), after the input of the date of birth, age and date of birth are displayed.
c) In 3), the password is reset, and a form for setting again is sent to the authentication e-mail. #Veracity confirmation by authentication e-mail #E-mail delivery
d) Link destination in 6, 7) is Persona management page

2-2-4: Persona management

Registration, editing and browsing, and management of persona information is performed.

Binding

New registration
Persona ID

Essential screen elements

1) Registered terminal information
Dormancy check
Delete
2) New terminal registration
3) Nickname input and display
4) One-sentence introduction (up to 40 characters)
5) Tag input form
6) Self introduction input form
7) Main selection (select button)
8) Participation log (display select button) #Log management
9) All-screen common navigation
10) Persona-related common navigation

a) Multiple personas can be registered and a persona ID is assigned. The user must make a main designation for one of the registered personas. The default is the persona registered first.
b) In terminal registration, guidance is made for downloading an app to a smartphone/tablet terminal from an app store, the app is opened to log in, and the persona to be used is selected from the management screen. In this case, "app user" is added to official save attributes (disclosed). A nickname is required for the downloaded app. #App download #Terminal registration process #Veracity confirmation by authentication e-mail #E-mail delivery
c) In a case where the application is not downloaded to any terminal, the main persona is to be used on any device. (If there is no terminal registration, other registered personas cannot be used unless being set as the main persona. Changing of the main persona is not possible if there is an event being participated)
d) Through any registered terminal, the nickname and affiliation information can be seen on the persona management screen. Further, an affiliation persona can be changed to a corresponding persona through persona selection.
e) For sections 3, 4, and 6, a specification is sufficient in which input details of the form are simply displayed in the form.
f) For input of the tag in section 5, when the form is clicked, a sub-screen appears where an official tag can be selected. See sections 2-7 for tags.

The sub-screen displays
an official tag,
an alternative official tag grouped and displayed, and
a private tag input form.

d-1) When the official tag is selected, a corresponding tag is displayed and registered in the clicked form
d-2) When the alternative official tag is selected, the tag registration process in Fig. 8 (driven by alert) is followed for registration.
d-3) When input is made into the private tag input form, a corresponding tag is displayed and registered in the clicked form
e) The participation log in section 8 is normally closed, and is displayed with a lower part of the screen being extended when the participation log display button is clicked. For the log, see section 3-3-1-9. #Tag-attribute conversion mechanism

2-2-5: User home

This is a base of user (persona) activities, and new information can be confirmed.

Binding

Persona ID

Essential screen elements

1) Hot contents (list)
2) Hot contents expansion button
3) Participation event (list) with recent action
4) Expansion button for participation event with recent action
5) Invited event pickup! (list)
6) Invited event pickup! expansion button
7) All-screen common navigation
8) Persona-related common navigation

a) In Hot contents, while contents of all participating events are targeted, extraction and listing is performed on highly important "article being displayed not selected" articles, "standby" articles, or external module instances waiting for input. (see Fig. 17)
Importance calculation logic (contents with high Wt is ranked higher)
(Explicit timeout remaining time * Wt1 + elapsed time from display start time * Wt2 + article with state with selection restraint? (0/1) * Wt3 + is there attribute value input (form)? (0/1) * Wt4) * scenario importance (system designation) Wts = Wt #Hot contents display order calculation process
b) In participation events with recent action, all events being participated are sorted and listed in an order of contents display performed most recently.
c) In Invited event pickup!, invited events that satisfy conditions (see Section 3-4-1-1) are added with a weight according to scenario importance (system designation) Wts and listed. In a case of the same Wt, the order of new arrival is adopted.
d) For sections 1, 3, and 5, items of the number that can be displayed at the top of the list are extracted and displayed.
e) For sections 2, 4, and 6, when clicked, a contents part changes to full list display of the corresponding item. #Event/contents user list display mode set

Fig. 7 shows individual examples of User home, Participation event home, and Full contents display. The User home displays buttons that enable a transition to each of Displayed contents list, Standby contents list, Participating event list, Invited event list, Attribute holder, Persona management, User home, Persona navigation, and Common navigation.

The Participation event home shows an example of participating in the Autumn Fuji Five Lakes Stamp Rally. The Participation event home is for a user called Heno Moheko-san, and displays tags for a transition to each of "Arrived at the stamp rally area", "Guide module (first point)", "Event leaving screen", "Standby call", and "Event explanation page", and buttons for transitions to Event navigation and Common navigation.

2-2-6: Attribute holder #Save attribute management

Binding

Persona ID

Essential screen elements

1) Save attribute list

1-1) Attribute name
1-2) Attribute value
1-3) Attribute category (provider)
1-4) Attribute value type
1-5) Disclosure setting
1-6) Deletion item

2) All-screen common navigation
3) Persona-related common navigation

What is handled here is to be a save attribute. See section 2-8 for the save attribute itself.

a) 1-2 Attribute value displays a value, but displays a form when a property of the attribute is editable, in which the attribute value can be rewritten.
b) 1-5 Disclosure setting displays a property of the attribute, but displays a check box in a case of being selectable to be disclosed, and the same handling as being disclosed is adopted if checked.
c) 1-6 A check box appears for an attribute having property that allows deletion. An alert appears if checked, and the attribute is deleted when deletion is possible.
d) 1-3) Attribute category shows a link to a director page, when there is a provider.

Fig. 8 shows a display example of Attribute holder and Persona management, and a flow of tag registration.

The Attribute holder has, for each user, information such as an attribute name, an attribute value, an attribute category, an attribute value type, and distinction of disclosed or non-disclosed. The attribute name is, for example, gender, age, prefecture of residence, occupation, participation scenario, and the like. The attribute value is female, 29, Wakayama prefecture, and the like. The attribute category is a provider of the attribute. The attribute value type is a character string, numeric value, true or false, and the like.

The attribute disclosure setting indicates whether other manager users can refer to. An attribute with a check box is a selectable attribute, and is disclosed when checked.

An attribute whose attribute value is described in a form is an attribute that can be edited by the user, and can be written or selected by a pull-down. In a case where the attribute is imported in the participation scenario, editing is disabled during participation.

A tag-related attribute depends on the tag, and the attribute is also deleted when the tag is deleted (false).

2-3: Event home (transition when using event)

2-3-1: Basic form

Binding

Persona ID
Event ID

Essential screen elements

1) Sub-screen
2) All-screen common navigation
3) Transition-dependent event navigation

a) The Sub-screen in 1 is sectioned into a content display region and a content tab region.

a-1) A content selected by the user by clicking is displayed.
a-2) Double-clicking an empty region of the content causes a transition to the full screen.
a-3) Double-clicking a displayed tab causes an alert to confirm whether to close the content. When Close is selected, the display disappears, or the mode is changed to standby. #Contents state control
a-4) What is displayed on the tab changes in each transition state.
a-5) The tab can be scrolled horizontally up to three levels by dragging.
a-6) Arrangement change by user dragging is possible.

b) Log mode

There is a log mode to display a log on a sub-screen in the Participation event home (started) and the Participation end event home. The sub-screen is added with a log screen with tabs reversed in the mode that allows browsing contents of a log format (3-3-1-10: Contents log). The log mode ends when all tabs of the log disappear. In the log mode, in the header, a message appears, indicating that the log is inoperable. #Log contents display

2-3-2: About transition when using event (event start screen and invited event participation authentication process) See Figs. 1 and 14. #Scenario transition control

1) The user is to be in an invitation state when registered in an invitation list of the event in some way. This corresponds to

1: Checking when browsing the Event home after being listed on the Invited event pickup!
2: Checking when browsing the Event home after being listed on the Available local entry
3: When receiving and checking an invitation e-mail
4: When contacting with a local entry
5: When acquiring a cookie on a guidance site on a web #Referenceable user confirmation process

2) When the user presses Check on an explanation page, an alert occurs and an invited event participation authentication process is started.
3) Rating check is conducted. When rating information of the user is compared with rating information of the scenario tag, and an applicable limitation is encountered, the process stops.

4) Attribute check is conducted. In the attribute check, a save attribute value of an attribute holder that can be referred to by the manager is compared with an attribute condition of the participant type (see Fig. 34). #Save attribute management #Participant type (see Fig. 34) determination process

1: List of participant types (see Fig. 34) allowed to participate

2: Immediate assignment is possible on the user side (tag and attribute holder operation).

In addition, an alert recommending editing and requesting participation reception again is displayed (a transition is made to the attribute holder in a case of following).

The user side can change the setting when it is a non-disclosed attribute, and can acquire the tag when it is a tag-related attribute, to adjust conditions.

3: If there is no correspondence to 1 or 2 for any type, participation is disabled, and an alert occurs to announce that participation is disabled.

4: When 1: List of participant types (see Fig. 34) allowed to participate is generated, a sub-screen is generated, and selection is made. The list (radio type) of participant types (see Fig. 34) allowed to participate is displayed on the sub-screen, and the type is set when selected.

However, a user who satisfies the condition of attribute check 2 is shown a warning message asking whether to reselect after adjusting the condition.

The list can be changed until the entry trigger occurs, and remains as one of the sub-screens.

5) For a user who satisfies the attribute condition and selects the participant type (see Fig. 34), "attribute condition achievement" is set and the Participation event home (unstarted) is displayed. #Invited event participation authentication process

6) When an entry trigger occurs, an event start page is displayed at the top level of the hot list.

The Participation event home (started) page will be displayed.

7) When the event ends, Event end screen is displayed and Participation end event home is displayed.

8) Save recommendation attribute registration screen from section 3-6) of Registration usage process of 2-8-4: Save recommendation attributes is distributed, and save recommendation attributes are registered. #Save attribute management

2-3-3: Invited event individual home

a) Invited event event navigation display

b) Event explanation page is displayed on the sub-screen.

2-3-4: Participation event home (unstarted)

a) Unstarted event navigation display

b) Event explanation page and Participant type (see Fig. 34) selection screen are displayed on the sub-screen.

2-3-5: Participation event home (started)

a) Started event common navigation display

b) Unclosed messages are displayed in the sub-screen, and an article in a displayed mode (Fig. 17), a service screen of an active external module, unclosed Event explanation page, and Participant type (see Fig. 34) selection screen are displayed. Further, a standby display tab is placed as a special tab.

c) Tabs are sorted in the order of new arrival. A mode of displaying Hot contents limited with the participation event and during display is desired, when there is a possible operation. #Event/contents user list display mode set

d) When the standby display tab is selected, a transition is made to 2-5-6 Participation event standby contents.

2-3-6: Participation end event home (after end)

a) Participation end event common navigation display

b) A screen log is displayed on the sub-screen, and follow-up is displayed as the active page, if any. #Log contents display

2-4: Contents

Contents that can be used by the user on this screen are an article (see Fig. 18) and a service screen of an external module. Further, as special articles, there are Event explanation page (including invitation message), Participant type (see Fig. 34) selection screen, and Event start page.

The generated contents are distributed by an e-mail and registered in the user screen as the active mode. Contents e-mail delivery: When contents are generated, an html e-mail with the same appearance is sent to an e-mail address designated by the user's terminal. At a time of the first action or when selecting a location where an event is not set, the browser or an app is called and the display is performed.

#E-mail delivery

The generated contents have three modes of
Active
Standby
Termination.

Contents of the active mode include an article being displayed (see Fig. 18) and an external module service screen that performs active service provision. Contents of the active mode are brought into a standby mode or a termination mode through a tab operation, a browsing end process in the article, and a state control of the external module. See Fig. 17.

Contents of the standby mode include a standby article and a standby external module service screen.

Contents of the termination mode include an article in a termination state and the external module service screen

When a special article is deleted, a transition is made to the standby mode. #Content state control

2-4-1: Full display

Full display of contents is performed. Clicking the header causes the display to return to the original screen.

2-4-2: Special article

A special article is registered in Special article in Scenario screen of Fig. 9, and distributed by a trigger of the manager. There is no termination state, and standby continues until the event is stored as a log even if it is closed. A form can also be loaded, and is reflected in the attribute value when the user is brought into the participation state.

1) Event explanation: The event is explained. It is also possible to create multiple pages, in which case they are arranged in the order of the sequence in the special article. There must be Check on at least 1P. When pressed, the process of 2-3-2 2) starts. #Invited event participation authentication process
2) Invitation: This is an article for advance announcement. After the advertisement starts, distribution can be made by 3-4-6-1: Announcement e-mail delivery. Pressing the Check of the article causes an invited state. #Referenceable user confirmation process
3) Participant type (see Fig. 34) selection: It is necessary to satisfy requirements to perform the process of 2-3-2 3). Automatic generation. #Participant type (see Fig. 34) determination process
4) Save recommendation attribute registration screen: It is necessary to satisfy requirements to perform the process of 2-3-2 7). Automatic generation. #Save attribute management
5) Follow-up: A post announcement article. Distribution can be made by 3-4-6-1: Announcement e-mail delivery after the end of the event, but only for participants.
6) Identification two-dimensional barcode: The two-dimensional barcode described in 2-11: Identification two-dimensional barcode is displayed. This is valid during participation. #Two-dimensional barcode page generation
7) Emergency chat: A page that is called at a time of a manager call. It is possible to contact the manager by chat. Automatic generation. It is always displayed on the top. #Emergency processing

2-4-3: External service #External cooperation

Users can use external services in three forms.

A: Service provision screen: External services following the above contents limitations can be used as contents. This is called a service provision screen of the external module.
B: Cooperating service: Cooperating mobile apps and web services can be used from embedded cooperating screen parts of articles. Screen transitions may or may not occur. When the screen transition occurs, it is provided as an independent service separately from the progress of the event. When contents of the cooperation source is terminated regardless of whether the service (whose details have been authenticated) is continued or not, the cooperation is terminated.
C: Link: It is also possible to receive a service through a transition by a link. In this case, the scenario is irrelevant for the service after the transition. A warning to that effect is alerted at the time of transition.

User authentication: When using external services of A and B, in a case where personal information of the account or the cooperating service is used, Authentication confirmation screen must appear to make confirmation of the use. #Login/logout

2-5: List

All the lists must be able to adopt the order of new arrival, a reverse order, a load order (see 2-2-5: User home, contents other than logs) #Hot contents display order calculation process, and an order in which contents have been generated (event list). #Event/contents user list display mode set #Content state control

2-5-1: Displayed content list (see Fig. 32)

Binding

Persona ID

Essential screen elements

1) Displayed content list (see Fig. 32)
Content name
Event name
Generation time
2) All-screen common navigation
3) Persona-related common navigation

List generation display of active contents during participation (unstarted, started).

Clicking the contents name causes a transition to the Event home, and sets display of the sub-screen to the corresponding contents.

2-5-2: Standby content list (see Fig. 32)

Binding

Persona ID

Essential screen elements

1) Standby content list (see Fig. 32)
Content name
Event name
Generation time
2) Collectively-displaying button
3) All-screen common navigation
4) Persona-related common navigation

a) Standby content list for all participation events (unstarted and started) of the persona.
Clicking the contents name causes the contents to be changed into a state of being displayed, and causes a transition to the Event home, and sets display of the sub-screen to the corresponding contents.
b) Clicking the collectively-displaying button causes the entire list to be changed into a state of being displayed.

2-5-3: Participating event list

Binding

Persona ID

Essential screen elements

1) Participating event list
Event name
Entry time
2) All-screen common navigation
3) Persona-related common navigation

A list of participating events (unstarted and started) of the persona.

Clicking the content name causes a transition to the Event home of the corresponding event.

2-5-4: Invited event list

Binding

Persona ID

Essential screen elements

1) Invited event list
Event name
Entry time
2) All-screen common navigation
3) Persona-related common navigation

A list of invited events for the persona. See 2-3-2 for the range.

Clicking the content name causes a transition to the Event home of the corresponding event.

2-5-5: Event log list #Log contents display

Binding

Persona ID

Essential screen elements

1) Participation end event list
Event name
Entry time
2) All-screen common navigation
3) Persona-related common navigation

A list of Participation end events of the persona. Each item is linked to the Participation end event home.

2-5-6: Participation event displayed contents

Binding

Persona ID
Event ID

Essential screen elements

1) Participation event displayed contents list
Content name
Event name
Generation time
2) All-screen common navigation
3) Started event common navigation

A list of displayed contents for the participation event.

Clicking causes a transition to Contents full display.

2-5-7: Participation event standby contents

Binding

Persona ID
Event ID

Essential screen elements

1) Participation event standby contents list
Content name
Event name
Generation time
2) Collectively-displaying button
3) All-screen common navigation
4) Started event common navigation

A list of standby contents for the participation event.

Clicking causes a change into a state of being displayed, and causes a transition to Contents full display.

Sorting is similar to the Hot contents (excluding the state of being display)

Clicking the collectively-displaying button causes the entire list to be changed into a state of being displayed.

2-5-8: Participation event contents log #Log contents display

Binding

Persona ID
Event ID

Essential screen elements

1) Participation event contents log list
Content name
Event name
Generation time
2) All-screen common navigation
3) Started event common navigation

A list of contents in the termination state of the participation event

Clicking causes a transition to a log mode of Participation event home, and displays the corresponding contents.

2-6: Trigger checker and local entry

2-6-1: Trigger checker entry

Binding

Persona ID

Essential screen elements

1) Identification two-dimensional barcode #Two-dimensional barcode page generation
2) All-screen common navigation
3) Trigger checker common navigation

a) In 1) Identification two-dimensional barcode, the two-dimensional barcode described in 2-11: Identification two-dimensional barcode is displayed. A note should be made to indicate that this code is unique to the user (persona) and only for local entries.

2-6-2: Available local entry

Binding

Persona ID

Essential screen elements

1) Available local entry list
Local entry name
Event name
Distance
2) Listing distance input form
3) All-screen common navigation
4) Trigger checker common navigation

a) Extraction and display are performed on local entries within 2) Listing distance from a nearby user-side trigger (see 2-10).
b) The Listing distance input form is in a pull-down selection format (100 m/300 m/500 m/1 km/10 km) #Location trigger acquisition display

2-6-3: Trigger map

Binding

Persona ID

Essential screen elements

1) Trigger map
2) Category selection form
3) All-screen common navigation
4) Trigger checker common navigation

a) A nearby user-side trigger (see 2-10) is dropped and displayed on the map. In informing, only an event name and a category (local entry, location trigger) are known.
b) The category of the location trigger to be displayed can be limited in the Category selection form.

Local entry

Started event (participating) #Location trigger acquisition display

2-6-4: Local entry

See Fig. 4.

Local entry process

1) A non-dormancy terminal detects a presence of a local entry through a location trigger, or by means such as a local two-dimensional barcode or app cooperation.
2) Session of the persona or the main persona of the terminal is started.
3) Entry is immediately made for a user participating in the event, otherwise an article (Event explanation page) associated with the local entry is displayed. The fact of being a local entry is added to the explanation P display. #Local entry process

2-7: About tags

A tag has a structure as shown in Fig. 8.
An official tag includes an official important tag having an attribute value, and a part of the official important tag is grouped and has a group label and a tag value. This is called an alternative official tag.
An example of the alternative official tag group
Group label: Eternal age
Tag Tag value (type)
From 0 to
Eternal 22 years old 22 (numeric value)
Eternal 23 years old 23 (numeric value)
Eternal 24 years old 24 (numeric value)
Up to 90
A normal official important tag takes a true/false value when converted into an attribute.
Alternative official tag has the group label as the attribute name, and the tag value as the attribute value.
The attributes of deleted tags are automatically deleted. #Tag-attribute conversion mechanism

2-8: About save attributes #Save attribute management

2-8-1: Attributes and save attributes

See Fig. 8. The attribute is to be set and operated by the manager side on the scenario, to drive the event. Whereas, there is a case where the user side or the provider side desires to hold and grow some outcome generated there beyond a single event. Further, the manager side may also desire to use information on the user side in the scenario.
In order to realize the interoperability of the value, setting management is made possible on save attributes with management right on each of the manager side and the user side. For this management, the manager side can use 3-4-4 Registration recommendation save attribute management, and the user side can use 2-2-6 Attribute holder. For the manager side to use in the scenario, it is necessary to designate usable save attributes as a reference destination of an import attribute, and to designate as an attribute condition of the participant type (see Fig. 34).

Save attribute properties

1) Attribute name
2) Attribute value
3) Attribute category
4) Attribute value type
5) User editability
6) Disclosure setting
7) User deletability
8) Editability on import

a) Detailed explanation

1) Attribute name: From attribute information
2) Attribute value: From attribute information. User editing may be possible.
3) Attribute category: See Attribute category in Fig. 8. There are three types: an official attribute, a tag-related attribute, and a save recommendation attribute, and the save recommendation attribute is associated with a manager ID.
4) Attribute value type: From attribute information
5) User editability: Indicating whether the attribute value is editable by the user. Only for save recommendation attributes (others can be indirectly edited through account editing and tag operations), an attribute whose attribute value is described in a form is an attribute that can be edited by the user, and can be written or selected by a pull-down. (In a case where the attribute is imported in the participation scenario, editing is disabled during participation)
6) Disclosure setting: Setting of whether the save attribute can be used by the manager as an import attribute. There are three types: disclosed, selectable to be disclosed, and non-disclosed. The save recommendation attribute is set by a manager side. Selectable to be disclosed can be designated by the user on the attribute holder. The manager of the save recommendation attribute can operate self-provided attributes regardless of this setting.
7) User deletability: Indicating whether the attribute is deletable on the attribute holder. All the save recommendation attributes are applicable.
8) Editability on import: Only a save recommendation attribute of disclosed (approved) setting is valid. Whether setting as a synchronization attribute at a time of attribute registration (see Fig. 33) is possible or not. For official and tag-related attributes, reference only.

The synchronization is performed at a time of Attribute registration in Fig. 1.

2-8-2: Official attributes

Attributes derived from user account information. The attribute value cannot be edited but selectable to be disclosed. Two items, gender (character string selection) and actual age (numeric value), are applicable. Further, a user who has downloaded the app to the registered terminal obtains an "app user" attribute (true or false).

2-8-3: Tag-related attributes #Tag-attribute conversion mechanism

Attributes derived from tags. It is automatically registered and deleted as an attribute by the process described in detail in 2-7 (Fig. 8). All are disclosed and cannot be edited.

2-8-4: Save recommendation attributes #Save attribute management #Importable attribute list

The save recommendation attribute is a save attribute for which the manager side has the management right, and is linked with the manager ID with the management right. Definition and management of the save recommendation attributes are performed on 3-4-4 Registration recommendation save attribute management page.

Registration usage process

1) Registration procedure on manager side with management right
See Registration recommendation attribute new registration process in Fig. 14

1-1) New registration button is clicked
1-2) Attribute registration form is called. See Fig. 33.
1-3) Save setting form is called.
1-4) User editability is set from the form
1-5) Disclosure setting is made from the form, and editability on import is set from a composite list
1-6) In a case of disclosure (approval) synchronization, is granting allowed? (initial value setting),
1-7) In a case of disclosure (approval) synchronization, it is possible to set a changeable range of the attribute value in an event of the other party. It is limited to attribute value types of character string selection and numeric value. See the figure.
1-8) A relevant attribute is registered in the Registration recommendation save attribute management page.

2) Usage procedure on import side manager side
See Fig. 33. A search is made in the list of importable attributes in Fig. 33 for an import source save attribute to be obtained. In a case of disclosure synchronization, progress is made to the process.

In a case of approval synchronization, approval check is clicked. When the other party's approval (denial) is obtained, an e-mail is received. When the list is checked after that, the attribute has been approved and is to be treated the same as being disclosed. In a case of denial, the attribute has been denied, and the manager user cannot use the attribute.

Since only disclosed (approved) synchronization (or self attributes) can be saved as the save attribute, only a process thereof is extracted. #Participant type (see Fig. 34) determination process

2-1) The save recommendation attribute is checked on new attribute registration
2-2) Is the import source save attribute included in the essential attribute conditions in the participant type (see Fig. 34) setting? (AND condition in all conditional branches, rather than NOT/OR condition) When it is included in the attribute, progress is made to the next process.
2-3) When it is not included, in a case where the attribute is active in the participant type (see Fig. 34), progress is made to the next process if granting permission setting of the import source attribute is set as permitted, otherwise the check is removed together with the warning text.
2-4) Processing of 2-2 to 2-3 is performed for all participant types (see Fig. 34), and registration is made as a save attribute if the save attribute check remains. (When the attribute condition and the active setting are changed, processing of 2-2 to 2-3)

3) Attribute registration process at the end of the event (see Fig. 1)

3-1) A user having an active save recommendation attribute is extracted among participating users. Subsequent processing is performed for each attribute. If the condition of each step is not satisfied, the process is stopped and the next attribute is targeted.
3-2) Does the attribute satisfy the condition as a save recommendation attribute? Whether it is disclosure synchronization or authentication disclosure synchronization, and an approval destination, and the like
3-3) Has the import source attribute been granted even if the attribute is an import source attribute that is not a self attribute and does not have granting permission?
3-4) Is a range of attribute value change limited to a range of authorization in step 1-7) above?
3-5) When the steps 3-2 to 3-4 are ended for each save recommendation attribute, the checked attributes are listed.
3-6) The attribute list is distributed to the user's Participation end event home in a form of the Save recommendation attribute registration screen, to be checked.
3-7) The save recommendation attributes checked in the above section are added to the user's attribute holder.

2-9: E-mail delivery #E-mail delivery

2-9-1: Content distribution

When contents are generated in each event, the contents in a log format (3-3-1-8: Log) is distributed in the html format to the terminal e-mail address of 2-2-4: Persona management. When the user clicks the screen or takes the first action, sub-screen display of the corresponding contents is called and displayed by the browser.

2-9-2: Announcement distribution

See 3-4-6-1: Announcement e-mail delivery.

2-9-3: Warning distribution

When a warning is issued by the system side, a typical automatic transmission e-mail is sent.

2-9-4: Push link

When e-mail delivery is performed to an app DL terminal, push communication is performed at the same time. The specification is according to the service used. mBaaS and the like.

2-10: Trigger (user side) #Location trigger acquisition display

A trigger refers to "event" for driving the entire event, but refers to, for the user side, a trigger associated with a field zone currently receivable in the participating event. This is tentatively called a location trigger.

A field zone associated with field-in/out and having a transition arrow leading to contents in an active time zone that does not eventually transition to exception management is to be a definition of the location trigger (considering explicit limitations by attributes). An exception location trigger for exception transition is also defined.

2-11: Identification two-dimensional barcode #Two-dimensional barcode page generation

In a special article on the sub-screen, a trigger checker entry, or a user check two-dimensional barcode issue module, the user can generate and display a unique two-dimensional barcode for a terminal that identifies the user's terminal and a context of the scenario.

By causing this two-dimensional barcode to be identified by a two-dimensional barcode reader on the manager side or a reading function of the user app, a trigger can be caused. Trigger identification is performed by registering the two-dimensional barcode on the manager side with 3-3-4-3-1: Outside trigger description module.

For contact between users who do not have the app, an input code and an input form valid during the event are also displayed at the same time.

2-12: User check #Two-dimensional barcode page generation

The user can transmit contact information between with manager side equipment or users, by using the two-dimensional barcode or the input code displayed on the page. This is called a user check.

2-13: Termination margin #Termination margin

When an exception termination margin and a zone out margin are applied, warning distribution of a message is performed (2-9-2). When countdown is set to be permitted by the user side, warning distribution of the countdown is performed at regular intervals.

3: Manager screen

3-1: Screen transition

For new registration, see 3-6 New registration. Screen transitions of the manager user having authentication are described. The screen is sectioned into a main navigation that comes in the header, a sub-navigation that extends vertically, and a main block that displays information. See Fig. 10.

Information of main navigation is common to all screens, and a transition list of sub-navigation is changed in accordance with selection of the main navigation.

- From main navigation
  Scenario creation (see Fig. 49)
  Scenario management
  Event monitor (see Fig. 11)
  Account
  Log out
- From Account
  Sub-navigation does not exist.
  Contract renewal page such as upgrade
  Payment page
  Inquiry
  Existing APIs that can be used are actively used, if any
- Welcome page
- Scenario creation (see Fig. 49) related
  From sub-navigation
  Welcome page
  After scenario selection (scenario list by a pull-down, and new creation)
  Scenario
  Scenario chart
  Article creation (see Fig. 20)
  Module creation
  Contents list
  Participant attribute management (see Fig. 33)
- Scenario
  New article creation (special article)
  Participant attribute management (see Fig. 33) (registered)
  Modularization (data convert) #Scenario transition control
  Outline check (transition) #Outline check
  Feasible scenario (data convert) #Scenario transition control
- Scenario chart
  From Utility bar
  New calculation module
  New article
  New module
  New scenario attribute
  Scenario attribute management #Contents list (cut out)
  Private library (scenario ID) #Library transition
  Standardized library (scenario ID) #Library transition
- Article creation (see Fig. 20)
  Article list screen #Contents list (cut out)
  New production
  Article being created
  From Utility bar
  Preview #Article description-User image conversion
  Private library (scenario ID, article ID) #library transition
  Standardized library (scenario ID, article ID) #library transition
  Module edit screen (fill-up) #Class/template
  Module edit screen (definition change) #Contents list (cut out)
  Content list (see Fig. 32) (module)
  Scenario
- Module creation
  Module list screen #Contents list (cut out)
  New production
  Module being created
  From Utility bar
  New calculation module
  New article
  New module
  New scenario attribute
  Scenario attribute management
  Fill-up #Class/template
  Definition module change #Definition/scope
  Private library (scenario ID) #Library transition
  Standardized library (scenario ID) #Library transition
- Contents list #Contents list (cut out)

Contents display
Attribute display
Sub-element display
Layered display
Each contents edit screen (article ID)

- Participant attribute management (see Fig. 33)
From New attribute registration form
Importable attribute list #Importable attribute list
Participant type (see Fig. 34)
Attribute chart call #Scenario/calculation chart
- Scenario management related
From sub-navigation
Welcome page
Feasible scenario
Participant management
Registration recommendation attribute management #Save attribute management
Private library #Library transition
External standardized library #Library transition
Announcement e-mail delivery #E-mail delivery
Two-dimensional barcode generation
- Feasible scenario
Each scenario creation (see Fig. 49) screen
- Participant management
Participant attribute browsing screen #Save attribute management
Invited event list #Referenceable user confirmation process
- Registration recommendation attribute management #Save attribute management
Attribute detail informing
Attribute registration form call
- Private library #Library transition
- External standardized library #Library transition
- Announcement e-mail delivery
- Two-dimensional barcode generation
- Event monitor (see Fig. 11) related
From sub-navigation
Welcome page
After scenario selection (list of ongoing events)
Chart monitor (see Fig. 15) #Chart monitor
Manager trigger management (see Fig. 16) #Transition control
Exception module monitor (see Fig. 16)
- Chart monitor (see Fig. 15)
Attribute value list #Event activity
Participant list #Log management
Upper-level chart monitor
Contents property screen (contents ID) #Event activity
- Manager trigger management (see Fig. 16)
Module chart monitor #Chart monitor
- Exception module monitor (see Fig. 16)
Module property (module ID) #Event activity
Activity (module ID) #Event activity
Manager call (module ID)
User log display (user ID) #Log management
Module property (module ID) #Event activity
Activity (module ID) #Event activity
Chart monitor (user ID) #Chart monitor
Emergency call #Emergency processing
Activity (module ID) #Event activity

3-2: Main part/management system screen

3-2-1: Login/logout #Login/logout

Binding

None

Essential screen elements

1) Input form for authentication e-mail address and password #Veracity confirmation by authentication e-mail
2) Link to New registration page (with explanation)

When an input to 1) matches an account, a login session is started. If there is no match, a warning alert is inserted on the screen and the process returns.

3-2-2: New registration

See 3-6 New Registration

3-2-3: Account

Binding

Manager ID

Essential screen elements

1) Authentication e-mail address display
2) Manager information (can be changed on the screen during initial registration)
3) Account grade information
4) Password change input form #Form input verification
5) Charging information (not required at initial registration)
6) Director name display edit form
7) Director tag display edit form #Form input verification
8) Director introduction text display edit form
9) Director log display button #Log management
10) Link to upgrade site
11) Inquiry form

3-2-4: Welcome page

Binding

Manager ID

Essential screen elements

None

a) Greeting page. Specifically, this is a main page when no scenario creation is performed (see Fig. 49).

There may be a link to tutorial and the like

3-3: Main part/scenario creation (see Fig. 49)

3-3-1: Concept explanation

A part for performing a process of creating a scenario until registering as a feasible scenario. 3-3-1-1: Chart #Scenario/calculation chart

A chart is a mechanism that is used in 3-3-3: Scenario chart, 3-3-4-1: Nest type module, 3-3-3-6: Calculation module, 3-3-1-6: Timing setting, and 3-3-1-13: Participant type (see Fig. 34), and that controls graphical article distribution and external cooperating service provision to mobile terminals of event participants and related equipment, and performs behavior control of internal objects.

A completed chart has a flowchart shape in which a content is linked by transition arrows, and the transition arrows are relayed or sectioned by icons of control objects (descriptors, zones, attributes).

By using a sectioning relationship by the transition arrows and the time zone (3-3-1-4-1), and using a position on the screen to analyze a relationship of contents and a descriptor, behavior control information is extracted.

There are two types (five types) of the chart, which are a scenario (module) chart to manage a state transition of contents, and calculation charts to define attribute calculation and conditional branching (there are a timing setting chart and an attribute condition chart as variations), and some of usable objects are also different.

The five charts are desired to have the same (composite) function and differ only in a palette that appears (it is regarded that a difference between arrangeable icons of the scenario type and the calculation type is classified with the calculation zone. Further, there is still a difference in interpretation after arrangement due to a difference in module functions).

The chart is sectioned into some pieces, and has different types of palettes that appear depending on the screen used.

Scenario chart: Scenario chart (3-3-3-2: Chart area)
Module chart: Nest type module (3-3-4-1: Nest type module)
Calculation chart: Calculation submodule (3-3-3-7: Calculation submodule)
Timing setting chart: Timing setting (3-3-1-6: Timing setting)
Attribute condition chart: Participant type (see Fig. 34) edit (3-3-1-13: Participant type (see Fig. 34)), member restriction part

A chart surface without any icon is called a chart field, and a chart field not included in a time zone is called a plain chart field.

3-3-1-1-1: Chart operation #Scenario/calculation chart

There are three actions to be used; click, double click, and drag and drop (DD).

Mode of icon on chart field: An icon or a portion selected by clicking is highlighted. The following operations are all operations on a selected portion or icon.

Mode of mouse point: Double-clicking only a transition arrow on a palette causes a mouse point to resemble the transition arrow of the corresponding type, and to have a special behavior. This is canceled by clicking and double-clicking the transition arrow again.

3-3-1-1-1-1: Palette icon drag #Palette

3-3-1-1-1-1-1: Arrangement on chart field

When DD is performed on an icon on a palette, the icon silhouette moves with the mouse point. If a developed icon can be arranged in an empty portion on the chart field (see 3-3-1-1-1-6: Movement limitation), the icon is displayed. When the icon is dropped at that position, the icon is displayed at that position with an appearance that has been set on the field.

3-3-1-1-1-1-2: Arrangement on icon and icon portion

When the icon subjected to DD reaches a position where the icon can be arranged on another icon, a frame line changes to an emphasizing color. When the icon is dropped at that position, the another icon changes to an appearance in which the icon is arranged in a corresponding icon portion. Double-clicking the combined icon or portion cancels the arrangement, and separates icons are displayed. An icon that cannot be displayed on the field disappears. A field zone can be arranged on another icon by performing DD on a DD area on the FZ icon.

3-3-1-1-1-2: Zone arrangement #Mouse pointer mode

This is similar to contents, but a property is determined by arranging an icon of a processing palette on a chart field.

3-3-1-1-1-3: Movement of icon within screen and transformation of icon #Mouse pointer mode

A selected icon on the chart field can be moved by DD while maintaining a relationship between a transition arrow and an arrangement icon. Other limitations are the same as those in 3-3-1-1-1-1-1: Arrangement on chart field.

3-3-1-1-1-4: Joining operation of transition arrows #Mouse pointer mode

For a transition arrow appearing on the chart by the arrangement on the chart field, portions at both ends can be selected. One end of the selected ends is fixed to a connectible portion (start point: status trigger/end point: status receptor) by DD, similarly to 3-3-1-1-1-1-2: Arrangement on icon and icon portion. Cancellation is also possible by double-clicking. The transition arrow with both ends joined is highlighted.

In a case where the mouse point changes to a specific transition arrow, when a start point clicks on the status trigger, a transition arrow appears in which the start point is fixed and a tip end follows the point. In that state, an end point is connected by clicking the status receptor. Further, when a transition arrow is double-clicked in mode designation, the transition arrow disappears.

3-3-1-1-1-5: Icon detailed operation (click)

When a selected icon or icon portion is clicked, a menu related to detailed information or an independent operation of the icon appears (if there is a setting). The icon is deleted from here.

3-3-1-1-1-6: Movement limitation #Outline check

Icons other than transition arrows cannot be arranged overlapping with other icons.

Further, a field zone can only be arranged in a plain field.

Limitation and expansion of icons that can be arranged in a calculation zone.

Completion chart: The following requirements must be satisfied. #Transition control

1: All transition arrows on the chart must connect a status trigger and a status receptor.
2: All terminal statuses must have a transition destination determined by a transition arrow or an ending icon. (Not all accompanying status triggers need to transition)
3: Time-in receptors of all time zones need to be linked with a trigger if the trigger is alive, or an outside trigger. If not, the time must be designated in timing setting. #Timing setting

3-3-1-1-1-7: Portion

1) Member restriction part: There is an icon that can set a condition for performing a certain process, in a part of the icon. #Member restriction
In the member restriction part,
attribute arrangement,
attribute pattern filter, and
condition module with attribute condition chart
can be arranged.
Using these to drop and connect allows further restriction of the range.
2) Determination value arrangement part
Attributes of numeric type attribute value can be arranged here. The determination value arrangement part also serves as an assignment destination of an assignment transition arrow, in the calculation chart. Further, a value can be directly inputted through a numeric input form.
3) Condition attribute part: Any attribute can be arranged here. The condition attribute part also serves as an assignment destination of an assignment transition arrow, in the calculation chart. Further, a value can be directly inputted through an input form.
4) Attribute pattern arrangement part
A plurality of any attributes can be arranged here.

3-3-1-1-2: Interpretation and analysis #Chart interpretation

3-3-1-1-2-1: Information to be interpreted

In a completed chart diagram, information having meaning in interpretation is as follows.

1: Time zone structure
2: Field zone information arranged in the chart
3: Inclusion relationship of contents and a descriptor with respect to a time zone
4: Portion arrangement information for other icons of contents and a descriptor
5: Connection relationship of transition arrows (an icon and an icon portion)

3-3-1-1-2-2: Analysis structure

3-3-1-1-2-1: An analysis structure is generated by the following procedure in accordance with information to be interpreted (extracted from generated information of html).

1: A time zone nested relationship is analyzed, and a plain field is structured as a top-level TZ. (with property information)
2: A field zone is added as a top-level element
3: Contents and a descriptor included in each TZ are listed as elements at a corresponding position in the structure. (with property information)

4: An icon subjected to portion arrangement is added as a child element of each element (property)

5: Transition information is added as a property and instruction information (both directions)

This is a structure specific to chart = module.

With the above, the interpretation of the chart becomes equivalent to programming in a markup language.

The above operations are preferably performed together with arrangement, joining, and separating operations for warning of limit operations and presenting future guide information.

3-3-1-2: Content

The term "contents" is a concept of a set of multiple pieces.

A content is representation, on a scenario, of a service (and lower-level modules) actually used by a user on a mobile terminal. A content icon receives a transition arrow, and issues behavior information in a form of a status with an attached icon that represents a terminal status, an attached field zone, or a system status. In a case where there is an input form inside, a participant attribute may be changed. This can be confirmed by a usage attribute of the contents list. #Transition control

The content is broadly classified into an article and a module.

The article is sectioned into a message and an article (with a state).

The module is sectioned into four parts in accordance with a normal module, an exception management axis, a nest type module, and an external module axis.

The content has a member restriction part, and attribute conditions that can be generated can be set. #Member restriction

3-3-1-2-1: Definition, editing, and operation

All contents arranged on a chart are displayed in a container of icons called a contents palette (including new blank icons). The icon is arranged on a chart or on an article edit screen by dragging or the like, to be used. #Palette

Definition of the content is performed through sub-navigation or clicking on a new icon for new contents, and is performed, for editing existing contents, by clicking the icon on the chart, the palette, or the content list (see Fig. 32) to call an edit screen.

For the edit screen, details are defined in 3-3-5-4: Description screen for articles, and 3-3-4-1: Nest type module for modules. Further, the external module is called as a template (next item). #Definition/scope

A relationship between icons on the palette and icons on the chart is to be a relationship of a child class having details exactly similar to a class, and a change is basically reflected in everything else no matter where details are edited and changed. However, when editing is performed as a copy, another icon appears on the palette and becomes a different class. Note that the operation of dropping another icon on the icon does not correspond to the editing. #Class/template

Scope: A module for which New creation is called is to be a definition module, and it is possible to change by using Definition module change on the edit screen. Although it is easy to redefine at an upper-level layer to expand a scope, lowering the layer or redefining outside the scope causes arrangement contents that are out of the scope to be individually independent copied contents.

A range of the scope is as described in 1-4-1. #Definition/scope

Contents whose module is a definition module is shown inverted in the contents palette. #Definition/scope

3-3-1-2-1-1: Template and fill-up #Class/template

See Fig. 5 and section 1-4-1. In normal editing, when information is changed even a little, all are affected unless copying is made as another class. However, by designating, as a variable icon, an internal icon of a type that can be designated, the content functions as a template, and a change to the variable part remains within the fill-up while a change to a part other than the variable part affects the whole.

1: The contents including the variable icon are displayed as a template in a template area in the scope on the contents palette.

2: When the fill-up in the edit screen is selected, the fill-up is displayed in a normal area of the contents palette in that module, and the edit screen transitions to that one.

3: The fill-up being edited (the variable icon remains) is displayed with a weak color as the fill-up, and cannot be arranged on the chart.

4: Icon fill-up is performed by the following procedure.

4-1: Contents or an attribute that satisfies outer specifications of the variable icon is searched for or created.

The outer specifications are: a contents category; a type of a status at which a transition arrow starts or ends; a pattern, a category, and a type of a usage attribute; and a category and a type of an attribute. Member information of an overall processing attribute is not guaranteed. (A status where a terminal is dropped is excluded)

4-2: The corresponding icon is dropped on the variable icon. Outer check is conducted, and replacement is performed after passing. In this case, the transition arrow is temporarily disengaged. 4-3: The disengaged transition arrow is reconnected to an appropriate portion.

5: When all the variable icons are replaced, it becomes possible to arrange on the chart as a contents type having a template.

Only an attribute can be designated for a variable icon of an article.

A variable icon for a module is to be contents, a wildcard, and an attribute.

In a case where a plurality of the same contents and attributes are arranged, all are designated when one place is designated, and all are replaced when one place is replaced. In this case, the outer specifications (particularly a status from which a transition arrow starts) are composed.

3-3-1-2-1-2: Content state #Content state control

Although it has been described that there are three modes of
Active
Standby
Termination
as content states in 2-4: Contents, it becomes a little more complicated in order to manage progress of an event for scenario description.

Fig. 17 shows an article state table, and the entire contents similarly have these states.

In state management, advanced management designation can be performed for a content.

Advanced management designation content: A content for which advanced management is performed causes a timeout and an exception termination unless a restraint selection terminal status is issued.

When the advanced management designation is performed in an article and a nest module, a selection restraint box can be called, and a status emitter can be arranged therein.

If none of these status emitters is selected, a timeout will eventually occur to cause exception processing handling.

- Normal content state

Regularly processed content
Regular termination (termination)
Regular status issued active (active)
Irregular processing content
Irregular termination (termination)
Regular status unissued active (active)
Standby (standby)

The regular status unissued active and the standby are irregularly terminated when a timeout trigger occurs in an affiliation time zone.

- State of advanced management designation content

Regularly processed content
Selection restraint regular termination (termination)
Selection restraint regular status issued active (active)
Irregular processing content
Selection restraint irregular termination (termination)
Selection restraint irregular status issued active (active)
Exception processing content
Exception termination (termination)
Selection restraint status unissued active (active)
Standby (standby)/article and external module service screen only
When a timeout trigger occurs, the selection restraint status unissued active and the standby (standby) cause a timeout and are exceptionally terminated.

If there is an exception processing content or a time zone before timeout, TZ cannot be closed until timeout. In an external module, it is requested as a module specification.

In a nested type module

In normal designation, exception termination does not occur even if exception processing occurs internally. Exception termination may occur in advanced management designation.

In the nest type module, a state is defined by both an internal transition and an external TZ, and an end event of an upper-level module.

- Normal designation

Regular termination : When any of the regular processing status emitters is selected, there is no unarrived transition arrow, and all the call contents are processed regularly, modules without continue settings are closed, and a regular termination status is issued. Presence of a continue setting leads to regular termination after an occurrence of a timeout trigger.

Regular status issued active: A case where a regular status is issued from the module. Occurrence of a timeout trigger leads to regular termination.

Irregular termination : When all unarrived transition arrows do not exist, and call contents and TZs are all ended, modules without a continue setting are closed, and an irregular termination status is issued. Presence of a continue setting leads to irregular termination after an occurrence of a timeout trigger.

Selecting a forced-termination receptor leads to termination regardless of whether or not there is a continue setting.

Regular status unissued active: Generated and in a state other than the above. An occurrence of a timeout trigger or forced termination due to an external factor leads to irregular termination.

Standby: There is no standby state.

- Advanced management designation

Selection restraint regular termination: When any of the selection restraint regular processing status emitters is selected, there is no unarrived transition arrow, and all the call contents are regularly processed, modules without a continue setting are closed, and a regular termination status is issued.

Selection restraint regular status issued active: A case where any of the selection restraint regular processing status emitters is selected, and there is no exception processing contents and no TZ at that time.

Selection restraint irregular termination: When any of the selection restraint irregular processing status emitters is selected, there is no unarrived transition arrow, and all the call contents are processed regularly or processed irregularly, modules without a continue setting are closed, and an irregular termination status is issued. Presence of a continue setting leads to regular termination after an occurrence of a forced termination trigger.

Selection restraint irregular status issued active: A case where any of the selection restraint irregular processing status emitters is selected, and there is no exception processing contents and no TZ at that time.

Exceptional termination: A case of forced termination except the above.

Selection restraint status unissued active: This is a state of not forced termination other than the above. An occurrence of a timeout trigger causes a timeout and leads to exception termination.

Standby: There is no standby state.

In an article, as shown in Fig. 17 and 3-3-5-2: Article state transition.

3-3-1-2-1-3: Data usage in content #External data usage #Library transition content

In a case of using external data such as images, videos, and setting information in a content, a usage method differs depending on the user type. The manager user registers data in an allowed format into a library, and drops from a library data palette to a data receptor of a content or a screen part to use.

The data format that can be registered is enabled by a palette description for the content or the screen part having the corresponding receptor.

For a user, usage is enabled by a more limited way.

In accordance with screen parts of an article provided to the user or instructions of an external module, data on the own terminal is uploaded to the corresponding object. At this time, a data format and a generation timing are often limited.

It is recommended that the timing is created within a generation period of the object. Further, it is also possible to incorporate a call into the object so as to enable detailed settings in the timing setting chart.

3-3-1-2-2: Articles and messages

Both articles and messages are blog-format contents created and edited by 3-3-5: Articles/messages. As functions during an event, the following functions are provided.

1: Prompting a participant to read an article
2: Prompting a participant to view images and videos
3: Prompting to input in a form
4: Prompting to use embedded screen parts
5: Prompting to select an external link
6: Prompting a participant to select an action.

Since it is responsible for everything from the function of prompting to browse articles to action control of event participants, there are a plurality of pieces of state information as explained in 3-3-5-2: Article state transition.

In order to make this clear to the creator, articles whose state information is only distribution are regarded as messages, and other articles are regarded as articles, and icons are also distinguished. #Content state control

3-3-1-2-3: Normal module and exception management

A module (described in detail in 3-3-4: Module) is obtained by cutting out a part of the scenario event management process as a separate object for easy handling. The module has an interface as a content regardless of internal behaviors. These modules can be regarded as child elements of a top-level module that has an interface as a scenario. Nest type modules are layered to be handled because they can further have modules as child elements.

This structural relationship of the modules must be grasped internally as a scenario structure (scope).

#Transition control

While the exception management is described in detail in 3-3-4-2: Exception management, the exception management is monitored by 3-5-3: Exception module monitor (see Fig. 16) during an event, and an icon to realize 3-5-4: Manager call can be arranged. This icon is treated as an external module.

3-3-1-2-4: Nest type module and external module

Modules are classified into a nest type module internally controlled by a scenario chart, and an external module controlled by a property screen.

While the nest type is described in detail in 3-3-4-1: Nest type module, it is necessary to arrange a terminal status emitter on a chart in order to obtain an interface as a content. The nest type module is to be a part of the layered structure. #Transition control #Definition/scope

While the external module is described in detail in 3-3-4-3: External module and 3-7: External cooperation, the external module is for using external apps, services, and calculation resources in order to be responsible for functions that cannot be realized by the nest type. There are an outside trigger description module that receives external information, and a guide module that performs guiding to a destination. Further, it is also possible to perform acceptance setting on data in the library in a data format, and perform settings and data input in advance. #External cooperation #External data usage

3-3-1-2-5: Exception termination margin #Termination margin

This is a setting of an amount of delay of actual application when an exception termination occurs. Determination is made by designating time in each setting, but it is also possible to set in module or scenario units.
A message is issued to a user at a time of detection, and listing is performed at the top level of the Hot contents. In a case of the nest module, wt of the Hot contents of the internal contents that are not regularly processed in standby and during display is weighted by a certain value.

3-3-1-2-6: Individual explanation of behavior on content chart #Transition control #Content state control

When a contents icon is arranged on a chart, some accompanying icons are generated and attached. Further, an attribute or a field zone is accepted as portion arrangement.
In accordance with a property as a status trigger,
regular terminal status (regular),
irregular terminal status (irregular),
termination state status,
occurrence status (trigger), and
transition non-generation status are attached. (exception/irregular)
Among them, the termination state status can be used in three modes, and causes the following list to appear when clicked.
Regular termination (regular)
Irregular termination (irregular)
Exception termination (exception).
When selected, an icon for that mode is attached, and an undefined termination state status appears adjacently. When all three modes appear, there is no further increase. These issue a status in accordance with internal behaviors, and evaluate connected transition arrows, if any. When the termination state status is issued, the contents enter the termination state.
In accordance with a property as a status receptor,
occurrence status, and
trigger receptor
are attached.
These cause an event that drives internal actions when connected transition arrows are evaluated.
When the occurrence status is evaluated, the occurrence status creates an instance of the contents.
The trigger receptor causes a corresponding trigger icon inside to issue a status.
On the status trigger and status receptor described above, portion arrangement of a scenario attribute icon can be performed. The arranged attribute icon changes an attribute value in accordance with a mode at the time of arrangement. See 3-3-1-3-7: Individual explanation of behavior on attribute chart.
When portion arrangement of a field zone is made in an icon body, the field zone becomes an affiliation field zone, and is attached with a small FZ icon, a transition non-generation icon, and a field-out icon. See 3-3-1-4-3-1: Affiliation field zone

Transition non-generation (exception)

Field-out (exception)

Setting

Exception termination margin setting: Time is set. Defaults for modules and scenarios are initially described.

#Termination margin

Member restriction: There is a member restriction part on a left shoulder. When an icon is arranged and a condition is failed, transition non-generation is issued. #Member restriction

3-3-1-3: Attributes

An attribute is an object that is used for recording control of user's action information, and using retained information on a scenario, and for control of group action. The attribute is similar to a variable, but has no name space and has a different scope meaning. In addition, the attribute is always bound to a user or a module (or both), and has an attribute value.
Further, attributes are broadly classified into two types. These are a scenario attribute and a participant attribute. The scenario attributes are further classified into a normal scenario attribute and an overall processing attribute, depending on whether having a representative value and member information. Further, there is an attribute property attribution icon to cut out and use various attributes and user properties.
All the attributes that can be used in that chart are displayed in a container of icons called an attribute palette (including new blank icons). The icon is arranged on a chart or on an article edit screen by dragging or the like, to be used as an assignment destination for value change, a condition, and a form.

A location where an attribute icon can be arranged on the chart differs depending on a type of the attribute icon, and a function also differs.

The attribute is identified by an ID given at a time of definition.

A data structure includes
ID,
name,
category,
type,
(attribute value list),
definition module,
member information, and
attribute value,
and the overall processing attribute further has user member information and an attribute value dangling in individual member information in one layer.

For a participant attribute, active information for each participant type (see Fig. 34), an import attribute category, cooperation destination information, and comments are added.

3-3-1-3-1: Scope #Definition/scope

An attribute scope in this system indicates an attribute palette of which module (scenario) or contents the attribute is displayed on.

A participant attribute is defined in 3-3-6-1: Attribute registration, and can be used in all attribute palettes in the scenario. However, some non-active participant types (see Fig. 34) may not have a value.

A scenario attribute can be used in a defined module or modules of lower layer, or a contents palette. See Fig. 5 and section 1-4-1.

3-3-1-3-2: Type

A normal attribute can have types of a true or false, a numeric value, a character string, a character string (list), and data as the attribute value types. Whereas, an overall processing attribute has a special type in order to control actions in parties.

True or false: True and false values are given. Participating users are treated as having false values by default in the scope. No value is given to a non-active participant type (see Fig. 34) in the participant attribute, and to other than members in the overall processing attribute.

Numeric value: Numeric information is given. Participating users are treated as having 0 by default in the scope. No value is given to a non-active participant type (see Fig. 34) in the participant attribute, and to other than members in the overall processing attribute.

Character string: Character string information is given. Participating users are treated as having a null value by default in the scope. No value is given to a non-active participant type (see Fig. 34) in the participant attribute, and to other than members in the overall processing attribute.

Character string (list): Character string information reserved in advance is given. Designation must be made at the time of definition. Participating users are treated as having a null value by default in the scope. No value is given to a non-active participant type (see Fig. 34) in the participant attribute, and to other than members in the overall processing attribute.

Data: A data format must be designated at the time of definition (an extension symbol appears in the icon). Data of a format required by screen parts and external modules can be designated as a type. Participating users are treated as having a null value by default in the scope. No value is given to a non-active participant type (see Fig. 34) in the participant attribute, and to other than members in the overall processing attribute. In other situations, the data is treated as a character string type.

A data format that can be designated is added when screen parts and external modules that use a certain format are registered as types in the palette. (Formats required for official screen parts and external modules can be designated by default) #External data usage

3-3-1-3-3: Scenario attributes

This is an object of an attribute type that is used for controlling users and progress of events on a scenario. The scenario attribute belongs to a user, and theoretically all users have the attribute once defined in the scope.

At some arrangement locations, the scenario attribute is handled as either a true/false value type or a counter type except for condition information, for transition control as a transition control mode.

#Transition control

True or false: true/false value type (false: false/true: true)
Character string: true/false value type (false: null value/true: "1")
Character string: true/false value type (false: null value/true: first value in list)
Numeric value: Counter type

It is possible to arrange at a location where arrangement is possible in Fig. 28, the true/false type changes a state of the user attribute in accordance with the mode in Fig. 23, and the counter type causes an increase and a decrease (inverted arrangement is not possible).

The counter type can be arranged in a loop value of other descriptors, a transition value arrangement part, and a counter arrangement part.

Locations where a scenario attribute of the transition control mode can be arranged
Terminal status
Evaluation status
Termination receptor
Content start timing
Transition unstarted
Trigger receptor
Time-in
Time-out

Field-in

Field-out

Forced-termination receptor

Processing icon (at evaluation start/at evaluation start and end for a counter type: an upper part and a lower part of an icon)

The processing icon is used as a normal type in a calculation chart, but when being used to control a logical transition arrow of a descriptor, the processing icon behaves the same as in the transition control mode. (Functioning as a normal type when connected with an assignment transition arrow) #Calculation zone

On both charts

An attribute arranged in an attribute drop part of an attribute pattern filter controls a behavior of the pattern filter as condition information.

3-3-1-3-4: Participant attributes #Save attribute management

Participant attributes are used for using, in a scenario, preference and value information provided by a user or a manager side. Whether or not the user has that attribute depends on the participant type (see Fig. 34) that is determined at a time of participation in an event. The scope is the scenario. If there is no data type and it is inevitably necessary to designate, an URL is held in a character string, received in an external module (if there is any appropriate one), and converted into a scenario attribute of the data type.

Cooperating of information outside the event is performed, such as cooperating with a save attribute.

3-3-1-3-5: Overall processing attribute #Overall processing #Member scope

This is an attribute having, as member information, an overall processing TZ or an overall processing module instance in a member scope or a designated area of a module that is unique to a definition module instance, or in a designated lower level. The overall processing attribute is used for managing actions in parties such as groups.

In addition to individual attribute values of members, information for overall processing such as a representative value and a representative property are given.

A value given with the overall processing TZ or the overall processing module instance as a dependency destination can have a user object as a value in addition to the normal type. When this type is given in the member calculation TZ or an honor-type group property acquisition mode (3-3-1-3-7: Individual explanation of behavior on attribute chart, section b)), relevant member information is assigned.

A representative value for the definition module instance and a member attribute value for the member may be given.

The overall processing attribute functions only in the overall processing module or a module with an overall processing description.

Further, specially, the overall processing attribute can take an order type and a group type by combining with a numeric type member attribute value and a list character string type.

The order type has order information unique to each member (guarantee). When members are divided due to attribute restrictions on the scope and the like, the order is reorganized within that division.

Order generation method of order type

Numeric type: Ascending order of numeric values. If the numeric values are the same, the one with an earlier grant time is prioritized.

List character string type: Descending order of ranks of attribute values in a list. If the character strings are the same, the one with an earlier grant time is prioritized.

The group type groups users who have the same member attribute value, with the value as a key. When a trigger connector is restricted by the group type and subjected to generation transition to another overall processing TZ or module, an instance is created for each group. (The member scope of the instance is to be the group member)

#Group management

The instance type is a type whose member has the overall processing area and overall-processing-related individual processing as members. All instances in potentially arranged modules are members. When conformance is made, an instance of that a description is added to the member. (Strictly speaking, instance control of individual processing (such as multiple generation by multiple transitions) is not an overall processing, but is to be in a control range of the overall processing attribute (overall-processing-related individual processing area) since the operation is complicated) #Instance management

Type of overall processing attribute
Representative value
True or false
Numeric value
Character string
Character string (list)
Data
User object
Omitted (member attribute value only)
Member attribute value
True or false
Instance-type true or false
Numeric value
Order-type numeric value
Group-type numeric value
Instance-type numeric value
Character string
Instance-type character string
Data
Instance-type data
Character string (list)
Order-type character string (list)
Group-type character string (list)
Instance-type character string (list)
User object (instance type automatically)
Omitted (representative value only)

3-3-1-3-5-1: Member scope of overall processing attribute #Member scope

An overall processing attribute arranged in an overall processing chart field or arranged in the above scenario attribute arrangement part can designate a member by sending a conforming arrow. Multiple designation may cause an active user and a non-active user. An attribute value of the non-active user is held, but the event is not affected during that time. The value can be manipulated by difference designation.

3-3-1-3-6: Attribute property Attribution icon

This is an icon that converts a property of an attribute into an attribute, and makes it function as a scenario attribute in a normal field. After arrangement first as a blank scenario attribute, the target attribute is arranged. The symbol * indicates that only reference is possible.

Scenario, participant attribute

- Persona name *

Overall processing attribute #Representative value

- Representative value (attribute value: for using the representative value in the overall processing arrangement chart normal field)
- Number of members *
- Persona name *
- Order (order information of order type) *
- Order (order information of reverse order type) *
- Group value (group identification attribute value (numeric value or character string) * #Group management
- Member (member information in overall processing) *
- Number of true value members * (true/false type)
- Number of false value members * (true/false type)
- Number of difference members (conforming to difference conformance)

Representative value member object

- Representative value member persona name *
- Representative value member attribute extraction (arrangement of a user and scenario attributes is additionally required)

Description instance property icon * (unnecessary if a conforming target has already been specified by designating an extraction object with a conforming arrow, or arranging in a connector and the like) #Instance management

3-3-1-3-7: Individual explanation of behavior on attribute chart

Locations where attribute icons can be arranged on the chart are as follows. #Transition control

1) Chart field (normal)
2) Chart field (assignment transition arrow connection)
3) Scenario attribute assignment portion
4) Condition attribute part
5) Attribute pattern arrangement part
6) Determination value arrangement part
7) Member restriction part
8) Property attribution icon

   a) At some arrangement locations, the scenario attribute and overall processing attribute icons behave differently from those in other arrangement locations as a transition control mode. See 3-3-1-3-3: Scenario attributes. #Transition control
   In the transition control mode, the icon can have four states (arrangement mode). To change the state, by selecting and clicking an attribute portion after arrangement, the state is sequentially selected.

True value (+1) assigned (icon remains the same)

False value (-1) assigned (minus mark on icon)

Value inversion (inversion)

Property acquisition mode (P mark on icon)

In a property acquisition mode, a property acquisition list further appears, and a possible property for the attribute type is selected.

A) Contents, TZ generation, elapsed time (seconds) from idling start: numeric value

I) Status name: character string

U) Contents name: character string

E) (All) Regular processing?: true/false value

O) (All) Irregular processing?: true/false value

KA) (All) Exception processing?: true/false value

KI) (At least one) Regular processing?: true/false value

KU) (At least one) Irregular processing?: true/false value

KE) (At least one) Exception processing?: true/false value

#Content state control

b) The overall processing attribute can also take a group property acquisition state in the overall-processing-related individual processing area. #Representative value

Group property acquisition (G mark on icon)

A) Order (an order of passing the transition in the group as the order): Order-type numeric value (a rank is inputted for the attribute value)

A current maximum rank for a representative value

I) Grouping (when users are grouped within contents (mainly external modules), an integer number is assigned from a group to which the first passer belongs): Group-type numeric value

A total number of groups for a representative value #Group management

U) Honor (the same function for the order and the member attribute. A member of a designated rank is inputted for a representative value.

A member object of the designated rank for a representative value

The honor functions as a normal scenario attribute in a normal field-outside the overall processing. The member attribute value changes on the overall-processing-related individual processing area, and the representative value changes in the overall processing time zone. In a group property acquisition mode, related information about the transition is acquired in accordance with the type.

1) Chart field (normal): Only scenario attributes and overall processing attributes can be arranged. Transition control mode. The same function as the merge/branch icon is given.

2) Chart field (assignment transition arrow connection): All attribute values are possible. In a case of a transition start point, a function of sending an attribute value to a destination calculator is given, and in a case of a transition destination, a function of receiving a value from the calculator and rewriting the attribute value is given.

A function of receiving and sending a logical transition arrow (normal arrow) as a part of a calculation cluster is also given.

3) Scenario attribute assignment portion: Only scenario attributes and overall processing attributes can be arranged. Transition control mode.

4) Condition attribute part: All types of attributes can be arranged. In overall processing of the overall processing attribute, the representative value functions as an attribute value.

5) Attribute pattern arrangement part: All types of attributes can be arranged. In overall processing of the overall processing attribute, an attribute value is to be a representative value.

6) Determination value arrangement part: Numeric type attributes can be arranged. When the processing icon makes reactions of that number of times, a transition arrow is sent.

7) Member restriction part: An attribute icon can be dropped for condition restriction.

8) Property attribution icon: An attribute icon is dropped and connected to identify a target attribute.

3-3-1-4: Zone

An object called zone is used for controlling an elapsed time and movement on a scenario chart and to controlling the life of contents. For the zone, a time axis or a part of geographical spread is sectioned as a zone. Further, a status occurs when a user (terminal) crosses the section. For the status, since different statuses are issued for entry and exit, it is necessary to have information on whether the user is in the zone or not.

3-3-1-4-1: Zone classification #Palette #Class/template

A zones that has been set is treated as contents, and appears on the content palette when classification is selected in settings. In a definition module, a time zone is to be a classified module, and a field zone is to be a scenario. Due to the nature, only one piece for each kind can be arranged on the same chart.
Field zones imported from the library are also displayed in the content palette.

3-3-1-4-2: Time zone #Transition control

See Fig. 25. A time zone is an object arranged so as to cut out a part of a chart used for management of an elapsed time and timing of an event, and for life management of contents arranged inside. In order to manage accompanying triggers, four icons of "time-in", "time-out", "transition non-generation time setting", and "regular termination" are attached around.

Further, a name and a timing setting are displayed inside a frame.

For the life of a time zone and contents arranged in the time zone, generation and existence are only possible within a range of the life of the time zone. Time zones can be nested.

Frames of the time zone cannot cross each other, and icons other than transition arrows cannot cross the frame.

A state transition of the time zone is as shown in Fig. 25.

If the content does not end in time, a timeout will occur.

The timeout does not occur if the content ends normally, but when the timeout occurs, internal call contents and generated time zone are exceptionally terminated.

Time zone generation timing (time-in), transition non-generation of generation (transition non-generation time setting), and forced termination timing (time-out) are performed in the same way as the time zone timing setting. Described in detail in 3-3-1-6: Timing setting.

For the time zone, a continue setting can be performed in which the time zone does not end until a timeout occurs even if the ending conditions below are satisfied.

In addition, there is a member restriction part on a left shoulder, and conditions can be arranged.

3-3-1-4-2-1: Termination of time zone #Content state control

In a case where there is no continue setting.

In the generated time zone, is there no irregularly processed contents, no evaluation transition arrow being evaluated, and no descriptor, has all the call contents been regularly processed, and has outgoing transition starting from the regular processing been made?

When these conditions are satisfied, it is regarded that the time zone has been regularly terminated, and a regular termination trigger is issued. See 3-3-1-2-1-2: Content state.

Similarly, even if the above conditions are expanded, and there is no unarrived evaluation transition arrow and no descriptor, and all the call contents have been regularly processed or irregularity terminated, the time zone ends without waiting for timeout (irregular termination).

When these conditions are satisfied, it is regarded that the time zone has been irregularity terminated, and an irregular termination trigger is issued. See 3-3-1-2-1-2: Content state.

3-3-1-4-2-2: Calculation zone #Calculation zone

A calculation zone is a special time zone with an equivalent function to the calculation module, and the life is treated as a moment (at the start, processing within the zone has the highest priority). When the calculation zone is arranged, a calculator palette is called. There are no accompanying triggers.

Calculators cannot be arranged in other than the calculation zone, and contents cannot be arranged inside the calculation zone.

3-3-1-4-3: Field zone #Transition control

See Fig. 24. A field zone is used for movement management and life management of associated contents. When "field-in" or "field-out" occurs with surroundings and association is made in order to manage the accompanying triggers, and when member restriction is made, a "transition non-generation" icon appears.

While the time zone expresses a relationship in a form of including icons on the chart, the field zone manages the trigger in a form of being provided at an edge of the chart.

3-3-1-4-3-1: Affiliation field zone #Content state control

For life management of contents, association is made by dragging an associator to the contents.

The associated contents can be created and exist only during field-in. Associated field-out occurs as an exception for the first time at forced termination. Contents that have been processed regularly before field-out do not cause field-out. "Transition non-generation" occurs when a generation transition occurs during field-out.

Generation setting: An affiliation field zone can be set to generate an affiliation content when field-in occurs by icon setting. If the time zone or the arrangement module has not been generated, the generation will not occur.

3-3-1-4-3-2: Range setting

This is performed by dropping a point marker on a called map as shown in Fig. 24.
Field zone definition method: An icon to select the following mode is clicked, and then a marker is dropped.

1) Point designation: Definition is made by designating one point on the map and designating an effective range (radius). If possible, the effective range is designated by dragging from the point.

2) Area designation: Multiple points are designated, and definition is made as an inside of a polygon defined by the points.

3) Data usage: If there is a region designation method defined with the used map, the data is used. #External data usage

3-3-1-4-4: Zone out margin #Termination margin

Time from when there is a timeout occurrence event in the time zone until an actual timeout occurrence, and time from detection of the field-out occurrence event in the field zone until an actual field-out occurrence, and a distance from a border are called a zone out margin.

Determination is made by designating time and a distance in each setting, but it is also possible to set in module or scenario units.

A message is issued to a user at a time of detection, and listing is performed at the top level of the Hot contents.

3-3-1-4-5: Individual explanation of behavior on zone and accompanying icon chart

3-3-1-4-5-1-: Time zone #Transition control

Zone designation frame: The time zone has a designation frame for sectioning chart fields. The field zone also has a similar icon to emphasize commonality as a zone, but this is just an icon.

A shape is a rectangle, and drag point is arranged so as to enable movement and transformation by dragging (standard ones are fine).

The rectangle must not be crossed by anything other than a transition arrow (apart from the member restriction part).

Only a conforming arrow can be connected with the frame itself (drag point and the like?)

Time-in: This has an arrow shape, and is automatically arranged at an upper part of the designation frame when a generation timing setting is performed. A tip end is a status trigger and a root is a status receptor. However, if there is no trigger or trigger+ description in the start timing setting, the receptor does not function. In that case, when a connected transition arrow is evaluated, the start timing setting is evaluated, and a status trigger is issued when tz generation occurs.

Time-out: This is an arrow directed opposite to the time-in, and is automatically arranged at a lower part of the designation frame when a termination timing setting is performed. A tip end is a status trigger and a root is a status receptor. However, if there is no trigger or trigger+ description in the termination timing setting, the receptor does not function. In that case, when a connected transition arrow is evaluated, the termination timing setting is evaluated, and a status trigger is issued when timeout occurs.

Transition non-generation time setting: This is an arrow having a different shape from the time-in, and is automatically arranged when a transition non-generation timing setting is made next to the time-in icon, or when something is arranged in the member restriction part. A tip end is a status trigger and a root is a status receptor. However, if there is no trigger or trigger+ description in the transition non-generation timing setting, the receptor does not function. In that case, when a connected transition arrow is evaluated, the transition non-generation timing setting is evaluated, and a status trigger is issued when the transition non-generation occurs. A TZ subjected to transition non-generation is not generated.

Regular termination: This is an arrow having a different shape from time-out, and is automatically arranged at a lower part of the frame. A tip end is a status trigger. A trigger is issued when the time zone is regularly terminated. Clicking on the icon causes a change to an irregular termination mode, and another regular termination icon appears adjacently (no change even when clicked)

Setting icon: An icon is in a part inside the frame. There are characters of Setting. Clicking causes detailed settings to appear.

The settings are displayed and the following processing can be performed. #Scenario/calculation chart #Transition control

1: Name: The TZ functions without a name, but a name can be inputted for identification. The name is displayed in the upper left inside the frame.

2: Generation timing setting: A timing setting chart is called and the generation timing setting is performed.

When it is performed, a generation setting is displayed in characters in the upper right when a condition filter in the condition setting is one or less. If the condition filter is more than one, a condition icon marked as Generation appears at the corresponding position. A time-in icon appears.

3: Termination timing setting: A timing setting chart is called and the termination timing setting is performed.

When it is performed, a termination setting is displayed in characters in the upper right when a condition filter in the condition setting is one or less. If the condition filter is more than one, a condition icon marked as Termination appears at the corresponding position. A time-out icon appears.

4: Transition non-generation timing setting: A timing setting chart is called and the transition non-generation timing setting is performed.

When it is performed, a transition non-generation setting is displayed in characters in the upper right when a condition filter in the condition setting is one or less. If the condition filter is more than one, a condition icon marked as Transition non-generation appears at the corresponding position. A transition non-generation setting icon appears.

5: Continue setting: Time-out is made to occur without automatic termination of the time zone due to regular or irregular termination.

6: Timeout margin setting: A margin time at a time of termination setting by a trigger is set. It is also possible to select whether or not to apply the setting at a time of uniform setting with a module or a scenario (applying is default). #Termination margin

7: Overall processing time zone: The time zone is set to as overall processing time zone. A color is changed.

8: Individual/member calculation zone: The time zone is set as an individual calculation zone. The accompanying triggers disappear.

9: Overall processing calculation zone: The time zone is set as an overall processing calculation zone. The accompanying triggers disappear. A color is changed.

#Calculation zone

Member restriction part: There is a receptor icon in the upper left of the frame. When rejection occurs due to restriction, the transition non-generation occurs. #Member restriction

3-3-1-4-5-2: Field zone #Transition control #Transition control

Zone icon: This has a rectangular frame shape. A member restriction part (left shoulder), a setting icon, and an associator icon appear inside, and a field-in trigger and a field-out trigger appear in association. When restriction functions, a transition non-generation icon is attached.

Field-in: This is automatically arranged in a lower part. A shape is an arrow shape, and there is a status trigger at a tip end. The Field-in is issued when a user terminal enters the field zone.

Field-out: This is automatically arranged in a lower part. A shape is an arrow shape, and there is a status trigger at a tip end. The Field-out is issued when a user terminal goes out of the field zone.

Associator icon: This is automatically arranged inside a rectangle. An icon represents an image of drag. Performing DD of this part onto a content generates an affiliation field zone.

Transition non-generation icon: This appears in an upper part of the icon when the member restriction functions. A shape is a bow and arrow shape, and there is a status trigger at a tip end.

Affiliation field zone icon: This appears in a part of a content as a belonging destination. A shape is a rectangle, and is a model shape for a field zone. A small field-out and a transition non-generation icon are attached. Member restriction part: There is a receptor icon in the upper left of the frame. When rejection occurs due to restriction, the transition non-generation occurs.

#Member restriction

Setting: An icon is in a part of inside the frame. There are characters of Setting. Clicking causes detailed settings to appear.

The settings are displayed and the following processing can be performed.

1: Name: The FZ functions without a name, but a name can be inputted for identification. The name is displayed in the upper left inside the frame. However, the name is required for classification.

2: Setting map opening: When opened, a map appears and a region can be set in the following methods.

1) Point designation: Definition is made by designating one point on the map and designating an effective range (radius). If possible, the effective range is designated by dragging from the point.

2) Area designation: Multiple points are designated, and definition is made as an inside of a polygon defined by the points. 3) Data usage: If there is a region designation method defined with the used map, the data is used. The library data palette appears when the setting map is opened. Setting is made by performing DD and dropping on the map. #External data usage #Palette

3: Field-out margin setting: A margin time and a distance when the field-out is detected by a trigger are set (AND/OR). It is also possible to select whether or not to apply the setting at a time of uniform setting with a module or a scenario (applying is default). #Termination margin

4: Affiliation contents list: A list of contents having the field zone as the affiliation field zone. When selected, a transition is made to an arrangement module. #Contents list (Cut out)

5: Classifying field zone: The field zones in which items 1 to 3 are set are classified.

#Class/template

3-3-1-5: Descriptor (processing icon, transition arrow, and trigger icon) #Transition control

This is an icon used together with a zone in order to manage a state of contents in scenario charts and calculation charts. See Figs. 22 and 23. A descriptor related to overall processing is described in the overall processing.

In addition to a processing icon that appears in the processing palette, a transition arrow, a trigger icon, and a forced-termination receptor are normal descriptors. When the normal descriptors are added with descriptors for the manager call for exception management and for the calculation chart, and a descriptor for an overall description, these are expanded descriptors.

The transition arrow can be extended from a status trigger and connected to a status receptor.

- Status trigger #Transition control
  Terminal status (evaluation status)
  Contents termination state status
  Contents icon generation/non-generation status
  Trigger icon
  Zone accompanying trigger
  Specific portion of processing icon (individual explanation)
  Scenario attribute icon placed directly on chart

- Status receptor #Transition control
  Contents occurrence status icon
  Contents trigger receptor
  Accompanying trigger for zone with trigger description in timing setting
  Specific portion of processing icon (individual explanation)
  Scenario attribute icon placed directly on chart
  Forced-termination receptor

  Transition arrow: A flow of processing when a status occurs is shown. Only one transition arrow is generated from one status. A scenario cannot be completed if there is a transition arrow with no destination.
  Single transition arrow: Thin line (only one reaction to trigger)
  Multi-transition arrow: Thick line (multiple reactions to trigger)

The multi-transition arrow is evaluated each time a trigger occurs. The single transition arrow is evaluated only for a trigger that occurs first.

If there is an occurrence receptor at a transition destination led by the multi-transition arrow, the contents can have multiple instances.

Incoming and outgoing of transition arrow for time zone frame: A transition arrow can extend beyond the time zone frame. This arrangement has special processing implication.

An incoming transition arrow only functions for the lifetime of the time zone. When such a transition occurs, a "transition non-generation status" specially occurs (in the internal contents) even if it is not the lifetime of the internal contents. #Content state control

A transition arrow that has actually made a transition (at some point) during a period of a module's active state is called an evaluation transition arrow, and a transition arrow that has not been evaluated is called a non-evaluation transition arrow (unevaluated transition arrow).

Processing icon: The processing icon controls the scenario by relaying transition arrows toward the content, and performing conditional processing or terminal processing.

There are normally seven types of processing icons. See Fig. 23

1) Ending icon (transition management)
2) Merge/branch icon (transition management)
3) Transition arrow counter (transition management)
4) Attribute pattern filter (conditional processing)
5) Comparison condition filter (condition processing)
6) Loop counter (transition management)
7) Wildcard (description efficiency improvement)

1) Ending icon (transition management): This is used when transitions of a status and a terminal status are desired to be terminated. Arrangement is made by extending a transition arrow from the status, or dropping on the status.
Consequential ending: A consequential ending status emitter can be dropped on only one of endings of logical transition arrows in the calculation chart.
2) Merge/branch icon (transition management): Transition arrows can be merged and branched. Processing according to the type of the transition arrow is performed.
When any transition arrow on the merge side is evaluated, all transition arrows on the branch side are evaluated. The single transition arrow on the branch side reacts only once, but the multi-transition arrow is evaluated every time the merge side is evaluated. The scenario attribute can be arranged at an upper end in the transition management mode, and an attribute value changes every time the arrow on the merge side is evaluated.
3) Transition arrow counter (transition management): Counter-type merge/branch icon. When a certain number of transitions flow in, a transition at a lower end occurs. When there is a determination value arrangement part, and a numeric type attribute icon is dropped there or a numeric value is directly inputted, the arrow on the branch side is evaluated when evaluation is conducted for the number of times of the numeric value. When multi-transition is connected, the reaction occurs again (repeats) when the evaluation is conducted again for the number of times of the numeric value.
4) Attribute pattern filter (conditional processing): There are Y and N status triggers, in which evaluation of a user matching a possession pattern of an attribute dropped in the conditional attribute part causes the Y status to be issued, and evaluation of a non-matching user causes N to be issued. There is no limitation to the number of attributes that can be dropped, but up to three can be displayed. Clicking causes development. There are three modes: unary, AND (logical product), and OR (logical sum) .

5) Comparison condition filter (condition processing): There are status triggers of Y and N. Comparison is made on two terms to determine true or false, and Y and N statuses are issued. There are two condition attribute parts, and there are three modes: congruence, numeric comparison (including equal), and numeric comparison. It is also possible to input a numeric value, a character string, or a true/false value (T/F) in one of the drop parts.

6) Loop counter (transition management): When a transition is made to a downward icon with two sets of icons (connected by a connecting dotted line), a transition arrow extending from an upper end is evaluated. Then, a transition reaching a lower end of a loop transition to an upper end, and the transition is started again. At this time, the transition part to be looped must be connected by a multi-transition arrow. The number of times each icon is evaluated can be determined by dropping a numeric type attribute or directly inputting a numeric value. Infinitude can also be set. In that case, disengagement is made by a condition. If a multi-transition arrow is connected for the loop, the number of times is consumed and a transition occurs each time the evaluation is conducted. This situation can be organized by incorporating a transition arrow counter. This mechanism can also be used to limit the number of times of multi-transition.

The loop must be in the same time zone.

Note that formation of the loop only with transition arrows causes warning in the outer check.

Rejection occurs when the loop with only transition arrows crosses the time zone (at least a loop counter should be inserted if a child TZ is inserted).

This is to check for an unintended loop and to prevent that a loop that crosses a time zone is formed to make time management difficult. #Outline check

7) Wildcard (description efficiency improvement): A wildcard is a processing icon that binds and executes multiple contents or field zones in accordance with a condition.

For a storage type of a content, a numeric value is given by default, and execution is made in an ascending order of the numeric value, each time a transition occurs with a loop and the like. However, contents satisfying a condition of the member restriction part of individual contents is executed. When the restriction is released due to a transition situation, the contents with a smallest number at that time are executed.

A terminal status is aggregated and arranged in the wildcard. In a case where a multi-transition arrow is not connected, evaluation is conducted only once at the first time. At this time, the status of the original contents is displayed with a light color. This status does not require a transition. This can also be used, and the status arranged with a transition arrow returns to the original color strength. Contents are stored inside when being dropped into the wildcard together with a conditioner, and the list can be viewed by clicking a card icon.

A field zone storage type is accompanied with field-in/out.

The field zone to be stored can have a sequence limitation property that accepts triggers in a sequence order. Without this, a trigger occurs every time field-in/out occurs.

It is also possible to receive member restriction.

If a content of a content wildcard connected to this field zone wildcard with a transition arrow contains a content of a trigger occurrence affiliation field zone, the content is preferentially activated. If there are multiple contents, an order of order designation of the card is applied.

#Member restriction

Trigger icon: A trigger icon is an icon for introducing a trigger outside the module into the chart.

A start trigger icon is arranged by default on the chart, and it cannot be removed.

A new trigger icon can be arranged in two modes.

One is a manager trigger, which is given a name when it is created. This is unique in the scenario, and is registered with a name + a definition module name. A manager trigger once registered can be called from a manager trigger palette. Operation is made with 3-5-1-1: Manager trigger of the event monitor (see Fig. 11).

The other one is a general trigger corresponding to a trigger receptor, and is automatically numbered and appears on the chart when it is generated. This creates a corresponding trigger receptor on the module's icon. Both can also be arranged inside the time zone, and will only function within the lifetime of the TZ in that case.

Forced-termination receptor: This is a status receptor that causes forced termination of a module. When evaluated, the module is terminated, which causes irregular termination. #Transition control

3-3-1-5-1: Individual explanation of behavior on descriptor chart (other than overall processing)

#Transition control

Transition arrow: See 3-3-1-1-1: Chart operation and 3-3-1-1-1-4: Joining operation of transition arrows.

Single transition arrow

Multi-transition arrow

Ending icon: This is an icon designed to emphasize the fact of being ending.

Merge/branch icon: An upper part of the icon is a status receptor, and a lower part is a status trigger.

Transition arrow counter: This is similar to the merge/branch icon, but has a design that emphasizes the determination value arrangement part. There are a status receptor, a status trigger, and the determination value arrangement part.

Attribute pattern filter: This has a design that emphasizes the fact of being a conditioner. A status receptor is in an upper part of the icon, and a Y and N terminal statuses of a logical consequence part are at in a lower part. On a right shoulder, there is a condition attribute part. On a left shoulder, there is a mode display part showing a mode. The mode display part does not display when the attribute of the condition attribute part is one or less. In a case of two or more, two modes of AND and OR are taken, and the modes are switched by clicking the display part.

Comparison condition filter: The design is similar to that of the attribute pattern filter, and the status receptor and the logical consequence part are the same. There is a condition attribute part (form type) on the left and right, and normally an input form is displayed, but only one attribute can be dropped. When selected, the input form is displayed larger, and allows input of a numeric value, a character string, and a true/false value. Three types can be selected from a pull-down, and a heading of the form is changed.

There is a mode display part in the middle, and clicking causes switching between five modes: congruence, equal comparison, comparison, backward equal comparison, and backward comparison.

Loop counter: This is the same icon on the palette, but a top icon and a bottom icon connected by a line appear when arranged on the chart. The top icon has a status receptor in an upper part, a status trigger in a lower part, which similarly applies to the lower end. However, the design is reversed. Both have the determination value arrangement part, and an attribute can be dropped. Both cause the status trigger at the lower end to be issued when the corresponding icon reacts for the number of times of a determination value. The determination value arrangement part where nothing is arranged becomes infinite.

Wildcard: Content-like icon. This is stored by performing DD on the content icon. A terminal status of a storage content appears. Clicking causes an internal content list to be called.

Details are the content list (see Fig. 32) excluding an edited part. However, a button row for development is added.

Selecting Development causes the list to disappear, and a mouse pointer transforms into a silhouette of the content. Clicking on the field causes display of an icon of the content connected to the wildcard at that place. Only the status trigger functions for that icon.

Trigger icon: This has a design that emphasizes a trigger. There is a status trigger. Further, a color of the start trigger is different, and there are characters of Start. A trigger name is displayed for a manager trigger. Numbering is displayed for a normal trigger. When the trigger icon is arranged, a list for selection of Manager or Normal is displayed. When nothing is selected or when Normal is selected, the numbered normal trigger is arranged. When Manager is selected, a name input form appears, and arrangement is made as the manager trigger when input is performed.

Forced-termination receptor: This has a design that emphasizes its meaning. All are status receptors.

3-3-1-6: Timing setting #Timing setting

See Fig. 25. A timing setting of a time zone and a timing setting of a forced-termination receptor are performed by a similar method.

Information required for a timing is acquired in three ways.

Which are
trigger,
time setting, and
attribute.

The trigger occurs each time an accompanying icon or an icon receiving a transition arrow receives a transition. Although details of the trigger cannot be classified, it is possible in practice by using the attribute. #Transition

control

The time setting can be set in five ways as shown in the table.

1) Global time description
2) Reference module instance starting time designation
3) Relative time description
4) Time-in progress
5) Trigger description icon

Explanation: Evaluation is conducted by arranging each piece of iconified information as editing of a calculation chart. #Scenario/calculation chart

In a timing setting chart described later, an input form appears after the trigger icon is arranged from the palette, and designation is made. In a case of the reference module instance starting time designation, an upper-level nested module part of the content list (see Fig. 32) appears.

1) Global time description: Designation is made by the actual time. Japan time. GMT +9 2018: 00: 00: 00

2) Reference module instance starting time designation: Designation is made by a time from the time when the reference module instance has been generated.

2-1) A reference module of an upper level than the own module (own self is also possible) is designated in the content list (see Fig. 32).
2-2) Whether the overall processing instance or individual instance is designated.
2-3) An elapsed time is inputted
$01:00-GameEntry/w $00:50-senario

3) Relative time description: Designation is made by a time from the time when the module instance has been generated.
00:00
4) Time-in progress: Elapse of a certain time from an occurrence of time-in is indicated as in + XX : XX (except the time-in trigger)
Clicking a corresponding item causes a calculation chart to be called, and displays the attribute palette and the trigger palette having the trigger icon in Fig. 25, and setting is performed by using this.
5) A Trigger description icon appears as two types of +X icon. The Trigger icon, if present, is evaluated each time the trigger occurs.

For input of a time of day and a time, there is used a pull-down that appears when a cursor is placed on each input form for date and time that appears when the trigger icon is clicked after arrangement. In a case where the setting is ended with only a single attribute pattern filter, the timing setting is displayed in a space as a character string.

3-3-1-10-3: See Timing setting chart and attribute condition chart

3-3-1-7: Terminal status and status emitter #Transition control

See Figs. 22 and 28.

On a chart, contents can have a terminal status icon appearing as a start point of a transition arrow customized by the user. This function is realized by making it possible to cause a status when evaluation is conducted by dropping a status emitter on a possible portion of the module chart and the article edit screen.

The status and the emitter correspond to the same one letter (up to two letters) in the alphabet. These icons are displayed on a status emitter palette.

Regular status, irregular status, and logical consequence status: There are two types of status in order to distinguish between a process that is proceeding well in the scenario process, and a situation that requires a response. When an arranged situation occurs, the regular status emitter icon issues a regular status, and the irregular status emitter issues an irregular status. In a space of one letter, the last 10 characters of the alphabet are reserved. Y and N are reserved by the logical consequence status.

The logical consequence status is a terminal status displayed in a logical consequence part of a processing icon of a conditional type, where Y corresponds to a true value and N corresponds to a false value.

Consequential ending emitter: In the timing setting chart and the attribute condition chart, only one consequential ending emitter is described in the status emitter palette. Arrangement can be only made on one or more ending icons.

3-3-1-8: Palette #Palette

A palette is to be displayed as a drag source for arranging objects required for scenario progress on a chart or an article description screen.

- Palette types

Content palette (scenario chart, module chart)
Content palette with calculation module limitations (calculation chart, timing setting chart, attribute condition chart)
Attribute palette (scenario chart, module chart, article description screen, calculation chart, timing setting chart, attribute condition chart)
Processing palette (scenario chart, module chart, calculation chart, timing setting chart, attribute condition chart)
Manager trigger palette (scenario chart, module chart)
Screen parts palette (article description screen)
Status emitter palette (module chart, calculation chart, timing setting chart *, attribute condition chart *)
Calculator palette (calculation chart)
Trigger palette (timing setting chart)
Library data palette
Icons that appear in the palette are limited to icons whose module or article is within a scope. Icons with different definition modules are displayed with a name + a definition module name (root).

As shown in Figs. 21, 26, 27, and 19, the palette is a block on the screen and serves as a container for icons, and a shape and a position are variable. Further, as in 3-3-3-5: Operation, when an internal icon is dragged and dropped on the chart, a child element is arranged on the chart, and an attached icon that allows transition management appears.

Basically, there are many icons stored in the palette, and it is often impossible to display all of them. Therefore, three functions are provided.

1) Variable shape
2) Scroll
3) Search

a) 1) A point for dragging is prepared at four corners of the variable shape, and fold/unfold button at the header.
The internal icons are arranged in accordance with a width, and rows are increased.
Pressing the fold button results in a bar only with the header, and developing returns to a size designated by dragging.
b) 2) When there are too many internal icons to display, vertical scrolling is enabled.
c) Search display is enabled so that a category can be designated by character string match and a tag #. When # is inputted, a tag list is displayed. In a tag character string, blank means AND and | means OR (AND prioritized) << An available internal search system is introduced, if any.

When a pointer passes over a displayed icon, a name of the icon is displayed.

Content palette #Class/template: A content, a field zone converted into a content, and a template that can be used in this scope are stored. Templates are handled as stored objects internally of a sub template palette. The template palette follows shape change of the main content palette, and can only be deformed vertically. When folded, the template palette is arranged in a bar shape at the bottom of the palette.

Searches are simultaneously screened by a main search condition.

The content corresponds to all articles and modules being created.

In the calculation chart, only the calculation module is displayed.

A frame of a content whose displayed module is a definition module is highlighted.

In addition, for a content whose definition module is different, a content name and a module name are displayed.

Attribute palette: Attribute icons that can be used for that scope are stored.

Scenario attributes, participant attributes, and attribution icons are displayed. If the chart is the overall processing area, attribution icons related to the overall processing attributes are added.

A frame of a content whose displayed module is a definition module is highlighted.

In addition, for a content whose definition module is different, a content name and a module name are displayed.

In an attribute condition chart of a participant type (see Fig. 34), a save attribute appears instead of an attribute.

Processing palette: Transition arrows, processing icons, triggers, time zones, calculation zones, field zones, overall processing time zones, and overall processing calculation zones are stored.

In a case of the overall processing area, overall processing icons, overall processing transition arrows, and conforming arrows are added. #Overall processing

Manager trigger palette: This is a palette that contains registered manager triggers.

Screen parts palette: Screen parts to be used for description editing are stored.

Status emitter palette #Transition control: There is a sub-palette for irregular emitters. The function is similar to that for templates.

Five pieces (A to E) of automatically-numbered regular emitter are displayed. Five pieces are added each time when a field of the palette is clicked. Double-clicking reduces unused icons by five pieces.

This similarly applies to irregular emitters. Initially Z, W, V, X, and U are displayed. Reserved characters are displayed sequentially.

Calculator palette: Calculators, logical transition arrows (the same as normal thin arrows), and assignment transition arrows are displayed. The handling of transition arrows is the same as the processing palette.

Trigger palette: The trigger icons described in detail in Timing settings are stored.

Library data palette: Data registered in the library and having a format that can be used for screen parts and field zone definitions is stored. For reflection, an import operation is required on the library side. The reflection is made by dropping in a data receptor of a screen part through DD. #External data usage

3-3-1-9: Overall description #Overall processing

The purpose of overall processing is as follows.

1: Behavior control of the entire event (especially time zones)
2: Overall processing attribute calculation
3: Guiding of group action
4: Sectioning of common action group
5: Behavior control of the overall processing module

3-3-1-9-1: Overall processing description and Overall processing area

Overall processing is driven by an overall processing description running on an overall processing instance.

An overall processing description needs to be described in the overall processing area.

Overall processing areas

1: Overall processing time zone
2: Overall processing module (internal chart) Description can be made in the overall processing area (b and c are excluded from the overall processing area)

a: Overall processing description
b: Individual time zone within overall processing
c: Individual processing module within overall processing

Overall-processing-related individual processing areas

1: Other regions in the chart where the overall processing time zone exists
2: Individual time zone within overall processing
3: Individual processing module within overall processing

Overall processing descriptions

1: Overall processing module
2: Overall processing time zone
3: Overall processing icon
4: Overall processing attribute (representative value)
5: Attribute (As member restriction information: an overall processing attribute is a member attribution icon, a scenario attribute is a true value, and a participant attribute is active)

The overall processing description can be connected only with an overall processing transition arrow excluding a trigger connector.
Only the overall processing attribute can be used on the overall processing area.
Individual processing can also be described in an overall processing description feasible area, which becomes an overall-processing-related individual processing area.

3-3-1-9-2: Overall processing instance #Instance management

An overall processing instance is generated for each overall processing area. It is possible to have multiple instances in the same area through multiple transitions and group processing. The overall processing instance shows its own behavior by driving of the overall processing transition arrow.
Even when being described in the same chart field, the individual processing and the overall processing that are not in a slave/master relationship operate at completely different timings. However, both in the same chart can be related to each other by transition evaluation, with use of a connector.
For a layer for which the overall processing description is not made, in a case where a generation trigger in a lower-level layer generated by any of the individual processing instances occurs, the overall processing instance generates a blank layer instead of causing non-generation, and activates the corresponding description.
When there is an overall processing description, that processing is to be followed.

3-3-1-9-3: Member scope #Member scope

A member scope defines a range of interaction between an overall processing instance and a user. Specifically, it is a description method for: basic member scope designation of a range description of a connector, a time zone, and an internal module; member designation of overall processing attribute; and active and non-active member designation when evaluating active member differences.
Basic member scope: A module and a time zone have a basic member scope. The basic member scope constantly changes as active members are switched in time series. The basic member scope is a list of ad hoc members, and targeting a user who uses the module in an individual instance, an internal time zone, or a module instance.
The basic member scope of the overall processing in a normal module is an active user of the module and an inner element instance.
For the overall processing module, the user who is actively using a child module and the inner element instance are to be the basic member scope.

Icons that can conform (conforming body)

1) Trigger connector
2) Overall processing attribute
3) Overall processing time zone *
4) Overall processing module *
5) Group transition counter * (instead of determination value)

The symbol * indicates that only user conformance is possible.

Description method

1) Member scope of arrangement module
2) Individual time zone, module instance reference (user, instance)
3) Overall processing attribute member reference
4) Difference range
5) Conditional restrictions

Operations on chart

1) Default

2) Conforming arrow single designation
3) Conforming arrow multiple designations
4) Condition arrangement in member restriction part

a) Description method

1) By arranging an icon with a range member designation on a chart, a basic member scope of the module having that chart is applied.
2) By designating a status trigger or receptor of an individual processing instance in the overall processing area by using a conforming arrow, a member or an instance when a conformance trigger occurs can be designated as the member scope (in a case where a transition time series is later). By designating the individual processing itself, a currently active member at the time of conforming is designated.
3) By designating an icon of the overall processing attribute arranged on the chart, a member at the time of arrangement evaluation can be designated. Zero, if no evaluation is made.
4) By designating a conforming arrow in two places, a trigger and a current value of the same individual description, and a connector (overall processing attribute) and an individual description of the same target conformance, a difference member is designated as the range. This is used for member confirmation and the like for irregular and exception processing.
5) The range of members designated by the above methods can be further limited by a calculation module or attribute arrangement, with attribute conditions and the like.

b) Operations on chart

1) Default: a-1 is applied when arrangement is simply made on a chart field.
2) Single designation destinations of conforming arrow
Individual processing time zone body
Accompanying trigger/receptor for individual processing time zone
Individual processing module
Accompanying trigger/receptor for individual processing module
Overall processing time zone generation trigger/receptor
Overall processing time zone body
Overall processing module generation trigger/receptor
Overall processing module body
Overall processing attribute icon
Basically, conformance is confirmation of target member scope.
However, it may be an instance of the target object in a case of a trigger connector and an overall processing attribute. In a case of group designation, both are applied.
3) Multiple designations of conforming arrow
in addition to the designation destinations in b-2) above
A conforming body that has conformed to the same processing (regardless of the main body or the accompanying trigger) or attribute.
See a-4 for member difference between these two types
4) Designation to member restriction part
See 3-3-1-1-1-7: Portion. (This is used to limit a range of the member scope in the overall processing area)

3-3-1-9-4: Overall processing module

An overall processing module is driven on the overall processing instance, and may have a normal chart inside, or may be an external module.

A function as an area is the same as that of the overall processing TZ, but a child description can be arranged in an external individual processing module, which changes the member scope. Further, a trigger icon with an individual ID when a transition to a child module is made is generated.

When a transition is made to a child module before generation of the overall processing module, a module in which no event occurs is started. In this case, a child module generation trigger is issued together with the overall processing module generation.

The overall processing module has a member restriction part, and can incorporate the conditions of the above section b-4.

The basic member scope is all users who have child module instances created.

3-3-1-9-5: Overall processing time zone #Transition control

An overall processing time zone is processed on the overall processing instance.

The overall processing time zone can be described on the overall processing area and on a plain chart field of the normal module (functioning as a nest).

The overall processing time zone has a member restriction part, and can incorporate the conditions of the above section b-4.

The basic member scope is all users for which individual instances of modules with a TZ description are described (may be created).

3-3-1-9-6: Overall processing arrangement chart individual processing

The description of the overall-processing-related individual processing area is restricted by the member scope of the described overall processing.

Further, an overall processing attribute, a group transition counter, and an overall processing calculation zone can be used within the area (a member attribute value, and a representative value converted into an attribute).

It becomes a target of a conforming arrow, and provides user instance and object instance information.

3-3-1-9-7: Interaction between overall processing and individual processing within overall processing area #Transition control

The interaction above is performed using a trigger connector, a group transition counter, and an overall processing attribute.

The trigger connector makes a transition from the overall processing to the individual processing within the overall processing area, and the group transition counter makes a transition from the individual processing within the overall processing area to the overall processing.

Basically, the trigger connector makes a transition from a member transition part to a user or a processing instance of the member scope of the processing.

The group transition counter collectively manages individual processing and makes an overall processing transition to the overall processing (re-transition to the individual processing is also possible).

The overall processing attribute holds an individual value of the member scope and a representative value that is unique to the definition module, performs an attribute value operation of the member and the representative value, and performs transition control.

1) Trigger connector: A trigger connector makes a uniform and collective transition from the member transition part. There are three types, which differ in aspect from the target.

1-1) User transition: The transition arrow is normal. The target is an individual instance of the user. The generation transition generates an individual instance. The range is defined by the member scope. #Member scope

1-2) Overall processing instance transition: The transition arrow is overall processing. A target overall processing instance itself is the target. The generation transition uses a conforming member or an instance-type overall processing attribute for the member restriction, to generate the overall processing instance. Each instance is associated with the conforming member. #Instance management

1-3) Individual processing instance transition: The transition arrow is normal. A user's processing instance itself is the target. The generation transition uses a conforming member or an instance-type overall processing attribute for the member restriction, to generate the individual processing instance. Each instance is associated with the conforming member. #Instance management

1-4) Group transition: The transition arrow is overall processing. An individual instance of a user associated with each of the target overall processing instances is the target. At the time of generation transition, an overall processing instance with a member of each group as the member scope is generated. Management is performed by using the group-type overall processing attribute for member restriction. Each instance is associated with the conforming member (group ID). #Group management

2) Group transition counter: A group transition counter is a type of counter that counts how much each individual processing instance has evaluated its processing. A status trigger is issued when the value becomes equal to or more than a certain value.

There are two methods for how to designate processing for equal to or more than a certain value; a constant and a fulfillment rate (time management is also possible if a TZ is inserted). The mode is determined, and the designation is made by dropping an attribute in a method specification part or inputting a numeric value.

Member restriction (for performing totalization) can be performed (member restriction part).

By applying restrictions with the group-type overall processing attribute, the processing can be performed for each group. (When there is no group information in the overall processing of a return destination, it is regarded that multi-transition has been performed (if the actual transition arrow is a single transition, reaction occurs only once at the first time).

A trigger part can perform the normal transition, the overall processing transition, and the group transition (restricted with a group-type overall processing attribute).

3) Overall processing attribute: By using for member restriction, member information and group key information of an overall processing attribute can be used for transition control at a time of member transition.

Group key information of group-type overall processing attribute

In a case where attribute values of the instance-type overall processing overall processing attributes are unique to each other

When used for generation transition of an overall processing instance, an identification key is given to each instance. After that, an overall processing instance transition having an attribute value key matching reaches an instance having a corresponding identification key (behavior of the group instance can be controlled by the key restriction). #Group management #Instance management

3-3-1-9-8: Group processing #Group management

Group processing is performed by grouping users in the member scope of the overall processing, giving a group-type overall processing attribute, and generating an overall processing instance for group management by a group transition of a connector.

Grouping: A grouping key is given to a user who has been assigned with the same value into the attribute value of the group-type overall processing attribute in individual processing, and a user who has been given group information given by an external module by grouping and the like of 3-3-1-3-5-1: Member scope of overall processing.

Group processing overall instance: Modules and time zones created by the group transition of 3-3-1-9-7: Interaction between overall processing and individual processing within overall processing area have a key attribute value of a group-type overall processing attribute used as an identification key. Further, the user having the grouping key is set as the member scope.

After that, a transition to the group processing overall instance is possible for both the user and the instance, but a transition with a specified instance requires a group-type overall processing attribute for which key information is used for the instance-type attribute value or for generation.

3-3-1-9-9: Member calculation time zone and calculation including overall processing #Calculation zone

Description is integrated in 3-3-3-6: Calculation module

3-3-1-9-10: Overall processing descriptor

Overall processing transition arrow: This is a transition arrow that drives overall processing. Similarly to the normal one, there are two types of a single transition and a multi-transition. The overall processing transition arrow can connect between overall processing descriptions, and can also connect an external group transition counter to the overall processing description.

Conforming arrow: An equivalent operation method to that of the transition arrow is applied. The conforming described in 3-3-1-9-3: Member scope is performed.

Trigger connector: A trigger connector icon has a status receptor and a status trigger for overall processing, a member transition part, and a member restriction part. The trigger and the receptor (see Fig. 50) are only connected with an overall processing transition arrow, and serve as a status trigger for an individual processing or overall processing transition arrow, in accordance with 3-3-1-9-7: Interaction between overall processing and individual processing within overall processing area, for the member transition part. Conditions are applied in the member restriction part in accordance with normal limitations.

(Overall processing) Processing icon: This is used in an overall processing description. A function is equivalent to the normal one, but the attribute that can be set is only the overall processing attribute (representative value).

Group transition counter: This icon has a status receptor and a status trigger, and has a method specification part and a member restriction part. The status receptor can only receive an individual processing transition arrow, but the trigger can send both the individual and overall processing transition arrows.

By clicking the method specification part, two forms for constant input and fulfillment rate input are switched and displayed. In the constant input mode, a numeric type attribute can be dropped.

3-3-1-10: Calculation module #Scenario/calculation chart (see Fig. 51) #Calculation zone

Here, a calculation module using a chart including a calculation zone is described.

Calculations include a user individual processing calculation, and a member calculation in which a calculation including overall processing is added to the user individual processing calculation. To use the overall processing, it is necessary to be a chart including an overall processing calculation zone or a chart in an overall calculation module.

First, a basic individual calculation chart (see Fig. 51) will be described.

3-3-1-10-1: (Individual) Calculation chart (see Fig. 51) or calculation zone

A calculation submodule is a module for performing re-evaluation of a participant attribute or true/false evaluation calculation by using a scenario attribute and a participant attribute of a module to which the calculation submodule belongs.

Note that calculators cannot be arranged in other than the calculation zone, and contents cannot be arranged inside the calculation zone. The calculation zone is present in both the individual and overall processing. The individual calculation zone in the overall processing performs, as a member calculation zone, sequential calculation of the member scope of the corresponding overall processing.

A calculation submodule where a terminal status is not arranged at the end becomes a calculation submodule, and a calculation submodule where a terminal status is arranged becomes a condition submodule. This may include an attribute calculation cluster.

A calculation zone surrounded by this calculation module in the calculation TZ is called a calculation field.

Several specific descriptors are used within the calculation field.

In the calculation zone and the calculation module, calculation is performed instantaneously at the time of transition.

Attributes and the like are fixed at the time of transition, and are subjected to other effects after the calculation result is obtained (top priority processing by start time series).

For operations in the calculation field, logical transition arrows described below are evaluated by a conditional filter, and operations connected by assignment transition arrows that form a calculation cluster are procedurally executed to obtain a result.

In addition, a conditional calculation can be performed at the same time by modifying ending of the transition with a status emitter and issuing the evaluated status.

- Types of appearance palette

Content palette with calculation module limitations
Attribute palette
Processing palette
Status emitter palette
Calculator palette
In the content palette with the calculation module limitations, only the calculation module in the contents appears.

Logical transition arrow: This is used to realize condition selection and a procedural calculation process. This is actually the same as a normal transition arrow. In a case of a calculation zone, it is also possible to extend the normal transition arrow from outside to control evaluation timing of calculation.

As a specific connection destination in the calculation field, there is a connection to an icon forming a calculation cluster.

By performing actual calculation, the logical transition arrow generates an evaluation transition arrow and a non-evaluation transition arrow.

Assignment transition arrow: An assignment transition arrow connects an attribute or the like that acquires a value with a calculator, and also connects an attribute that assigns or uses the value and a condition attribute part or the like.

An icon group connected by the assignment transition arrow forms a calculation cluster.

A start point is called an assignment source, and an end point is called an assignment destination. Further, an assignment transition arrow with a calculator as the assignment destination is called an input arrow, and an arrow extending from a calculator to the assignment destination is called an output arrow.

It is possible to connect a dropped attribute or a numeric form with a calculation icon, or connect a calculation icon with an attribute, a condition attribute part of the comparison condition filter, a loop counter, and a transition counter numeric part. Note that, by directly designating an attribute as an output destination from the attribute or the numeric input form without inserting the calculator, the same value is to be assigned.

Start points of input arrow
Attribute icon
Constant input form
Calculator (assignment destination of another calculator)
End points of output arrow
Attribute icon
Condition attribute part of comparison condition filter
Determination value arrangement part
Calculator
Calculator: A calculator is an icon for processing and calculating information of an input arrow and outputting to an output arrow. There is provided one or more receptors that receive the input arrow, and one trigger that sends the output arrow.

There are two types of calculator receptors, single-input and multi-input, and a unique symbol that implies a function may be attached. Each input/output has type information, and only a matching value can be accepted.

The single-input receptor can be connected with one input arrow, and the multi-input receptor can be connected with multiple input arrows.

Example 1) Addition, subtraction, multiplication, division, and exponentiation

Adder: A/ multi-input (numeric value) All inputs to A are added.
Subtractor: A/ multi-input (numeric value) B/ multi-input (numeric value) All inputs to both A and B are added, and B is subtracted from A.
Multiplier: A/ multi-input (numeric value) All inputs to A are multiplied
Divider: A/ multi-input (numeric value) B/ multi-input (numeric value) All inputs to both A and B are multiplied. A is divided by B.
Power calculator: A/ single-input (numeric value) B/ single-input (numeric value) A ^ B

Example 2) Average value, maximum/minimum value

Average calculator: A/ multi-input (numeric value) Average of all inputs to A
Maximum value calculator: A/ multi-input (numeric value) A maximum value of inputs to A is outputted.
Minimum value calculator: A/ multi-input (numeric value) A minimum value of inputs to A is outputted.

Example 3) Round-up, round-down, random number generation
Example 4) Character string connection, character string cut out
Example 5) Logical calculator
Descriptor: Six types of processing icons are available: ending, branch/merge, a transition arrow counter, an attribute pattern filter, a comparison condition filter, and a loop counter.

All are used to realize conditional branching and procedural calculation of logical transition arrows.

The descriptor functions similarly to a normal field.

Constant input form: A value can be inputted from an input form, and a value can be sent to the calculator with an assignment transition arrow.

Calculation zone:

Calculation: When developing a directed graph with logical transition arrows in which the above elements are combined
Start point Conditional branch
Calculation cluster
Conditional branch Conditional branch
Calculation cluster
Ending point
Evaluated single transition
Calculation cluster Conditional branch
Calculation cluster
Ending point
Evaluated single transition
Multiple start points are allowed, and transitions can be merged, but such a tree graph is obtained when disassembled.

When actual calculation is performed, calculation along an evaluation transition arrow is performed at the conditional branch, and reaches the ending point or a transition stop.

In the calculation module, a status emitter can be arranged on this route, in which case a condition module is obtained. Even in the condition module, attribute calculation may be performed and an attribute value may be changed.

At this time, the result cannot be guaranteed if there is a calculation cluster that has the same attribute in another evaluation transition path.

There is a possibility that the evaluation is not made at the same time due to condition settings and the like, but such a situation should be warned.

3-3-1-10-2: Attribute calculation including overall processing

Overall processing calculation field: An overall processing calculation module or an overall processing calculation zone is a called overall processing calculation field. In the overall processing calculation field, the same calculation as the individual calculation field can be performed by using an attribute value that can be used in the overall processing area.

Available attributes
Overall processing attribute representative value
Instance-type overall processing overall processing attribute member attribute value
Property attribution icon of overall processing attribute
Attribute value that can be used as member restriction information
Cooperation of individual calculation and overall processing calculation with use of member scope:
In an individual calculation zone in the overall processing calculation field (member restriction is possible), and in an overall processing calculation zone in which an instance-type or group-type overall processing attribute value is placed in the member restriction part, member calculation of the member scope is performed.

Further, it is possible to accept an assignment transition arrow toward an assignment destination of the overall processing (assigning an overall value to the individual calculation of each member), and an assignment transition arrow from an assignment source.

In addition, a multi-input of the calculator in the overall processing calculation field can accept a result of member calculation, and calculation is performed assuming that all individual values in the member scope are inputted.

3-3-1-10-3: Timing setting chart and attribute condition chart #Timing setting

A timing setting chart (3-3-1-6: Timing setting) and an attribute condition chart (3-3-1-13: Participant type (see Fig. 34), member restriction part) are a derivative of a calculation chart (see Fig. 51), and have different palettes and information that appear.

These charts are not modules and are not stored in the content palette.

As a common palette, a status emitter palette that stores only a consequential ending emitter appears. These charts ultimately require arrangement of the consequential ending emitter on one or more of the ending icons, to determine a condition. When the condition is satisfied, a timing or an attribute condition is regarded to be satisfied.

Timing setting chart: Since calculation of a trigger is included instead of evaluation of a value, it is not performed instantaneously but stepwise in accordance with an occurrence of trigger information. As a result, interpretation of a mode of an attribute pattern filter is partially different.

AND operation: When two or more triggers are included, evaluation is conducted only when all of them occur.

OR operation: When two or more triggers are included, evaluation is conducted when any one occurs.

- Palette types

Attribute palette
Processing palette
Status emitter palette (only for consequential ending)
Trigger palette
Elements available in a processing area appear in an overall processing area.

Attribute condition chart: This appears in a part where an attribute condition needs to be designated.

Places of appearance
Member restriction part
Participant attribute condition

- Palette types

Attribute palette
Processing palette
Status emitter palette (only for consequential ending)
Details of the attribute palette differ depending on a place of appearance.

In the member restriction part, an attribute according to normal place limitations appears (scope, overall processing area?).

In the participant attribute condition, importable save attributes are stored as a true/false value type.

3-3-1-11: Contents log #Log contents display

An ended contents can be browsed from User event home as a contents log. Functions in progress of a scenario are lost, a form and a status link lose functions, and an attribute and status change from external cooperation are no longer accepted. Other links and video browsing functions remain.

3-3-1-12: Log record #Log management

A log is described as a history of a user or the whole in a structured language according to the scenario structure. Between an entry to module processing and a leaving description, an event that has occurred in the module is described together with time location information.

Detailed logs and contents data are stored at the cost of the manager side.

A User keeps the log for reference and minimum.

When the user needs detailed information (such as when creating an automatic blog), reference is enabled if the manager side releases or holds the data.

3-3-1-13: Participant type (see Fig. 34) #Participant type (see Fig. 34) determination process

A participant type (see Fig. 34) is type information that is classified by types based on participant attribute information that has imported save attributes, and defines possible actions during an event determined by user selection (if possible). Participants can check their participant information in a special article.

Control is performed with a representative attribute (true or false) in a scenario.

3-3-2: Scenario (main screen)

Binding

Manager ID
Scenario ID

Essential screen elements

1) Special article display block

- 1-2) Special article tab
- 1-3) Distribution icon
- 1-4) Main screen
- 1-5) Type setting bar

2) Special processing block

- 2-1) Modularization
- 2-2) Outline check
- 2-3) Event registration
- 2-4) Scenario deletion

3) Scenario tag edit

4) Participant type (see Fig. 34) list

- 4-1) Participant type (see Fig. 34) name
- 4-2) Explanation
- 4-3) Essential attribute
- 4-4) Re-edit

5) Creation log

6) Scenario structure display button

a) About 1) Special article display block
This is a block that manages a special article (see 2-4-2: Special article) of a scenario. The special article selected with a tab of 1-2) is displayed on 1-4) Main screen. At this time, a sequence number should be displayed somewhere. Further, check items on the 1-5 Type setting bar also change in accordance with the tab selection.
At the end of the tab, there is a tab for New creation, which, when selected, causes a block screen to appear with indication of Click after the type is checked. Clicking after checking causes a transition to the article edit screen in Fig. 19 of a mode for editing in 3-3-5-10: Special article.
1-3) A distribution icon is displayed while a tab that allows distribution of a type of the relevant article regarding 2-3-2: About transition when using event is selected. #E-mail delivery
b) About 2) Special processing block

2-1) Modularization: A created scenario can be edited as a content module. A transition is made to a nested scenario screen where details are copied, and a terminal trigger is arranged. Registration onto the library can also be selected. #Library transition
2-2) Outline check: Outline check of the scenario is performed. See 3-3-8: Outline check #Outline check
2-3) Event registration: A created scenario is registered in a feasible scenario list. Outline check is performed, and a transition is made to return to this screen in a case of unconformable. #Scenario transition control #Outline check
2-4) Scenario deletion causes the corresponding scenario being created to be deleted, and a transition is made to return to the main screen.

c) About 3) Scenario tag edit #Tag-attribute conversion mechanism
This is displayed when a list of official tags is displayed and selected.
d) About 4) Participant type (see Fig. 34) list #Participant type (see Fig. 34) determination process #Save attribute management
Information registered in 3-3-1-13: Participant type (see Fig. 34) is displayed. For essential attributes, essential attributes are extracted and listed in the same method as that for extracting essential conditions for save attributes in 2-2 in 2-8-4: Save recommendation attributes. (AND condition in all conditional branches, rather than NOT/OR condition)
4-4) Re-edit causes a transition to a corresponding 3-3-6-3: Participant type (see Fig. 34) registration/edit screen of a column.
e) A creation log is to enable checking of an edit history of scenario creation (see Fig. 49) by scrolling.

#Log management

1: Addition/deletion of elements
2: State transition
3: Test/check result

3-3-3: Scenario chart

See Fig. 21. Scenario chart creation screen.

Binding

Manager ID
Scenario ID

3-3-3-1: Basic structure of screen

A screen is roughly sectioned into a main area and a utility bar in an upper part.

In the main area, a chart is basically expanded, and various palettes are placed on top of it. Positions of the palettes are variable. By default, palettes are arranged on a left side of the screen to make a palette area.

Essential screen elements

Utility bar

1) New calculation module
2) New article
3) New module
4) New scenario attribute
5) Scenario attribute management
6) Private library
7) Standardized library

Main area is in the following section

3-3-3-2: Chart area (Chart explanation)

#Scenario/calculation chart (see Fig. 51)

A scenario chart is displayed.

3-3-3-3: Palette area (palette explanation) #Palette

A palette on the chart screen can be developed on the main area, and is initially aligned on a left side.

Content palette,
attribute palette,
processing palette (assignment transition arrow is hidden), and
manager trigger palette
are displayed in the scenario chart.

3-3-3-4: Utility bar

1) New calculation module

An edit screen of 3-3-3-6: Calculation module is opened, and at the same time, a corresponding module is registered as a definition module in the content palette. #Definition/scope

2) New article

3-3-5-4: Description screen is opened, and at the same time, a corresponding module is registered as a definition module in the content palette. #Definition/scope

3) New module

3-3-4-1: Nest type module edit screen is opened, and a corresponding module is registered as a definition module. #Definition/scope

4) New scenario attribute

3-3-3-5: Scenario attribute registration process is started, and a corresponding module is registered as a definition module. #Scenario attribute registration process #Definition/scope

5) Scenario attribute management

An attribute list for a range of the attribute palette is called. See 3-3-7-2: Scenario attribute list. #Contents list (cut out)

6) Private library #Library transition

A transition is made to a private library of 3-3-4-5: Library use. (With ID information of a corresponding module)

7) Standardized library #Library transition

A transition is made to a standardized library of 3-3-4-5: Library use. (With ID information of a corresponding module)

3-3-3-5: Scenario attribute registration process #Scenario attribute registration process

Type selection is performed in a state where a normal type selection screen is linked to a screen for selecting scenario attributes of the transition control mode, and a name is registered.

1) Transition control mode attribute selection screen: List selection of two types, a marker type (true/false value type) and a counter type (numeric type), and a link to a detailed-type selection screen are displayed.

2) Detailed selection screen: List selection of all types of 3-3-1-3-3: Scenario attribute and 3-3-1-3-5: Overall processing attribute is displayed.

3) Registration screen: When the type is selected, a name input screen appears. When input is performed, a scenario or overall processing attribute is registered, and the icon appears in the attribute palette.

The name is in a state where an automatically-assigned name of 1?2 letters in the alphabet is in the form.

3-3-4: Module

A registration screen called by New module is a creation screen for a nest type module.

Further, choosing Module creation in the subnavigation causes a module content list (see Fig. 32) to open, and New generation button appears at the end of the list. When creation is made here, the scope is to be a scenario. #Contents list (cut out) #Definition/scope

For exception management creation, a manager call appears in the processing palette by selecting an exception management of the module option, and the exception management creation screen appears.

An external module needs to be taken out from the standardized library. The selected library is registered as a template on a template screen.

See 3-3-1-2-3: Normal module and exception management.

Binding

Manager ID
Scenario ID
Contents ID

3-3-4-1: Nest type module

Explanation of an edit screen of a nest type module.

Essential screen elements

1) Utility bar

1-1) New calculation module
1-2) New article
1-3) New module
1-4) New scenario attribute
1-5) Scenario attribute management
1-6) Module option
1-7) Private library
1-8) Standardized library
1-9) To arrangement module

2) Main screen

2-1) Module chart
2-2) Palette

a) Utility bar

Sections 1-1 to 1-5 are same as those of the scenario chart. The module is to have the definition module opened.

1-6) Module Option

When clicked, a palette containing the following icons appears.

1: Hiding
2: Making variable
3: Fill-up
4: Definition module change
5: Changing to exception management
6: Changing to advanced management
7: Temporal search edit form

Explanation

1: Hiding: When designated (clicked), an internally defined content, a sub-element, and a scenario attribute is no longer described on the content list (see Fig. 32).
By clicking again
2, 3: Making variable and Fill-up: See 3-3-4-4: Forming template. When Making variable is clicked, the mouse pointer changes to a making-variable mode. It is canceled by clicking again. When Fill-up is clicked, a class is generated in a palette of a template definition module, and a transition is made to an edit screen.
See 3-3-1-2-1-1: Template and fill-up. #Class/template #Mouse pointer mod
4: Definition module change: Change is made by calling a content list (see Fig. 32) and selecting a module or a scenario icon. (Scenario structure display is also possible) #Definition/scope
5: Changing to exception management: when designated, the module type is changed to exception management. A manager call icon appears in a processing palette.
6: Changing to advanced management: Advanced management content described in detail in 3-3-1-2-1-2: Content state is obtained. During designation, a selection restraint box appears at a corner of the screen, and it is necessary to arrange one or more arranged emitters here. #Content state control
7: Temporal search edit form: A timing setting trigger description of a time zone of a module that is not hidden in the module and of forced termination can be called, and the description can be changed all at once. Just like search and replace processing of normal word processing software, descriptions can be listed and displayed, and the selected description can be changed only at that place, or collectively. #Temporal search edit form

1-9) To arrangement module

When clicked, a list of definition modules and arrangement modules appear. Selecting causes a transition to an edit screen.

b) Main screen

A function similar to that of the scenario chart is provided, but a status emitter can be arranged and an element can be made variable. Status emitters can be arranged in the following locations (see Fig. 28).

#Transition control

Terminal status
Evaluation status
Termination receptor
Content start timing
Transition unstarted
Trigger receptor
Time-in
Time-out

Field-in

Field-out

On forced-termination receptor

Processing icon (at evaluation start/at evaluation start and end for a counter type: an upper part and a lower part of an icon)
Appearance palette
Content palette
Attribute palette
Processing palette
Manager trigger palette
Status emitter palette

3-3-4-2: Exception management

Modules that should be focused on to be managed in event progress can be designated for exception management. Basically, a module that is likely to be difficult to proceed with a normal system is designated.

The module subjected to type selection of the exception management module is treated specially by the event monitor (see Fig. 11), and is constantly monitored.

Further, a manager call can be arranged as a processing icon (handling as an icon is equivalent to the ending icon), and it becomes possible to directly contact a user. See the manager call function of the event monitor.

3-3-4-3: External module #External cooperation

The external module is an external API that has a service provision screen for users and a property management screen for a manager.

A behavior is required to follow limitations as a module (content) (appears as a template).

A status required for the content is issued.

Termination status

Start

Start not reached

The service provision screen is required to follow specifications of a contents screen for users. Specifications required for property management.

Essential

Fill-up is possible

Definition module change

Recommended

Changing to exception management is possible

Changing to advanced management is possible (manager side control is possible)

Making variable

Related reference list call

Library access

Graphical interface

New element definition of types required for property designation (calculation modules, modules, scenario attributes, articles, and the like)

Palette (content, attributes, emitters, library data)

Status emitter receptor

Content receptor

Attribute receptor

Data receptor

3-3-4-3-1: Outside trigger description module (OSTM) #External data usage

A selection occurrence condition is designed from a list of events that can be designated as an outside trigger. External module.

The OSTM calls a library data palette when arranged. This palette has a limited function, and only data registered as an outside trigger is displayed.

A property screen basically has only data receptors.

Further, there may also be a type having an attribute receptor to receive triggers whose data has properties (other than the individual ID).

When an outside trigger data icon is arranged on this receptor, a trigger is issued when an outside trigger occurs during the lifetime of this module at the time of an event. An OSTM having a function of adding an individual user ID ignores other IDs in an individual event.

There is also a module that performs complicated control for calling a timing setting chart. #Timing setting

In this case, the outside trigger is treated the same as the trigger.

Types of outside trigger

Global trigger

RSS

RSS with user information *

Data from cooperation system

Data with user information *

Terminal action *

Two-dimensional barcode reading

App input

Outside triggers with the symbol * have user information.

3-3-4-3-1-1: Entry trigger and local entry

An outside trigger given with a function of generating a user's individual scenario instance is called an entry trigger. Depending on a category of data, there are those with designation of an individual ID and those without.

An entry trigger without the designation of the individual ID creates an individual scenario instance for all users who are currently in a participation state.

Multiple entry triggers can be arranged in multiple layers. The first entry trigger caused in combination with the user ID causes an individual instance of that user. At that point, other entry triggers are regarded as simple outside triggers. Entry triggers of the second layer or lower also cause individual instances in that layer. The following usage can be made even if an entry icon is not set.

1: If an entry event is not described in the first layer but an entry icon is arranged in a lower-level layer, handling is made as a simple outside trigger as it is. By arranging a blank entry trigger in the first layer, an entry is generated when a generation trigger occurs while the lower-level entry trigger icon is alive.

2: By arranging a blank icon in an accompanying trigger of a field zone, an entry can be caused with that trigger.

A local entry is an entry trigger that accepts only a terminal action and field-in, and a registered user starts a local entry process on the spot (entry may not be immediately made). #Local entry process

3-3-4-3-1-2: User check related module and usage process #Transition control #Two-dimensional barcode page generation #User check

Using a participant mobile terminal app, a contact confirmation process is provided between a manager user and a general user, and between a general user and another general user.

Mechanism to use the user check in the scenario.

Two types of modules are related

User check module

Overall processing conversion user check module

Special QR page issue module

1: User check process between with manager side
A case where a manager desires to use the user check as a trigger in a specific module.

1-1: In a plain field, or in a TZ or by performing FZ-association member restriction when desiring to limit a range, the manager can arrange a user check module on a chart.
1-2: The arranged module issues a user check code unique to a class in settings.
1-3: The manager inputs the user check code into a target having an interface that can accept the user check code, on a staff terminal app or cooperation equipment.
This associates the equipment with the class of the user check module.
1-4: When a user within the restriction makes a local contact with any applicable equipment, the arrangement module of that class issues a trigger. (Note that if the arranged module or a context is different, the issuing is performed at only the module that satisfies a condition).

2: User check between users
Grouping occurs when users in a specific context perform user checks with each other. Grouping is performed for a group of two users by arranging a group-type overall processing attribute in the property. It is also possible to change both processes depending on a condition (a second method of checking by staff). If no condition setting is made inside, grouping is also possible by assigning a group-type attribute to A status.

2-1: Overall processing conversion user check module is arranged in an overall processing area to control behavior.
2-2: A child user check module is arranged in an individual processing area that can be designated.
2-3: A condition is arranged in a member restriction part of A target and B target with the property.
2-4: When user check is performed between the same contexts, A condition and B condition are scanned individually. If both are not satisfied after switching, the user check is denied. Not applicable is notified. If both conditions are blank, all transitions are made from A status.
2-5: Results (if established)

User 1: A User 2: B > User 1: A User 2: B
User 1: B User 2: A > User 1: B User 2: A
User 1: AB User 2: A > User 1: B User 2: A
User 1: AB User 2: B > User 1: A User 2: B
User 1: A User 2: AB > User 1: A User 2: B
User 1: B User 2: AB > User 1: B User 2: A
User 1: AB User 2: AB > Randomly assigned

2-6: Grouping is performed with the assigned overall processing attribute, and a group key is assigned.
2-7: For a user assigned with a status, a trigger is issued by either A or B.

By arranging a special QR page issue module, the special QR page will be distributed when the special QR page issue module is selected. A QR page of the scenario enters a standby state.

The context can be limited also by dropping the module as the designated QR page with the property.

3-3-4-3-2: Guide module

A guide module for guiding of a user to a specific point in accordance with the above specifications is created. This is important for services.

3-3-4-3-3: Page adapter

By converting a URL into library data, a specific web page can be converted into an external module.

This is basically treated as a message. When a generation trigger occurs, the other party page is called and displayed.

Selection is enabled by setting whether to capture and display on the content page or provide a link.

3-3-4-3-4: Venue equipment management system

This is obtained by converting operations on AV equipment installed at a venue into an external module.

A property screen for management, and a data receptor and an attribute receptor for use of contents and user-provided information are required.

#Scenario behavior

3-3-4-3-5: Scenario status receptor module

When evaluated, a transition is made beyond the scenario for participants by issuing a scenario status or designating in a setting chart that contains library data of the entry trigger of the transition destination.

In overall processing arrangement, a transition is caused in all member scopes at that time.

When arranged, the scenario status receptor module is displayed on the scenario screen, and generates library data that serves as a scenario status when realization is enabled.

3-3-4-4: Forming template #Class/template

In a template in a module, contents, attributes, and field zones can be designated as variable icons. By designating one point of these, all arrangements of the same class become variable icons, and fill-up on one place is reflected in the same elements.

3-3-4-5: Library use #Library transition

See 3-4-5: Library. Checked contents are registered in the library.

3-3-5: Article/message

A scenario exists for distributing articles (and service screens of external modules) to participating users at appropriate locations, times, and conditions. Articles are the basis of communication between users and an organizer.

Article features

1: Prompting a participant to read an article
2: Prompting a participant to view images and videos
3: Prompting to input in a form
4: Prompting to use embedded screen parts
5: Prompting to select an external link
6: Prompting a participant to select an action

Therefore, state management is introduced for important distributions, to make it possible to determine whether user's reaction to the distribution is a regular action or an irregular action for progress of the event, or whether an exception has occurred. Explanation is made in detail in Article state transition.

3-3-5-1: User screen #Article description-User image conversion

A user screen looks like a blog article with a check button (other than messages) somewhere on the screen.

The article is displayed on a sub-screen of the user screen or in full screen display, and allows browsing of texts and videos, inputting into forms, linking, and selecting.

After reading the article, it is recommended to press the check button to confirm.

A message is displayed outside the frame and the like.

There may be a case where some work is needed to properly close the article before the check button is pressed. In this case, checking without performing necessary work causes a message to that effect to be displayed.

Details of the necessary work may or may not be explicit. When the check is selected, a confirmation message is displayed.

3-3-5-2: Article state transition #Content state control

There are several types of articles to implement article state management, which change to several states depending on a status issue situation at the time of event execution.

Article type Exception occurrence selection With selection restraint

1) Message No No
2) Article with state Yes No
3) Article with state with selection restraint Yes Yes

Types of 2) and 3) are articles whose state is generated by browsing management, and types of contents are classified into a message for 1, and articles for 2 and later (operations and creation methods are the same).

The article with state with selection restraint corresponds to an advanced management designation content.

Article state transition A) Regular ST/ B) Irregular ST/ C) Not generated F) Terminated/ O) Being displayed State

Message A/B/C F/O Message displayed

Article with state A F Regular termination article
A O Regularly generated article being displayed
B F Irregular termination article
B O Irregularly generated article being displayed
C F Standby article
C O Irregularly generated article being displayed
Article with state with selection restraint status Restraint selection A F Regular termination article
Restraint selection A O Regularly generated article being displayed
Restraint selection B F Irregular termination article
Restraint selection B O Irregularly generated article being displayed
A F Standby article
A O Article being displayed not selected
B F Standby article
B O Article being displayed not selected
C F Standby article
C O Article being displayed not selected

State: Each state is evaluated in accordance with whether to cause a timeout in a time zone, and which processing is to be received among regular, irregular, or exception processing.

Message displayed: This state is set when a message is delivered. A status or the like may be issued, but the state of the article is not affected, and regular termination is made as soon as the article is closed. Timeout does not occur.

Regular termination article: This is a state indicating that regular processing has been performed and the article has been closed. Regular termination is made, and no timeout occurs. Regularly processed.

Regularly generated article being displayed: This is a state where regular processing has been performed, but the article has not been closed yet. Regular termination is made when closed, and no timeout occurs. Regularly processed.

Irregular termination article: This is a state indicating that irregular processing has been performed and the article has been closed. Irregular termination is made, and no timeout occurs. Irregularly processed.

Irregularly generated article being displayed: This is a state where irregular processing has been performed, and the article has not been closed yet. Irregular termination is made, and no timeout occurs. Irregularly processed.

Article being displayed not selected: This is a state where article is open, but restraint selection has not been performed. When closed, a standby state is set. Timeout is caused.

Standby article: This is an article that is in a standby state and is out of a displayed list, but can issue a status when called. In a case of an article with a state, it is regarded as being irregularly processed, and a timeout is caused when having selection restraint.

3-3-5-3: Terminal status/check/selection restraint #Transition control

Articles and messages can issue a terminal status as a content. Further, in order to make a user aware of browsing management, operation information that is the premise of a function is enabled to be registered in a check button. Furthermore, a selection restraint function is provided so that the event progress can be managed solidly.

It is the terminal status emitter that makes detailed determination on these functions.

See %% for explanation of the emitter itself.

Locations where the emitter can be arranged on the description screen

1) Check button
2) Article distribution completion
3) Browsing end
4) Status emitter receptor
5) External link description screen parts
6) Status link description screen parts

When the same emitter is arranged in multiple locations, a terminal status is issued when an event occurs somewhere.

Check box: An arranged emitter can be dropped in a check box. The check button starts functioning when all the same type of emitters as that having been dropped are selected. An empty box causes the check button to function without any preconditions.

When a check button becomes available, highlight display is made with informing of "Checkable". Informing of "Not satisfying the condition" is made when clicked while being unavailable.

Informing can be edited through a text form in the box.

Restraint selection box: This is a box for setting a restraint selection status. It is possible to drop an arranged status emitter to be designated. Unless any of the statuses arranged here is issued, the termination state cannot be set until the TZ is closed. Further, that case also causes exception termination.

3-3-5-4: Article description screen

Screen configuration: A utility bar is arranged in an upper part, and an article main part and a palette are arranged in a lower part.

The palette is movable and can be freely moved within the lower part.

3-3-5-4-1: Screen parts #Article description-User image conversion #Transition control

For users to perform video, input form, link, plug-in, and selection in the article screen, screen parts can be incorporated into articles.

Screen parts are stored in a screen parts palette, and arranged in a possible portion of the article by DD.

User image, description form, and receptor tab: The screen parts are present on the palette as an image of a category and a category name. Arranging this in an article causes a description form and a receptor tab to be opened. Since this is different from an occupied space, clicking a user image icon causes a user image edited at that time to appear at a designated position. Clicking a description form icon causes a transition returning to edit.

The description form is an editor for editing details of screen parts, and an interface differs for each type.

The receptor tab is obtained by combining an attribute receptor, a status emitter receptor, and a data receptor into a tab form, and is automatically arranged around the description form.

Check confirmation property: Check confirmation property often exists in an input-type screen parts. When this property is set, an emitter is selected at a time of checking, rather than at form input. During that time, input details can be changed. #Transition control

Alternative selection group: In a case where multiple certain input screen parts of the same type are arranged, alternative selection can be made by grouping the multiple pieces. In this case, a check confirmation property is automatically set.

Alternative setting: A title of an arranged input form of the same type is displayed by a pull-down. When selected, alternative settings will be listed. #Transition control

Status emitter receptor: A return value of the form is categorized into several types so that a terminal status can be attached.

Example

1: Normal termination
2: Abnormal termination
3: Request

There is a check confirmation property for each receptor (clicking causes a check confirmation mode). A dropped terminal status is issued at a time of occurrence or check.

For a receptor with a check confirmation attribute, a status of a receptor with the smallest number is prioritized.

3-3-5-4-1-1: Types of screen parts

Video/image container: This has a function of receiving and reproducing videos, images, and audio data from a library data palette.

Arranged data is reproduced in sequence. The images are in a slide show. A simple still image is used for only one piece.

An accepted data category is determined by a category of data that has been dropped first.

In a user image, a still image is a frameless image.

In a video and slide show, a frame is placed outside the display part, and a control box for reproduction, stop, fast forward/rewind, and previous and next data is displayed by clicking the frame.

In the settings, defined viewing time and random reproduction are selected.

Defined viewing time: If set, a time input form appears to allow the time to be inputted. On the user side, the frame is emphasized when the defined time service is provided.

Random: If set, the order for playing changes randomly rather than as a sequence.

Receptor tab: There are three pieces, for two data receptors and a status emitter receptor.

For the data receptor, one type of data icon and data-type attribute can be dropped. The frame is initially for about five pieces, but expands when becoming full. This arrangement order is to be the reproduction sequence. For the inputted data, thumbnails are switched in sequence each time the thumbnail is clicked on the description form. Data that can be reproduced is reproduced by double clicking.

Data receptor 2 #External data usage
CSS data for paragraph decoration can be dropped.

Status emitter receptor

Still image: Successful loading/failed loading
Others: Complete reproduction/Reproduction/Exception/Successful loading/Failed loading/(Defined viewing time cleared)
Attribute input form: A form for a user to input an attribute value.

The same kind of forms can form an alternative selection group.

Types of input form

Text input: Character string
Select button: True/False ((List type character string can also be inputted for alternative selection group)
Check box: True/False
Numeric input form: Numeric value
Button: True/False

The user image is a form and a title.

The description form is a title input form.

Check confirmation property can be set.

Alternative selection group can be set.

Receptor tab
Attribute receptor (one piece)
Status emitter receptor
Successful reflection/input/exception
Data receptor #External data usage
CSS data for paragraph decoration can be dropped.

Attribute-specific description form: Participant-attribute-specific description is reflected in an arranged paragraph. The user image is a paragraph (maximum number of input characters).

The description form is a form in which an attribute name is written on a tab. Selecting the tab causes a form of a corresponding attribute and input details so far to be displayed.

Receptor tab

Multiple attribute receptors

When an attribute is dropped, a tab of the description form increases (determined as a true/false value in the transition control mode). In a case where multiple attributes apply, the sequence order of the attribute receptor is prioritized.

Data receptor #External data usage

CSS data for paragraph decoration can be dropped.

One form exists even if the attribute is blank. This converts the paragraph into screen parts.

External link description form: A link description form for an external URL. The user image is an underlined highlighted character string.

The description form is a character string input form (URL format check) for title input and URL input
Check confirmation property can be set.

Receptor tab
Status emitter receptor
Link selection
Data receptor #External data usage
CSS data for paragraph decoration can be dropped.

Status link description form: When clicked in the user image, a submit screen appears and a character string for making confirmation that the title has been selected is displayed (Highlight display after selection).

The description form is a title character string input form.

Check confirmation property can be set.

Alternative selection group can be set.

Receptor tab
Status emitter receptor
Submit

Data receptor #External data usage
CSS data for paragraph decoration can be dropped.

#Transition control

Embedded cooperation object: An external module can be registered in this format in the library.

Specifications of the user image, the description form, and the receptor tab must be conformed.

External embedding form: Data for external embedding can be arranged. An embedded screen such as SNS is to be the user image. #External cooperation https://dev.twitter.com/web/sign-inhttps://dev.twitter.com/ja/web/embedded-tweets, and the like

A status is issued when the link is selected or an operation such as reproduction is performed. #External data usage

Receptor tab
Status emitter receptor
Data receptor 1
A link destination description of an embedded description is dropped.

Data receptor 2
CSS data for paragraph decoration can be dropped.

Check button: A check button is a button of a unique image.

Specifications of the user image, the description form, and the receptor tab must be conformed.

Check button: A check button is a button of a unique image.

The user image is a button, click, and informing when dragging over.

The description form has a tab format including a character string input form for informing drag-over, unsatisfied condition click, and satisfied condition click. If there is no condition, the unsatisfied-condition click is not displayed.

Receptor tab
Status emitter receptor
Submit
Satisfied-condition click/Unsatisfied-condition click
Data receptor #External data usage
CSS data for paragraph decoration can be dropped.

Image and video upload form: A user can upload image and video data in the own terminal. A terminal for capturing is limited to a mobile phone or a smartphone, and image capturing time is also checked.

A default setting should be within a generation time of the relevant article. The time limit should be specified in the user image. It is possible to call a timing setting chart in the settings and make detailed designation. In that case, if the timing is not yet reached at that time, a display to that effect is shown in the user image.

For inputting to an attribute, arrangement is made in a receptor of a data-type scenario attribute.

#External data usage

Receptor tab
Status emitter receptor
Successful upload/Inappropriate data/Failed upload/Timing arrived
Attribute receptor (for data type)
Data receptor #External data usage
CSS data for paragraph decoration can be dropped.

Screen parts for special article: There are the following types.

The receptor tab is only for data receptor for paragraph decoration.

Participant type (see Fig. 34) selection input form: A list of possible participant types (see Fig. 34) (including grant types) and a submit button are required.

Save recommendation attribute registration form: A list of recommendation attributes including attribute values, a select check box, and a submit button.

Two-dimensional barcode display parts: Two-dimensional barcode display, code display, and a code input form.

Two-dimensional barcode title display parts: Two-dimensional barcode title.

Emergency chat form: Chat window.

3-3-5-5: Article main part

An article main part is sectioned into a user screen editing part and a box part.

The box part is a space where an emitter and modified data can be dropped for article transition control and screen configuration.

There are
Selection restraint box,
Check box,
Article distribution completion box,
Browsing end box, and
Modified data receptor.

The user screen editing part is the same as a blog edit screen, and has a plain description palette and an editor.

A specification for plug-in of an existing blog editor is desirable. (It is desired to use a system used by a manager customer or an associate to be incorporated into the system. Example: This system is used as an additional service for editing articles on SNS).

Screen parts can be dropped on this edit screen, and an emitter can be dropped on a screen part arrangement part. Further, uploading of data is limited to be via a library of this system (process shortcuts may be incorporated).

Box part

Selection restraint box, check box: Described in detail in 3-3-5-3: Terminal status/check/selection restraint.

Article distribution completion box: When the article screen is fully loaded, a status arranged here is issued. Since the content generation is issued at a time of instance generation, the timing is slightly different.

Browsing end box: Browsing is ended when the article is closed, including external factors (tab deletion, exception occurrence). There is no reaction when the browser is simply closed, but reaction can be made possible also for closing of the browser by clicking the icon.

Modified data receptor: Modified data of the data palette can be dropped here. The modification can be checked in a preview of the user image.

3-3-5-6: Palette area #Palette

By default, palettes are collected on a left edge of the screen, and an article main part occupies the other part. The palette itself is movable.

Palettes to be developed

1) Screen parts palette
2) Library data palette
3) Attribute palette
4) Status emitter palette

a) Explanation

1) Screen parts palette

Basic screen parts and screen parts imported from the library are stored.

2) Library data palette

Data registered in the library and having a format that can be used for screen parts is stored. For reflection, an import operation is required on the library side. The reflection is made by dropping in a data receptor of a screen part through DD. #External data usage

3) Attribute Palette

A normal attribute palette. Attributes that can be used in the scope are listed.

4) Status emitter palette

A normal status emitter palette.

3-3-5-7: Utility bar

Irregular occurrence selection: Clicking this causes highlight display, and sets classification to an article (canceled by clicking again). See 3-3-5-2: Article state transition #Content state control

Preview: The current user browsing screen is called.

#Article description-User image conversion

Making variable and Fill-up: See 3-3-5-9: Forming template. When Making variable is clicked, the mouse pointer changes to a making-variable mode. It is canceled by clicking again. When Fill-up is clicked, a class is generated in a palette of a template definition module, and a transition is made to an edit screen.

See 3-3-1-2-1-1: Template and fill-up.

#Class/template

Definition module change: Change is made by calling a content list (see Fig. 32) and selecting a module or a scenario icon. (Scenario structure display is also possible) #Definition/scope #Contents list (cut out)

Created as a special article: A transition is made to 3-3-2: Scenario (main screen). A New creation tab for special articles is displayed on top.

Standardized library and private library: Described in detail in 3-4-5: Library. An ID of a transition source is assigned. #Library transition

To arrangement module: When clicked, a list of definition modules and arrangement modules appear. Selecting causes a transition to an edit screen.

3-3-5-8: Main part description

1: Input is performed in the screen editing part in accordance with a specification of the blog
2: Screen parts are arranged at a part where input is possible, by DD from the palette.
3: Attributes and emitters are arranged on a receptor tab and a box, from the palette.
4: Detailed settings are made. It is also possible to drop data of the setting library onto various data receptors. #External data usage
5: A user image is checked on a preview and the like at any time

3-3-5-9: Forming template #Class/template

In a template in articles, screen pats and attributes can be designated as variable icons. For the screen parts, each designated icon is individually recognized as a different class. In arrangement of multiple same attributes, designating one point causes all arrangements of attributes to become variable icons, and fill-up on one place is reflected in the same attributes.

3-3-5-10: Special article

As a special article edit mode, an article description screen is opened by a transition from a special article management block (3-3-2: Scenario (main screen)). A status emitter palette does not appear. Only participant attributes are displayed in the attribute palette.

Since the participant attribute becomes active after participation, display and input with use of the participant attribute is possible. Function is disabled before participation, and a message to that effect is displayed.

1) Event explanation: A status link cannot be arranged. A check button can be arranged in one place on the sequence.
2) Invitation: Status links cannot be arranged.
3) Participant type (see Fig. 34) selection: It is necessary to satisfy requirements to perform the process of 2-3-2 3). Automatic generation. #Participant type (see Fig. 34) determination process
Since the selection part is arranged as a screen part, other parts can be edited. Status links cannot be arranged.
4) Save recommendation attribute registration screen: It is necessary to satisfy requirements to perform the process of 2-3-2 7). Automatic generation. Since the registration part is arranged as a screen part, other parts can be edited. Status links cannot be arranged. #Save attribute management
5) Follow-up: Status links cannot be arranged. Status links cannot be arranged.
6) Identification two-dimensional barcode: The two-dimensional barcode described in 2-11: Identification two-dimensional barcode is displayed. This is valid during the participation period. This two-dimensional barcode is bound with the scenario ID, and the user's context is possible for each scenario at a time of user check.
Since a code part is arranged as a screen part, other parts can be edited. Status links cannot be arranged. #Two-dimensional barcode page generation
7) Emergency chat: A chat window is provided as a screen part. Status links cannot be arranged. #Emergency processing

3-3-6: Participant attribute management (see Fig. 33) #Participant type (see Fig. 34) determination process

In this screen, type information of a participant and a participant attribute are edited and applied to the type.

Participant attribute: A participant attribute is an attribute for managing attribute information apart from transition management of a scenario of a user, and described in detail in 3-3-1-3-4: Participant attribute.

Participant type (see Fig. 34): Described in detail in 3-3-1-13: Participant type (see Fig. 34).

3-3-6-1: Main screen explanation

Binding

Manager ID
Scenario ID

Essential screen elements

1) Participant type (see Fig. 34) edit screen

1-1) Participant type (see Fig. 34) information
1-2) Attribute icon
1-3) Attribute name
1-4) Attribute type
1-5) Active check box
1-6) Import type
1-7) Deletion check box
1-8) Attribute memo
1-9) New attribute registration
1-10) Delete Attribute
1-11) Participant type (see Fig. 34) deletion

2) Participant type (see Fig. 34) tab

2-1) Participant type (see Fig. 34)
2-2) New type registration

a) Representative attribute: Each participant type (see Fig. 34) generates a true/false type participant attribute with the same name as the participant type (see Fig. 34) name. In addition, on the type screen, it is not possible to operate the active setting, and also to delete as an attribute. (Active with self attribute, impossible otherwise.
b) Explanation

1) Participant type (see Fig. 34) edit screen: List display for each attribute from 1-2 to 1-8

1-1) Participant type (see Fig. 34) information: Display of a name of a currently selected participant type (see Fig. 34) and a memo of the type.
1-2) Attribute icon: This is an icon of a registered participant attribute. Clicking causes a transition to an edit screen.
1-3) Attribute name: Attribute name
1-4) Attribute type: Attribute type
1-5) Active check box: When checked, a participant attribute other than the representative attribute becomes active for the type, and can have a value.
1-6) Import type: Whether value reference or synchronization is indicated with icon. Further, if selection is made as a save recommendation attribute, an icon thereof is also displayed. When clicked, the save recommendation attribute information of the reference destination is informed.
1-7) Deletion check box: An attribute to be deleted is checked. Deletion is made by Delete Attribute.
1-8) Attribute memo: An attribute memo is displayed.
1-9) New attribute registration: An attribute registration screen is called to start a new attribute registration process.
1-10) Delete Attribute: a checked attribute is deleted.
1-11) Participant type (See Fig. 34) deletion: A selected participant type (See Fig. 34) is deleted.

2) Participant type (see Fig. 34) tab

2-1) Participant type (see Fig. 34): A registered participant type (see Fig. 34) is displayed as a tab. When selected, a corresponding screen is displayed.
2-2) New type registration: When clicked, a participant type (see Fig. 34) registration screen is called.

3-3-6-2: Attribute registration/edit screen

Binding

Manager ID
Scenario ID
Participant attribute ID

Essential screen elements

1) Registration attribute name input form
2) Attribute type input form
3) Attribute import designation
4) Memo input form

a) Explanation

1) Registration attribute name input form: A character string input form for registering an attribute name. A check mechanism is necessary because it needs to be unique in the scenario.
2) Attribute type input form: True or false, a numeric value, a character string, or a character string list can be selected, and a list input form appears in a case of a list. An initial value input form is prepared, and an initial value can be set.
3) Attribute import designation: A reference type or a synchronization type is selected. Save attributes that can be imported from a type and a range that can be designated are listed and can be selected. An approval check is made for attributes that can be approved. #Importable attribute list
Importable attributes

1: Official attribute (official)
2: Official tag-related attribute (official)
3: Save recommendation attribute disclosed by other director
4: Save recommendation attribute that can be approved by other director (2-8-4: Save recommendation attributes)
5: Own save recommendation attribute (all allowable operations are synchronization (no fluctuation limitation))
Setting is made as a save attribute, or a box that can be checked appears in a case of a synchronization type.

4) Memo input form: An explanation of the attribute can be inputted.

3-3-6-3: Participant type (see Fig. 34) registration/edit screen

Binding

Manager ID
Scenario ID

Participant type (see Fig. 34) ID

Essential screen elements

1) Participant type (see Fig. 34) name input form
2) Attribute condition input form
3) Memo input form

a) Explanation

1) Participant type (see Fig. 34) name input form: A character string input form for registering a participant type (see Fig. 34) name. A check mechanism is necessary because it needs to be unique in the scenario.
2) Attribute condition input form: When clicked, an attribute condition chart is called, and the attribute condition can be edited. Importable save attributes are stored in the called attribute palette. #Scenario/calculation chart (see Fig. 51)
3) Memo input form: Explanation of the participant type (see Fig. 34) is inputted. It is used when determining a scenario screen and a user type.

3-3-7: Contents list #Contents list (cut out)

Binding

Manager ID
Scenario ID

3-3-7-1: Contents list (main)

Essential screen elements

1) Content list (see Fig. 32)

1) Content icon
2) Content name
3) Content type
4) Template
5) Definition module
6) Arrangement module
7) Member restriction
8) Status receptor
9) Terminal status
10) Usage attribute
11) Copy check
12) Private library registration check
13) Deletion check

2) Submit
3) Link to scenario attribute list
4) Link to sub-element list
5) Scenario structure display

a) Content list (see Fig. 32) explanation
There are items displayed with icons.
This is miniaturized to fit a height of list items. If there is more than one, display is overlapped and shaded. Clicking causes informing to appear, and the icons are arranged and displayed.

1) Content icon: This is an icon of a content. Clicking causes a transition to an edit screen.
2) Content name: Content name. Rename is possible.
3) Content type: Content type
Message
Article
Nested normal module
Nested exception management
External module
External exception management
Calculation module
Condition module
Timing setting module
Attribute condition module
Classification field zone
Classification time zone
Template
4) Template: Icon display is made if there is a template in the content. Clicking causes a transition to a template edit screen
5) Definition module: Content definition module. Clicking causes a transition to an edit screen of the definition module. Clicking an attached small change button causes a direct transition to a change screen of the definition module.
6) Arrangement module: Icon display is made if there is an arranged module. There may be more than one. Clicking causes a transition to an edit screen of the arrangement module. Clicking an attached small added button causes a transition to an addition screen.

7) Member restriction: Icon display of member restriction. In a case of a module, a transition is made to an edit screen.
8) Status receptor: Icon display. There may be more than one.
9) Terminal status: Icon display. There may be more than one.
10) Usage attribute: Icon display of an attribute. There may be more than one. Clicking causes a transition to a corresponding attribute display of a scenario attribute list or a participant management screen.
11) Copy check: Check as to whether to make a copy of the content.
12) Private library registration check: Check as to whether to perform private library registration.
13) Deletion check: Check as to whether to delete the content.

b) Submit is a button to collectively execute checked items 11, 12, and 13.
c) Link is a transition to a corresponding screen.
d) As for the copy, an item with the same details given with "copy" to the name is added to the list.

3-3-7-2: Scenario attribute list

Binding

Manager ID
Scenario ID

Essential screen elements

1) Scenario/overall processing attribute list

1) Attribute icon
2) Attribute category
3) Attribute name
4) Attribute type
5) Definition module
6) Arrangement module
7) Member element

7-1) Member category
7-2) Attribute type

8) Copy check
9) Deletion check

2) Submit
3) Link to content list (see Fig. 32)
4) Link to sub-element list
5) Scenario structure display

a) List of scenario attributes and overall processing attributes in the scenario

1) Attribute icon: Icon display
2) Attribute category: Scenario attribute or overall processing attribute
3) Attribute name: Display of an attribute name. Rename is possible.
4) Attribute type: See 3-3-1-3-2: Type.
5) Definition module: A definition module of an attribute. Clicking causes a transition to an edit screen of the definition module. Clicking an attached small change button causes a direct transition to a change screen of the definition module.
6) Arrangement module: Icon display is made if there is an arranged module. There may be more than one. Clicking causes a transition to an edit screen of the arrangement module. Clicking an attached small added button causes a transition to an addition screen.
7) Member element: Information of a member attribute of an overall processing attribute

7-1) There are three member categories: a user, a description instance, and a group.
7-2) Type is as described in a section of Member attribute value in 3-3-1-3-5: Overall processing attribute.

8) Copy check: Check as to whether to make a copy of the attribute.
9) Deletion check: Check as to whether to delete an attribute.

b) Submit: Implementation button for checked items
c) Links: 3) to 5) are links to related pages

3-3-7-3: Sub-element list

Binding

Manager ID
Scenario ID

Essential screen elements

1) Sub-element list

1) Sub-element icon
2) Sub-element category
3) Sub-element name
4) Arrangement module
5) Member restriction
6) Deletion check

2) Submit
3) Link to content list (see Fig. 32)
4) Link to sub-element list
5) Scenario structure display

a) The sub-element list contains the following types of elements arranged in the scenario.

1: Time zone
2: Field zone
3: Manager trigger
4: Normal trigger
5: Article screen parts (description call)
6: Article screen parts (object carrier)
7: Article screen parts (attribute value input form)
8: Article screen parts (cooperation)

b) Sub-element list elements

1) Sub-element icon: Icon display
2) Sub-element category: Item a) List item
3) Sub-element name: Sub element name is displayed, if any. Rename is possible.
4) Arrangement module: Icon display of an arranged module. Clicking causes a transition to an edit screen of the arrangement module.
5) Member restriction: Icon display of member restriction. In a case of a module, a transition is made to an edit screen.
6) Deletion check: Check as to whether to delete the attribute.

d) Submit: Implementation button for checked items
e) Links: 3) to 5) are links to related pages

3-3-7-4: Library registration #Library transition

See 3-4-5: Library. Checked contents are registered in the library.

3-3-7-5: Scenario structure display screen

There is used a mode for display control of a list by setting an affiliation relationship of modules as a tree tab in the content list (see Fig. 32) such as (https://nob-log.info/2012/01/12/javascript/) .

In a form hanging in a tree, each module displays directories of

definition module content,
arrangement content,
definition attribute,
arrangement attribute, and
arrangement submodule.

The screen can be organized by opening and closing like a normal tree tab.

3-3-8: Two-dimensional barcode generation #Two-dimensional barcode page generation

A scenario-unique two-dimensional barcode is generated on a page. When printing is performed, a scenario name and this code are printed.

There is also a code page generation button and a generation page list.

When the code page generation button is pressed, a page title input form appears. When input is performed on this, a two-dimensional barcode for printing and a code for inputting an outside trigger description module are generated and displayed. Further, this input code is registered in the library as data. #Library transition

When this page is printed, the title and the two-dimensional barcode are printed.

Pages generated so far exist in the generation page list.

3-3-9: Outline check #Outline check

Confirmation is made on check items while checking actual specifications.

3-4: Main part/scenario management

3-4-1: Overview

Management of scenarios that have become operational events, (registered) participant management, save recommendation attribute management, and library management are performed.

3-4-1-1: Feasible scenario #Scenario transition control

A feasible scenario is a scenario object uploaded to a feasible scenario page after the outline check, and is actually put into a feasible state by giving settings. Further, at this time, it is also possible to perform a preliminary simulation by using a test simulation. For the scenario that in a feasible state, advertisement and starting can be performed on the page. The ongoing scenario is called an event.

3-4-1-2: Registration recommendation attribute #Save attribute management

The manager user can suggest a user to use points and titles given to the participant in own events in the past, in own events or disclosed events of other manager users. Users who agree after the event can save the attribute in their attribute holder, and manager users who can refer can use the attribute for their scenarios.

3-4-2: Feasible scenario #Scenario transition control

Binding

Manager ID

Essential screen elements

List

1) Scenario name
2) Current state
3) Start option
4) Start control button
5) Advertisement status
6) Advertisement option
7) Advertisement control button
8) Special article distribution

a) See Fig. 13 for explanation.

3) and 6) The Start option and the Advertisement option are a manager trigger and a scenario by default, and designation of a special module (see 3-3-3-4: Utility Bar) is followed, if created.

3-4-3: Participant management #Referenceable user confirmation process

The participants mentioned here include
invited persons for events managed by the manager,
participants of events managed by the manager,
past event participants of events managed by the manager, and
persons who have a save recommendation attribute owned by the manager.

In a case of particularly specifying, referenceable user.

For these users, participation status in managed events can be monitored, and e-mails can be delivered at any time.

Binding

Manager ID

Essential screen elements

List

1) Persona nickname
2) Registration tag #Tag-attribute conversion mechanism
3) Details of attribute holder that can be referred #Save attribute management
4) Comments
5) Participating/invited events

5-1) Event name
5-2) Participation status
5-3) Participant type (see Fig. 34)

6) Invitation

See Fig. 14.

- Details of attribute holder that can be referred

A participant attribute browsing screen of a participant is called. Attributes that can be referenced by the manager user are displayed.

Save recommendation attributes of own account
Disclosure setting attribute
Tag information of participants is also displayed.

- About participation status

Invitation: A user is to be in an invitation state when registered in an invitation list of an event in some way. This corresponds to a case of being listed in Invited event pickup!, being listed in available local entries, and receiving and checking an invitation e-mail.
Attribute condition achievement: Participant who has necessary participant attributes during the advertisement period (becomes a participant from here)
Event participating: Participant participating in the event
Left: Participant who has left the event
Finished: Participant who has finished the event

By pressing an invitation button, a scenario screen is called and a special article can be distributed to this user.

3-4-4: Registration recommendation attribute management #Save attribute management #Importable attribute list

Binding

Manager ID

Essential screen elements

List

1) Attribute name
2) Attribute type
3) Editable
4) Disclosure setting
5) Number of registered users
6) Deletion box

Out of list

1) New creation
2) Delete

Explanation: See Fig. 14

3-4-4-1: Attribute approval management #Save attribute management #Importable attribute list

This is opened when use application has arrived for an own registration recommendation attribute.

Binding

Manager ID

Essential screen elements

List

1) Attribute name
2) Disclosure setting
3) Application manager name
4) Transmission date and time
5) Approval box
6) Denial box

Explanation: See Fig. 14

3-4-5: Library #Library Transition

A library is to store scenario materials that can be used by the manager user, and makes them available in all scenario creation (see Fig. 49) modes.

Reference context display: The library requires operations of storing checked contents in a reference source palette and setting as a definition module. Therefore, when a transition is made from a reference source screen, reference contents are bound to the operation, and a reference context is displayed on the screen.

The reference contexts are

manager ID,
scenario ID, and
reference source contents ID.

Private library and standardized library: There are two types of libraries.

A private library is a library that temporarily stores derivatives and data materials created by the manager in scenario creation (see Fig. 49). Data security during upload is performed.

Stored items of the private library are sent to a palette and classified.

A standardized library stores standardized contents, official and vendor external modules, and data.

Stored items of the standardized library are sent to a template palette as templates.

Temporal set at module download #Temporal search edit form: It is necessary to determine how to perform timing setting of a time zone and the like in the module.

A temporal search edit form is called, and editing is performed.

However, at this time, default processing is proposed. If an input request is reserved at this point, a blank trigger will be arranged instead (implementation as it is causes failure in the outer check).

1) Global time description: Input request
2) Reference module instance starting time designation: An input request is made when an upper-level module instance is designated than the module to be downloaded (overall processing: scenario start/individual processing: entry). Otherwise uncorrected.
3) Relative time description: uncorrected
4) Time-in progress: uncorrected
5) Trigger description icon: uncorrected

#Scenario behavior

Library data (see Fig. 52): #External data usage It is possible to upload, to the library, data in an officially designated format, and a format designated by an external module at importing an external module template. Data evaluation is conducted at a time of evaluation of a description module, contents, and an icon.

3-4-5-1: Private Library #Class/template #External data usage

Stored items
Contents
Template
Classified zone
Upload data
Screen part

Contents, templates, and classified zones are registered in the private library by designating and uploading a target from a contents list or an edit screen.

Template information for contents with a template is lost.

Download can be performed on the reference source by accessing the library with a reference context. The reference context is cooperated when accessed from the edit screen.

If the reference contents are a module, the module is set as a definition module, and if the reference contents are an article, a module to which the article belongs is set as a definition module. Data and screen parts only appear in the called edit screen.

3-4-5-2: Standardized Library #Class/template #External data usage

Stored items

Template

External module

Additional screen parts

Official data

Download can be performed on the reference source by accessing the library with a reference context. The reference context is cooperated when accessed from the edit screen.

If the reference contents are a module template, the module template is set as a definition module, and if the reference contents are an article template, a module to which the article template belongs is set as a definition module. Additional screen parts and data can be referenced in scenarios.

3-4-5-3: Library screen

Binding

Reference context

Essential screen elements

1) Library name
2) Reference context
3) Stored item icon
4) Stored item name
5) Stored item category
6) Provider information
7) Explanatory memo
8) Download check
9) Deletion check
10) Download
11) Delete
12) Data upload (out of list)

Explanation

1) Library name: Private or standard
2) Reference context: Reference context is displayed
3) Storage icon: List from here. Clicking displays details (edit screen: reference only)
4) Stored item name: Stored item name
5) Stored item category: See the previous item Stored item
7) Provider information: Vendor information in standardized library
8) Explanatory memo
9) Download check: Sored items to be downloaded to the reference source are checked
10) Deletion check: Stored items desired to be deleted in the private library are designated
11) Download: Download submission
12) Delete: Deletion submission

3-4-5-4: Data upload #External data usage

When a category (extension) is designated from a list, file information of equipment is opened and selected. Uploading to the library is possible. Security check is performed to confirm that there is a format that can be registered.

3-4-6: Utility

3-4-6-1: Announcement e-mail delivery #E-mail delivery

An ad hoc sending e-mail address is issued that enables delivery of announcement notification e-mails to users with specific tags, save attributes, and histories. By delivering from a used e-mailer to the address, e-mails having the same information will be delivered to designated users.

Charges occur depending on the scale. Normal format e-mails are delivered.

3-5: Main part/event monitor (see Fig. 11)

3-5-1: Overview

An event monitor (see Fig. 11) is a part that monitors a state of ongoing events, and provides browsing of logs and activities in real time, exception management, and manager call means to contact the manager directly.

3-5-1-1: Manager trigger #Transition control

Management of a manager trigger is performed either centrally on a manager trigger screen of the event monitor (see Fig. 11), or by directly clicking a manager icon of the chart monitor (see Fig. 15). Whether multiple times are possible depends on scenario settings.

3-5-1-2: Manager call #Emergency processing #Emergency processing #Emergency processing

There is also manager call means that allows direct communication with the manager in real time.

On the user side, with an action on the chart,

The manager call icon is enabled when a manager call icon is evaluated, and a chat screen is called.
The manager side can perform from a participant monitor at any time.
Emergency call can only be made by the manager side. WEBRTC is considered
It is made sure that both parties do not know phone numbers directly with the system interposed in between on the Internet.

3-5-2: Chart monitor (see Fig. 15)

Binding

Manager ID
(Scenario ID)
(Module ID)

A screen configuration of the chart monitor (see Fig. 15) includes a chart monitor main, a sub-monitor, and a utility bar. It is also possible to select the entire scenario or the entire ongoing, in which case there is no chart and only the sub-monitor is displayed.

3-5-2-1: Chart monitor main #Chart monitor

Essential screen elements

1) Module chart
2) Monitor object

- 2-1) Property part
- 2-2) Activity part #Event activity
- 2-3) Log receptor #Log management

3) Manager trigger

a) Explanation

1) Module chart: This is the same as a chart screen of a corresponding module, but only the following limited operations are possible.
2) Monitor object
Category
Arrangement content
Time zone

Field zone

Accompanying trigger
Trigger icon
Processing icon
Property part and Activity part appear in these icons. Moreover, a log marker described later can be arranged as a log receptor at a place where the conventional scenario attribute can be arranged.
Clicking the Property part causes details of the object to be displayed. (User's screen for documents, a module chart monitor for modules (see Fig. 15), properties for external modules, and definition information for zones) .
Clicking the Activity part causes activity information to be displayed

1: Number of transitioners
2: Transitioner list
3: Number of persons being processed
4: List of persons being processed (issue status)
5: Ender list
6: Ender list (issue status)

In a case of an exception module, organizer call information can be browsed.
When a log marker is dropped on a log receptor, real-time monitor information of the location of dropping on a log monitor is displayed one after another.

3-5-2-2: Sub-monitor (attribute monitor, participant monitor, log monitor)

Essential screen elements

1) Attribute monitor
1-1) Attribute activity #Event activity
2) Participant monitor

- 2-1) Monitor
- 2-2) Participant
- 2-3) Log #Log management
- 2-4) Emergency response #Emergency processing
- 2-5) Manager call

3) Log monitor #Log management

a) The Attribute monitor is an attribute icon list having the same interface as that of an attribute palette, and Attribute activity can be checked by clicking.

Attribute activity is a list containing attribute values of a person having the attribute.

The Participant monitor displays a list of participants having individual instances. Clicking each participant name leads to selection of the corresponding participant, clicking a participant button at a lower part of the monitor causes a participant management screen to be displayed, and clicking a log icon causes a log to be displayed. Pressing Emergency response button causes a transition to an emergency response mode, and pressing Manager call button allows a manager call screen to be called.

1: Transition object name and time
2: Issue status
3: Termination object name and time
4: Organizer call

In a log monitor, when an event occurs on an icon arranged with a log marker, a description of the event details occurs on the log monitor.

1: Transition
2: Status/trigger occurrence
3: Processing end
4: Organizer call

3-5-2-3: Utility bar

Essential screen elements

1) Log marker
2) Emergency response marker

Log marker is an icon that is automatically-numbered when clicked. When arranged where arrangement is possible, it becomes possible to acquire information that can be browsed on the log monitor starting from the numbering.

Clicking the Log marker changes a mode, and drops the Log marker at the clicked position. #Log management

Emergency response marker appears when the chart monitor (see Fig. 15) bound with an individual opens. A change can be made with the manager call at the dropped location. #Emergency processing

The following can be performed.

1: Status issue (dropped at a corresponding position on the chart monitor)
2: Forced transition (dropping on the chart monitor)
3: Attribute value modification (dropping on the attribute monitor to cause a transition to the attribute management screen).

3-5-3: Exception module monitor (see Fig. 16)

Exception descriptions that operate in a certain scenario and all scenarios is monitored.

Biding

Manager ID
(Scenario ID)

Essential screen elements

1) Exception management name
2) Scenario name (blank in scenario binding)
3) Property icon
4) Activity icon #Event activity
5) Manager call

a) Explanation

A list of exception management within a range (each event or entire ongoing).

For a list order of exception modules, a priority order is determined by preferentially weighting the time most elapsed from the time when the manager call has occurred. Otherwise, the number of participants being processed is adopted.

Clicking a property causes display of an external module property screen (see Fig. 29) or the chart monitor (see Fig. 15).

The activity is the same as the activity of the object in the chart monitor (see Fig. 15).

If the manager call occurs in a service that may be included in the exception module, an exclusive chat can be made, and a call can be made from the manager side if necessary. The number of current occurrences is written, and a list of user names appears when clicked. When selected, a manager call is invoked.

3-5-4: Manager call

Binding

Manager ID
Scenario ID
Exception management ID
User ID

Essential screen elements

1) User name
2) Exception management name
3) Scenario name
4) Participant log display #Log management
5) Emergency response #Emergency processing
6) Emergency call #Emergency processing
7) Emergency chat #Emergency processing

a) Explanation

Context information is displayed for 1 to 3
The participant log is similar to that of the Participant monitor.
Pressing the Emergency response opens a chart monitor (see Fig. 15) bound to a participant, and enables the Emergency response marker.
In the Emergency call, a call is made in a form where phone numbers of both parties are not known via the system.
In the Emergency chat, chat can be made with the chat that appears on the sub-screen of the user side.

3-5-5: Manager trigger management (see Fig. 16) #Transition control

Binding

Manager ID
Scenario ID

Essential screen elements

1) Manager trigger name
2) Module name
3) Scenario name
4) Chart monitor
5) Trigger issue

Explanation: see Fig. 3-8.

3-6: New registration

A manager user membership category and the like are considered from an amount of data usage.

3-7: External cooperation

The following cases are assumed by the system as external cooperation.

web service

Embedding (embedding of other SNS tags)

Link

As an API usage format (a format for using external services such as guide services as a part of a scenario)
External module
Screen parts
As a target of API usage
Terminal app (management system)
External customer management, POS or venue location management system
External service
Route guide service
Context provision (weather forecast service, traffic information, and the like)
Entertainment (games, videos, interactive entertainment systems, and the like)

Data usage

Field zone definition data

Time of day/time data
Outside trigger (URL)/Scenario status/Entry trigger URL
Data for decoration (CSS)
Embedded data
AV data
Link destination data
Data for other external modules/Screen-parts correspondence data

X-1: Modification of library specification at beta

Private and standardized libraries are integrated. Expansion of market functions in future is considered.
Registration data of the library can be selected to be disclosed or private.
In a case of disclosed, three modes: edit free, fixed, and internally invisible are selected.
A comment memo and a reference URL can be registered.
When downloaded to a palette of others, download points are given to the data.
Points will be given to the data when the embedded scenario is implemented.
If user evaluation is made after the implementation of the embedded scenario, this is also given.
An aggregated input form for template fill-up input is created.

X-2: User screen specification change

A user screen of a terminal browser is designed in accordance with the use of Figs. 57 to 59P.

A screen configuration is adopted in which operation can be made with only a thumb in screen operations on a smartphone.

There are a mode transition and a display icon of a service screen having multiple display screens, navigations, and lists as display details.

1) All display screens have tabs at top and bottom. (usually one is hidden) See A mode.
2) When displaying a list, multiple tabs are pulled out from up and down to be aligned. See B mode
3) In B mode, the screen currently selected is in a state where a part of the page can be seen, and its width can be adjusted by dragging the tab.
4) An operation icon can be arranged at a position where the thumb can rest on the screen. This can be stored at an edge of the screen by lateral dragging, flicking, or swiping in all states.
5) The stored operation icon is dragged, flicked, and swiped from the edge of the screen, or placed on a full-screen operation to be assigned with an unique operation (shake and the like that are hardly used) and developed.
6) In A and B modes, it is possible to develop so as to place the navigation bar over the screen. This is to be at an upper and lower ends of the screen (navigation bar type 1), or a diagonal position or a fan shape where the thumb resting on the operation icon can move as it is (navigation type 2). By dragging up and down, type 1 and type 2 can be shifted to each other. In addition, type 2 allows the inclination to be changed by laterally dragging.
7) The operation icon has an operable portion at a center and at upper and lower ends. Through tap-related operations distinguished from each other, the center part allows transition between A mode (list selection screen) and B mode, or development and storage of the navigation bar (additional operation is possible if both type 1 and type 2 allow in 6).
8) The upper and lower ends of the operation icon cause movement and jump in a vertical direction of the screen by tap-related operations distinguished from each other. This similarly applies to the display screen and the list. Positions assigned to the operation may be slightly shifted in order to make the operation clear.
Example: A distal end is assigned to a jump operation, and a middle part is assigned to movement.
9) Up and down operations may be realized by performing a drag-related operation on the icon.
10) In a case of a navigation bar of type 2, a direction of the inclination may be changed depending on the position of the operation icon. The inclination is inverted at the center.
11) The above operations may be assigned to a place other than the operation icon (embodiment).
12) The above operations are smartphone operations (tap, double tap, long tap, drag, flick, swipe, and the like)
13) The navigation bar can be selected by scrolling in a developing and widening direction. (The number of buttons displayed at once is reduced)

X-3: Preparation of multilingual specification

Preparation is made for multilingual specifications.

#Scenario behavior

Y-1: Organization and integration of trigger functions

Regarding 1-4-2: Trigger/ 3-3-1-5: Descriptor (processing icon, transition arrow, and trigger icon)/ 3-3-1-6: Timing setting/ 3-3-4-3-1: Outside trigger description module/ and 3-3-4-3-5: Scenario status receptor module, the following description is prioritized

A trigger icon, an outside trigger description module, and a trigger icon (on a timing setting chart) are organized and integrated into a control trigger and an outside trigger. Further, these two types of triggers are registered in a trigger palette and can also be used in a normal module (scenario) edit screen.

Control triggers are treated as processing icons same as TZs and the like, and outside triggers are treated as scenario level contents classes. An outside trigger incorporated into an imported module will be registered in a palette of any level. A manager trigger and a scenario status receptor are renamed at a time of import (an incorporated module name is added).

When a blank control trigger or outside trigger is arranged on a chart, a property edit screen is opened, and registration is made in the palette by inputting designated information.

Control trigger: A start trigger and a normal trigger of the trigger icon, and a trigger icon (on the timing setting chart) are here.

Property edit screen

1) Category selection

a) Start
b) Normal
c) Timing (trigger icon (in timing setting chart))

2) Detailed setting
None for Start (note that a start trigger and a transition from the start trigger can be omitted)

#Outline check

Numbering and memos for Normal

For the Timing, time is designated in accordance with the description in 3-3-1-6: Timing setting.

Outside trigger: This is changed from an external module to a trigger icon. 3-3-4-3-1: Outside trigger description module, manager trigger, 3-3-4-3-5: Scenario status receptor module are changed to this.

Property edit screen

1) Category selection

a) Global trigger (outside trigger description module)
b) Manager trigger
c) Scenario status receptor (module)

2) Detailed settings

See 3-3-4-3-1: Outside trigger description module and 3-3-4-3-5: Scenario status receptor module. For the Manager trigger, a unique name is registered in the scenario. Designation is made as to whether the multiple number of times or only one time is possible.

Z-1: Organization of participant screens (collectively at end of document)

2-6-2: Available local entry >> Deleted

2-6: Transitions to a trigger checker main (QR page) and a trigger map are described in the main navigation bar. Trigger checker navigation is abolished.
2-5: List >> A contents list is integrated, and an event list is also integrated; aggregated to 3P.

Displaying, Standby, Log P, Participating event, Invited event, and Event log can be identified by classifying tag colors and styles.

A search band is added to navigation
Search band display items

1: Check box

Persona-management-related common navigation: Displaying, Standby, Participating, Invited, Event log, Local entry
Started event common navigation: Displaying, Standby, Participating, Log P
Post-participation event common navigation: Displaying (special P), Log P, Participating event, Invited event, Event log, Local entry
Other event common navigation: Participating event, Invited event, Event log, Local entry

Only checked targets are displayed
A display target of each P follows the transition in Fig. 2-1. The Local entry displays invited events popped out via Local entry.
2: Keyword search window: For tag name search

Content list (see Fig. 32)

<2-5-1: Displayed content list (see Fig. 32)
<2-5-2: Standby content list (see Fig. 32)

Event list

<2-5-3: Participating event list
<2-5-4: Invited event list
<2-5-5: Event log list

Participation event contents list

<2-5-6: Participation event displayed contents
<2-5-7: Participation event standby contents
<2-5-8: Participation event contents log

Z-2: Addition of map-type chart edit screen (collectively at end of document)

For editing scenarios that have a relatively simple temporal structure and are highly dependent on geographical factors, or for checking geographical factors during creation of the normal screen, a map-type chart mode is added to the scenario and the nest type module edit screen. Both are shifted to each other by pressing the icon on the utility bar. See 3-3-1-4-4 Fig. 48

Both have the same icon function except for some functions.

Screen configuration
Utility bar
Palette area
Map-type chart field
Sub chart window
Plain sub chart
Sub chart with FZ

Explanation: A utility bar and a palette area are same as those of the normal chart.

The map-type chart field is the map itself, and the map (chart field) scrolls with respect to the chart area. This similarly applies to the sub chart, and the chart scrolls (changes the scale) with respect to the chart window.

Icons can be individually arranged, and positions are fixed with respect to the chart, but only a transition arrow that crosses the chart changes a shape starting from a contact point with the icon or a window edge (an icon outside the window), in accordance with individual changes in relative positions of the window, the chart, and an FZ focus icon. (If both icons in the same chart are outside the window, the arrow disappears)

Where to specify as the start point in the window edge is determined based on which of a center of four sides or corners is closer to the icon outside the window.

A scroll bar is arranged on the window frame.

The map chart is a chart on which a map or a field object is placed. Only an area and a focus icon of a field zone have geographical meaning in information on the map (a distance and movement information between focus icons are also displayed). In other arranged icons, only a transitional relationship has meaning (it is possible to move a position for easy viewing and grasping the relationship). In this mode, the field zone can only be arranged on the map chart.

Clicking highlight on the utility bar can change display to a normal map and a blank map.

When a distance arrow is provided between the focus icons, a guide module is called on a property setting screen, and route information is calculated. Selecting a route causes display of a distance and a required time at the distance arrow.

The plain sub chart has a see-through mode in which an icon is displayed on the map in accordance with the window by an amount of a relative position change (only the scroll bar is displayed), in addition to normal mode, which follows the above limitations, of being arranged in a chart window whose position is fixed relative to the screen. Which is to be applied can be selected at the time of arrangement or in settings.

The field object is an object having an image with position information, FZ information set thereon, and contents information (connection information). The map object has a class added with map coordinate information, and the block field object has block information for sectioning an image and connection information for between blocks. The block and the connection information can have property information that enables description of relationships. Further, it is also possible to have a method to output relationship information between designated elements.

It is also possible to apply limitations as a sub chart.

A sub chart with FZ is a chart arranged in a sub chart window whose position is fixed with respect to the map chart. It is associated with the FZ and is developed and stored in the vicinity by clicking the FZ focus icon. A transition arrow of a stored icon is provided with the focus icon as a start point. All icons arranged on the sub chart with FZ belong to that FZ.

This chart is created as a child class of the map chart. If it is inclusive, it is possible to further add an FZ within the FZ. The arrangement of contents is not limited to the FZ area.

Field zone: An FZ is arranged on the map chart similarly to 3-3-1-4-3-2: Range setting. The field zone icon disappears temporarily when arranged on the map, and a point marker appears.

When the setting is finished, a range display, a focus icon, and an accompanying trigger appear. The focus icon is immovable in a case of a point, and can freely move within a range in a case of the range. The sub chart with FZ appears in the periphery by clicking, and disappears by clicking again. By providing a distance arrow on another focus icon, the guide module can be called.

Time Zone: In this mode, a time zone has an associator icon and an affiliation time zone icon, and an instance can be arranged on each of the sub charts (if there is a nested relationship, information of the TZ in the bottom layer is displayed).

Arrangement can be made normally on any sub chart from the palette.

An instance is created by dragging from an associator, or dragging from the palette if classified, and dropping on a chart where no instance is arranged. Further, when dropped on an icon, an affiliation time zone icon is caused at the place (which functions as an instance, and disappears when entering the TZ of the same class).

By D-click on the associator, all other than the TZ and the icons belonging to the child TZ seem to have disappeared.

Individual instances can send and receive transitions, but their functions do not change depending on the position (a function for organizing the appearance).

This instance is only for the appearance, unlike the instance that is arranged in a separate module by classification.

Free focus icon: This icon is stored in the processing palette only in this mode, and can be arranged on the map chart only for route calculation. A function is similar to that of the focus icon in the field zone.

Distance arrow: This icon is stored in the processing palette only in this mode, and can be arranged on the map chart only for route calculation. Only between focus icons can be connected.

Icon movement between modes: Icons that are already arranged on each chart when switching is made between modes are shifted in accordance with the following rules. After that, the arrangement other than the FZ and the TZ can be freely changed (across sub charts), and information is retained even after being shifted and returned again.

Normal chart to map type: An icon with an affiliation FZ is shifted to a corresponding sub chart with FZ while maintaining a mutual positional relationship (if there is a TZ, an affiliation time zone icon is added). Other icons will be shifted to a plain sub chart while maintaining a mutual positional relationship, and existing TZs are also shifted here.

From the map type to the normal chart, arrangement is made in a blank part inside the frame of the affiliation TZ (in a plain sub chart if there is no blank part). If the frame is too small for arrangement, the entire frame moves downward and the frame expands.

As described above, in the map-type user interface, not the time zone but the field zone is structured and managed with the inclusion relationship.

As described above, the time zone and the field zone can be structured by using both or one of the zones.

Z-3: Reference sub chart window

When a simple process is modularized for some reason, it is necessary to open an edit screen and perform processing involving screen transition in order to see processing in the module. In order to prevent deterioration of browsability in this case, a nest type module is equipped with a window function similar to the function of the sub chart window in the map type. The function of the window is the same as that of the sub chart window, but it is necessary to switch to the edit screen for editing (because palette details are different).

Z-4: Expected time calculation (see Fig. 60)

<< Expected time calculation >>

A mechanism for checking a transitional relationship of a chart at any time during scenario development is incorporated, for checking estimated time when an event ends or temporal consistency.

In a case of incorporating this mechanism, the chart has the following limitations.

- Contents (modules and articles) and TZs and FZs have expected time elements according to internal logic.
  An external transition expected time element is also calculated with transition information in the target zone (a receptor and a trigger are also given)
- A closed path is limited to a loop counter/a loop counter cannot cross a TZ
- In hidden modules and all articles, an internal logic is not disassembled into transition sequences. The hidden module refers to a module or an external module whose internal processing is not to be disclosed by setting.

<< Restriction calculation >>

Restriction calculation is a calculation for extracting a set of participant attributes of reference-only or having range information for a target zone, and a transition sequence that enables transitions under exception exclusion/irregular exclusion conditions.

<< Target/comparison zone transition replacement work >>

>> Zoning work is performed for target zone. Further, charts are integrated by performing comparison zoning work for internal time zones. This is performed until reaching a hidden module or article.

Objects that can be target zone: TZ, nested module (scenario)

Objects that can be comparison zone: content, in addition to the above

Comparison zone: An object that has an internal logic such as internal transition, and expected time information based on external transition information in the target zone. Consistency of both is not promised.

<< Transition arrow developing work >>

>> A loop counter is developed. At the same time, it is checked whether there is any spontaneous loop that is prohibited.

<< Restriction extraction work >>

>> A status of a content associated with a member restriction using a complementary set of restriction conditions regarding participant attributes, a conditional filter, and a restriction condition (if set in the module property) is extracted, and transitions that require this are excluded from the transition sequence.

Further, focusing on the status, a transition sequence caused from exception and irregular statuses, and exception management and a subsequent transition sequence are excluded. In a case of merging into another transition, the transition to that node is excluded.

<< Actual-action expected time addition >>

>> For reduction and higher accuracy of a time range by expected time calculation, restrictions of participants' actual actions are incorporated into a transition sequence. An action time calculation arrow is provided between nodes for which actual actions can be predicted, and actual-action expected time addition is performed.

<< Transition sequence expected time calculation >>

>> An extracted transition sequence is evaluated in a transition sequence of an element, and converted into a time calculation transition sequence.

1) A control trigger is converted based on range information of the target zone and the comparison zone.

2) For an element having an expected time addition element, the addition element is assigned to an in-element transition, and category evaluation is performed on a trigger. See the expected time addition element of $ Transition sequence expected time calculation

3) Other elements are evaluated.

<< Transition sequence expected time calculation >>

>> Expected time is calculated. If there is a problem in an impossibility test, evaluation determination is made or a chart is re-edited to solve the impossibility test.

<< Focus comparison zone inside/outside transition check >>

>> After the expected time calculation of basic elements is performed, verification is made to confirm consistency of an internal transition and an external transition of the TZ and the intermediate module.

The impossibility test is conducted while focusing on each comparison zone to achieve solution.

Transition sequence: This is obtained by developing a transitional relationship of a certain target zone by using a transition arrow and systematic trigger information, into a directed acyclic graph (DAG) having only one vertex of 0th order input.

Note that, if all the route calculations are difficult due to a calculation amount, temporal optimization can be performed by a route extraction simulation or the like of performing divisions of the target zone through hidden module automatic setting and depth-oriented search trials as many times as possible. In this case, it is also possible to improve efficiency of the simulation by linking a restriction condition with a search target (for example, in restrictions including exceptions, a trial that targets the exception module is prioritized, or an attribute determination element is targeted).

Z-5: Target/comparison zone transition replacement work (see Fig. 61)

By performing this operation for all comparison zones in the range, all transition sequences are converted into transition sequences from module start and TZ time-in

# This disassembly does not extend to a hidden module and an inside of an article, but ends with replacement of an accompanying trigger and a timing setting.

1: A transition arrow is led from a start trigger to a normal trigger of a module in the target/comparison zone.

2: A and B operations are performed for the TZ in the target/comparison zone. B operation is performed on the module. Further, for other transitions from outside, an out-of-zone trigger is inserted (and a standby-start transition arrow is led from the start trigger).

3: For a node having no generation transition arrow, a transition arrow is led from a start trigger of an affiliation TZ and a module immediately above (including a trigger of the FZ).

4: Further, a module included in the target zone is connected to the start, normal, and child module triggers by a module input transition arrow, and connected to child module generation in the target zone by the transition arrow, which similarly applies to status emitters and statuses, and forced-termination receptors and irregular termination/exception termination.

5: A termination trigger is provided. All terminals, timeout transitions, and forced termination transitions have a transition arrow to a termination trigger of an inclusion comparison zone.

A node that is not connected to time-in at the end and is generated by a transition from outside

An affiliation relationship of the FZ is performed, by adding a transition conditional counter to transitions to TI and TO.

Regarding time-out, a transition from inside remains as it is (cutoff is inhibited for internal transition (because the path is to be closed at replacement of the next section))

Transitions outside the target zone disappear (transition timing information is lost if there is no standard range information)

Since the expected time range can be reduced, replacement is made with a transition conditional counter. However, if a transition from outside the target zone is determined, replacement is made with the out-of-zone trigger.

Z-6: Transition arrow developing work (see Fig. 62)

Expected time calculation is performed by setting an inside of a loop as a target zone, and expected time calculation is performed by setting an affiliation TZ as a target: Smaller one of an affiliation TZ longest expected time/In-loop shortest time and a determination value is to be the maximum number of loops (a margin may be added). Note that the calculation target zone is increased by one level in a case where the longest expected time of the affiliation TZ or the module is divergent (∞) without being limited by the determination value. If the restriction of the affiliation TZ or the module does not occur until the end, a warning is given, and the process is stopped or input of a constant or an upper limit time of the scenario is requested.

Disassembly of a multi-transition from the status of the hidden module and article is treated according to a setting, if any, or as a short transition if there is no setting.

As a setting of a status of the elements described above

Restriction

Expected time addition element (for each in-element transition)

The number (for multi-transition)

#In a case of a multi-transition, an expected time element is attached to each.

For example, if the maximum number of loops in A is 3, development is made as follows (a single transition starts from a branch on top/multi-transition on bottom)

A multi-transition outflows other than the counter is disassembled for each route.

Expected time composition is performed with the transition sequence unchanged See $ Expected time composition

Disassembly is performed at a time of expected time composition.

Z-7: Time series of transition control mode (see Fig. 63)

None of them can confirm true or false from a transition sequence

(A time series cannot be confirmed. Consideration is required for processing when the time series can be confirmed with a counter and the like)

Note that, for functions of the scenario attribute of the transition control mode, similar functions can be realized even with a transition arrow by creating a counter having a negative or inversion sensing function, or increasing the number of transition arrows

(However, unique replacement is not possible (which means that description by the manager is possible). Since the path is not shared, it is not always possible to determine true or false. Then, the number itself of transitions has already been increased)

When a node is deleted and the element becomes a terminal, the terminal is supplemented.

Z-8: Category of element in expected time calculation (see Fig. 64)

Objects that can be target zone: TZ, nested module (scenario)

Objects that can be focal zone: content, FZ, in addition to the above

It is determined by an arrangement relationship between with a target zone.

Start trigger

Internal arrangement trigger

/External arrangement (normal trigger, child module trigger, passing transition arrow)

This is determined by an inclusion relationship between a reference module and a target zone

Z-9: Transition sequence expected time calculation (see Fig. 65)

<< Details of time calculation transition sequence >>

A certain time calculation transition sequence forms a directed acyclic graph (DAG) made up of elements connected by directed transition arrows originating from a start trigger. Among connecting points with the transition arrow of the element, the one for receiving is called a receptor, and the one for sending called a trigger, which form a DAG made up of transition arrows and in-element directed transitions that connect all the receptors and triggers of a certain element. The receptors and triggers at this time are called nodes.

Note that a timeless element simply forms one node.

<< Expected time >>

A set of expected time when a certain transition sequence (up to a node) ends at the shortest and expected time when the transition sequence ends at the longest.

In addition, a range of the most likely end time.

<< Expected time calculation >>

Expected time calculation

1) All transitions are first traced from a start trigger, and a node transition sequence expected time is placed for each node.
2) An expected time addition element is individually added to the expected time when passing through the in-element directed transition.
3) The expected time is composed in accordance with $ Expected time composition at a time of merging and branching.
4) At a conditional counter, a simple impossibility test is performed.
5) When the result is not complete establishment, optimization is performed by using a verification scheme of $ Focus comparison zone inside/outside transition check.

(Progress is stopped)

6) Expected time calculation temporarily ends when a zone termination trigger is reached.

<< Expected time addition element >>

A certain in-element directed transition can have an addition element related to expected time. It takes a form of an added value to an element of each expected time, where
Shortest time <= Longest time
Standard shortest <= Standard longest
must be satisfied.

(+MN +MX) (+MNs +MXs)/

+MN +MX

+MNs +MXs

For details, see $ Element category expected time addition element.

<< Transition sequence expected time calculation >>

Expected time of a final terminal (a node connected to a termination receptor of a target zone) and expected time of a termination receptor, in following a transition sequence of the target zone

<< Node transition sequence expected time calculation >>

Expected time from a start trigger of the transition sequence to any receptor or trigger (node).
Shortest time Longest time
Standard shortest Standard longest
(MN MX) (MNs MXs)/
MN MX
MNs MXs

Z-10: Expected time composition (see Fig. 66)

When there are multiple transition arrows flowing into a node, a set of shortest and longest expected times (MN MX) is composed. See Simple counter composition.

Merging node

A node having an outflow of a single transition other than a counter is regarded as C = 1.
(The smallest of the inflow shortest and longest values is adopted)
The value is the same even if there are multiple outflows

<< (Simple) Impossibility test of comparison zone >>

An impossibility test with range information of an expected time set (MNS MXS) of a start trigger and a termination trigger (MNF MXF), in a comparison zone.
Impossible if MXF < MNS.
Complete establishment if MXS <= MNF.
An expected time range of a termination trigger is composed to (MNF/MNS | MNF < MNS MXF/MNS | MXF < MNS).

<< Simple counter composition >>

The shortest time of a counter that receives C times of transition where N >= C from N pieces of input arrow is set as the maximum value obtained by sorting the shortest value of transition arrows in ascending order and adopting C pieces.
A normal timeless node has a C value of 1.
The longest time of a counter that receives C times of transition where N >= C from N pieces of input arrow is set as the maximum value obtained by sorting the longest value of transition arrows in ascending order and adopting C pieces.
A normal timeless node has a C value of 1.
In a case of a multi-transition, the maximum value is obtained from adopted N × C pieces by disassembling into a quotient obtained by dividing the number of inputs by the number of counters, and individually sorting values of the second and subsequent times.
When C is a range, the minimum of the maximum value of individual C values in the range is adopted for the shortest time. The maximum of similar C value maximum value is adopted for the longest time.

<< Expected time composition and simple impossibility test for conditional counter and trigger-dependent trigger >>

If determined transition expected time does not exist, a value of a conditional transition is used.
Impossible if MN < MX < MNc. For (Y/N) branching, only N is left as a transition path.
Complete establishment if MXc <= MN < MX. For (Y/N) branching, only Y is left as a transition path.
Expected time for Y transition (positive value transition) is (MN/MNc | MN < MNc MX/MNc | MX < MNc)
Expected time for N transition is (MN/MXc | MXc <= MN MX/MXc | MXc <= MX)
In a case of a dependent trigger, a trigger that receives determined with a generation trigger as a condition is adopted.

<< Element category expected time addition element >>

Sequence calculation is performed by performing expected time composition.

See $ Expected time composition

The internal transition is developed to be a part of the chart.

After primary calculation is ended

$ Focus comparison zone inside/outside transition check

is performed, to verify consistency of the internal transition and the external transition (in a case where all the inner transitions in the comparison zone are aggregated to the termination trigger (or are caused to be aggregated), the check ends at the first calculation).

<< Undefined trigger >>

A trigger for which when to occur cannot be predicted from range zone information. If there is no designation, (+0 +∞) (+0 +∞) is set.

<< Target zone start trigger >>

A start trigger of the target zone. (0 0) (0 0) is set. A start GTM can be inputted for global time relativization.

<< Simple addition trigger >>

A trigger that simply causes time elapse. (+X +X) (+X +X) | X is a designated value

<< Global time >>

A specific fixed time is set as a trigger. Inputting the start GTM to the start trigger leads to a simple addition trigger, otherwise to an undefined trigger.

<< Hidden object >>

Expected time addition information for each termination state is given. This is information according to internal logic from generation to a termination trigger occurrence.

In a case where the object is designed to take into account a transition to a normal receptor, it is necessary to designate whether a status property is a merging node, a simple counter, or a transition conditional counter.

It is also possible to retain for each status, but it is restricted by the overall information. If not designated, (+Z +∞) (X Y) | X, Y, and Z are system-defined values for the icon.

Z-11: Focus comparison zone inside/outside transition check (see Fig. 67)

Consistency check is performed between internal processing of a module and a TZ, which are a framework for temporal management of events, and temporal restrictions from outside such as life-time settings.

1) The transition sequence replaced for the comparison zone in $ Target/comparison zone transition replacement work is extracted and set as an outer transition.
2) An internal transition to a zone forced-termination event such as a timeout or a forced-termination receptor and the like is set as a transition to merge/branch, and a single transition is led from there to the forced termination event.
3) A virtual terminal is arranged at a transition outside the comparison zone (including a status emitter of a module).
4) Expected time of transitions to the receptor and the trigger of 2 and 3 is calculated.
In each of MNI MXI and MNX MXX
MNSI MXSI and MNSX MXSX
instead of the start trigger
an impossibility test is conducted using each internal transition value.

See $ (Simple) Impossibility test of comparison zone

1) If all sets are complete establishment, it will be automatically verified.
2) If even one is impossible, the chart needs to be modified.
3) Other than that, it is necessary to modify the chart or approve verification.
4) When all transitions to the outside of the zone are verified, the comparison zone is regarded to be verified.

- If there is no forced-termination event such as a timeout due to an external transition, it will be automatically verified.
- For recalculation, for transitions toward outside, this is performed in all possible comparison zones, to verify consistency of the overall time transition.

When there are multiple comparison zones that can be checked, a zone (in which an external transition does not depend on other unverified comparison zones) on upstream of the transition sequence is prioritized.

For comparison zone having no unverified comparison zone inside, the inside/outside transition check can be performed as a focus comparison zone.

Z-12: Actual-action expected time addition (see Fig. 68)

When a transition arrow comes out from a certain FZ trigger to the inside of the target zone, a movement time calculation arrow can be led to a trigger where another FZ transition arrow comes out.

Replacement is made on expected time due to a transition of the target trigger, by adding the expected time time addition information based on guide calculation, to expected time of the outgoing trigger.

The original transition is regarded as a start trigger, and the impossibility test is performed on the action time calculation arrow.

See $ (Simple) Impossibility test of comparison zone

By using a verification scheme of $ Focus comparison zone inside/outside transition check if a calculated arrow can be made verified, modified expected time information can be used

As with between FZs, an action time calculation arrow can be simply led from a certain trigger or receptor to a trigger or a receptor in another target zone.

The manager inputs required time information at this time.

Addition may be performed in the shortest and longest and/or the standard range. The original value remains for a value not added. (In a case where the actual transition sequence is not sequentially connected or the like, it is safer to not use the shortest and longest, or to pass through a transition unless it is completely restricted physically such as movement)

<< Management system operation >>

In Fig. 58, the description "XX unit" is frequently used. Here, the "XX unit" is realized by a CPU of a server (computer) 10 reading necessary software each time. Therefore, the "XX unit" is a component of the invention of a product.

<< Embodiment of adding field type module >>

An embodiment in which a field type module is added will be described below with reference to Figs. 69 to 72.

By standardizing, to a slot type, processing of a module that provides each service that is to be a component of an event and has location and time range fixed eventually, it is possible to further simplify the event creation. This enables various utility processes. Fig. 69 shows a field edit screen used in that case.

Fig. 69 is an example of a field edit screen.

Fig. 70 is a field structure schematic view.

An overall structure will be described with reference to Fig. 70.

A field performs processing of an event by arranging a child module called a field unit in a slot of the edit screen.

The field can have an aspect of either an overall processing module or an individual processing module. Further, it is also possible to become a unit for execution of other fields as an attraction.

The field unit is categorized into: an attraction that performs processing with time and a location specified (functions of the field are specialized for controlling modules with specified time and location, although unspecified ones are also possible); a control module (that may be integrated with the field) that performs processing of the field; and a utility (that may be integrated with the field) that adds specific functionality to the processing of the field. Further, the field unit uses a specific slot.

Control types provided by the control module include: a stage that executes attractions in time order (scheduled time can be designated); a stamp rally where attractions are arranged at specific points (location attractions); a tour that has a generation order (with scheduled time) in location attractions; a maze that designates a generation condition and an order for each attraction; and other processing. There are three categories of control properties: interrupt designation, delay management, and optimum route calculation. Details are shown in Fig. 71.

The stage type executes attractions within a range of a time restriction in the order of slot numbers. The delay management is performed when it is determined that a specific attraction is inexecutable due to time designation of each attraction. In addition, parallel implementation of attractions is not possible, and slot numbering is used.

As for the tour type, attractions are executed in the order of slot numbers. The end of the previous number is to be a condition for start condition standby of the next attraction. In addition, parallel implementation of attractions is not possible, and slot numbering is used.

The stamp rally type executes an attraction when a start condition for the attraction is satisfied. Multiple attractions cannot be implemented in parallel. In addition, parallel implementation of attractions is not possible, but slot numbering is not used.

For the maze type, an attraction is executed when a start condition of the attraction is satisfied. A control #tag is issued that designates the order between attractions and feasibility of parallel implementation. Further, whether or not parallel implementation of attractions is possible is designated by the control tag, and slot numbering is not used.

As control detail,

In the interrupt designation, when the designation is made by a type subjected to slot numbering, a generation trigger occurs independently for the designated attraction, and the designated attraction is implemented after a normal attraction being executed is interrupted or ended. Another control tag is issued.

When the designation is made by a type without slot numbering, the attraction is excluded from optimum route calculation. The ongoing attraction is interrupted or implemented.

Final attraction designation: The field ends when the attraction executed by the control tag with this designation ends.

In the delay management, when the designation is made by a type subjected to slot numbering, a generation trigger occurs independently for the designated attraction, and the designated attraction is implemented after a normal attraction being executed is interrupted or ended. Another control tag is issued.

When the designation is made by a type without slot numbering, the attraction is excluded from optimum route calculation. The ongoing attraction is interrupted or implemented.

Final attraction designation: The field ends when the attraction executed by the control tag with this designation ends.

In the optimum route calculation, excluding attractions subjected to the interrupt designation in a control type not subjected to the slot numbering, a route search is performed based on movement time, and an optimum route is calculated. Further, if there is a time restriction, possible combination of attractions with a time restriction is made as a case-classification calculation, a route search is performed for each of the time-designated attractions (in the route calculation of the later section, attractions used in the previous calculation are excluded), and all the results are compared to regard a route with the shortest time to be optimum.

The calculation time may be shortened by relaxing the condition instead of the entire result.

Fig. 71 is a view showing control module property details.

A control flow of the control module is as shown in a lower part of Fig. 71. A started process reads a tag description of each field unit, reads restriction information, optimizes space-time allocation of attractions on the basis of that information, and calls and executes an attraction satisfying a start condition. For this condition, all the location, time, and attribute conditions must be satisfied. As shown in Fig. 71, the space-time allocation is recalculated at regular intervals and at the end of the attraction. Further, an interrupt attraction process occurs when an interrupt designation condition is satisfied, and the process ends when the field ending condition is satisfied.

Note that, for the attraction start condition, a simple condition can be selected (control in which attribute restriction is applied only with a participant attribute, and a timing setting is not used (triggers and conditions are independent) > All generation management is performed by an internal behavior of control M. If there is a control module that requires a simple condition, this setting is adopted, and selection of a mode of the attribute restriction and the time restriction is limited).

Conversely, a dependency relationship may be analyzed from a marker arrangement that controls transition arrows and transitions, and an order condition may be incorporated into the control.

See Fig. 71 for details of control types and control properties.

Fig. 72 is a view for explaining designation of location/time restrictions. Main functions of the control module/field edit screen are illustrated in Fig. 72. Further, time and location restrictions of a description are explained.

A control module slot is a slot in which a palette field unit can be arranged. A slot position that can be arranged differs depending on a type of a unit. Multiple units can be arranged in an attraction slot and a utility slot. (extending downward)

Attraction slots are numbered for each slot. This numbering (ranking of markers) may be realized by markers or tags that require arrangement to clearly indicate positions and orders of slots even if they are not explicit (excluding attractions subjected to interrupt designation). Rearrangement may be performed automatically.

A unit #tag form is a form for editing tag information of a field unit arranged in a slot. A unit internal tag is extracted and displayed, and a control tag is written. Internal tags cannot be edited here. By inspecting this, the control module performs control.

For the control types and the properties, setting is made for a control type, a control property, a utility-provided property, and a field (internal setting) restriction, and the control #tag is displayed on the form.

The utility-provided property is a property setting form of a utility arranged in a slot of a field. Properties closely related to control can be controlled here.

A control #tag is a tag for the control module to specify and manage attractions and utilities. Arrangement is made on the tag form. See Fig. 72.

Further, the role of the control tag may be realized by a graphic marker.

Time, a location restriction, and an attribute restriction are forms for editing internal restrictions. There are one for a field, one for each attraction, and one for a utility. See Fig. 72.

The attribute restriction is for performing a member restriction of the corresponding module. An interface is the same as that of the member restriction part.

The time restriction is for a time restriction of the corresponding module. The time restriction works the same as a time zone subjected to time-in and time-out in an absolute time range at the time of implementation. Setting can be made with six modes in order to make confirmation at the time of implementation, in consideration of conditions for restrictions based on details of attractions and modules and of conditions set individually by the manager.

Control module management is a mode in which the control module performs an optimum time range based on category information of the attraction, without detailed designation on the attraction side.

Arrangement time zone-Required time designation is a mode for designating a recommended time required for that attraction as a required time, and designating a time zone that can be arranged with the time, with absolute time designation, day of the week, or daily time zone information. This does not have to be designated on both sides. In that case, non-designation is handled similarly to the control module management.

Absolute time designation is a mode for designating attraction start time and timeout time in absolute time.

List designation is a mode for designation by a list of multiple absolute time designations or arrangement time zone-Required time designations.

Data/attribute arrangement is a mode to perform designation with a value of an arranged graphic object.

Timing setting is a mode for arranging a timing setting unit.

The location restriction is for a location restriction of the corresponding module. At the time of implementation, the time restriction works the same as a field zone subjected to range designation. Setting can be made with five modes in order to make confirmation at the time of implementation, in consideration of conditions for restrictions based on details of attractions and modules and of conditions set individually by the manager.

The control module management is a mode in which the control module performs an optimum location designation based on category information of the attraction, without detailed designation on the attraction side.

Arrangement range-Shape designation is a mode for designating a size and a shape of a location required for the attraction, and designating a range in which the location can be arranged. This does not have to be designated on both sides. In that case, non-designation is handled similarly to the control module management. By a map tile designation type confirmation process of a control module attraction arrangement flow and a listing process of a location range information, list designation is to be resulted.

FZ designation is a mode for designating a specific field zone.

List designation is a mode for designation by a list of multiple FZ designations or arrangement range-Shape designations. Data/attribute arrangement is a mode to perform designation with a value of an arranged graphic object.

Individual conditions are designated through four methods (5 to 6 modes) of: absolute designation; designation of a definite value that can be controlled from a range/list by the control module; external conditions (data indefinite designation) with attributes and library data; and complete management with the control module. The method in which the control module finally confirms is called control indefinite designation.

Status trigger/receptor, attribute (data) receptor: Attractions and utilities can be equipped with an icon corresponding to a status trigger/receptor and an attribute (data) receptor of a module, in order to control individual behaviors. Details are determined by internal description of the attraction.

There are four types: a status trigger, a status receptor, an attribute receptor, and a library data receptor, and the same interface as the equivalent functional part of the module (Fig. C-2, Fig. 3-14) is provided.

Reserved (attribute) receptor/trigger and free (attribute) receptor System control object

A reserved (attribute) receptor/trigger is a receptor/trigger used by the control module, and is occupied by the control module. It is not possible to arrange an attribute or set an end point of a transition arrow (emitters can be arranged). Which receptor is to be reserved is determined, for each control module, by a status and a receptor, and numbering of an attribute (data) receptor (attractions and utilities must be designed to meet functional specifications required by the control module).

Further, there is also an object that is used for behavior management of attractions and utilities and prepared by the system. This is a non-display control object, and corresponds to generation, transition non-generation, forced termination, affiliation field zone, and affiliation time zone.

A free (attribute) receptor is for a person who edits, to designate details of operation of utilities and attractions by using receptors/triggers where transition arrows, attribute icons, and emitters can be arranged. This must be prepared in advance with an attraction or utility.

Designation of these reserved (attribute) receptors/triggers and free (attribute) receptors is determined by category information of the attraction. On the basis of the category information, the control module and the utility are processed in association with numbering information reserved by status emitter/status trigger logic of each status or trigger, but may be identified with order information or reservation name information of the receptor or the trigger.

Transition arrow, emitter, attribute (data)

Transition arrows and emitters can be arranged and connected in several places on the edit screen.

Transition arrow start point: All statuses on the screen
Transition arrow end point: Trigger except reservation and timing setting on the screen
Status emitter: All statuses, triggers, and timing settings on the screen
Attribute emitter: All arranged attribute icons
Attribute (library data) icon: Attribute receptor and attribute restriction except reservation

Attraction internal editing

Details of an attraction can be edited by opening an internal edit screen. An attraction type module is provided with a sub edit screen so as to enable internal editing of a location restriction and a time restriction (the sub edit screen is integrated into a property setting screen for an external module, and called from a setting bar for a nest type).

Further, an attraction introduction module can be designated (the module can be called regardless of restrictions (designated by a transition from status trigger 1).

Utility internal editing

A property of a utility can be edited by calling an internal property setting screen. The editing mutually reflects editing of control module properties.

Palette

There are certain limitations applied on a palette arrangement object of a field.

Content palette: field unit, attribute condition module, timing setting module
Attribute Palette: No limitations
Processing palette: Normal transition arrows only
Status emitter palette: No limitations
Library data palette: If a data receptor other than reserved is arranged, corresponding data is arranged

Main utilities will be explained.

A future timeline can be displayed as a timeline or a list while the utility arrangement field is being implemented (standby is possible), by extracting estimated attraction start time information and related information of child fields arranged as fields and attractions. Further, a related service is performed.

In timeline/list display, as a user service page or page collection, an attraction title and an edited comment are displayed as a timeline or a list (when there is no start time information). By selecting a part (selecting a tab), an introduction module is called. (A partial timeline can be mixed and displayed, if any)

A tree shape may be adopted if parallel processing is possible or if mutual interruption is set (partial TL display showing connection information)

In the partial timeline, a timeline may be partially established by user's designation, a part of a maze and the like, or passed attraction information. The start time is displayed if specified, otherwise time display is performed on the time from the starting point of the first attraction of the TL.

In an alarm setting, when an attraction (or start, end, and the like of a field) is designated as an alarm target, the alarm is performed by tracing back to the designated time from the estimated attraction start time information. A page displayed with the highest priority is called. Further, if a delay (additional difference of end time) during regular scanning is more than a certain time, a delay warning is also given.

Implementation attraction selection is a function for a participant to designate an attraction to be implemented or prioritized/subordinated from a timeline/list. When this is done, estimated attraction start time information is recalculated in accordance with the selection of the participant.

<<Note>> It is also possible to extract a display transition sequence of a module designated by some means in expected time calculation, by using logic such as regular, shortest, middle, longest, and the like, and use the start time as the estimated attraction start time information.

Guide provides a guide for movement on the timeline, and movement to a designated attraction and a designated point from the current location. Further, behavior management is performed on an arranged normal guide module as a related module, to manage so that a plurality of guides do not start at the same time. Within the attraction zone, a normal guide is prioritized.

Movement time presentation provides (adds to the timeline/list and displays) movement time information from the current location to attractions arranged in fields and child fields.

Passed attraction information presentation provides the control module with passed attraction information in a case where a recommended movement route in a field where there is no timeline or all routes have passed through a zone of a specific attraction. The passed attraction information is used as a partial timeline when usage settings are made.

Utility point guidance performs guidance to a designated point selected under a specific condition from a utility point list of a specific category arranged on the map. When the designated point is confirmed, it is registered as an interrupt attraction and incorporated into the time line and route calculation. Further, the utility point guidance can also be associated with a specific attraction, and upon arrival, that attraction is called with the designated point as a location zone. The attraction is designated by an issued control #tag. The designated point may be determined from a group of optimum conditions with a distance, a movement time, user selection, or the like.

As for a service screen call M (related M), a designated point designation screen is called when a screen call M arranged in the attraction is selected.

As for the designated point, a designation method is performed either based on a point that has the shortest movement time and conforms a condition, or on participant designation. Further, whether it is emergency or not can also be set, and interruption is made immediately after in a case of emergency, otherwise the designated point will be optimized and incorporated into the timeline.

Group management M groups multiple participants, and provides utilities necessary for a group action. A grouping attraction of the utility interrupts at the beginning of the field to perform grouping of the participants in a designated way.

In an attraction call condition setting, attraction call and ending conditions can be set in detail in relation to group processing. Selection setting can be made from four types: All, First arrival, Fixed rate designation, and Lost designation exclusion.

In lost processing, at a time of position scanning, members with a certain distance or more or deviations thereof from a barycentric position of the group, or from a member designated as a leader are designated as lost. When the number of lost designations exceeds a certain ratio, a status confirmation screen is sent to confirm the lost processing target or to temporarily divide the group. When the divided groups gather within a certain range, joint confirmation is performed. Further, for lost, emergency response module/utility/attraction can be called if designated. A dedicated page is called. In the above processing, lost designation (all distances or deviations from the barycenter), and group division can be performed by performing cluster analysis based on position coordinates of group participants, and calculating a plurality of group members in the group and barycenter. The cluster analysis may also be used at the time of initial grouping to present estimated groups.

A web stage (live stream) generates a web page for live stream viewing corresponding to the event. Acquisition of information is performed by arranging two related modules in the attraction. On the page, events, acquired information, and participants can be evaluated.

An uploader (related module) sends data acquired by a participant terminal, associated recording equipment, and the like, to a stream page.

Participant evaluation display is a module that creates a page that presents evaluation information on the web page to the participants. The participant evaluation display is arranged in the attraction to provide the page to the user.

Web data cooperation is a utility that acquires information generated by a web system for delay management and information presentation, and provides in a form of attributes and library data. Information is transferred using a free attribute receptor. Train timetable information, and check-in information for shops and the like are exemplified.

Future timeline display, utility point guidance, and group management can be extracted as technical matters in the present invention.

This is a module that automatically calculates and manages a start or an expected start time of each location event by a management program, by specifying a location event management module to standardize the location and time limit information.

This enables delay management, recommended route setting, future timeline display, and the like.

<< Overall processing >>

Overall processing will be described with reference to Fig. 73 and subsequent figures.

Targets of a member scope have been sorted into individual description targets and instances to organize a class structure of the overall processing and facilitate description of interactions. Further, an incorporation method has also been changed. Fig. 73 is a view in which a processing structure of the overall processing is organized and described.

Indication of Individual description target in an interaction body defines that a participant and some equipment are set as a processing target as participants of the process. The individual description target is managed and driven by an individual description in a middle part of the figure. The entities of the individual description are an individual description time zone and an individual description module. The individual processing target is incorporated as a member scope into an overall description describing an interaction aspect, to perform interaction. Management of the interaction is performed with an overall processing attribute in which an instance, a key described later, or a member of the member scope is an attribute value holding target.

An interaction field is where the relationship is described. The overall description is handled by an overall processing time zone and an overall processing module.

A behavior of the description is defined by an interaction aspect in the figure. The description of the interaction is arranged in the overall description as illustrated in Generalization in an upper part in which individual descriptions that describe a behavior of members in the member scope are nested, and different descriptions are assigned depending on attributes, types, and transitions of members. Moreover, in order to describe interaction between specific members, a sub overall description is assigned with a more limited member scope and described.

What the individual description reflects in the interaction is expressed in several aspects in the middle part.

Mutual descriptions between the extracted and limited members are carried out with an overall processing attribute that is used to extract the member scope and bring a value generated at an individual place to an upper level.

Overall processing attribute: A behavior of an overall processing attribute and a behavior of a key that secures a transaction of the interaction are described in Figs. 73 and 74.

Fig. 73 is a view showing an interaction body, an interaction field, and an interaction aspect.

Fig. 74 is a view showing a scenario (overall processing) attribute.

As shown in Fig. 74, a normal scenario attribute targets all the individual processing targets of a scenario as a potential attribute value holding target.

Whereas, an overall processing attributes are categorized into three types, which are: a member scope attribute having an individual description processing target that is a member of a certain member scope, as an attribute value holding target; an instance-type attribute having a key or an instance (when key is not defined) as an attribute value holding target; and a group-type attribute. The group type has a form for holding a member scope different from that of the instance type, and constituent members of the member scope with different keys and instances do not overlap.

Reference of attribute information differs depending on a zone in which the attribute icon is arranged. As described in a center of Fig. 74, in the instance and group types, an individual attribute value held by the corresponding key is referenced in the overall and individual descriptions assigned with the key, otherwise attribute values of all attribute members are referenced as an array. For general and member scope attributes, the target individual attribute value is referenced in the target individual description. In a case of an instance type member scope, depending on an arrangement location, the individual attribute value of the key to which an instance of an overall description at an upper level (bottom layer) belongs, or an array of individual attribute values (outside of individual description) restricted by the key is referenced. If there is no overall processing description with a key in an upper level and there are multiple attribute values, an array reference of attribute values held by the individual processing target is made.

The overall processing attribute can have member information described in Fig. 74.

Key: A key is a code that is for transaction identification, and is assigned to some members and instances of an overall processing attribute. An attribute can hold multiple keys, and a member scope is defined for each. In addition to the individual processing target, the key can also hold an instance as a member scope. A key structure in Fig. 75 describes properties held by the key. The key can have multiple overall processing attributes that share the key. An attribute group having a certain set of keys due to mutual conformance of attributes forms a cluster of attributes that share a member scope and a set of keys through synchronization of key-related information. This process is described in Scenario attribute conformance and key inheritance, in Fig. 74.

A key is issued by conformance or a certain description arranged on a trigger receptor. Details are described in Arrangement on trigger/receptor and MS and key at time of attribute conformance, in Fig. 75.

Further, by performing instance generation transition based on an overall processing transition that is restricted by the attribute holding the key or that holds the key, through a connector or a normal overall transition, the generated instance is incorporated into the instance member scope of the key. See Fig. 76.

In a description of the incorporated instance, processing can be performed on the member scope that belongs to the key as a target. In an instance description and an individual description of an individual description body, processing unique to the member scope can be performed by using an attribute value related to the key. In a lower part of Fig. 75, a new method of conformance is described. Categories of plus and minus are introduced for conforming arrows. The categories of single and multiple designations are eliminated, and integration is made into multiple designations. Members are confirmed by performing group calculation at the time of conformance evaluation of (multiple) conforming destinations of the plus arrow and (multiple) conforming destinations of the minus arrow.

Fig. 75 is a view showing a key structure, and MS and a key at a time of attribute conformance.

Fig. 76 is a view showing transitions in overall processing.

Transition processing using key and overall processing: Fig. 76 describes features of transition processing in the overall processing. An overall processing single transition allows one transition for each key. In the left and center in the figure, a method of holding key information when passing through a scenario object that can have a processing icon and an instance (see the lower left of Fig. 74) is described.

On the right in Fig. 76, a behavior of a member transition part of a connector is described. A member transition of the connector can generate one description instance for every member individual processing and key of the individual description member scope.

A method for automatically generating a key for transaction (session) processing of interaction at the time of event processing by arranging an icon at an appropriate position in the graphic that represents the transition, or a method for confirming a target that uses the key are a technical matter characteristic of the present invention.

<< New article specification >>

Fig. 77 is a view showing a new article specification.

In a new article specification, a change has been made to adopt a format that is based on editing with an html editor, and have control tags inserted there. The specification is described in Fig. 77. An edit screen includes an html editor, a status generation/composition form, and a management box.

The html description is made in the editor on the left, and a tag corresponding to an emitter is generated or the emitter is composed in a form in a center.

The form has a fix check box, a generation status selection, a form, a status icon generation check, and a comment field.

By performing generation status selection by a pull-down and the like, and selecting a mode of the form, fix becomes possible. When the fix is done, the next form (block) appears. See Fig. 77 for details. See the next section for the emitter function.

In addition, in the form, an html tag for embedding appears, or a status arrangement box appears if a status is composed.

The status corresponds to an issue status of the article, but control can be performed on whether to be displayed as the status on an article icon.

In composing the status, a generation status is issued when any one or all of the arranged status icons are selected.

An attribute emitter corresponds to data import used in an input form or display data on the screen, a script, or the like.

Further, an icon of the generation status in the form can be dragged and dropped, and can be arranged in the status arrangement box.

It is possible to adopt a method of using an icon to easily generate a link or a tag for data transfer in the HTML editor (dependent on the status emitter in the next section, as the claims).

Fig. 78 is a view showing an emitter and a status, and range designation of a field zone.

A status of a module by a status emitter and an attribute receptor are generated.

There are four types of emitters that can be arranged in the module. These are a regular status emitter, an irregular status emitter, an attribute tab argument emitter, and an attribute tab return value emitter. See Fig. 78 left for details.

A status emitter arranged in a trigger/receptor generates a status on a module icon. An attribute tab emitter arranged in a scenario attribute of a transition mode generates an attribute receptor tab that allows arrangement of a scenario attribute on an icon. Tabs include an argument tab and a return value tab, the argument tab assigns an arranged attribute value to an internal scenario attribute at a time of transition evaluation, and the return value tab assigns to the arranged attribute value at the time of internal transition evaluation.

A method of graphically setting event processing inside and outside a module, an argument, and a return value is a technical matter characteristic of the present invention.

<< New specification for range confirmation of field zone (tile selection method) >>

In order to simplify range designation and reduce a calculation amount at the time of implementation, a change has been made to adopt a method to reduce a calculation amount by setting a tile region designated in advance in a map, associating a participant terminal subjected to current location measurement with a specific tile, and recalculating only when the tile moves.

Range designation: Range designation of a field zone is performed by designating polygonal tiles that fill the map. The figure shows designation of a rectangular tile with a part shifted horizontally. A general relationship is maintained by adjusting a shift length without changing a tile area depending on the latitude.

A range is specified by designating a tile from an FZ range setting screen where the tile is displayed.

Standard tile and effective tile: When there is a problem with accuracy of a geodetic system, and in order to reduce a calculation amount, it is possible to set an effective tile that is larger than a standard tile designated by a user. Actual location tile registration is performed with the effective tile. Effective tiles may be prepared in multiple types. In order to reduce a frequency of recalculation, coarse ones are used when an F zone of a participation event is distant, and fine ones are used when approaching. (A change may be made depending on a participant type)

Range determination of an FZ uses a determination range of execution tiles covering a designated range of the standard tiles.

Location tile identification: Position information is acquired at regular intervals to identify a location tile.

Based on the location tile information, field-in/out determination is made every time there is a change, and a distance to a cluster of a field zone active in an event is calculated.

A size of the effective tile and a location scanning time interval are adjusted in accordance with a result of the distance calculation. This reduces the calculation amount.

The distance calculation may be calculation from normal latitude/longitude, such as forming an axis between representative points such as a barycenter, a major axis, and a median value of an azimuth diameter, and setting, as an effective distance, a distance from an on-axis projected position of the nearest range end or from coordinates of the range end. Alternatively, for example, it is also possible to calculate an approximate value by calculating the number of interval tiles (for example, through limitation of a route search direction or settings of the same distance tiles with respect to a specific direction) from characteristics related to orientation of polygonal tile arrangement.

In addition, in order to minimize fluctuation of the location tile, a margin is set in a periphery, and the location tile is not changed if position information is acquired within that range. The number of times of this processing may be limited.

Fig. 79 is a view showing a user screen design (browser, app).

A method of reducing the calculation amount by performing the location tile registration processing and the event processing tile designation for the participant position information processing is a technical matter characteristic of the present invention.

<< New specification of participant screen >>

The specification has been changed as shown in Fig. 80 to improve the convenience of participants' operations. An operation icon has been abolished, and a page has been made a landing page. This is registered as another embodiment of the claims.

From the requirements of the claims, improvement has been made to remove a scroll management icon (landing pages that combine a list of tabs and a page are mutually shifted, and an oblique or fan-shaped transition bar (of a pulling-down type that scrolls in that direction) is used. This is a technical matter characteristic of the present invention.

Fig. 80 is a view for explaining regions of a user screen.

1) Also in the new specification, a tab can be pulled out from up and down as in 1) described in paragraph 0242. This enables completion of an operation in the fan-shaped region starting from a base of the thumb in a lower part of the screen (invertible from side to side). If necessary, a position of B-1 region in B mode can be set lower. Further, it is also possible to cause a pop-up that summarizes important operation items on a page identified by a status/emitter, to appear in a lower operation field.

2) In order to easily grasp which position in the page element list that is listed up and down is being viewed at a time of viewing in A mode and B mode, a tab region and an interval region may have a numeric value or a symbol indicating a position, a character that changes in accordance with a position, and a coloring region where a color tone such as a color scheme and brightness has gradation. In a case of the color scheme, a color system may be changed depending on the category of the page at the tab position or all.

<< Interpretation structure >>

For output and input of an interpretation structure, it is possible to use a markup language, or a data description language that can describe a structure by nesting, or that can describe an object structure such as JavaScript object notation (JSON). In this case, notation of an object corresponding to a zone including a description is set, and list information indicating a nesting structure or an affiliation relationship is added.

<< About advanced management >>

About Level 2 advanced management method

1) Paragraph 0047 Regular and irregular management and exception management are classified, and centralized management by the event manager with Paragraph 0182 Exception management is made possible when an exception occurs.

2) If a required operation is not performed due to setting in Paragraph 0123 Restraint selection status, exception occurs at designated time that can be confirmed by the timing setting of the end of the affiliation object, after designated time has elapsed, or after an exception confirmation trigger occurs.

3) For termination that occurs independently in a predictable form such as Paragraph 0128 Exception termination margin or time designation, a mechanism of an embodiment such as alerting attention by distribution, alarm, or change of service screen display has been exemplified.

4) For an advanced management content for which prediction of end time of an internal module is enabled by Paragraph 0248 Expected time calculation and control in a field module, a warning can also be issued in accordance with the estimated time.

This system can also be applied to traveling in parties, a group tour, tour guiding organized by travel agencies (see Fig. 37), a publication party, a meeting for exchanging congratulatory greetings, a meeting for exchanging business cards, a birthday party, an offline meeting, a quiz competition, a music concert, a live concert, watching sports, a stamp rally (see Fig. 35, Fig. 36), an orienteering, a game using a mobile terminal to allow communication and competition in multiple participants, a wedding reception, a class reunion, and the like.

Industrial availability

As shown in Fig. 57, an event management system according to the present invention is a system that is established by connecting a server and a terminal. The event management system is realized by an OS, application software, a database, a network system, and the like constructed on hardware resources including a CPU, a memory, an auxiliary a storage, a display, an input device, and the like of a computer, and information processing called event management processing is specifically realized by using the above hardware resources. Therefore, the event management system corresponds to a technical idea utilizing the laws of nature. It can be used in the event management industry such as traveling.

Reference Signs List

| | |
|---|---|
| 10 | Server |
| 21, 22, 23, 24 | Manager user terminal |
| 31, 32, 33, 34 | General user terminal |
| 51 | API database (API database device) |
| 52 | Event database (event database device) |
| 53 | User database (user database device) |
| 54 | Point database (Point database device) |
| 61 | API registration processing unit |
| 62 | Event generation processing unit |
| 63 | Event registration processing unit |
| 64 | Communication processing unit |
| 65 | Chart diagram interpretation unit |
| 66 | Analysis structure generation unit |
| 67 | Point management unit |
| 68 | General user participation processing unit |
| 69 | General user interaction management unit |
| 70 | User action confirmation unit |

## Claims

1. An event management system comprising:

an API database that stores
an event execution management API that performs execution management of at least one or more of execution of a scenario that is a constituent unit of an event, transmission and reception of a message with an event participant terminal, position information processing of an event participant terminal, event progress recording, log data collection, or advertisement distribution, and
a resource management API that identifies and manages each physical resource including at least one or more of a terminal that is an operation target by the event execution management API, equipment, a commodity, a building, a place, transportation means, or communication means;
an event database that stores an event execution program and log data generated during execution of the event;
an API registration processing unit that receives an API conforming to a predetermined API definition specification from an API provider terminal and registers in the API database;
an event generation processing unit that transmits, to an event creator terminal, a predetermined event definition specification and an API freely selected from APIs stored in the API database, and receives an event execution program that is generated with, as a component, an API received in accordance with the predetermined event definition specification in the event creator terminal;
an event registration processing unit that registers, in the event database, an event execution program conforming to a predetermined criterion of feasibility in the event management system and a validity criterion of an event freely set by a manager, from among the generated event execution programs; and
a communication processing unit that transmits and receives information necessary for event execution or related to event execution between with an event participant terminal through a network, wherein
a module of the event execution program is treated as a nested scenario, the event creator graphically describes an operation of an object layered by a module in a scenario chart attached to each module,
an object called a zone including a time zone and a field zone is used as the object,
an icon and a descriptor for graphical description of the scenario chart are used,
the event management system further includes a chart diagram interpretation unit,
the chart diagram interpretation unit
interprets, in a completed chart diagram, a structure of the time zone, field zone information arranged in the chart, an inclusion relationship of contents and the descriptor with respect to the time zone, portion arrangement information of contents and the descriptor on another icon, and a connection relationship of a transition arrow (the icon and an icon portion), and
as a result, chart interpretation equivalent to programming in a markup language is realized.

2. An event management system comprising:

an API database that stores
an event execution management API that performs execution management of at least one or more of execution of a scenario that is a constituent unit of an event, transmission and reception of a message with an event participant terminal, position information processing of an event participant terminal, event progress recording, log data collection, or advertisement distribution, and
a resource management API that identifies and manages each physical resource including at least one or more of a terminal that is an operation target by the event execution management API, equipment, a commodity, a building, a place, transportation means, or communication means;
an event database that stores an event execution program and log data generated during execution of the event;
an API registration processing unit that receives an API conforming to a predetermined API definition specification from an API provider terminal and registers in the API database;
an event generation processing unit that transmits, to an event creator terminal, a predetermined event definition specification and an API freely selected from APIs stored in the API database, and receives an event execution program that is generated with, as a component, an API received in accordance with the predetermined event definition specification in the event creator terminal;
an event registration processing unit that registers, in the event database, an event execution program conforming to a predetermined criterion of feasibility in the event management system and a validity criterion of an event freely set by a manager, from among the generated event execution programs; and
a communication processing unit that transmits and receives information necessary for event execution or related to event execution between with an event participant terminal through a network, wherein
a module of the event execution program is treated as a nested scenario, and the event creator graphically describes an operation of an object layered by a module in a scenario chart attached to each module,
an object called a zone including a time zone and a field zone is used as the object,
an icon and a descriptor for graphical description of the scenario chart are used,
the event management system further includes a chart diagram interpretation unit and an analysis structure generation unit,
the chart diagram interpretation unit
interprets, in a completed chart diagram, a structure of the time zone, a structure of the field zone, field zone information arranged in the chart, an inclusion relationship of contents and the descriptor with respect to the time zone or the field zone, portion arrangement information of contents and the descriptor on another icon, and a connection relationship (the icon and an icon portion),
the analysis structure generation unit,
in accordance with information interpreted by the chart diagram interpretation unit,
analyzes a nested relationship of the time zone or the field zone to structure a plain field as a top-level time zone or a top-level field zone together with property information,
adds the field zone or the time zone as reference information,
lists contents and a descriptor included in each of the time zone or the field zone as elements at a corresponding position in a structure together with property information,
adds the icon subjected to portion arrangement, as a child element of each element (property), and
adds transition information as a property and instruction information from both directions, and
as a result, an analysis structure is generated and set as a structure unique to a chart, that is, a module, and chart interpretation equivalent to programming in a markup language is realized.

**3.** The event management system according to claim 1 or 2, wherein
there are a plurality of the event creators, the event creators are treated as manager users, and a general user who uses an event and a manager user who creates an event are treated with discrimination,
the event management system further includes a point management unit that manages a point and a title that are profits given by a manager user to a general user, and
the point management unit
is able to carry over a point and a title set by a manager user at a time of using an individual event to an event created by another manager.

**4.** The event management system according to any one of claims 1 to 3, wherein
the event generation processing unit
enables graphical scenario creation performed by a manager user as if arranging a flowchart when creating the event, and realizes an operation by drag and drop from a palette block that stores an object, to a field block where a chart is arranged.

**5.** The event management system according to claim 4, wherein
the event generation processing unit
captures, at a time of an operation by the drag and drop, limitation on time and a location that cause a problem during actual distribution, and visually notifies an operator that the operation is impossible when it is not feasible.

**6.** The event management system according to claim 1 or 2, wherein
the event management system further includes a general user participation processing unit that processes participation of the general user in the event when the event is being executed, and
the general user participation processing unit
is able to execute, by arranging an icon on a screen, processing in which the general user acts as a participant and causes a trigger in an event created by a manager user.

**7.** The event management system according to claim 4, wherein
the event generation processing unit
enables execution of calculation processing and condition processing necessary for an event, through a transition between objects by using a condition evaluation arrow and an assignment arrow, that is, joining operation.

**8.** The event management system according to any one of claims 4 to 7, wherein
the event management system further includes a general user interaction management unit that manages interaction of the general users who participate in the event, and
the general user interaction management unit
is able to confirm a service target person at that time through each time evaluation in a transition sequence of a member scope, by using a graphical creation icon for overall processing of managing interaction between multiple participants.

**9.** The event management system according to any one of claims 4 to 8, wherein
the event management system further includes a user action confirmation unit that confirms an action of the general user who participates in the event,
the user action confirmation unit
is able to confirm an action of the general user when the general user reads and transmits any one of a two-dimensional barcode, a one-dimensional barcode, an IC chip, an RFID, or infrared information, with a terminal, and
the event generation processing unit is able to incorporate action confirmation of the general user into a scenario by using an icon, in order to enable the processing.

**10.** The event management system according to claim 9, wherein
the event generation processing unit is able to create a scenario to allow a user to recognize message distribution necessary for action management of the general user in accordance with importance, and
the user action confirmation unit is able to manage action transition of the general user during scenario execution to allow a user to recognize message distribution necessary for action management of the general user in accordance with importance.

**11.** The event management system according to any one of claims 1 to 10, wherein
the event generation processing unit has a user interface that enables event creation or event participation through a mobile touch panel operation with only a thumb by using a tab and a scroll management icon.

**12.** The event management system according to any one of claims 1 to 11, wherein
the event generation processing unit
is configured to control, with a user interface or a user qualification, limitation of three-layer levels of basic description of level 1, advanced management introduction of level 2, and overall processing introduction of level 3, when describing the scenario, and provides guidance according to an action without restricting an action of a user in the basic description of level 1, and controls an action of a user for progress of an event in the advanced management introduction of level 2, and
controls interaction between multiple users in the overall processing introduction of level 3.

**13.** The event management system according to any one of claims 1 to 12, wherein
the event generation processing unit is able to convert a scenario component that is graphically created, into a shared module for library registration, and as a result, a part of a program is able to be made a template.

**14.** The event management system according to any one of claims 1 to 13, wherein
the event generation processing unit
is able to perform editing by mutually switching between a normal edit screen showing a structure of the time zone and a map-type edit screen showing a structure of the field zone.

**15.** An event management system, wherein
the event generation processing unit
is able to set a mutual contact confirmation process (user check) using a terminal app of terminal equipment carried by a participant, and
is able to impose, by a manager user performing user check with a general user, limitation on an action of the general user, and
grouping is performed by user check between general users.

**16.** The event management system according to any one of claims 1 to 15, wherein
in addition to generating an individual instance of a user by an entry trigger given with a function of generating an individual scenario instance of a user in any of a global trigger, RSS, RSS with user information, data from a cooperation system, data with user information, or a scenario status,
the event generation processing unit
is able to start a local entry process with a local entry that is an entry trigger for receiving only an action and field-in of a terminal carried by a user.

**17.** The event management system according to claim 16, wherein
position designation information of the local entry is able to specify position point information in addition to range information, and
position point information is derived from position designation information such as user designation or a barycenter of a range.

**18.** The event management system according to claim 16 or 17, wherein
on a trigger map that is a map used to realize the local entry process, local entry position information being in operation for which a context is specified is displayed, in addition to a specified field zone information of a context being participated, and
displayed local entry information is limited to one point information of a local entry to prevent unlimited range designation by a manager side, and position point information provided by one scenario or a manager user is limited.

**19.** The event management system according to claim 2, further comprising:

a log analyzing unit and a log generation unit that generates a participation log of a participant of the event as a log structured with time and a location classified with a context for the event, in a form of corresponding to the generated analysis structure and inheriting a structure of the generated analysis structure, wherein
the log generation unit generates, as a log, zone and module passage information and service usage information of a participant,
the log analysis unit,
aggregates passage information of all participants to analyze importance of a specific node and analyze related information between with a transition destination and a transition source, or
analyzes an action of a specific participant from contents information of a node or context information given to a node of a manager, to extract an action characteristic and preference of a participant, and
as a result, utilization of big data or management of a specific participant is enabled.

**20.** The event management system according to claim 19, further comprising:

an event monitor unit and an emergency response unit, wherein
the event monitor unit
grasps event participant passing information for each node collectively for each context in real time in an event monitor, or detects an occurrence of emergency,
the emergency response unit
controls progress of an event for responding to emergency in each node, and
as a result, real-time event management for each node is enabled.

**21.** The event management system according to claim 19 or 20, further comprising:

a user check unit, wherein
an event participant is able to generate and select a two-dimensional barcode page corresponding to a node through which the event participant is passing, to announce an own situation to a manager and another user in a form that is able to be handled by the manager and the another user.

**22.** The event management system according to claim 6, wherein
the general user participation processing unit
categorizes a tag registered by a user with an alternative official tag, and registers as a participant attribute, to check an attribute of a participant.

**23.** The event management system according to claim 7, wherein
an attribute and data handled by the event processing unit during calculation processing
include matrix calculation and query calculation using a table of a spreadsheet or a column of a database.

**24.** The event management system according to any one of claims 1 to 23, wherein
the module, the time zone, and the field zone have an expected time element according to internal logic,
the event generation processing unit
further includes an expected time calculation processing unit, and
based on a result calculated by the expected time calculation processing unit, validity of a scenario is determined.

**25.** The event management system according to any one of claims 1 to 24, further comprising:

a location event management unit, wherein
the location event management unit calculates a start or an expected start time of each location event by standardizing a location and time limit information, and
as a result, at least one of delay management, recommended route setting, or future timeline display is enabled.

**26.** The event management system according to claim 25, wherein
the location event management unit performs guidance to a designated point specified from a utility point list of a specific category arranged on a map.

**27.** The event management system according to claim 25 or 26, wherein
the location event management unit groups multiple participants, and provides a utility function necessary for a group action.

**28.** The event management system according to any one of claims 1 or 27, wherein
a key for transaction processing of interaction is automatically generated at a time of event processing, by arranging an icon at an appropriate position of a graphic representing a transition.

**29.** The event management system according to any one of claims 1 to 28, wherein a link or a tag for data transfer is generated in an HTML editor by using an icon.

**30.** The event management system according to any one of claims 1 to 29, wherein event processing inside and outside a module, an argument, and a return value are graphically set.

**31.** The event management system according to any one of claims 1 to 30, wherein a calculation amount is reduced by performing location tile registration processing and event processing tile designation for participant position information processing.

**32.** The event management system according to any one of claims 1 to 31, wherein scrolling is performed without using a scroll management icon, by mutually transitioning landing pages that combine a list of tabs and a page, and using either a diagonal transition bar or a fan-shaped transition bar.

**33.** The event management system according to any one of claims 1 to 32, wherein for output and input of an interpretation structure, by using a markup language, a language that is able to describe a structure by nesting, JavaScript object notation (JSON), or a data description language that is able to describe an object structure, notation of an object corresponding to a zone including a description is set, and list information indicating a nesting structure or an affiliation relationship is added.

FIG. 1

Scenario implementation flow

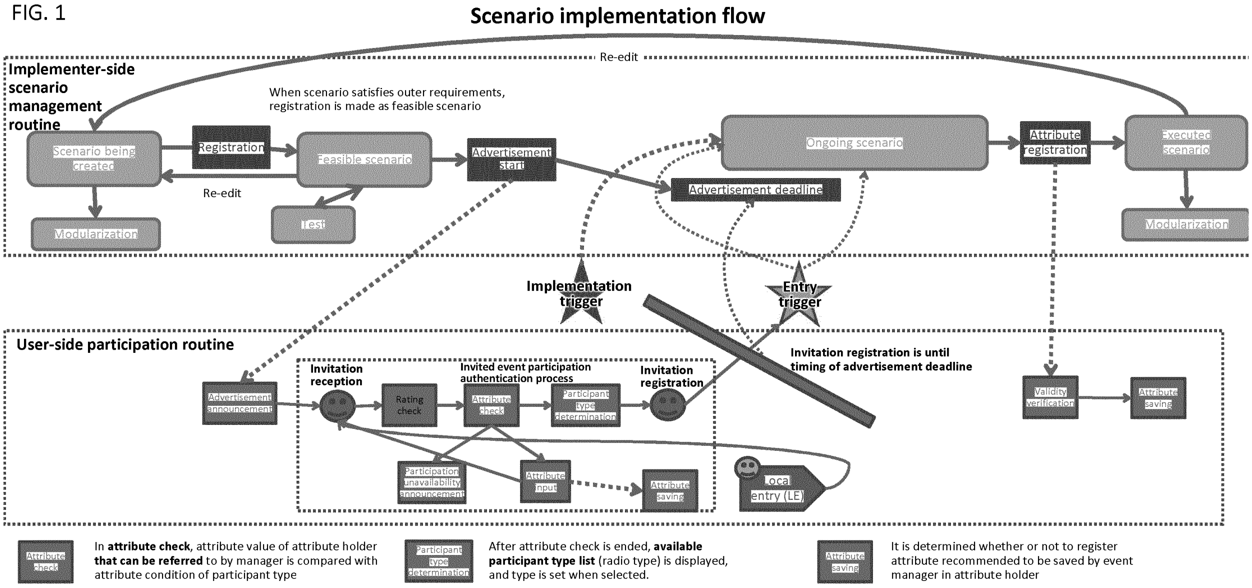

FIG. 2

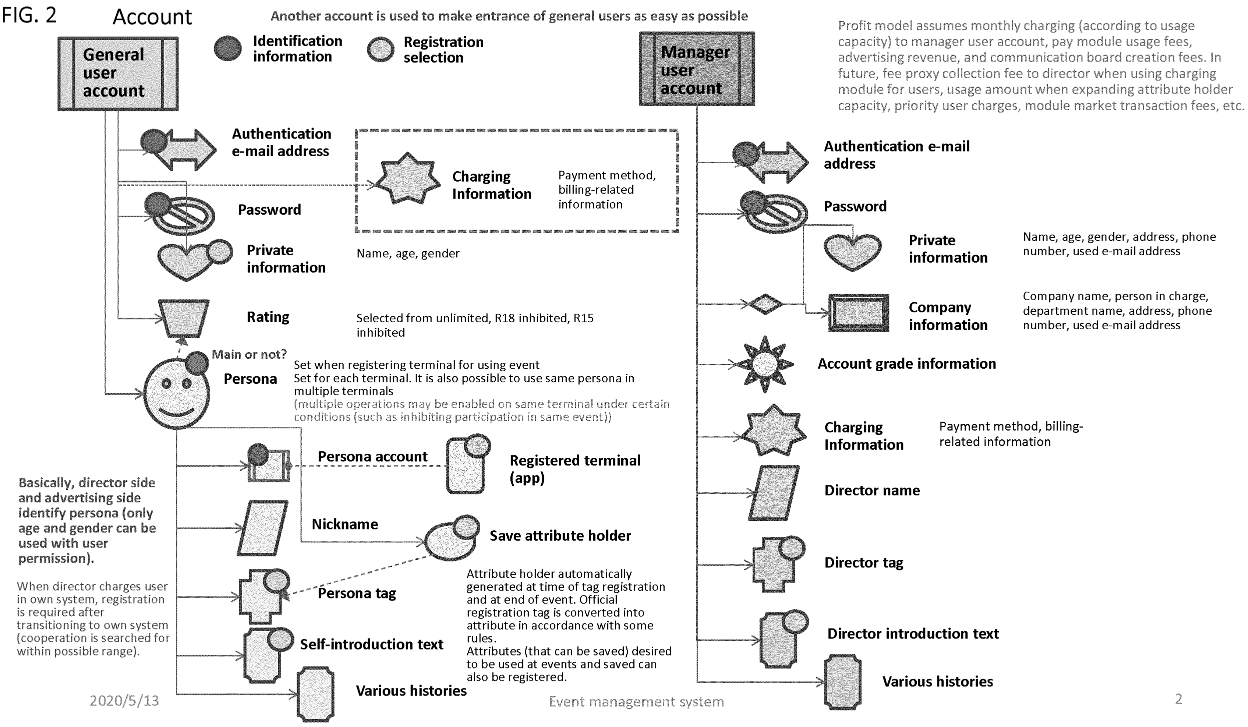

Account
Another account is used to make entrance of general users as easy as possible
General user account
Identification information
Registration selection
Manager user account
Profit model assumes monthly charging (according to usage capacity) to manager user account, pay module usage fees, advertising revenue, and communication board creation fees. In future, fee proxy collection fee to director when using charging module for users, usage amount when expanding attribute holder capacity, priority user charges, module market transaction fees, etc.
Authentication e-mail address
Charging Information
Payment method, billing-related information
Password
Private information
Name, age, gender
Rating
Selected from unlimited, R18 inhibited, R15 inhibited
Main or not?
Persona
Set when registering terminal for using event
Set for each terminal. It is also possible to use same persona in multiple terminals
(multiple operations may be enabled on same terminal under certain conditions (such as inhibiting participation in same event))
Persona account
Registered terminal (app)
Basically, director side and advertising side identify persona (only age and gender can be used with user permission).
When director charges user in own system, registration is required after transitioning to own system (cooperation is searched for within possible range).
Nickname
Save attribute holder
Persona tag
Attribute holder automatically generated at time of tag registration and at end of event. Official registration tag is converted into attribute in accordance with some rules.
Attributes (that can be saved) desired to be used at events and saved can also be registered.
Self-introduction text
Various histories
Authentication e-mail address
Password
Private information
Name, age, gender, address, phone number, used e-mail address
Company information
Company name, person in charge, department name, address, phone number, used e-mail address
Account grade information
Charging Information
Payment method, billing-related information
Director name
Director tag
Director introduction text
Various histories
2020/5/13
Event management system
2

FIG. 3

Levels of scenario chart description

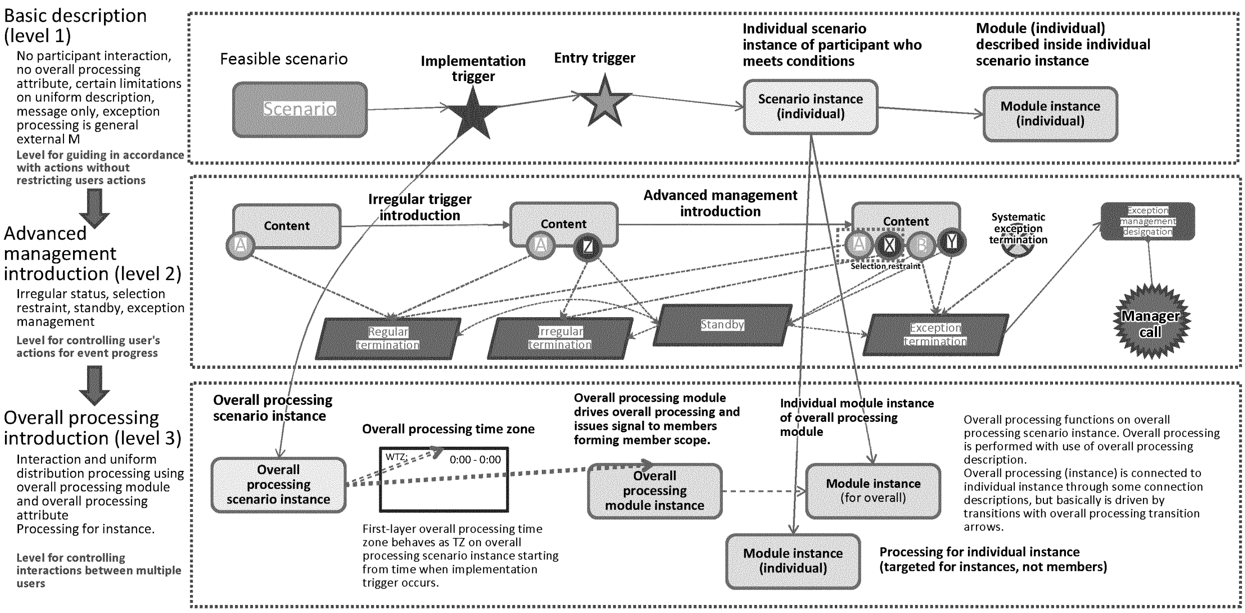


Since description of upper level becomes more complicated, it is necessary to provide gate for interface to take confirmation (in simple processing, overall processing description is limited to arrangement of overall processing module).

FIG. 4 Trigger

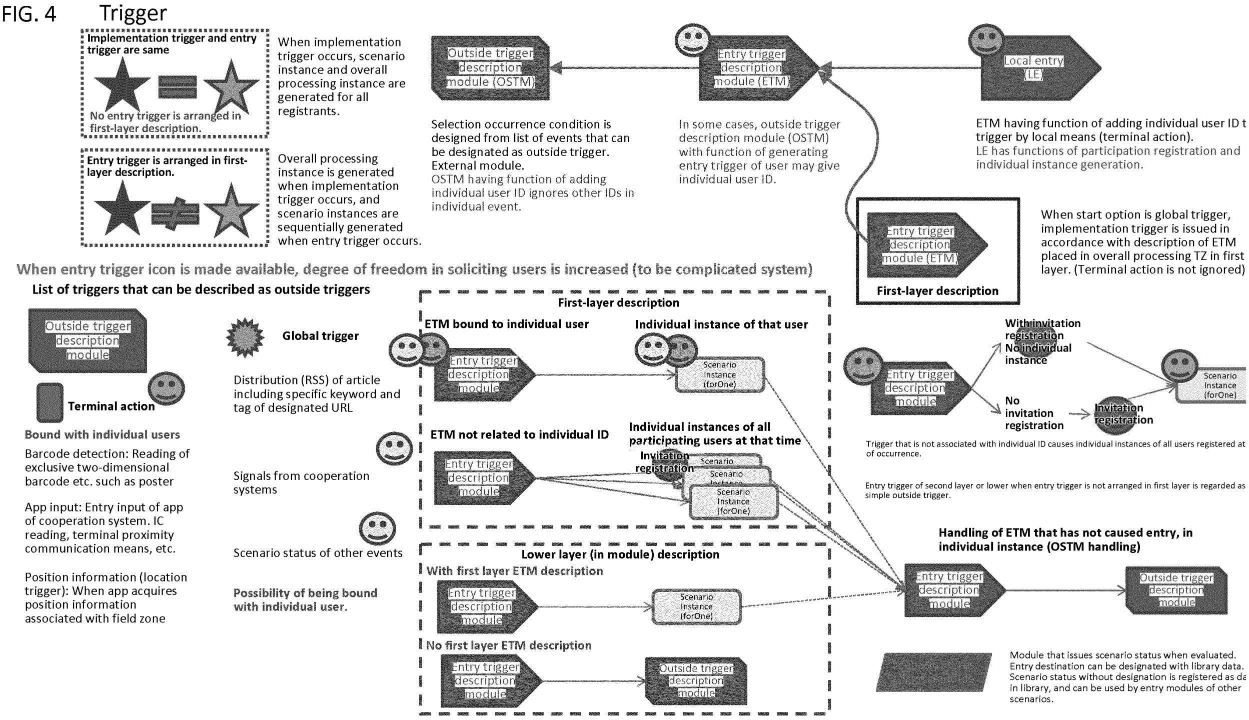

FIG. 5

## Relationship between scope of contents and attributes, and instances

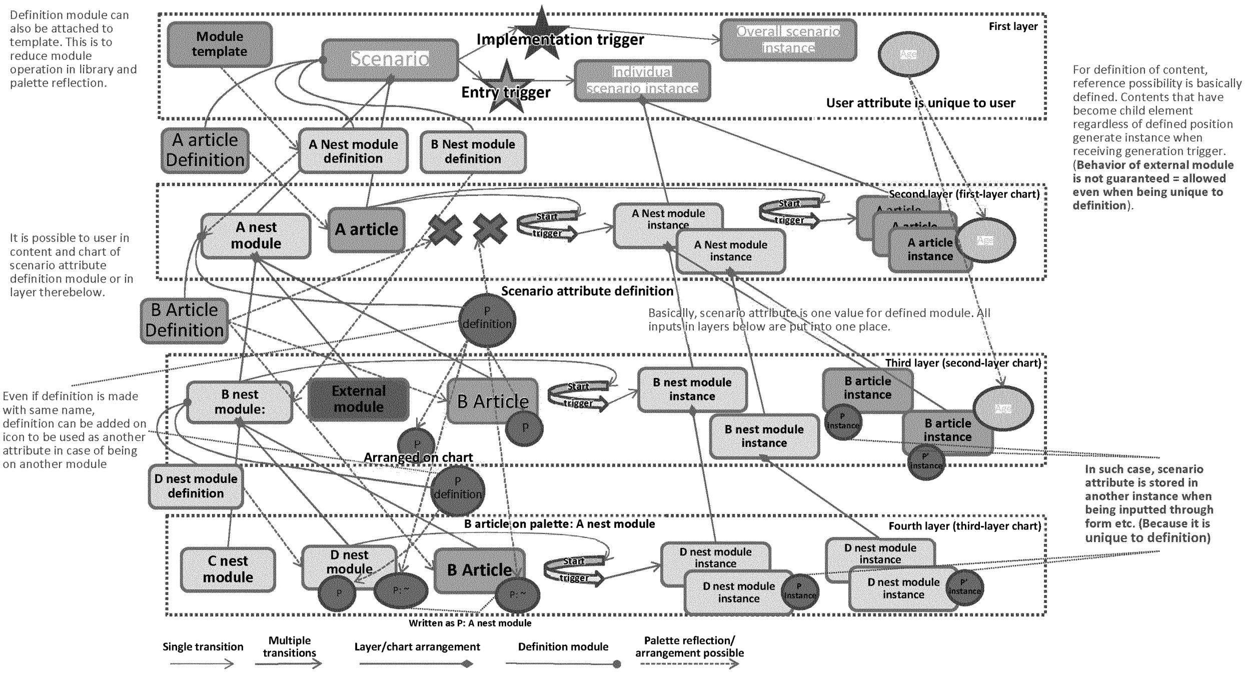

FIG. 6 User screen transition

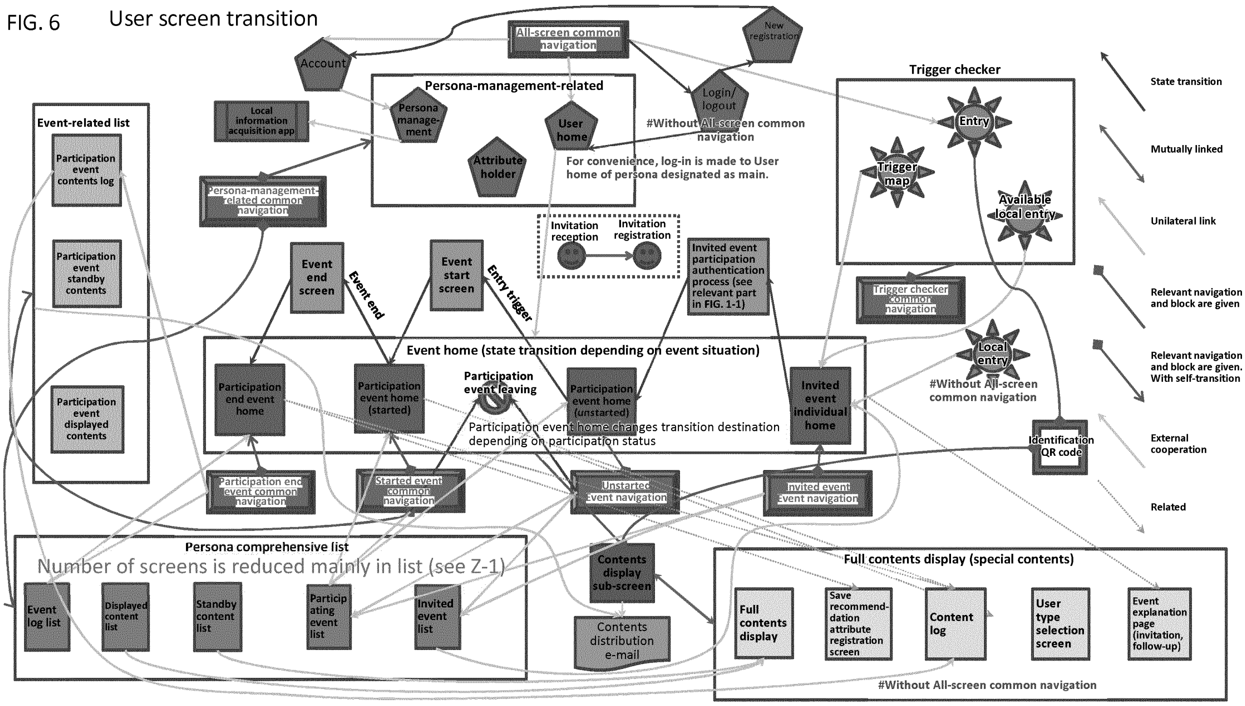

FIG. 7

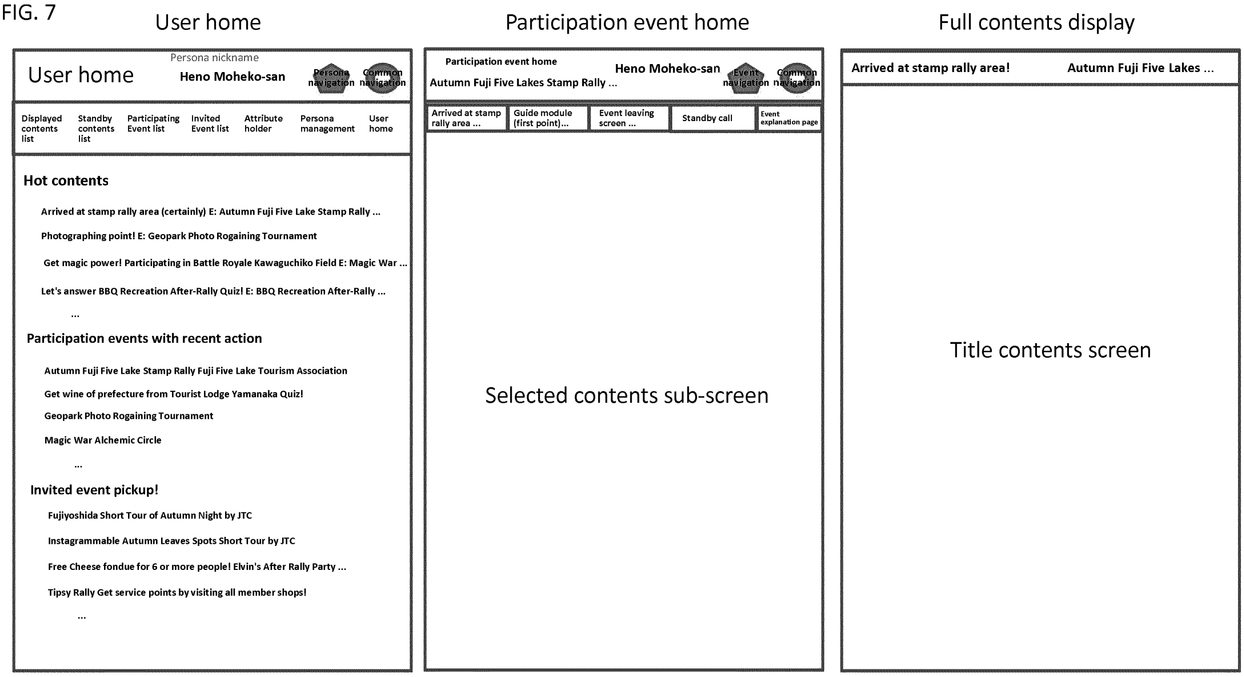
User home
Participation event home
Full contents display
Persona nickname
User home
Heno Moheko-san
Persona navigation
Common navigation
Displayed contents list
Standby contents list
Participating Event list
Invited Event list
Attribute holder
Persona management
User home
Hot contents
Arrived at stamp rally area (certainly) E: Autumn Fuji Five Lake Stamp Rally ...
Photographing point! E: Geopark Photo Rogaining Tournament
Get magic power! Participating in Battle Royale Kawaguchiko Field E: Magic War ...
Let's answer BBQ Recreation After-Rally Quiz! E: BBQ Recreation After-Rally ...
...
Participation events with recent action
Autumn Fuji Five Lake Stamp Rally Fuji Five Lake Tourism Association
Get wine of prefecture from Tourist Lodge Yamanaka Quiz!
Geopark Photo Rogaining Tournament
Magic War Alchemic Circle
...
Invited event pickup!
Fujiyoshida Short Tour of Autumn Night by JTC
Instagrammable Autumn Leaves Spots Short Tour by JTC
Free Cheese fondue for 6 or more people! Elvin's After Rally Party ...
Tipsy Rally Get service points by visiting all member shops!
...
Participation event home
Autumn Fuji Five Lakes Stamp Rally ...
Heno Moheko-san
Event navigation
Common navigation
Arrived at stamp rally area ...
Guide module (first point)...
Event leaving screen ...
Standby call
Event explanation page
Selected contents sub-screen
Arrived at stamp rally area!
Autumn Fuji Five Lakes ...
Title contents screen

FIG. 8

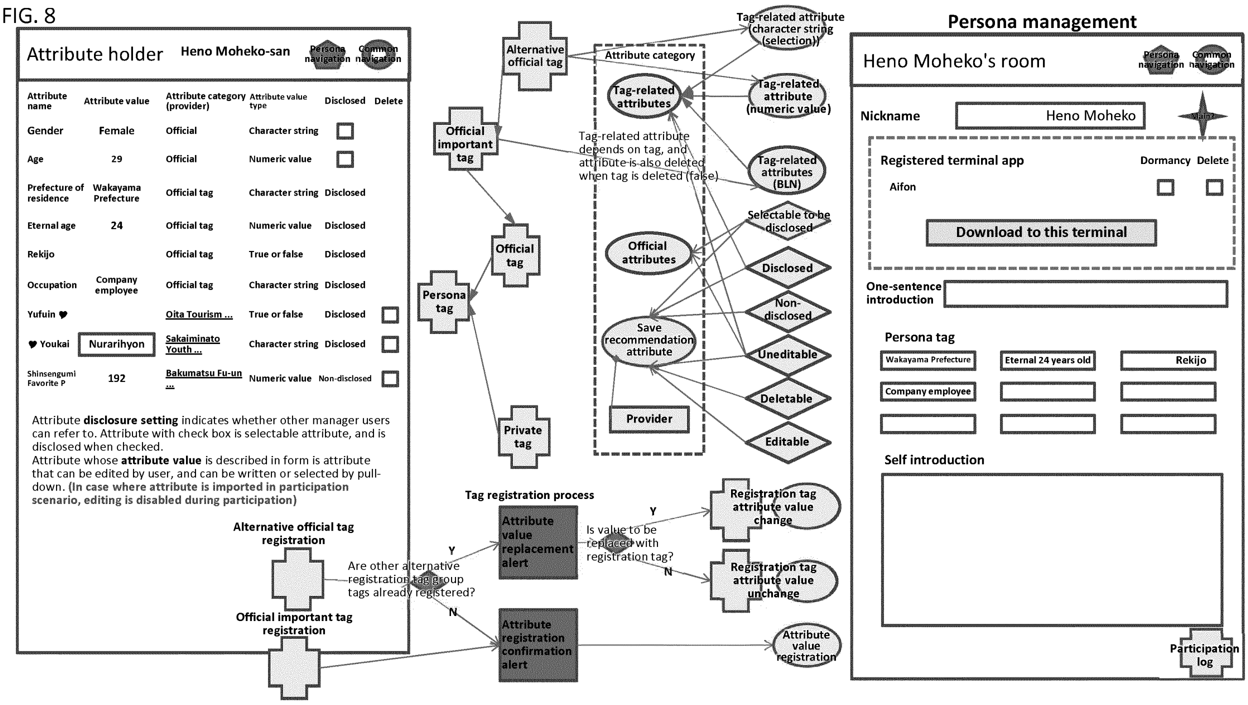
Attribute holder
Heno Moheko-san
Persona navigation
Common navigation
Attribute name | Attribute value | Attribute category (provider) | Attribute value type | Disclosed | Delete
Gender | Female | Official | Character string
Age | 29 | Official | Numeric value
Prefecture of residence | Wakayama Prefecture | Official tag | Character string | Disclosed
Eternal age | 24 | Official tag | Numeric value | Disclosed
Rekijo | | Official tag | True or false | Disclosed
Occupation | Company employee | Official tag | Character string | Disclosed
Yufuin | | Oita Tourism ... | True or false | Disclosed
Youkai | Nurarihyon | Sakaiminato Youth ... | Character string | Disclosed
Shinsengumi Favorite P | 192 | Bakumatsu Fu-un ... | Numeric value | Non-disclosed
Attribute disclosure setting indicates whether other manager users can refer to. Attribute with check box is selectable attribute, and is disclosed when checked.
Attribute whose attribute value is described in form is attribute that can be edited by user, and can be written or selected by pull-down. (In case where attribute is imported in participation scenario, editing is disabled during participation)
Alternative official tag registration
Official important tag registration
Are other alternative registration tag group tags already registered?
Y
N
Tag registration process
Attribute value replacement alert
Attribute registration confirmation alert
Is value to be replaced with registration tag?
Registration tag attribute value change
Registration tag attribute value unchange
Attribute value registration
Alternative official tag
Official important tag
Official tag
Persona tag
Private tag
Attribute category
Tag-related attributes
Tag-related attribute depends on tag, and attribute is also deleted when tag is deleted (false)
Official attributes
Save recommendation attribute
Provider
Tag-related attribute (character string (selection))
Tag-related attribute (numeric value)
Tag-related attributes (BLN)
Selectable to be disclosed
Disclosed
Non-disclosed
Uneditable
Deletable
Editable
Persona management
Heno Moheko's room
Nickname
Heno Moheko
Registered terminal app
Dormancy
Delete
Aifon
Download to this terminal
One-sentence introduction
Persona tag
Wakayama Prefecture
Eternal 24 years old
Rekijo
Company employee
Self introduction
Participation log

FIG. 9

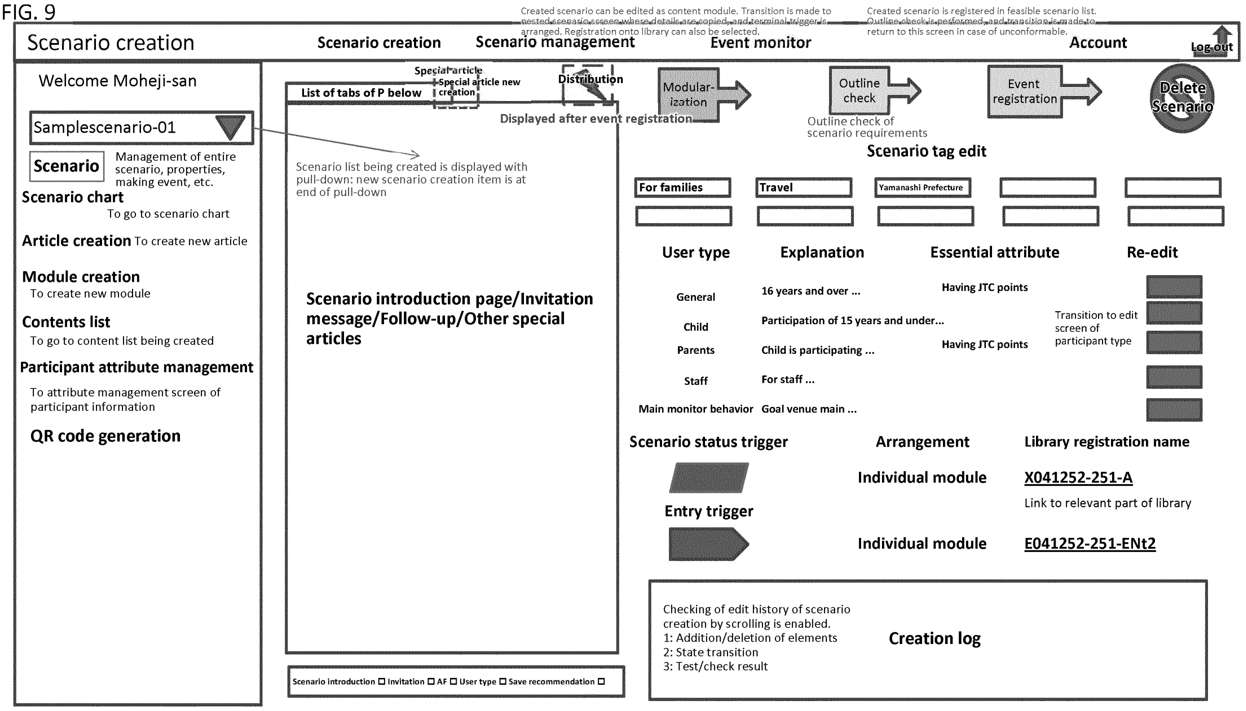
Created scenario can be edited as content module. Transition is made to nested scenario screen where details are copied, and terminal trigger is arranged. Registration onto library can also be selected.
Created scenario is registered in feasible scenario list. Outline check is performed, and transition is made to return to this screen in case of unconformable.
Scenario creation
Scenario creation
Scenario management
Event monitor
Account
Log out
Welcome Moheji-san
Samplescenario-01
Scenario
Management of entire scenario, properties, making event, etc.
Scenario chart
To go to scenario chart
Article creation To create new article
Module creation
To create new module
Contents list
To go to content list being created
Participant attribute management
To attribute management screen of participant information
QR code generation
Special article
List of tabs of P below
Special article new creation
Distribution
Displayed after event registration
Scenario list being created is displayed with pull-down: new scenario creation item is at end of pull-down
Scenario introduction page/Invitation message/Follow-up/Other special articles
Scenario introduction ☐ Invitation ☐ AF ☐ User type ☐ Save recommendation ☐
Modular-ization
Outline check
Outline check of scenario requirements
Event registration
Delete Scenario
Scenario tag edit
For families
Travel
Yamanashi Prefecture
User type
Explanation
Essential attribute
Re-edit
General
16 years and over ...
Having JTC points
Child
Participation of 15 years and under...
Transition to edit screen of participant type
Parents
Child is participating ...
Having JTC points
Staff
For staff ...
Main monitor behavior
Goal venue main ...
Scenario status trigger
Arrangement
Library registration name
Individual module
X041252-251-A
Link to relevant part of library
Entry trigger
Individual module
E041252-251-ENt2
Checking of edit history of scenario creation by scrolling is enabled.
1: Addition/deletion of elements
2: State transition
3: Test/check result
Creation log

FIG. 10

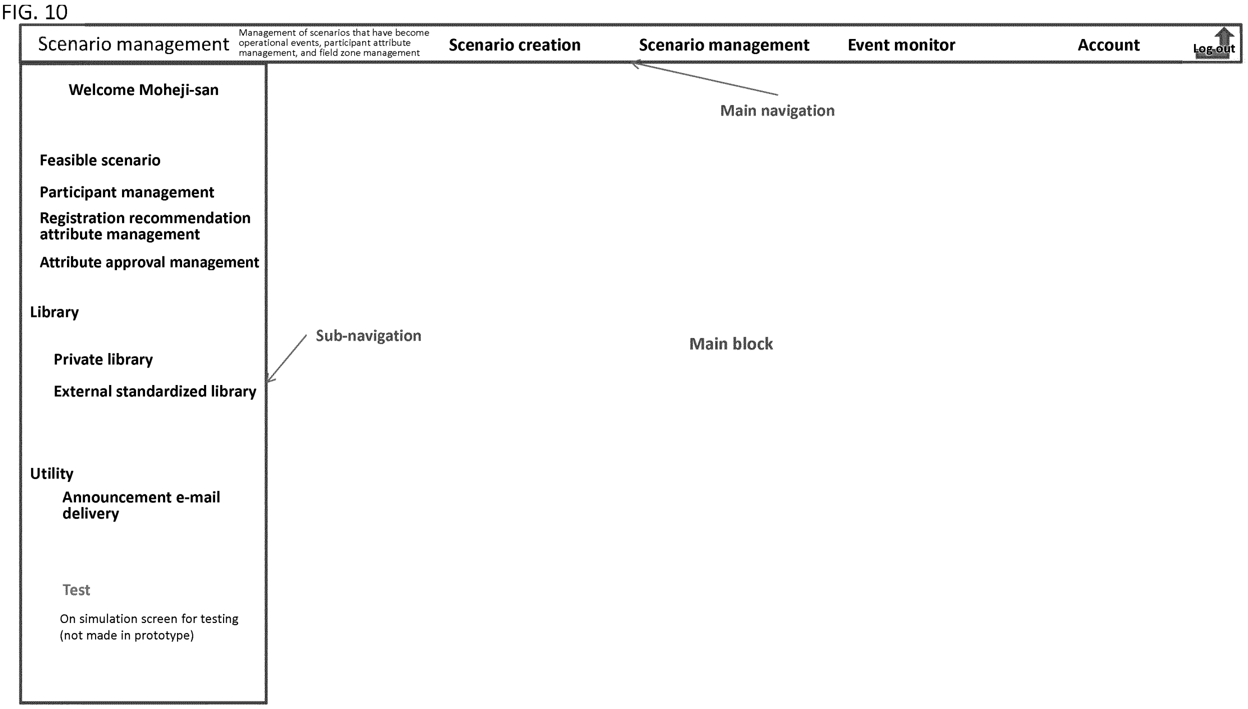
Scenario management
Management of scenarios that have become operational events, participant attribute management, and field zone management
Scenario creation
Scenario management
Event monitor
Account
Log out
Main navigation
Welcome Moheji-san
Feasible scenario
Participant management
Registration recommendation attribute management
Attribute approval management
Library
Private library
External standardized library
Sub-navigation
Main block
Utility
Announcement e-mail delivery
Test
On simulation screen for testing (not made in prototype)

FIG. 11

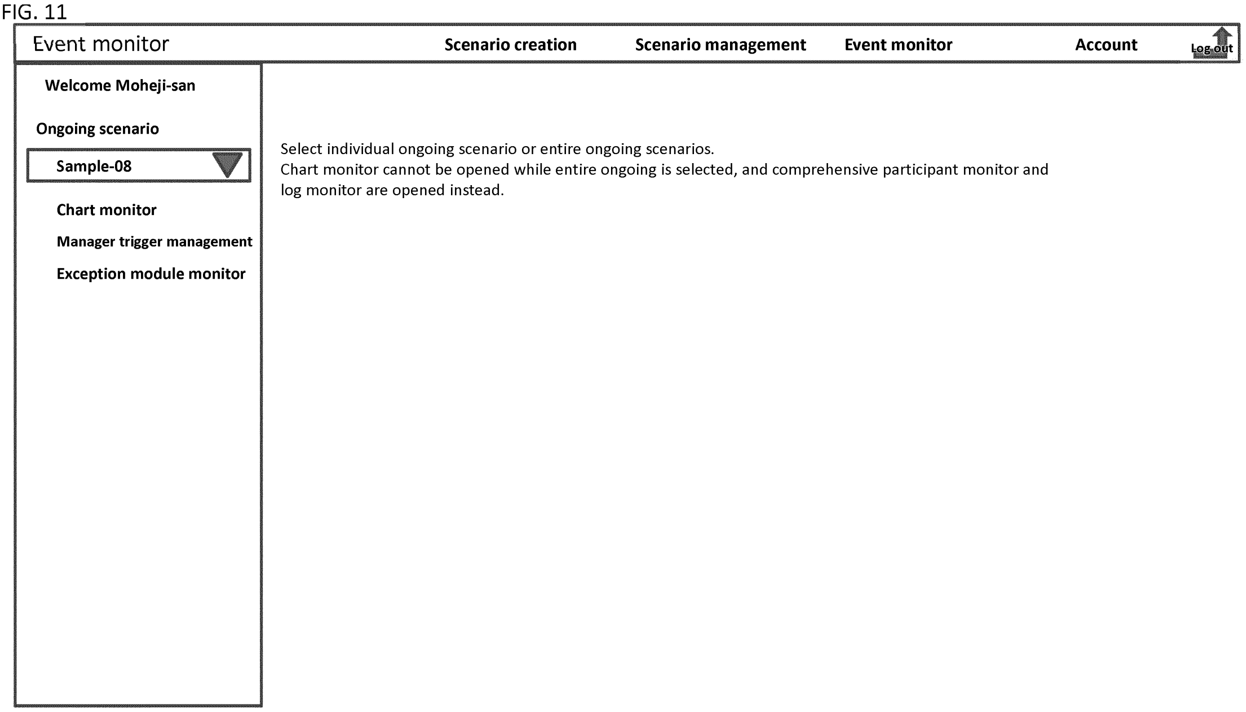
Event monitor
Scenario creation
Scenario management
Event monitor
Account
Log out
Welcome Moheji-san
Ongoing scenario
Sample-08
Chart monitor
Manager trigger management
Exception module monitor
Select individual ongoing scenario or entire ongoing scenarios.
Chart monitor cannot be opened while entire ongoing is selected, and comprehensive participant monitor and log monitor are opened instead.

FIG. 12

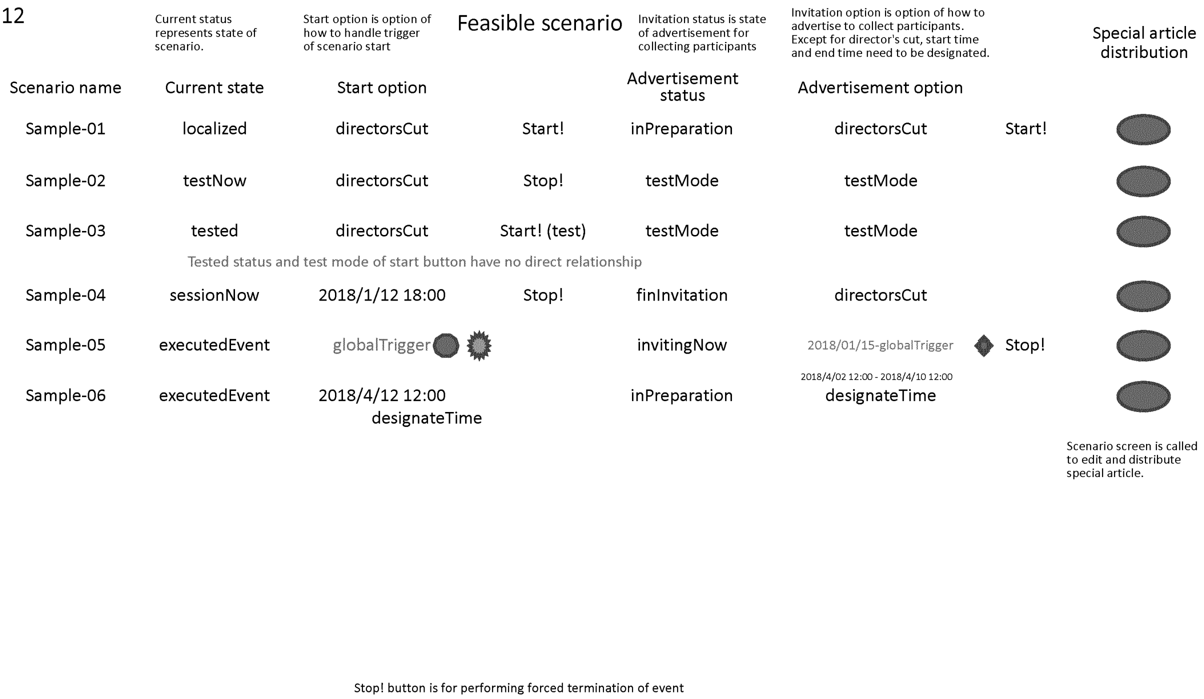
Current status represents state of scenario.
Start option is option of how to handle trigger of scenario start
Feasible scenario
Invitation status is state of advertisement for collecting participants
Invitation option is option of how to advertise to collect participants. Except for director's cut, start time and end time need to be designated.
Special article distribution
Scenario name
Current state
Start option
Advertisement status
Advertisement option
Sample-01
localized
directorsCut
Start!
inPreparation
directorsCut
Start!
Sample-02
testNow
directorsCut
Stop!
testMode
testMode
Sample-03
tested
directorsCut
Start! (test)
testMode
testMode
Tested status and test mode of start button have no direct relationship
Sample-04
sessionNow
2018/1/12 18:00
Stop!
finInvitation
directorsCut
Sample-05
executedEvent
globalTrigger
invitingNow
2018/01/15-globalTrigger
Stop!
Sample-06
executedEvent
2018/4/12 12:00
designateTime
inPreparation
2018/4/02 12:00 - 2018/4/10 12:00
designateTime
Scenario screen is called to edit and distribute special article.
Stop! button is for performing forced termination of event

FIG. 13

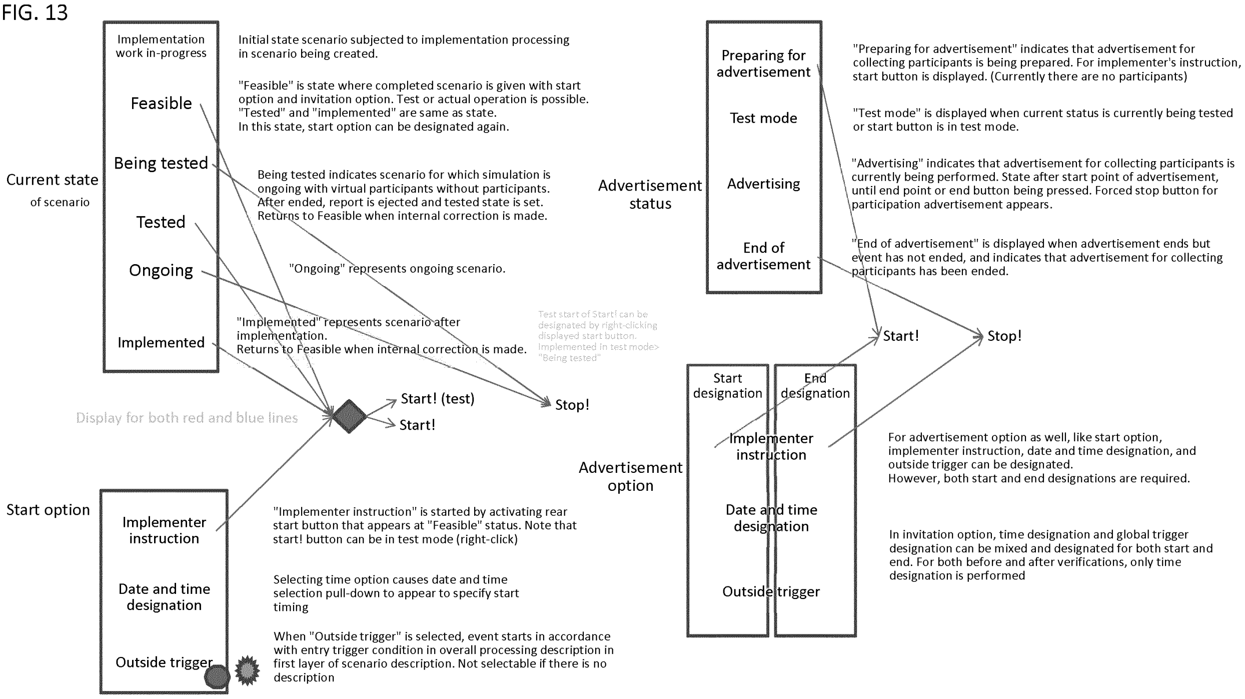
Current state
of scenario
Implementation work in-progress
Initial state scenario subjected to implementation processing in scenario being created.
Feasible
"Feasible" is state where completed scenario is given with start option and invitation option. Test or actual operation is possible. "Tested" and "implemented" are same as state. In this state, start option can be designated again.
Being tested
Being tested indicates scenario for which simulation is ongoing with virtual participants without participants. After ended, report is ejected and tested state is set. Returns to Feasible when internal correction is made.
Tested
Ongoing
"Ongoing" represents ongoing scenario.
Implemented
"Implemented" represents scenario after implementation. Returns to Feasible when internal correction is made.
Test start of Start! can be designated by right-clicking displayed start button. Implemented in test mode> "Being tested"
Display for both red and blue lines
Start! (test)
Start!
Stop!
Start option
Implementer instruction
"Implementer instruction" is started by activating rear start button that appears at "Feasible" status. Note that start! button can be in test mode (right-click)
Date and time designation
Selecting time option causes date and time selection pull-down to appear to specify start timing
Outside trigger
When "Outside trigger" is selected, event starts in accordance with entry trigger condition in overall processing description in first layer of scenario description. Not selectable if there is no description
Advertisement status
Preparing for advertisement
"Preparing for advertisement" indicates that advertisement for collecting participants is being prepared. For implementer's instruction, start button is displayed. (Currently there are no participants)
Test mode
"Test mode" is displayed when current status is currently being tested or start button is in test mode.
Advertising
"Advertising" indicates that advertisement for collecting participants is currently being performed. State after start point of advertisement, until end point or end button being pressed. Forced stop button for participation advertisement appears.
End of advertisement
"End of advertisement" is displayed when advertisement ends but event has not ended, and indicates that advertisement for collecting participants has been ended.
Start!
Stop!
Advertisement option
Start designation
End designation
Implementer instruction
Date and time designation
Outside trigger
For advertisement option as well, like start option, implementer instruction, date and time designation, and outside trigger can be designated. However, both start and end designations are required.
In invitation option, time designation and global trigger designation can be mixed and designated for both start and end. For both before and after verifications, only time designation is performed

FIG. 14

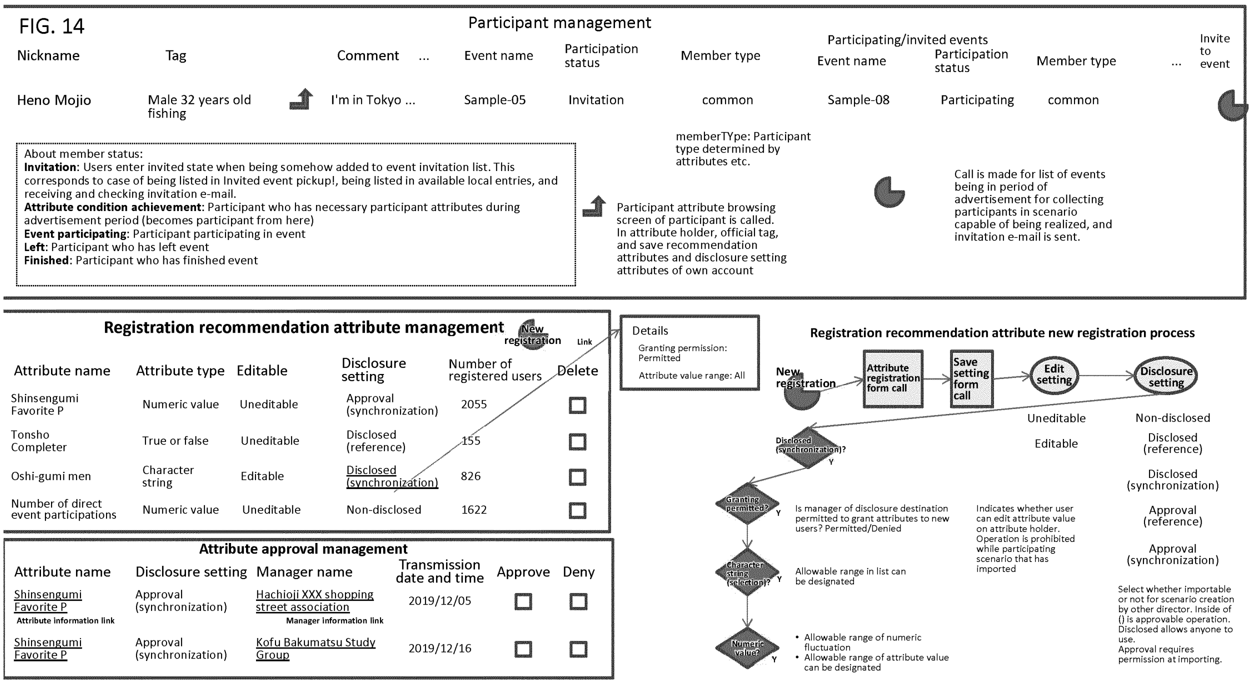
Participant management
Nickname
Tag
Comment ...
Event name
Participation status
Member type
Participating/invited events
Event name
Participation status
Member type
...
Invite to event
Heno Mojio
Male 32 years old fishing
I'm in Tokyo ...
Sample-05
Invitation
common
Sample-08
Participating
common
About member status:
Invitation: Users enter invited state when being somehow added to event invitation list. This corresponds to case of being listed in Invited event pickup!, being listed in available local entries, and receiving and checking invitation e-mail.
Attribute condition achievement: Participant who has necessary participant attributes during advertisement period (becomes participant from here)
Event participating: Participant participating in event
Left: Participant who has left event
Finished: Participant who has finished event
memberTYpe: Participant type determined by attributes etc.
Participant attribute browsing screen of participant is called. In attribute holder, official tag, and save recommendation attributes and disclosure setting attributes of own account
Call is made for list of events being in period of advertisement for collecting participants in scenario capable of being realized, and invitation e-mail is sent.
Registration recommendation attribute management
New registration
Link
Attribute name
Attribute type
Editable
Disclosure setting
Number of registered users
Delete
Shinsengumi Favorite P
Numeric value
Uneditable
Approval (synchronization)
2055
Tonsho Completer
True or false
Uneditable
Disclosed (reference)
155
Oshi-gumi men
Character string
Editable
Disclosed (synchronization)
826
Number of direct event participations
Numeric value
Uneditable
Non-disclosed
1622
Details
Granting permission: Permitted
Attribute value range: All
Attribute approval management
Attribute name
Disclosure setting
Manager name
Transmission date and time
Approve
Deny
Shinsengumi Favorite P
Attribute information link
Approval (synchronization)
Hachioji XXX shopping street association
Manager information link
2019/12/05
Shinsengumi Favorite P
Approval (synchronization)
Kofu Bakumatsu Study Group
2019/12/16
Registration recommendation attribute new registration process
New registration
Attribute registration form call
Save setting form call
Edit setting
Disclosure setting
Uneditable
Editable
Non-disclosed
Disclosed (reference)
Disclosed (synchronization)
Approval (reference)
Approval (synchronization)
Disclosed (synchronization)?
Y
Granting permitted?
Y
Is manager of disclosure destination permitted to grant attributes to new users? Permitted/Denied
Indicates whether user can edit attribute value on attribute holder. Operation is prohibited while participating scenario that has imported
Character string (selection)?
Y
Allowable range in list can be designated
Numeric value?
Y
• Allowable range of numeric fluctuation
• Allowable range of attribute value can be designated
Select whether importable or not for scenario creation by other director. Inside of () is approvable operation. Disclosed allows anyone to use.
Approval requires permission at importing.

FIG. 15

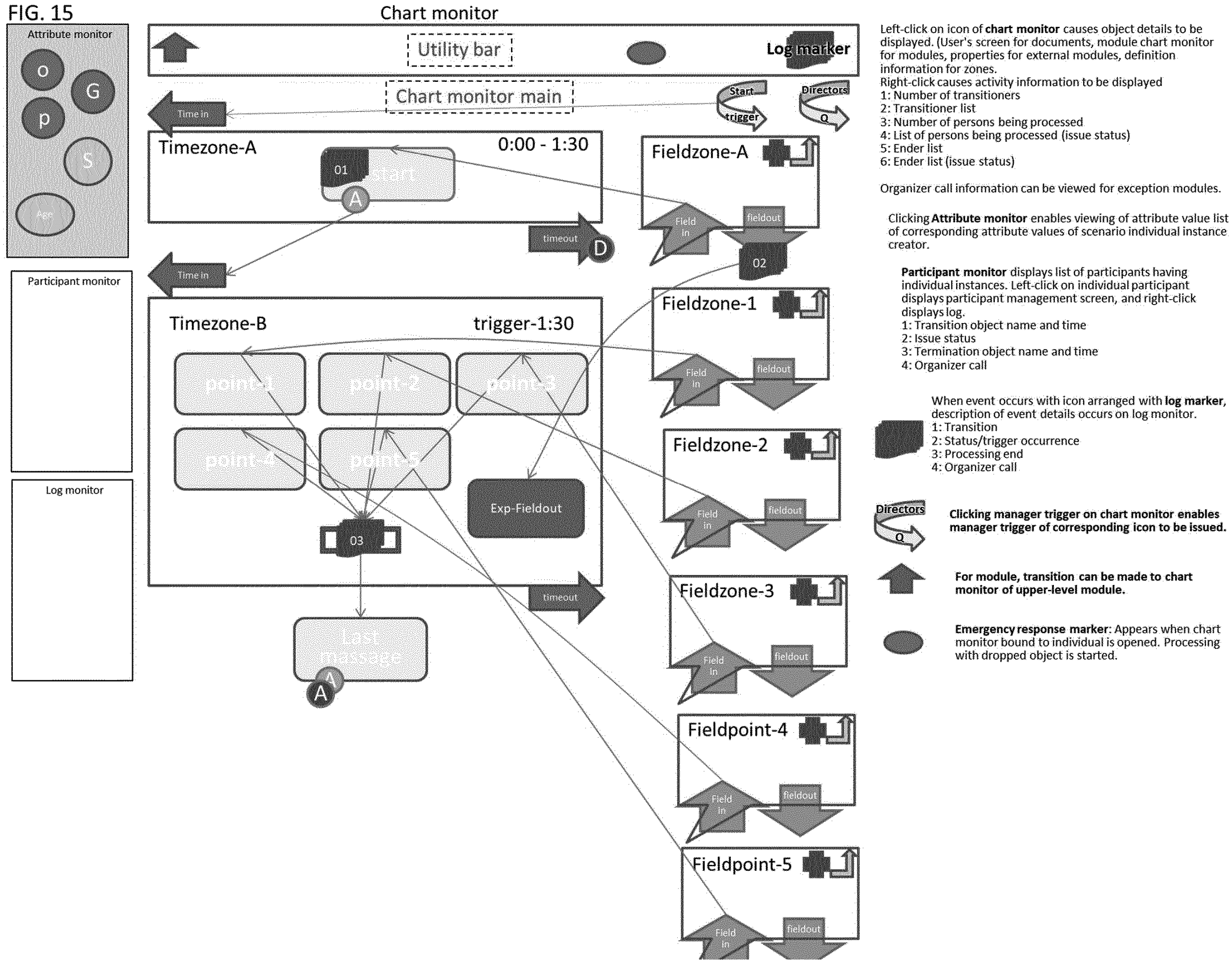
Chart monitor
Attribute monitor
o
G
p
S
Age
Participant monitor
Log monitor
Utility bar
Log marker
Chart monitor main
Start trigger
Directors Q
Time in
Timezone-A
0:00 - 1:30
01
start
A
timeout
D
Time in
Timezone-B
trigger-1:30
point-1
point-2
point-3
point-4
point-5
Exp-Fieldout
03
timeout
Last massage
A
Fieldzone-A
Field in
fieldout
02
Fieldzone-1
Fieldzone-2
Fieldzone-3
Fieldpoint-4
Fieldpoint-5
Left-click on icon of **chart monitor** causes object details to be displayed. (User's screen for documents, module chart monitor for modules, properties for external modules, definition information for zones.
Right-click causes activity information to be displayed
1: Number of transitioners
2: Transitioner list
3: Number of persons being processed
4: List of persons being processed (issue status)
5: Ender list
6: Ender list (issue status)
Organizer call information can be viewed for exception modules.
Clicking **Attribute monitor** enables viewing of attribute value list of corresponding attribute values of scenario individual instance creator.
**Participant monitor** displays list of participants having individual instances. Left-click on individual participant displays participant management screen, and right-click displays log.
1: Transition object name and time
2: Issue status
3: Termination object name and time
4: Organizer call
When event occurs with icon arranged with **log marker**, description of event details occurs on log monitor.
1: Transition
2: Status/trigger occurrence
3: Processing end
4: Organizer call
Directors Q
**Clicking manager trigger on chart monitor enables manager trigger of corresponding icon to be issued.**
**For module, transition can be made to chart monitor of upper-level module.**
**Emergency response marker**: Appears when chart monitor bound to individual is opened. Processing with dropped object is started.

FIG. 16

Exception module monitor

Manager trigger management

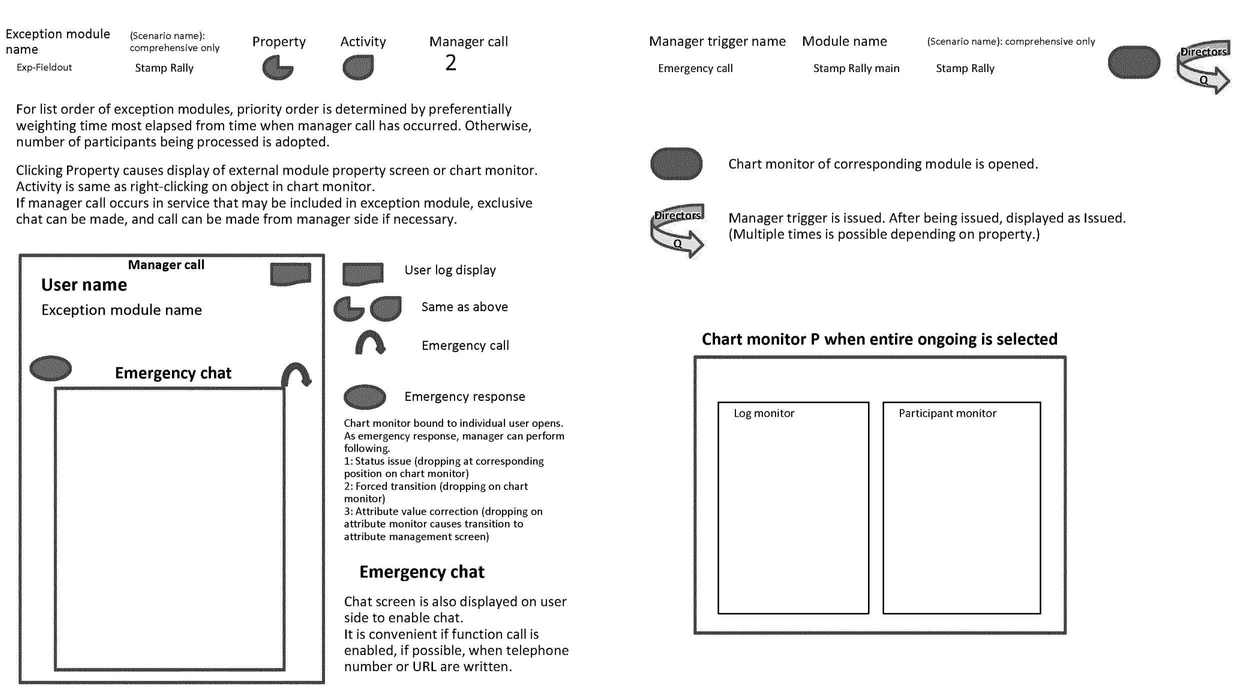

FIG. 17

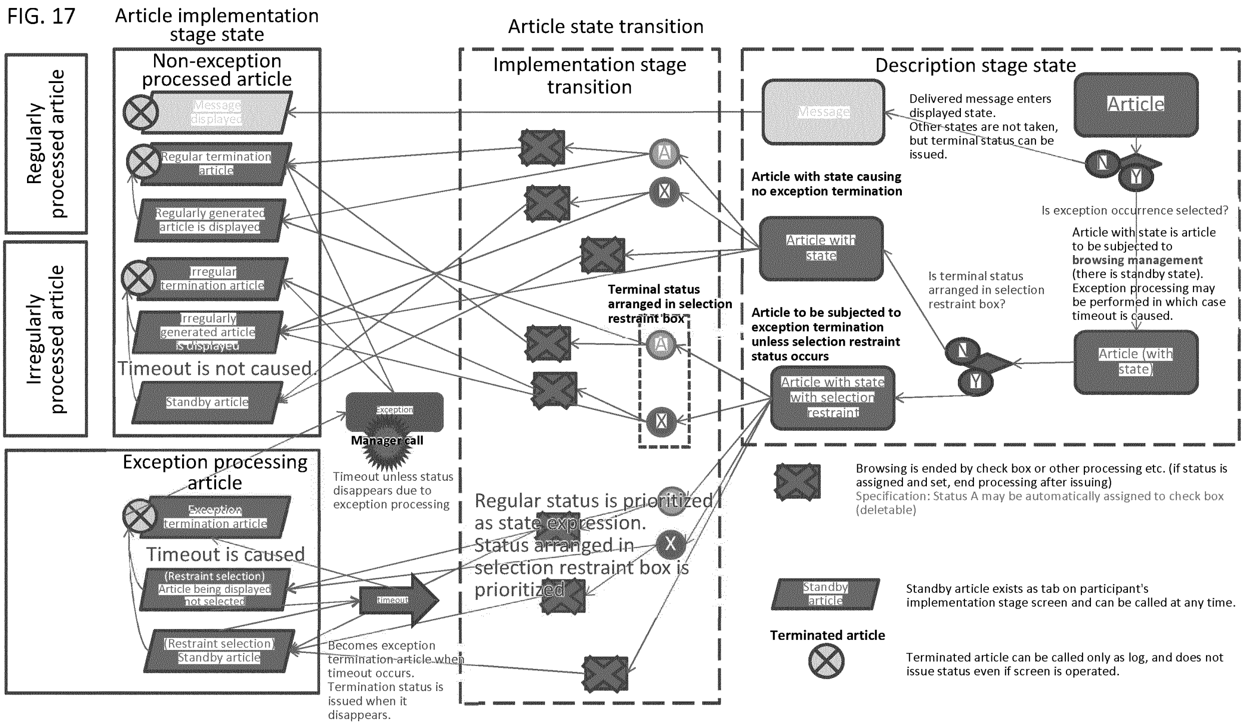
Article implementation stage state
Article state transition
Regularly processed article
Irregularly processed article
Non-exception processed article
Message displayed
Regular termination article
Regularly generated article is displayed
Irregular termination article
Irregularly generated article is displayed
Timeout is not caused.
Standby article
Exception
Manager call
Timeout unless status disappears due to exception processing
Exception processing article
Exception termination article
Timeout is caused
(Restraint selection) Article being displayed not selected
(Restraint selection) Standby article
Timeout
Becomes exception termination article when timeout occurs. Termination status is issued when it disappears.
Implementation stage transition
A
X
Terminal status arranged in selection restraint box
Regular status is prioritized as state expression. Status arranged in selection restraint box is prioritized
Description stage state
Message
Delivered message enters displayed state. Other states are not taken, but terminal status can be issued.
Article
N
Y
Is exception occurrence selected?
Article with state causing no exception termination
Article with state
Is terminal status arranged in selection restraint box?
Article with state is article to be subjected to browsing management (there is standby state). Exception processing may be performed in which case timeout is caused.
Article to be subjected to exception termination unless selection restraint status occurs
Article with state with selection restraint
Article (with state)
Browsing is ended by check box or other processing etc. (if status is assigned and set, end processing after issuing)
Specification: Status A may be automatically assigned to check box (deletable)
Standby article
Standby article exists as tab on participant's implementation stage screen and can be called at any time.
Terminated article
Terminated article can be called only as log, and does not issue status even if screen is operated.

FIG. 18

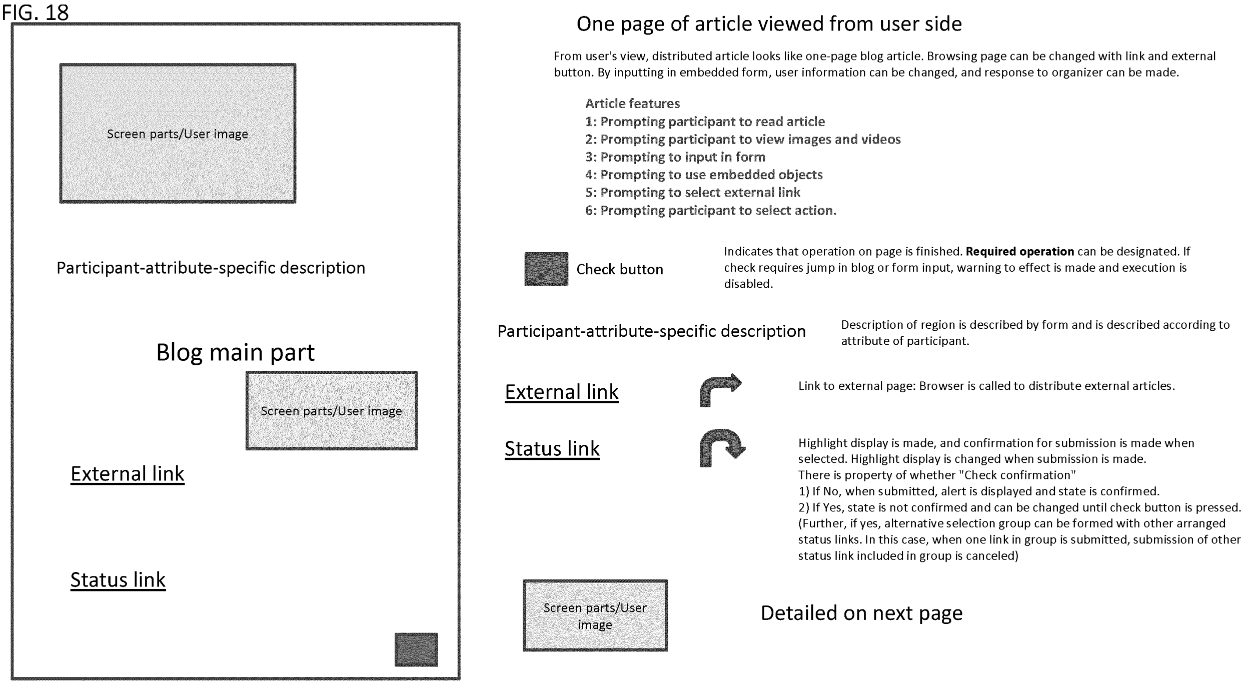
Screen parts/User image
Participant-attribute-specific description
Blog main part
Screen parts/User image
External link
Status link
One page of article viewed from user side
From user's view, distributed article looks like one-page blog article. Browsing page can be changed with link and external button. By inputting in embedded form, user information can be changed, and response to organizer can be made.
Article features
1: Prompting participant to read article
2: Prompting participant to view images and videos
3: Prompting to input in form
4: Prompting to use embedded objects
5: Prompting to select external link
6: Prompting participant to select action.
Check button
Indicates that operation on page is finished. Required operation can be designated. If check requires jump in blog or form input, warning to effect is made and execution is disabled.
Participant-attribute-specific description
Description of region is described by form and is described according to attribute of participant.
External link
Link to external page: Browser is called to distribute external articles.
Status link
Highlight display is made, and confirmation for submission is made when selected. Highlight display is changed when submission is made.
There is property of whether "Check confirmation"
1) If No, when submitted, alert is displayed and state is confirmed.
2) If Yes, state is not confirmed and can be changed until check button is pressed. (Further, if yes, alternative selection group can be formed with other arranged status links. In this case, when one link in group is submitted, submission of other status link included in group is canceled)
Screen parts/User image
Detailed on next page

FIG. 19

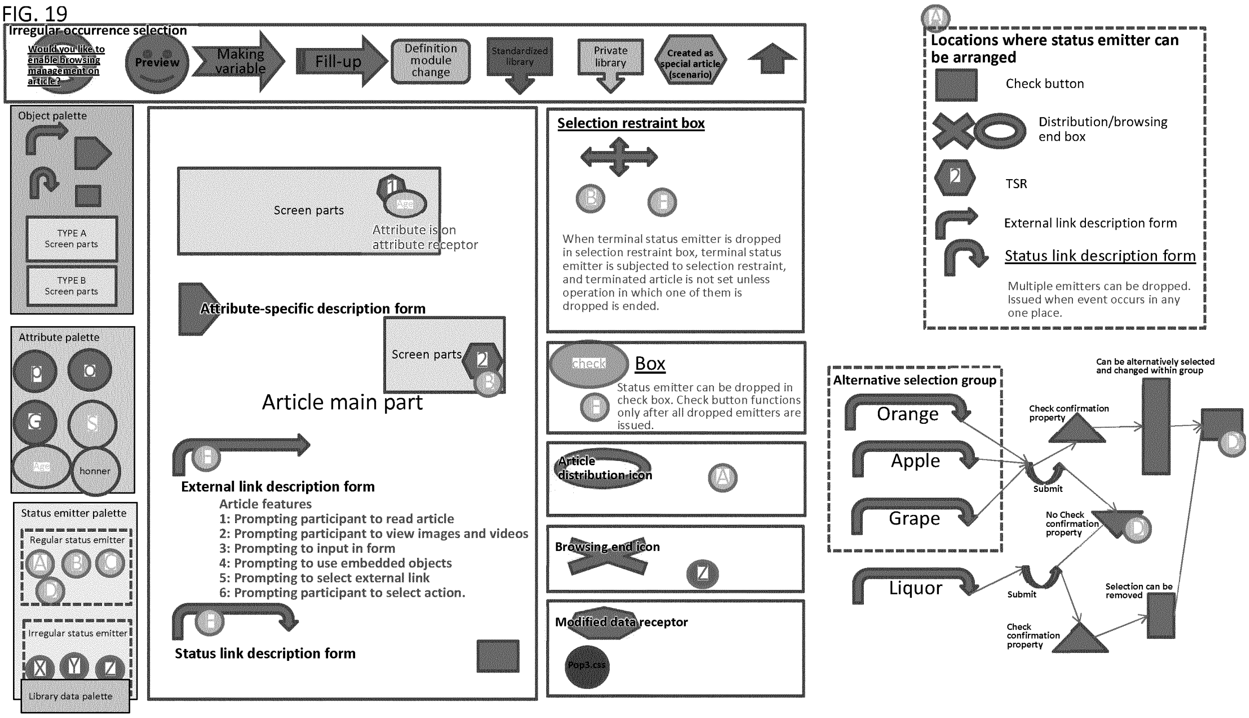
Irregular occurrence selection
Would you like to enable browsing management on article?
Preview
Making variable
Fill-up
Definition module change
Standardized library
Private library
Created as special article (scenario)
Object palette
TYPE A Screen parts
TYPE B Screen parts
Attribute palette
honner
Status emitter palette
Regular status emitter
Irregular status emitter
Library data palette
Screen parts
Attribute is on attribute receptor
Attribute-specific description form
Screen parts
Article main part
External link description form
Article features
1: Prompting participant to read article
2: Prompting participant to view images and videos
3: Prompting to input in form
4: Prompting to use embedded objects
5: Prompting to select external link
6: Prompting participant to select action.
Status link description form
Selection restraint box
When terminal status emitter is dropped in selection restraint box, terminal status emitter is subjected to selection restraint, and terminated article is not set unless operation in which one of them is dropped is ended.
check
Box
Status emitter can be dropped in check box. Check button functions only after all dropped emitters are issued.
Article distribution icon
Browsing end icon
Modified data receptor
Pop3.css
Locations where status emitter can be arranged
Check button
Distribution/browsing end box
TSR
External link description form
Status link description form
Multiple emitters can be dropped. Issued when event occurs in any one place.
Alternative selection group
Orange
Apple
Grape
Liquor
Can be alternatively selected and changed within group
Check confirmation property
Submit
No Check confirmation property
Submit
Selection can be removed
Check confirmation property

FIG. 20

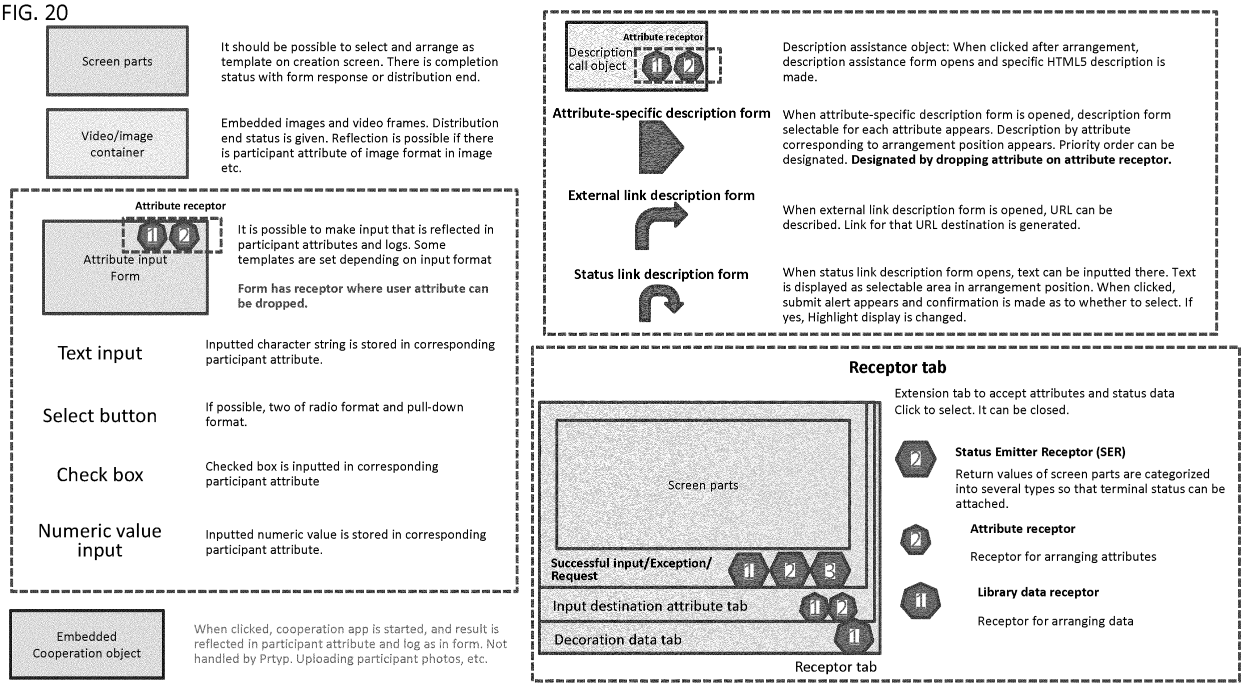
Screen parts
It should be possible to select and arrange as template on creation screen. There is completion status with form response or distribution end.
Video/image container
Embedded images and video frames. Distribution end status is given. Reflection is possible if there is participant attribute of image format in image etc.
Attribute receptor
Attribute input Form
It is possible to make input that is reflected in participant attributes and logs. Some templates are set depending on input format
Form has receptor where user attribute can be dropped.
Text input
Inputted character string is stored in corresponding participant attribute.
Select button
If possible, two of radio format and pull-down format.
Check box
Checked box is inputted in corresponding participant attribute
Numeric value input
Inputted numeric value is stored in corresponding participant attribute.
Embedded Cooperation object
When clicked, cooperation app is started, and result is reflected in participant attribute and log as in form. Not handled by Prtyp. Uploading participant photos, etc.
Attribute receptor
Description call object
Description assistance object: When clicked after arrangement, description assistance form opens and specific HTML5 description is made.
Attribute-specific description form
When attribute-specific description form is opened, description form selectable for each attribute appears. Description by attribute corresponding to arrangement position appears. Priority order can be designated. Designated by dropping attribute on attribute receptor.
External link description form
When external link description form is opened, URL can be described. Link for that URL destination is generated.
Status link description form
When status link description form opens, text can be inputted there. Text is displayed as selectable area in arrangement position. When clicked, submit alert appears and confirmation is made as to whether to select. If yes, Highlight display is changed.
Receptor tab
Extension tab to accept attributes and status data
Click to select. It can be closed.
Screen parts
Successful input/Exception/ Request
Input destination attribute tab
Decoration data tab
Receptor tab
Status Emitter Receptor (SER)
Return values of screen parts are categorized into several types so that terminal status can be attached.
Attribute receptor
Receptor for arranging attributes
Library data receptor
Receptor for arranging data

FIG. 21

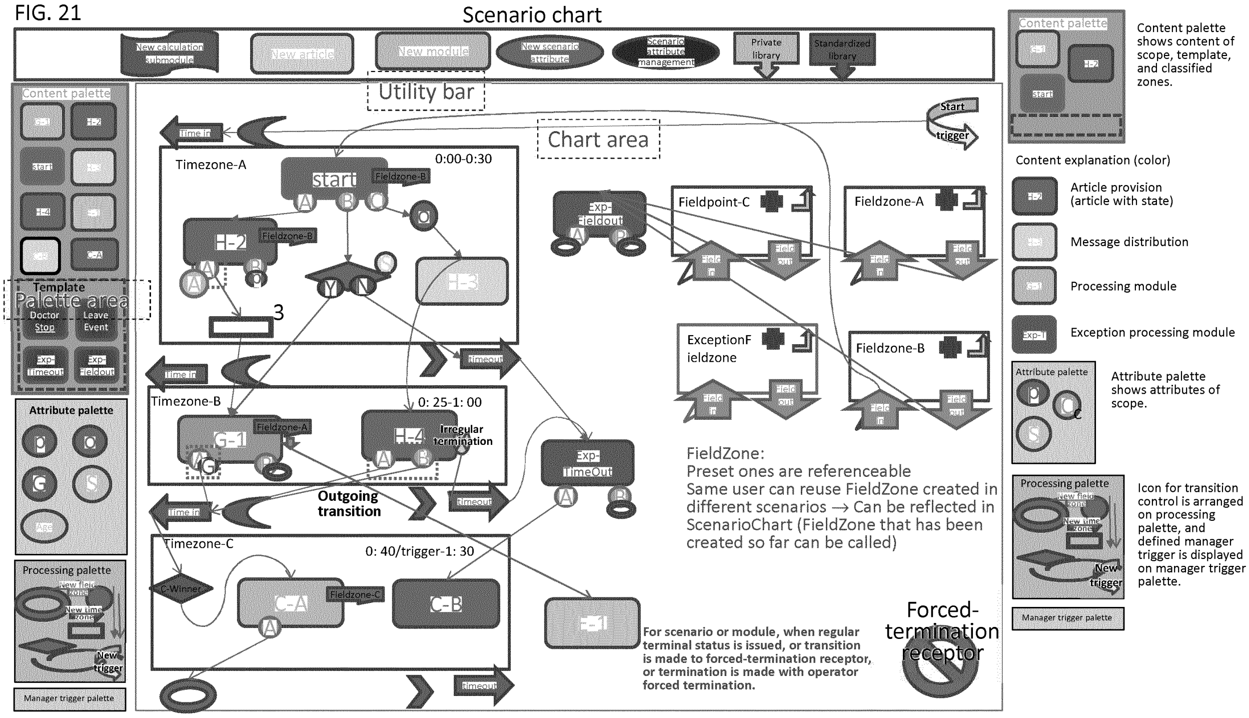

Scenario chart
New calculation submodule
New article
New module
New scenario attribute
Scenario attribute management
Private library
Standardized library
Utility bar
Chart area
Content palette
Template
Palette area
Doctor Stop
Leave Event
Exp-Timeout
Exp-Fieldout
Attribute palette
Processing palette
New field zone
New time zone
New trigger
Manager trigger palette
Start trigger
Time in
Timezone-A
0:00-0:30
start
Fieldzone-B
H-2
H-3
3
timeout
Timezone-B
0: 25-1: 00
G-1
Fieldzone-A
H-4
Irregular termination
Outgoing transition
Timezone-C
0: 40/trigger-1: 30
C-Winner
C-A
Fieldzone-C
C-B
Exp-Fieldout
Exp-TimeOut
Fieldpoint-C
Fieldzone-A
ExceptionFieldzone
Fieldzone-B
Field in
Field out
FieldZone:
Preset ones are referenceable
Same user can reuse FieldZone created in different scenarios → Can be reflected in ScenarioChart (FieldZone that has been created so far can be called)
For scenario or module, when regular terminal status is issued, or transition is made to forced-termination receptor, or termination is made with operator forced termination.
Forced-termination receptor
Content palette shows content of scope, template, and classified zones.
Content explanation (color)
Article provision (article with state)
Message distribution
Processing module
Exception processing module
Attribute palette shows attributes of scope.
Icon for transition control is arranged on processing palette, and defined manager trigger is displayed on manager trigger palette.

FIG. 22 **On chart, scenario attribute is in transition control mode except for special arrangement part.**

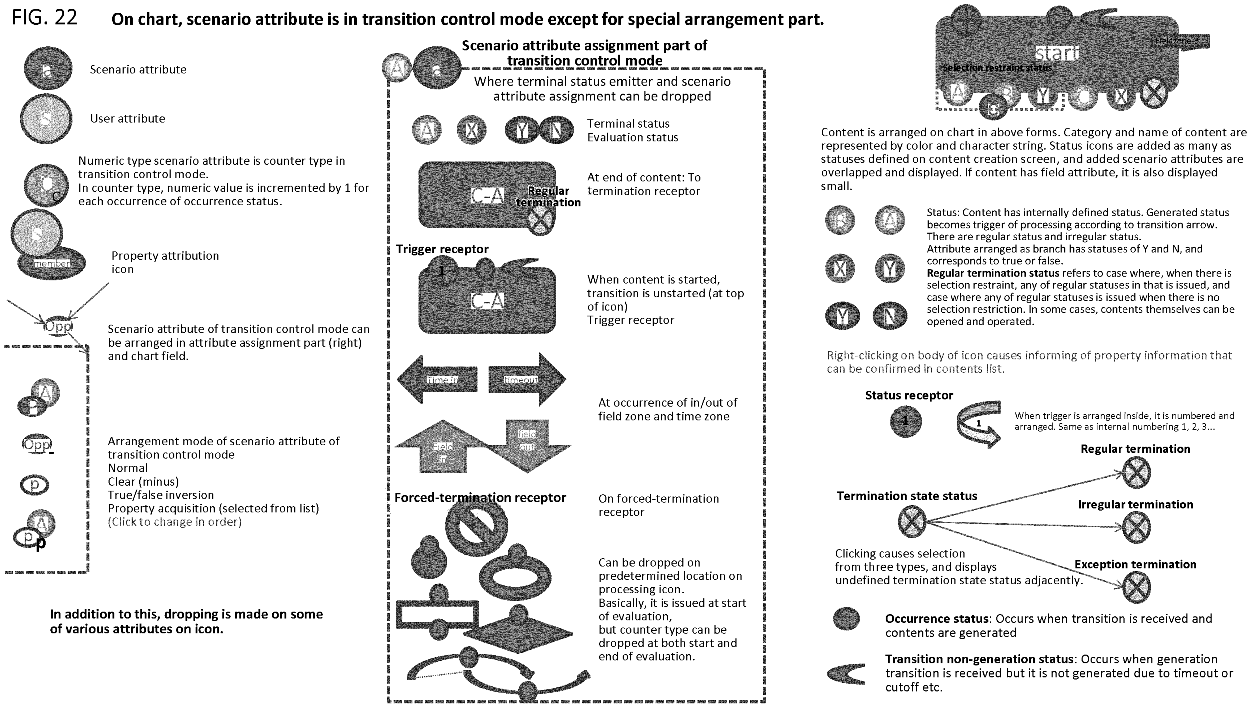

FIG. 23 Processing icon

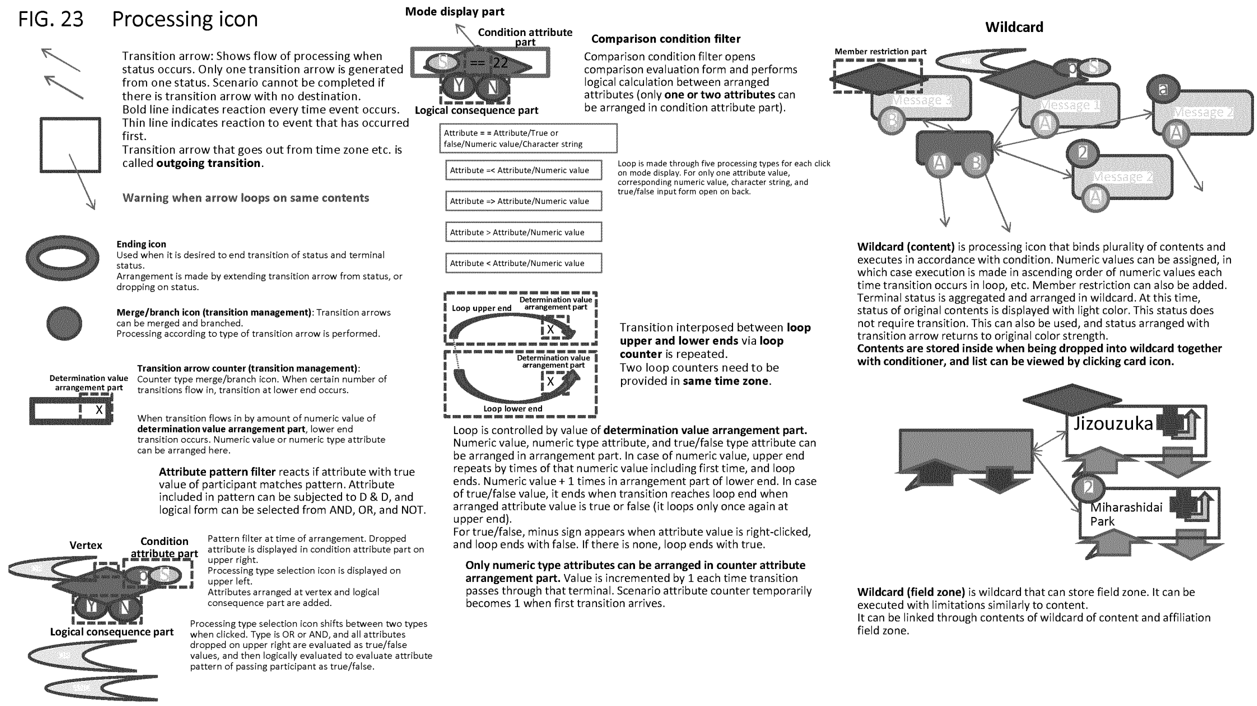

FIG. 24

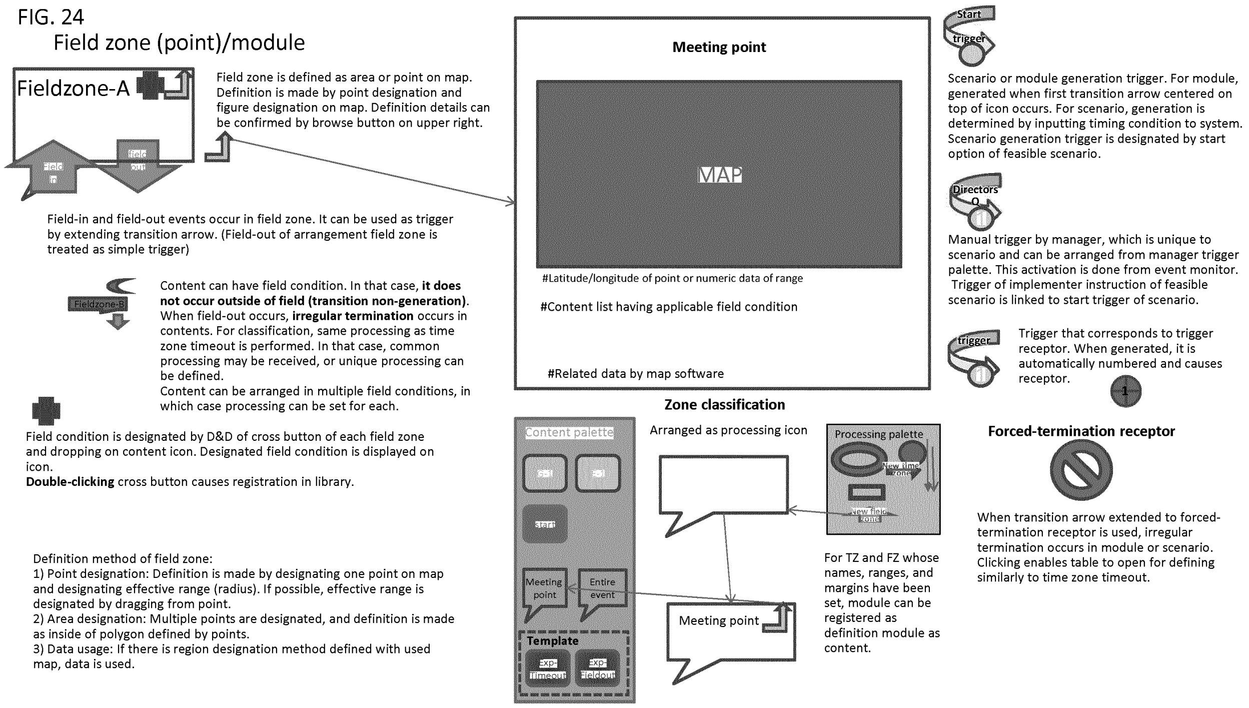
Field zone (point)/module
Fieldzone-A
Field in
Field out
Field zone is defined as area or point on map. Definition is made by point designation and figure designation on map. Definition details can be confirmed by browse button on upper right.
Field-in and field-out events occur in field zone. It can be used as trigger by extending transition arrow. (Field-out of arrangement field zone is treated as simple trigger)
Fieldzone-B
Content can have field condition. In that case, it does not occur outside of field (transition non-generation). When field-out occurs, irregular termination occurs in contents. For classification, same processing as time zone timeout is performed. In that case, common processing may be received, or unique processing can be defined.
Content can be arranged in multiple field conditions, in which case processing can be set for each.
Field condition is designated by D&D of cross button of each field zone and dropping on content icon. Designated field condition is displayed on icon.
Double-clicking cross button causes registration in library.
Definition method of field zone:
1) Point designation: Definition is made by designating one point on map and designating effective range (radius). If possible, effective range is designated by dragging from point.
2) Area designation: Multiple points are designated, and definition is made as inside of polygon defined by points.
3) Data usage: If there is region designation method defined with used map, data is used.
Meeting point
MAP
#Latitude/longitude of point or numeric data of range
#Content list having applicable field condition
#Related data by map software
Zone classification
Content palette
start
Meeting point
Entire event
Template
exp-Timeout
exp-Fieldout
Arranged as processing icon
Processing palette
New time zone
Meeting point
For TZ and FZ whose names, ranges, and margins have been set, module can be registered as definition module as content.
Start trigger
Scenario or module generation trigger. For module, generated when first transition arrow centered on top of icon occurs. For scenario, generation is determined by inputting timing condition to system. Scenario generation trigger is designated by start option of feasible scenario.
Directors Q
Manual trigger by manager, which is unique to scenario and can be arranged from manager trigger palette. This activation is done from event monitor. Trigger of implementer instruction of feasible scenario is linked to start trigger of scenario.
trigger
Trigger that corresponds to trigger receptor. When generated, it is automatically numbered and causes receptor.
1
Forced-termination receptor
When transition arrow extended to forced-termination receptor is used, irregular termination occurs in module or scenario. Clicking enables table to open for defining similarly to time zone timeout.

FIG. 25

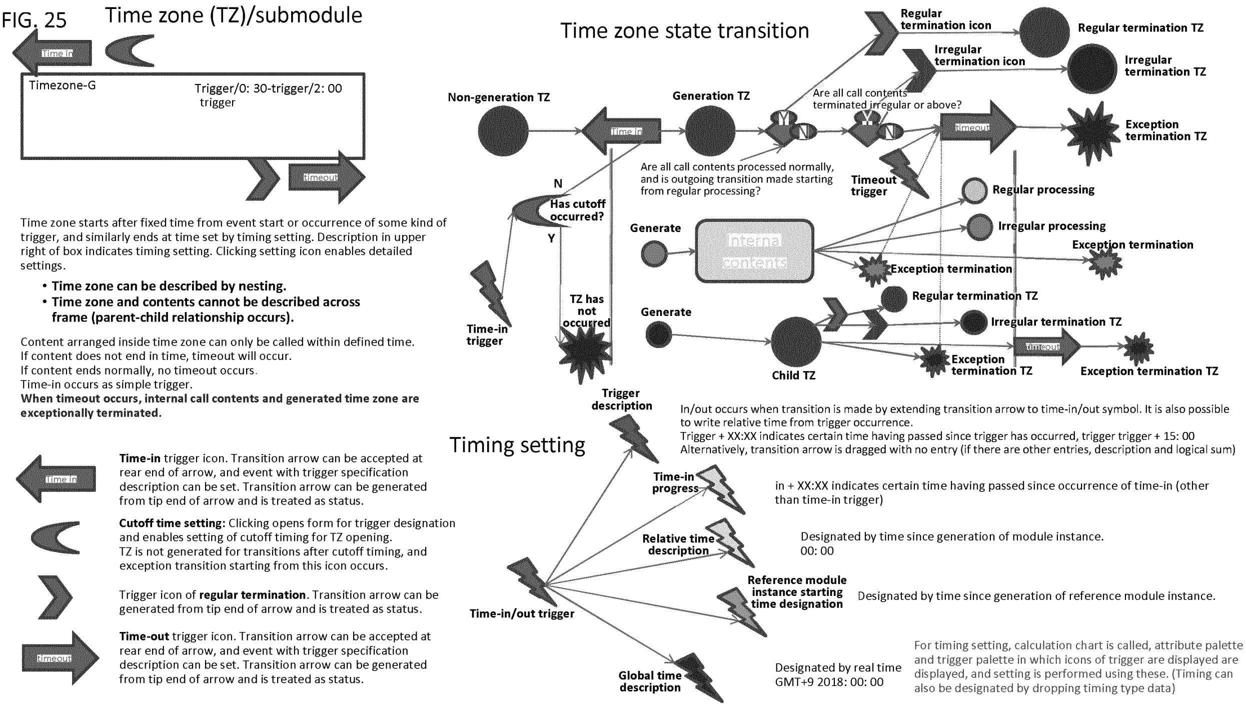
Time zone (TZ)/submodule
Time-in
Timezone-G
Trigger/0: 30-trigger/2: 00
trigger
timeout
Time zone starts after fixed time from event start or occurrence of some kind of trigger, and similarly ends at time set by timing setting. Description in upper right of box indicates timing setting. Clicking setting icon enables detailed settings.
• Time zone can be described by nesting.
• Time zone and contents cannot be described across frame (parent-child relationship occurs).
Content arranged inside time zone can only be called within defined time.
If content does not end in time, timeout will occur.
If content ends normally, no timeout occurs.
Time-in occurs as simple trigger.
When timeout occurs, internal call contents and generated time zone are exceptionally terminated.
Time-in trigger icon. Transition arrow can be accepted at rear end of arrow, and event with trigger specification description can be set. Transition arrow can be generated from tip end of arrow and is treated as status.
Cutoff time setting: Clicking opens form for trigger designation and enables setting of cutoff timing for TZ opening.
TZ is not generated for transitions after cutoff timing, and exception transition starting from this icon occurs.
Trigger icon of regular termination. Transition arrow can be generated from tip end of arrow and is treated as status.
Time-out trigger icon. Transition arrow can be accepted at rear end of arrow, and event with trigger specification description can be set. Transition arrow can be generated from tip end of arrow and is treated as status.
Time zone state transition
Regular termination icon
Regular termination TZ
Irregular termination icon
Irregular termination TZ
Non-generation TZ
Generation TZ
Are all call contents terminated irregular or above?
Exception termination TZ
Are all call contents processed normally, and is outgoing transition made starting from regular processing?
Timeout trigger
N
Has cutoff occurred?
Y
Generate
Internal contents
Regular processing
Irregular processing
Exception termination
Exception termination
Regular termination TZ
Irregular termination TZ
Generate
Time-in trigger
TZ has not occurred
Child TZ
Exception termination TZ
Exception termination TZ
Trigger description
In/out occurs when transition is made by extending transition arrow to time-in/out symbol. It is also possible to write relative time from trigger occurrence.
Trigger + XX:XX indicates certain time having passed since trigger has occurred, trigger trigger + 15: 00
Alternatively, transition arrow is dragged with no entry (if there are other entries, description and logical sum)
Timing setting
Time-in progress
in + XX:XX indicates certain time having passed since occurrence of time-in (other than time-in trigger)
Relative time description
Designated by time since generation of module instance.
00: 00
Reference module instance starting time designation
Designated by time since generation of reference module instance.
Time-in/out trigger
Global time description
Designated by real time
GMT+9 2018: 00: 00
For timing setting, calculation chart is called, attribute palette and trigger palette in which icons of trigger are displayed are displayed, and setting is performed using these. (Timing can also be designated by dropping timing type data)

FIG. 26

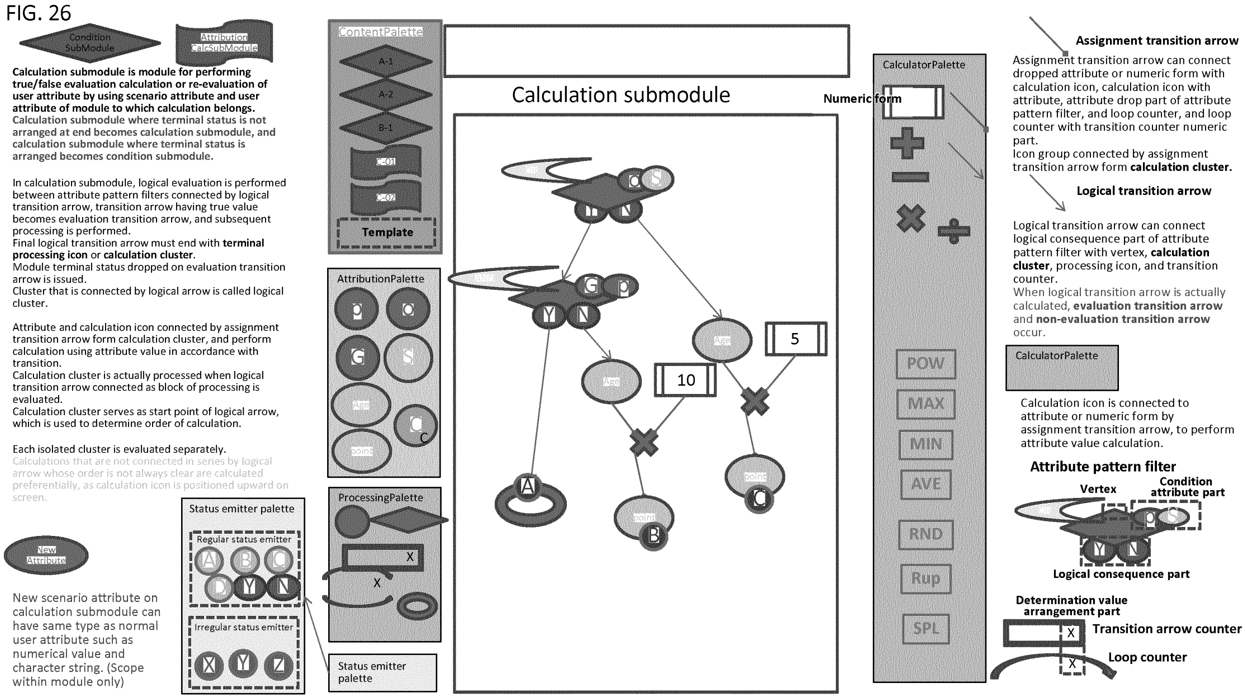
Condition SubModule
Attribution CalcSubModule
Calculation submodule is module for performing true/false evaluation calculation or re-evaluation of user attribute by using scenario attribute and user attribute of module to which calculation belongs.
Calculation submodule where terminal status is not arranged at end becomes calculation submodule, and calculation submodule where terminal status is arranged becomes condition submodule.
In calculation submodule, logical evaluation is performed between attribute pattern filters connected by logical transition arrow, transition arrow having true value becomes evaluation transition arrow, and subsequent processing is performed.
Final logical transition arrow must end with terminal processing icon or calculation cluster.
Module terminal status dropped on evaluation transition arrow is issued.
Cluster that is connected by logical arrow is called logical cluster.
Attribute and calculation icon connected by assignment transition arrow form calculation cluster, and perform calculation using attribute value in accordance with transition.
Calculation cluster is actually processed when logical transition arrow connected as block of processing is evaluated.
Calculation cluster serves as start point of logical arrow, which is used to determine order of calculation.
Each isolated cluster is evaluated separately.
Calculations that are not connected in series by logical arrow whose order is not always clear are calculated preferentially, as calculation icon is positioned upward on screen.
New Attribute
New scenario attribute on calculation submodule can have same type as normal user attribute such as numerical value and character string. (Scope within module only)
Status emitter palette
Regular status emitter
A B C D Y N
Irregular status emitter
X Y Z
ContentPalette
A-1
A-2
B-1
C-01
C-02
Template
AttributionPalette
C
ProcessingPalette
X
X
Status emitter palette
Calculation submodule
10
5
A
B
C
CalculatorPalette
Numeric form
POW
MAX
MIN
AVE
RND
Rup
SPL
Assignment transition arrow
Assignment transition arrow can connect dropped attribute or numeric form with calculation icon, calculation icon with attribute, attribute drop part of attribute pattern filter, and loop counter, and loop counter with transition counter numeric part.
Icon group connected by assignment transition arrow form calculation cluster.
Logical transition arrow
Logical transition arrow can connect logical consequence part of attribute pattern filter with vertex, calculation cluster, processing icon, and transition counter.
When logical transition arrow is actually calculated, evaluation transition arrow and non-evaluation transition arrow occur.
CalculatorPalette
Calculation icon is connected to attribute or numeric form by assignment transition arrow, to perform attribute value calculation.
Attribute pattern filter
Vertex
Condition attribute part
Logical consequence part
Determination value arrangement part
X
Transition arrow counter
X
Loop counter

FIG. 27

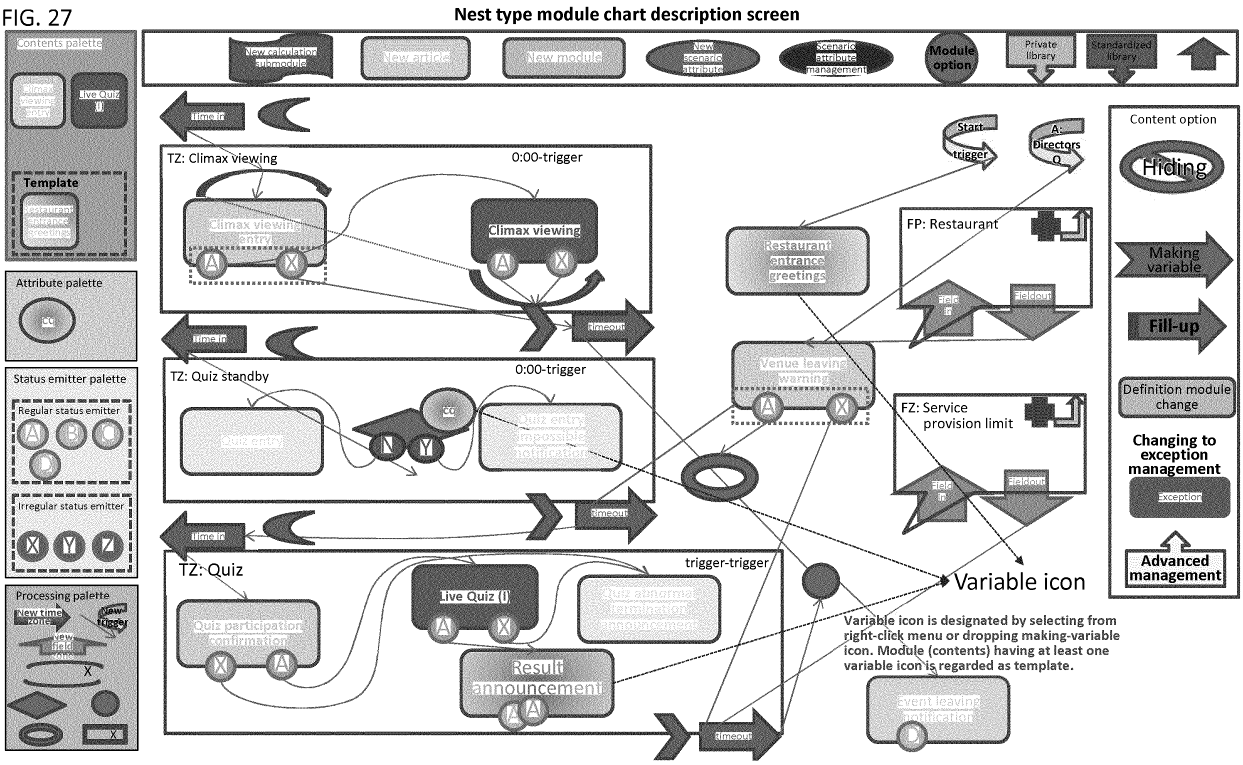
Nest type module chart description screen
New calculation submodule
New article
New module
New scenario attribute
Scenario attribute management
Module option
Private library
Standardized library
Contents palette
Climax viewing entry
Live Quiz (I)
Template
Restaurant entrance greetings
Attribute palette
Status emitter palette
Regular status emitter
Irregular status emitter
Processing palette
New time zone
New trigger
New field zone
Time in
TZ: Climax viewing
0:00-trigger
Climax viewing entry
Climax viewing
timeout
TZ: Quiz standby
Quiz entry
Quiz entry impossible notification
TZ: Quiz
trigger-trigger
Quiz participation confirmation
Live Quiz (I)
Quiz abnormal termination announcement
Result announcement
Start trigger
A: Directors Q
Restaurant entrance greetings
FP: Restaurant
Field in
Fieldout
Venue leaving warning
FZ: Service provision limit
Variable icon
Variable icon is designated by selecting from right-click menu or dropping making-variable icon. Module (contents) having at least one variable icon is regarded as template.
Event leaving notification
Content option
Hiding
Making variable
Fill-up
Definition module change
Changing to exception management
Exception
Advanced management

FIG. 28

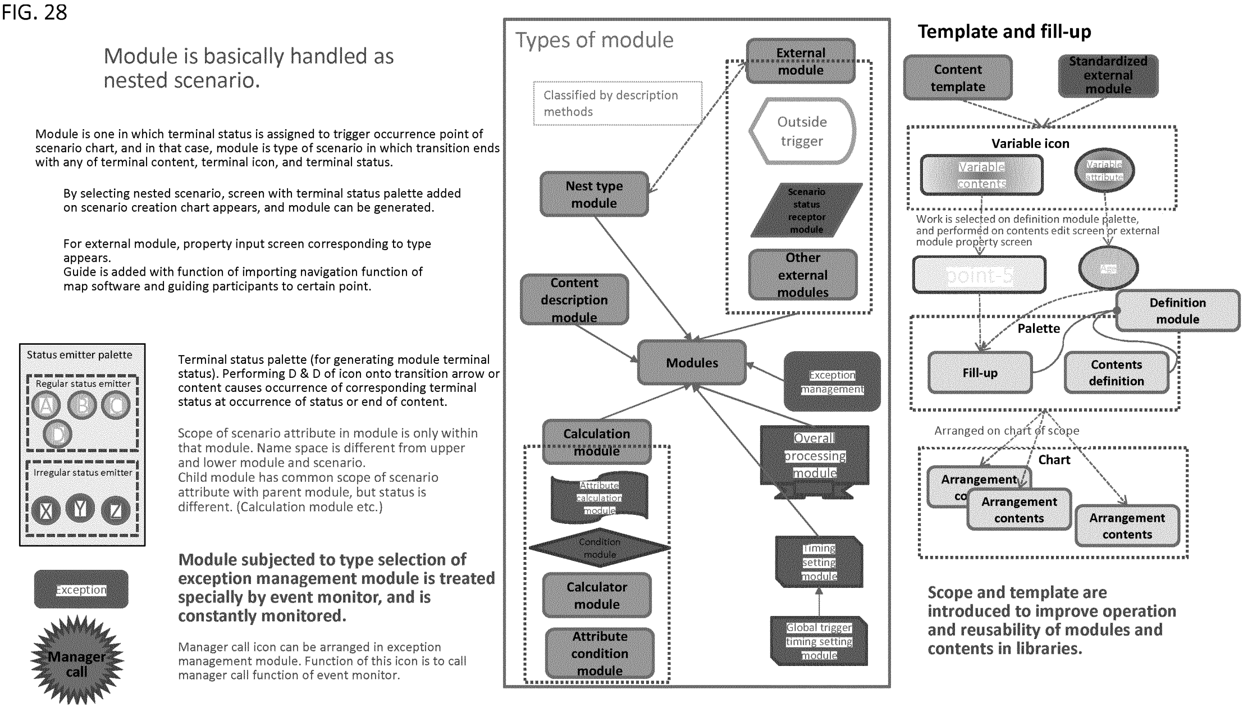
Module is basically handled as nested scenario.
Module is one in which terminal status is assigned to trigger occurrence point of scenario chart, and in that case, module is type of scenario in which transition ends with any of terminal content, terminal icon, and terminal status.
By selecting nested scenario, screen with terminal status palette added on scenario creation chart appears, and module can be generated.
For external module, property input screen corresponding to type appears.
Guide is added with function of importing navigation function of map software and guiding participants to certain point.
Status emitter palette
Regular status emitter
A B C D
Irregular status emitter
X Y Z
Terminal status palette (for generating module terminal status). Performing D & D of icon onto transition arrow or content causes occurrence of corresponding terminal status at occurrence of status or end of content.
Scope of scenario attribute in module is only within that module. Name space is different from upper and lower module and scenario.
Child module has common scope of scenario attribute with parent module, but status is different. (Calculation module etc.)
Exception
Module subjected to type selection of exception management module is treated specially by event monitor, and is constantly monitored.
Manager call
Manager call icon can be arranged in exception management module. Function of this icon is to call manager call function of event monitor.
Types of module
Classified by description methods
External module
Outside trigger
Scenario status receptor module
Other external modules
Nest type module
Content description module
Modules
Exception management
Calculation module
Attribute calculation module
Condition module
Calculator module
Attribute condition module
Overall processing module
Timing setting module
Global trigger timing setting module
Template and fill-up
Content template
Standardized external module
Variable icon
Variable contents
Variable attribute
Work is selected on definition module palette, and performed on contents edit screen or external module property screen
point-5
Age
Definition module
Palette
Fill-up
Contents definition
Arranged on chart of scope
Chart
Arrangement co
Arrangement contents
Arrangement contents
Scope and template are introduced to improve operation and reusability of modules and contents in libraries.

FIG. 29

Example of property screen of external module (guide type)

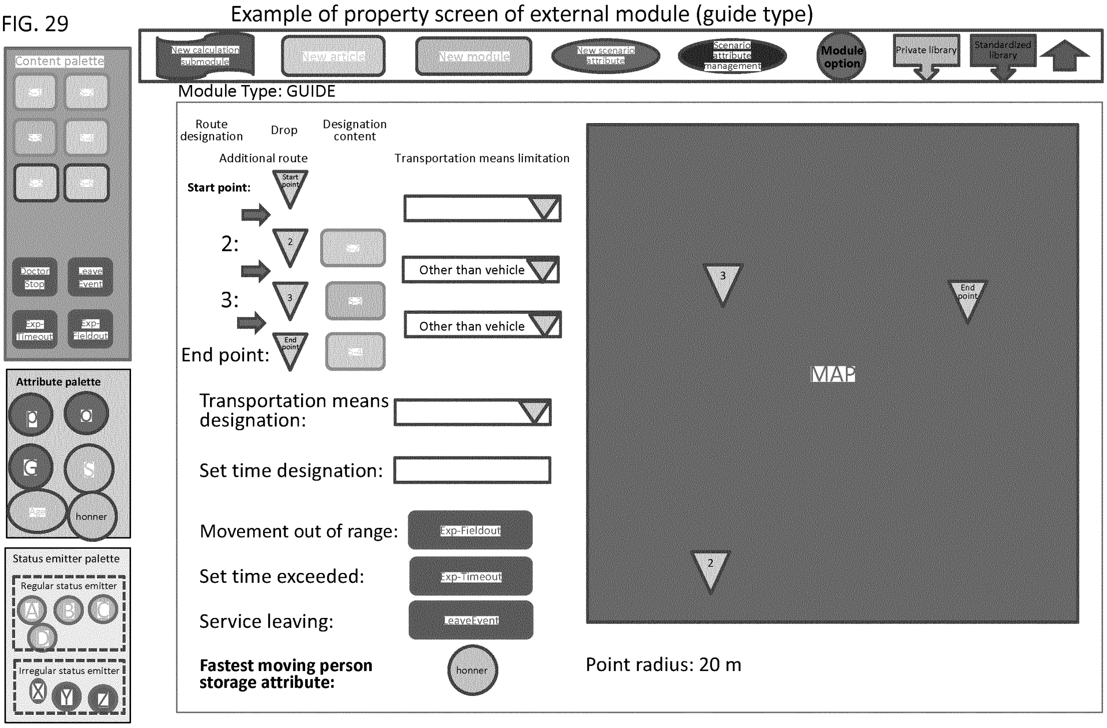


External module also has service provision screen that matches contents screen of user.

FIG. 30

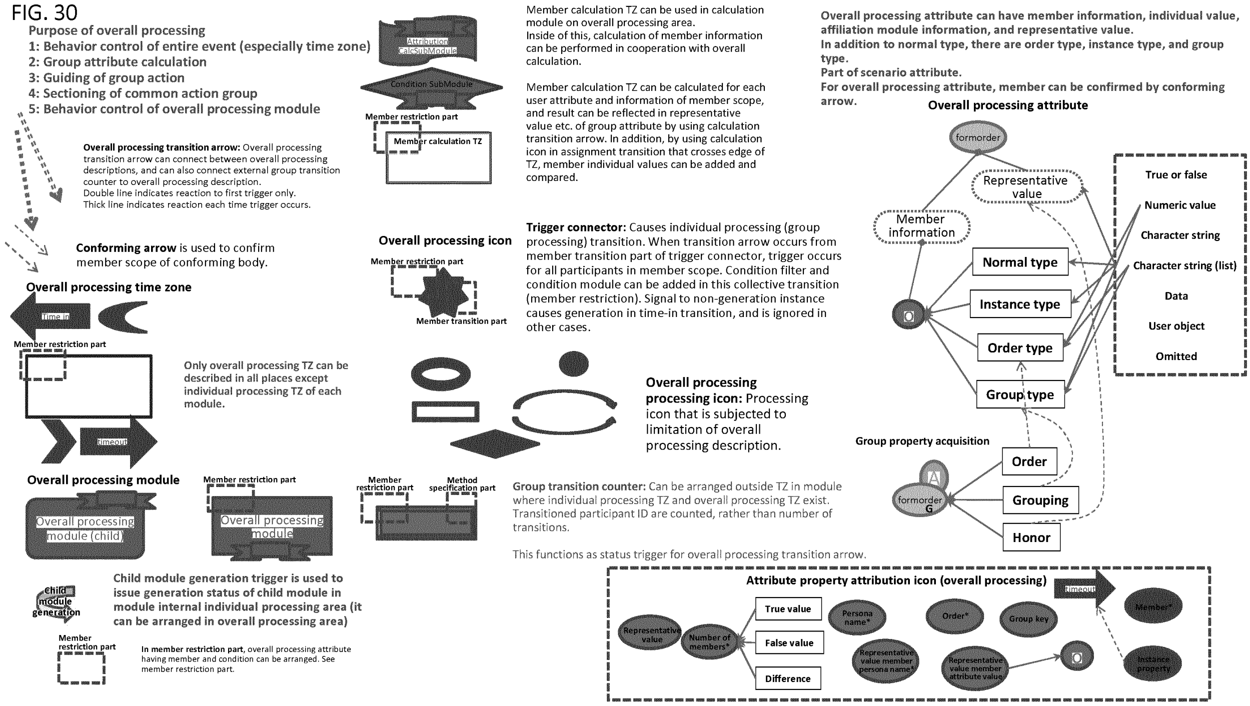
Purpose of overall processing
1: Behavior control of entire event (especially time zone)
2: Group attribute calculation
3: Guiding of group action
4: Sectioning of common action group
5: Behavior control of overall processing module
Overall processing transition arrow: Overall processing transition arrow can connect between overall processing descriptions, and can also connect external group transition counter to overall processing description.
Double line indicates reaction to first trigger only.
Thick line indicates reaction each time trigger occurs.
Conforming arrow is used to confirm member scope of conforming body.
Overall processing time zone
Time in
Member restriction part
Only overall processing TZ can be described in all places except individual processing TZ of each module.
timeout
Overall processing module
Overall processing module (child)
Member restriction part
Overall processing module
Member restriction part
Method specification part
Child module generation
Child module generation trigger is used to issue generation status of child module in module internal individual processing area (it can be arranged in overall processing area)
Member restriction part
In member restriction part, overall processing attribute having member and condition can be arranged. See member restriction part.
Attribution CalcSubModule
Condition SubModule
Member restriction part
Member calculation TZ
Member calculation TZ can be used in calculation module on overall processing area.
Inside of this, calculation of member information can be performed in cooperation with overall calculation.
Member calculation TZ can be calculated for each user attribute and information of member scope, and result can be reflected in representative value etc. of group attribute by using calculation transition arrow. In addition, by using calculation icon in assignment transition that crosses edge of TZ, member individual values can be added and compared.
Overall processing icon
Member restriction part
Member transition part
Trigger connector: Causes individual processing (group processing) transition. When transition arrow occurs from member transition part of trigger connector, trigger occurs for all participants in member scope. Condition filter and condition module can be added in this collective transition (member restriction). Signal to non-generation instance causes generation in time-in transition, and is ignored in other cases.
Overall processing processing icon: Processing icon that is subjected to limitation of overall processing description.
Group transition counter: Can be arranged outside TZ in module where individual processing TZ and overall processing TZ exist. Transitioned participant ID are counted, rather than number of transitions.
This functions as status trigger for overall processing transition arrow.
Overall processing attribute can have member information, individual value, affiliation module information, and representative value.
In addition to normal type, there are order type, instance type, and group type.
Part of scenario attribute.
For overall processing attribute, member can be confirmed by conforming arrow.
Overall processing attribute
formorder
Representative value
Member information
Normal type
Instance type
Order type
Group type
True or false
Numeric value
Character string
Character string (list)
Data
User object
Omitted
Group property acquisition
A
formorder G
Order
Grouping
Honor
Attribute property attribution icon (overall processing)
timeout
Representative value
Number of members*
True value
False value
Difference
Persona name*
Representative value member persona name*
Order*
Representative value member attribute value
Group key
Member*
Instance property

FIG. 31

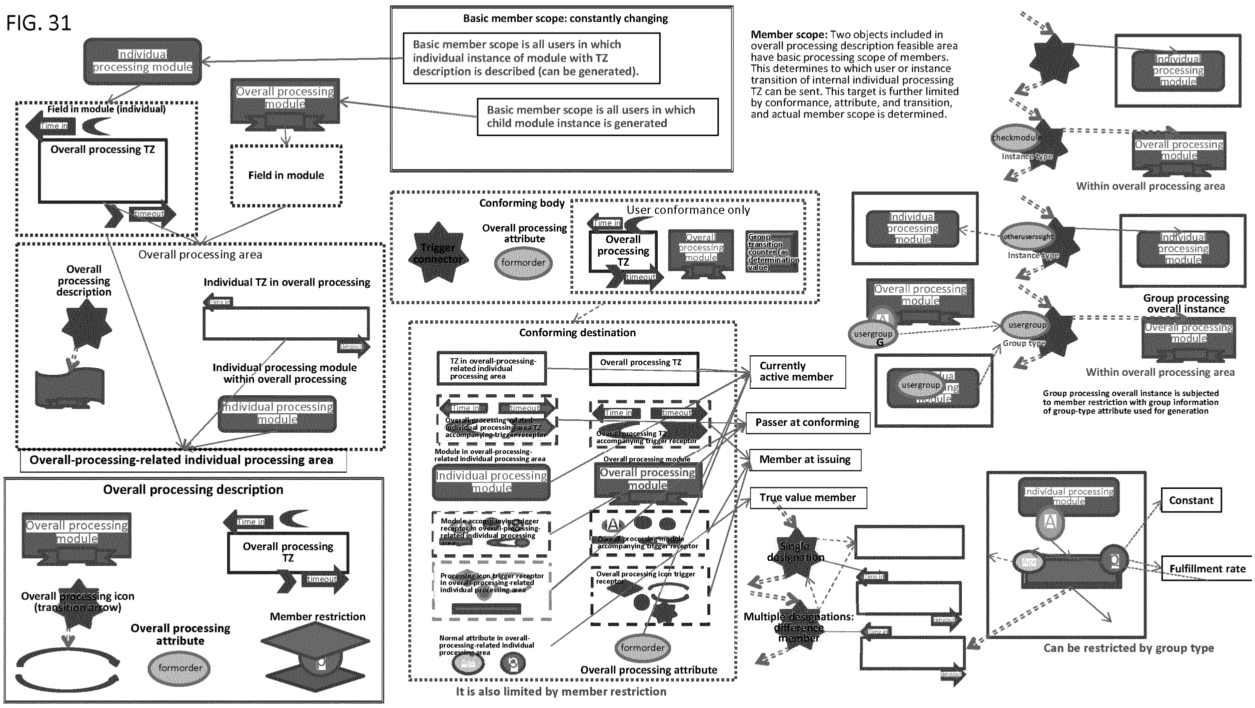

Basic member scope: constantly changing
Basic member scope is all users in which individual instance of module with TZ description is described (can be generated).
Basic member scope is all users in which child module instance is generated
Member scope: Two objects included in overall processing description feasible area have basic processing scope of members. This determines to which user or instance transition of internal individual processing TZ can be sent. This target is further limited by conformance, attribute, and transition, and actual member scope is determined.
Individual processing module
Overall processing module
Field in module (individual)
Time in
Overall processing TZ
Timeout
Field in module
Overall processing area
Overall processing description
Individual TZ in overall processing
Individual processing module within overall processing
Overall-processing-related individual processing area
Overall processing description
Overall processing icon (transition arrow)
Overall processing attribute
formorder
Member restriction
Conforming body
Trigger connector
User conformance only
Group transition counter (as determination value)
Conforming destination
TZ in overall-processing-related individual processing area
Currently active member
Passer at conforming
Member at issuing
True value member
Module in overall-processing-related individual processing area
Overall processing module
Overall processing TZ accompanying trigger receptor
Overall processing icon trigger receptor
Normal attribute in overall-processing-related individual processing area
Overall processing attribute
It is also limited by member restriction
Single designation
Multiple designations: difference member
checkmodule
Instance type
Within overall processing area
otherusersight
usergroup
Group type
Group processing overall instance
Group processing overall instance is subjected to member restriction with group information of group-type attribute used for generation
Constant
Fulfillment rate
Can be restricted by group type

FIG. 32

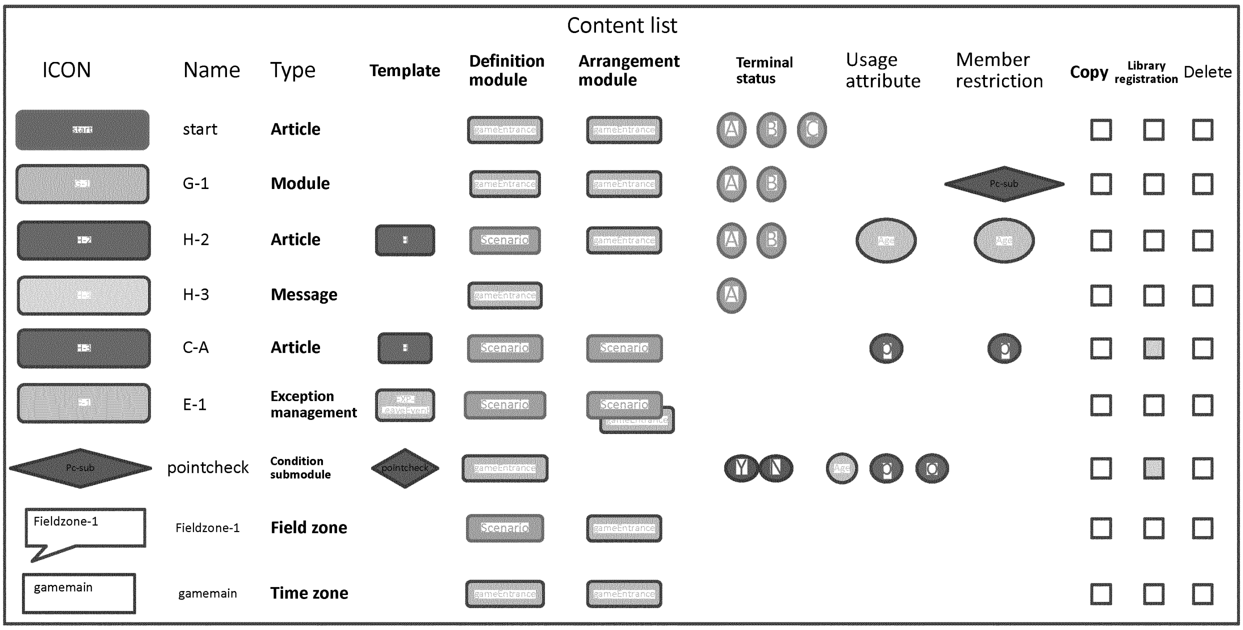
Content list
ICON
Name
Type
Template
Definition module
Arrangement module
Terminal status
Usage attribute
Member restriction
Copy
Library registration
Delete
start
Article
G-1
Module
H-2
Article
H-3
Message
C-A
Article
E-1
Exception management
pointcheck
Condition submodule
Fieldzone-1
Fieldzone-1
Field zone
gamemain
gamemain
Time zone

FIG. 33

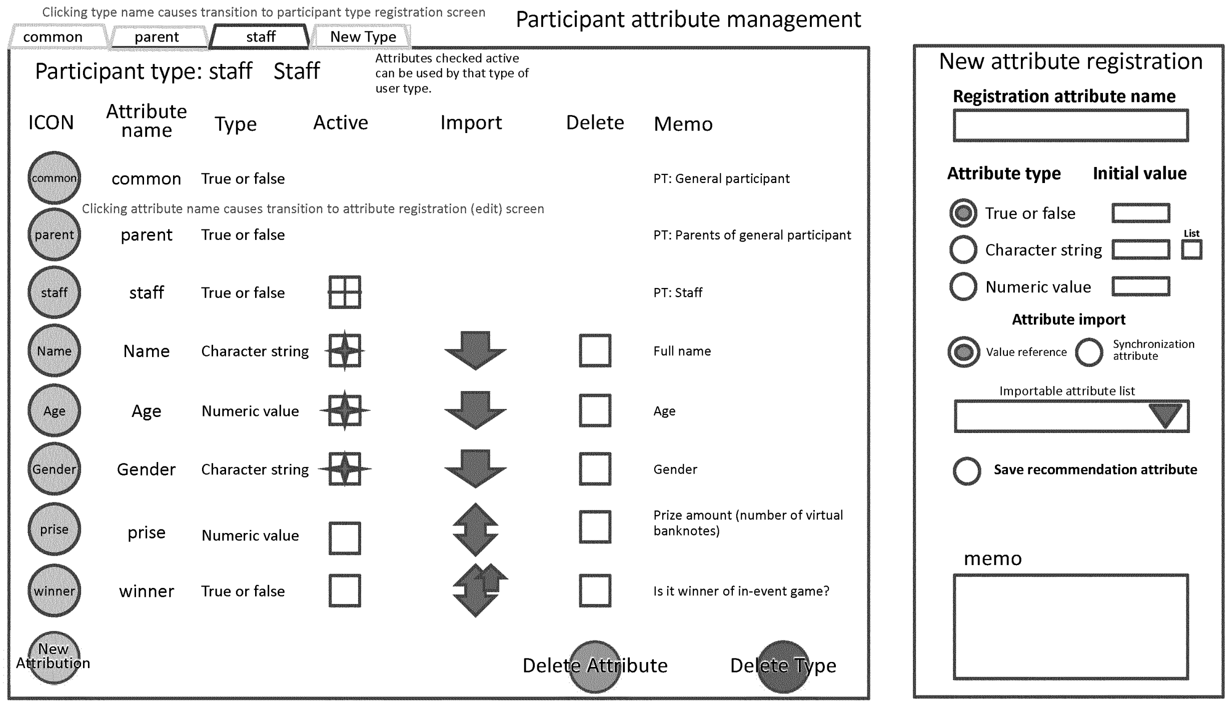
Clicking type name causes transition to participant type registration screen
common
parent
staff
New Type
Participant attribute management
Participant type: staff Staff
Attributes checked active can be used by that type of user type.
ICON
Attribute name
Type
Active
Import
Delete
Memo
common
common
True or false
PT: General participant
Clicking attribute name causes transition to attribute registration (edit) screen
parent
parent
True or false
PT: Parents of general participant
staff
staff
True or false
PT: Staff
Name
Name
Character string
Full name
Age
Age
Numeric value
Age
Gender
Gender
Character string
Gender
prise
prise
Numeric value
Prize amount (number of virtual banknotes)
winner
winner
True or false
Is it winner of in-event game?
New Attribution
Delete Attribute
Delete Type
New attribute registration
Registration attribute name
Attribute type
Initial value
True or false
Character string
List
Numeric value
Attribute import
Value reference
Synchronization attribute
Importable attribute list
Save recommendation attribute
memo

FIG. 34

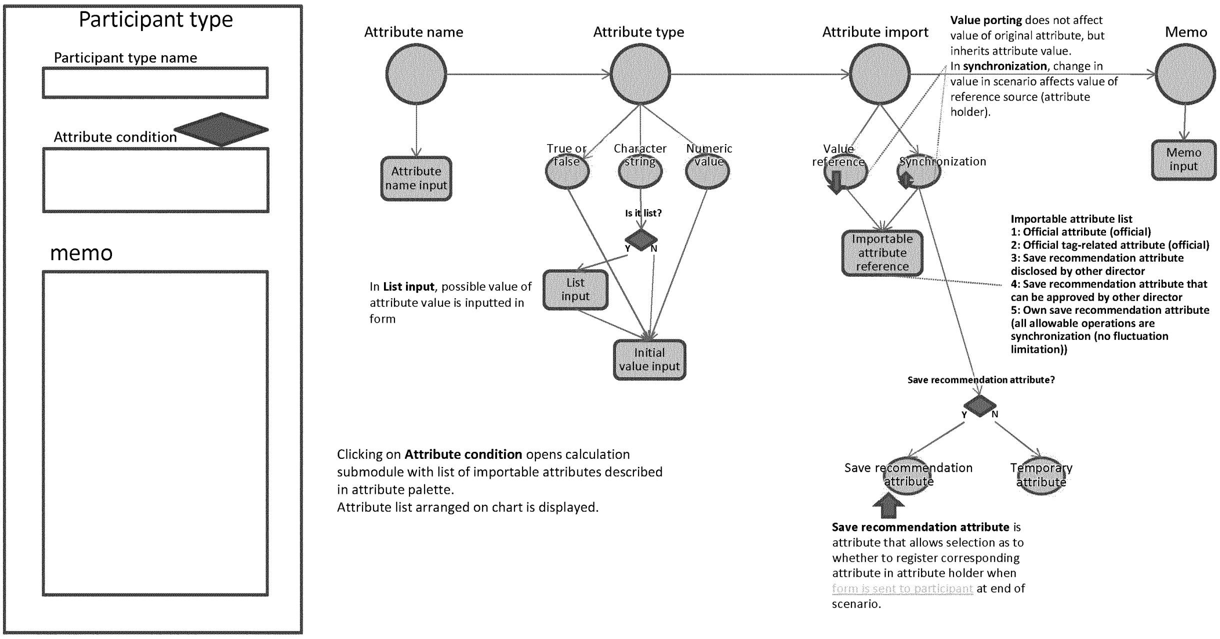
Participant type
Participant type name
Attribute condition
memo
Attribute name
Attribute name input
Attribute type
True or false
Character string
Numeric value
Is it list?
Y
N
List input
Initial value input
In **List input**, possible value of attribute value is inputted in form
Clicking on **Attribute condition** opens calculation submodule with list of importable attributes described in attribute palette.
Attribute list arranged on chart is displayed.
Attribute import
**Value porting** does not affect value of original attribute, but inherits attribute value.
In **synchronization**, change in value in scenario affects value of reference source (attribute holder).
Value reference
Synchronization
Importable attribute reference
Importable attribute list
1: Official attribute (official)
2: Official tag-related attribute (official)
3: Save recommendation attribute disclosed by other director
4: Save recommendation attribute that can be approved by other director
5: Own save recommendation attribute (all allowable operations are synchronization (no fluctuation limitation))
Save recommendation attribute?
Y
N
Save recommendation attribute
Temporary attribute
**Save recommendation attribute** is attribute that allows selection as to whether to register corresponding attribute in attribute holder when form is sent to participant at end of scenario.
Memo
Memo input

FIG. 35

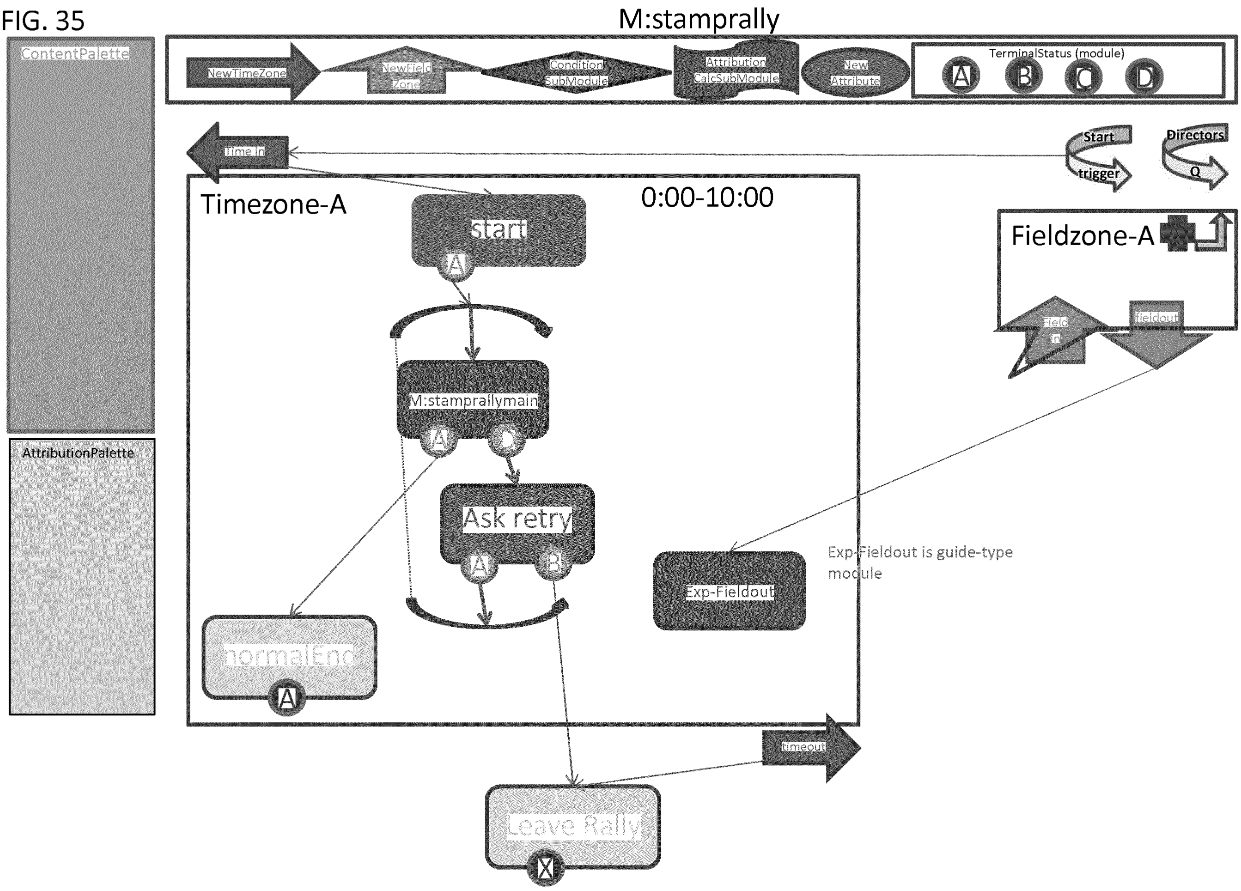

M:stamprally
ContentPalette
AttributionPalette
NewTimeZone
NewField Zone
Condition SubModule
Attribution CalcSubModule
New Attribute
TerminalStatus (module)
A
B
C
D
Time in
Start trigger
Directors Q
Timezone-A
0:00-10:00
start
M:stamprallymain
Ask retry
normalEnd
Exp-Fieldout
Exp-Fieldout is guide-type module
Fieldzone-A
Field in
fieldout
timeout
Leave Rally
X

FIG. 36

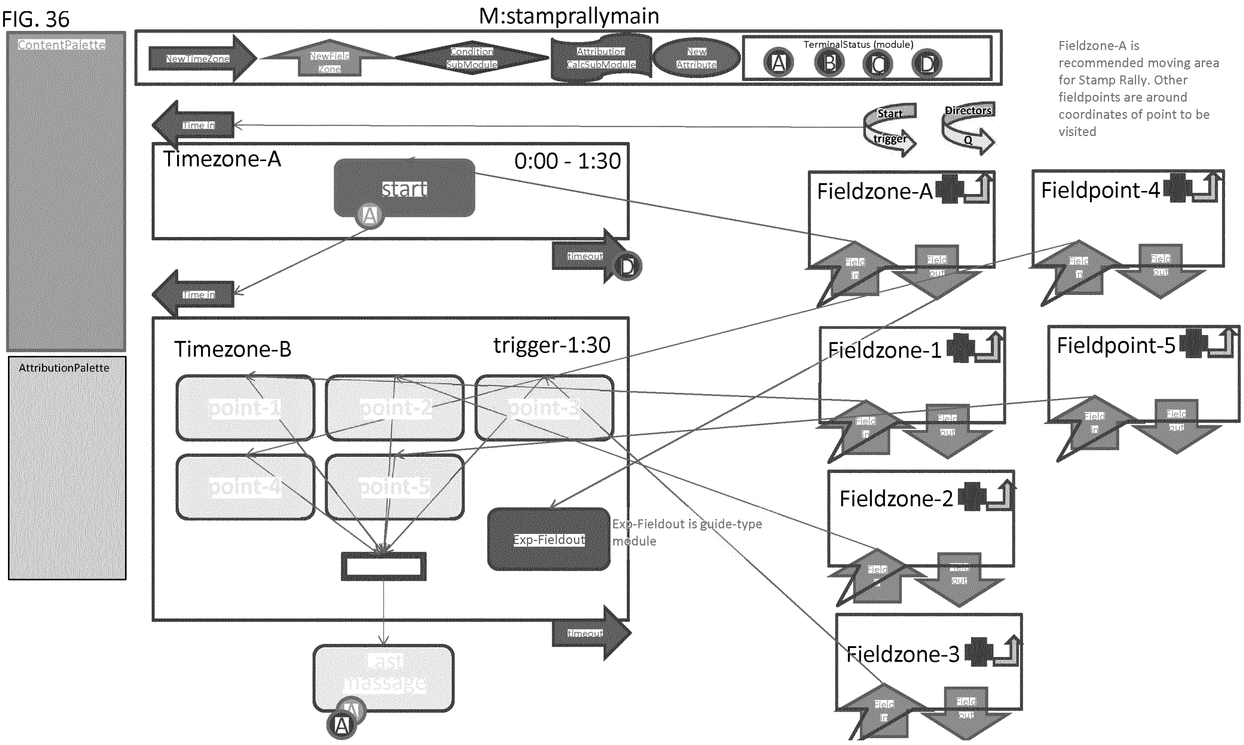
M:stamprallymain
ContentPalette
AttributionPalette
NewTimeZone
NewField Zone
Condition SubModule
Attribution CalcSubModule
New Attribute
TerminalStatus (module)
A
B
C
D
Fieldzone-A is recommended moving area for Stamp Rally. Other fieldpoints are around coordinates of point to be visited
Start trigger
Directors Q
Time in
Timezone-A
0:00 - 1:30
start
Timeout
Timezone-B
trigger-1:30
point-1
point-2
point-3
point-4
point-5
Exp-Fieldout
Exp-Fieldout is guide-type module
Last massage
Fieldzone-A
Fieldpoint-4
Fieldzone-1
Fieldpoint-5
Fieldzone-2
Fieldzone-3

FIG. 37

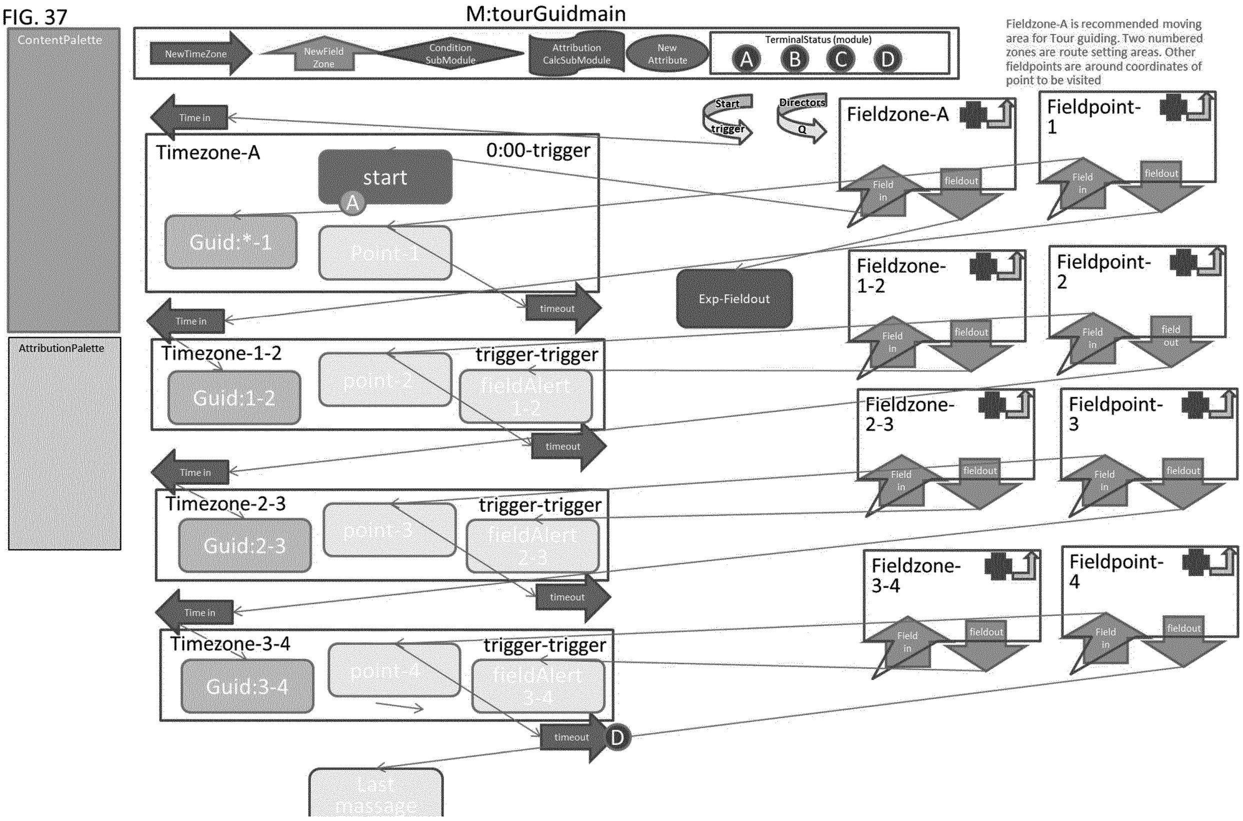
M:tourGuidmain
ContentPalette
AttributionPalette
NewTimeZone
NewField Zone
Condition SubModule
Attribution CalcSubModule
New Attribute
TerminalStatus (module)
A B C D
Fieldzone-A is recommended moving area for Tour guiding. Two numbered zones are route setting areas. Other fieldpoints are around coordinates of point to be visited
Start trigger
Directors Q
Time in
Timezone-A
0:00-trigger
start
Guid:*-1
Point-1
timeout
Fieldzone-A
Fieldpoint-1
Field in
fieldout
Exp-Fieldout
Timezone-1-2
trigger-trigger
Guid:1-2
point-2
fieldAlert 1-2
Fieldzone-1-2
Fieldpoint-2
field out
Timezone-2-3
Guid:2-3
point-3
fieldAlert 2-3
Fieldzone-2-3
Fieldpoint-3
Timezone-3-4
Guid:3-4
point-4
fieldAlert 3-4
Fieldzone-3-4
Fieldpoint-4
Last massage

FIG. 38

Live event after party

Explanation: Entry is made from local entry (poster etc.) of sports bar that provides venue for after party of venue of rock concert at municipal stadium. Concert organizer provides information materials about today's concert to event of associated advertiser (who has set up LE in stadium by paying advertising fee). AV terminal is installed in sports bar, and distributed data can be broadcast. Shop has position information that can be confirmed by GPS.

At time of entry, seats are reserved, and guiding to shop is made. Entrance check is made at shop. There are two informational materials, which are edited video of today's concert and quiz based on today's details. Nine different questions are distributed in each group. Shop can accommodate up to three after-party groups, and quiz must be conducted fairly and at time when group members desire. Results for individual groups are displayed. When party starts, edited material is broadcast except during quiz.

Addition 1: Climax scene broadcasting module

Addition 2: Competition among individual groups: Total of nine quizzes are sequentially presented, and accumulated points are compared in form in which person who has correct answer and pressed button first gets point. Failed questions are left for other groups to answer.

Addition 3: Shop has check module capable of entrance check of users' mobile terminals at restaurant.

Object provided by shop side

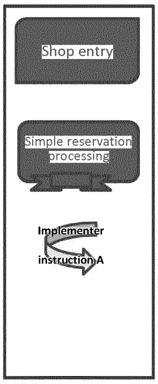


Shop entry:
Entry processing by terminal of shop staff linked with POS.
If successful, A status is issued.

Reservation processing module:
Module that displays reservation form, transmits to staff terminal on director side, and performs completion processing.
A status upon completion of reservation, B status upon full occupancy processing

Implementer instruction A:
Quiz start processing is performed.

Object provided by promoter

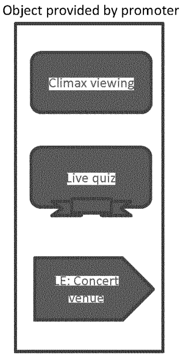


Climax:
Live climax scenes are broadcasted on mobile terminals. Display of set list can be requested, and selected song can be broadcast.

Live quiz:
Quiz related to concert on mobile terminals.
Participant attribute: quizPoint/num and group attribute: pointOrder/num are required.

Venue local entry:
Local entry has physical outline such as signboard, and position information.
A status is issued by barcode check, IC chip, and search with specific keyword in vicinity.

FIG. 39

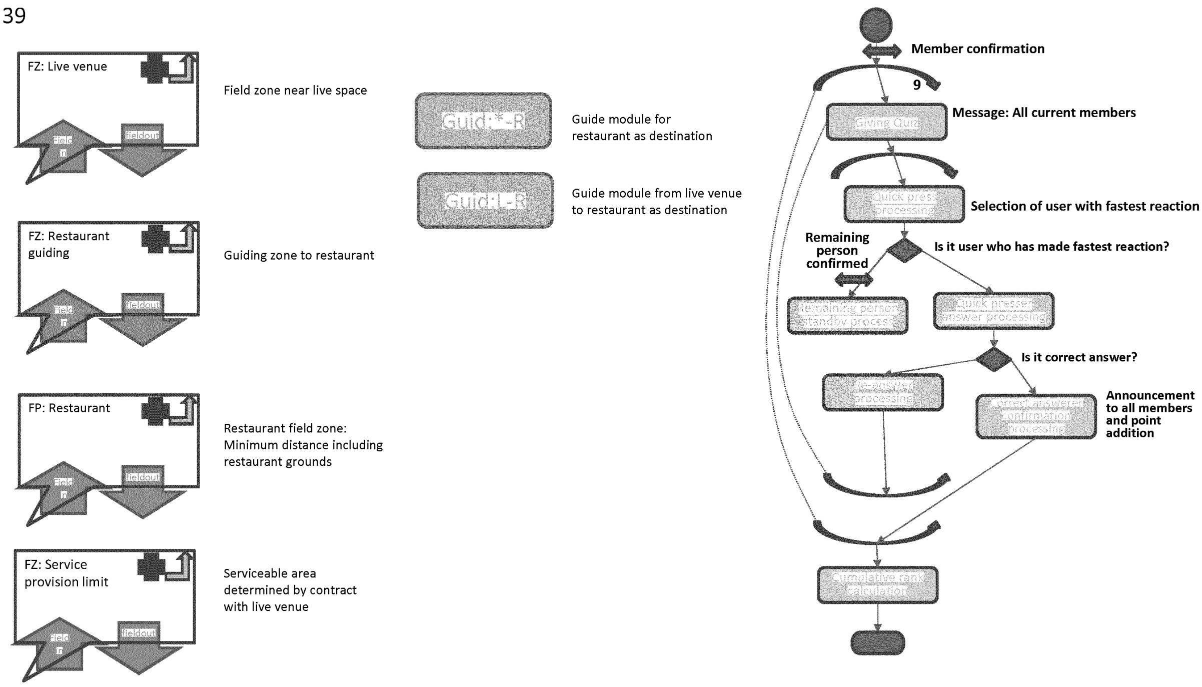
FZ: Live venue
Field zone near live space
FZ: Restaurant guiding
Guiding zone to restaurant
FP: Restaurant
Restaurant field zone: Minimum distance including restaurant grounds
FZ: Service provision limit
Serviceable area determined by contract with live venue
Guid:*-R
Guide module for restaurant as destination
Guid:L-R
Guide module from live venue to restaurant as destination
Member confirmation
9
Giving Quiz
Message: All current members
Quick press processing
Selection of user with fastest reaction
Remaining person confirmed
Is it user who has made fastest reaction?
Remaining person standby process
Quick presser answer processing
Is it correct answer?
Re-answer processing
Correct answerer confirmation processing
Announcement to all members and point addition
Cumulative rank calculation

FIG. 40

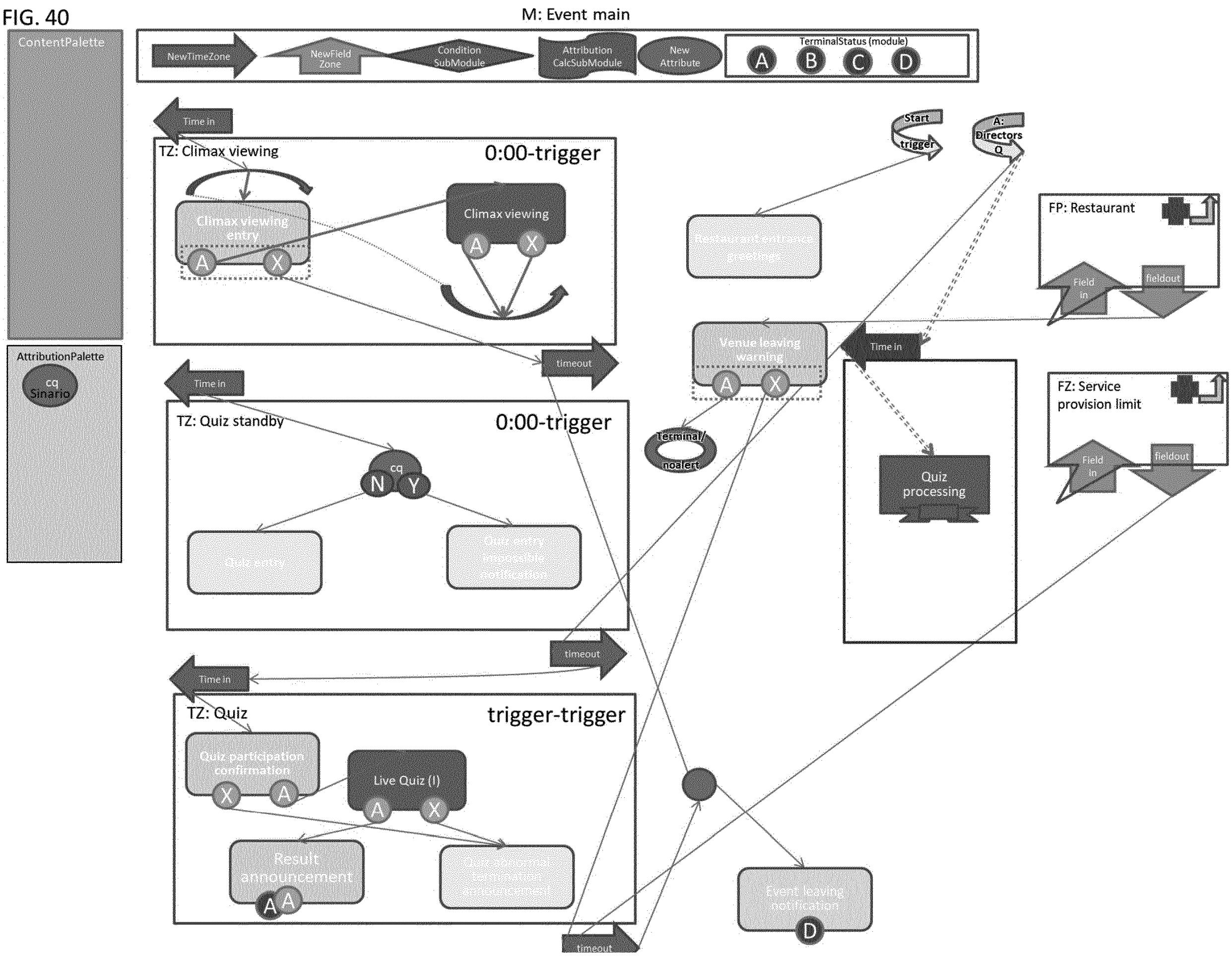
M: Event main
ContentPalette
AttributionPalette
cq Sinario
NewTimeZone
NewField Zone
Condition SubModule
Attribution CalcSubModule
New Attribute
TerminalStatus (module)
A B C D
Time in
TZ: Climax viewing
0:00-trigger
Climax viewing entry
Climax viewing
timeout
TZ: Quiz standby
0:00-trigger
cq
N Y
Quiz entry
Quiz entry impossible notification
TZ: Quiz
trigger-trigger
Quiz participation confirmation
Live Quiz (I)
Result announcement
Quiz abnormal termination announcement
Start trigger
A: Directors Q
Restaurant entrance greetings
Venue leaving warning
Terminal/ noalert
Quiz processing
FP: Restaurant
Field in
fieldout
FZ: Service provision limit
Event leaving notification

FIG. 41

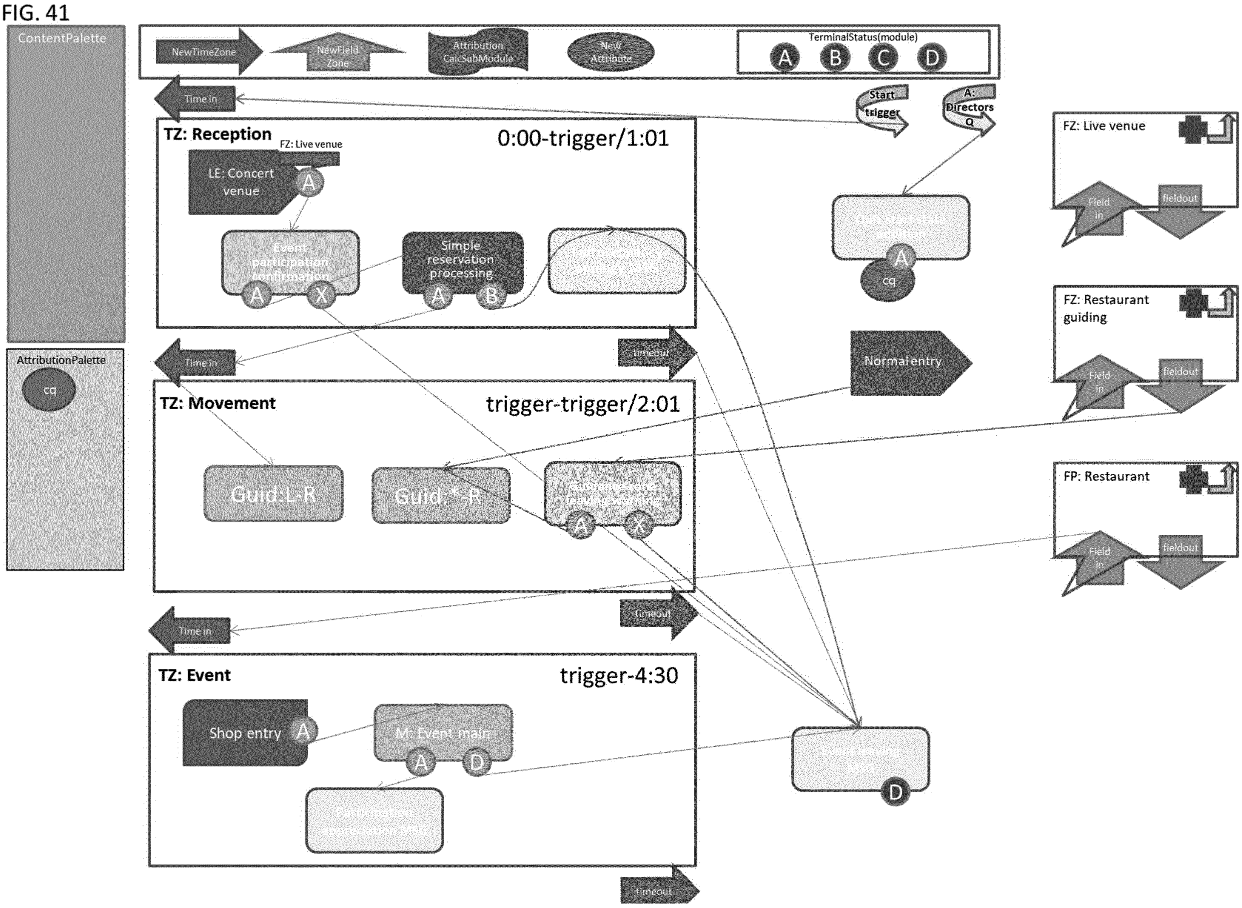
ContentPalette
AttributionPalette
cq
NewTimeZone
NewField Zone
Attribution CalcSubModule
New Attribute
TerminalStatus(module)
A
B
C
D
Time in
Start trigger
A: Directors Q
TZ: Reception
FZ: Live venue
0:00-trigger/1:01
LE: Concert venue
Event participation confirmation
Simple reservation processing
Full occupancy apology MSG
Quiz start state addition
cq
Normal entry
timeout
TZ: Movement
trigger-trigger/2:01
Guid:L-R
Guid:*-R
Guidance zone leaving warning
X
TZ: Event
trigger-4:30
Shop entry
M: Event main
Participation appreciation MSG
Event leaving MSG
FZ: Live venue
Field in
fieldout
FZ: Restaurant guiding
FP: Restaurant

FIG. 42

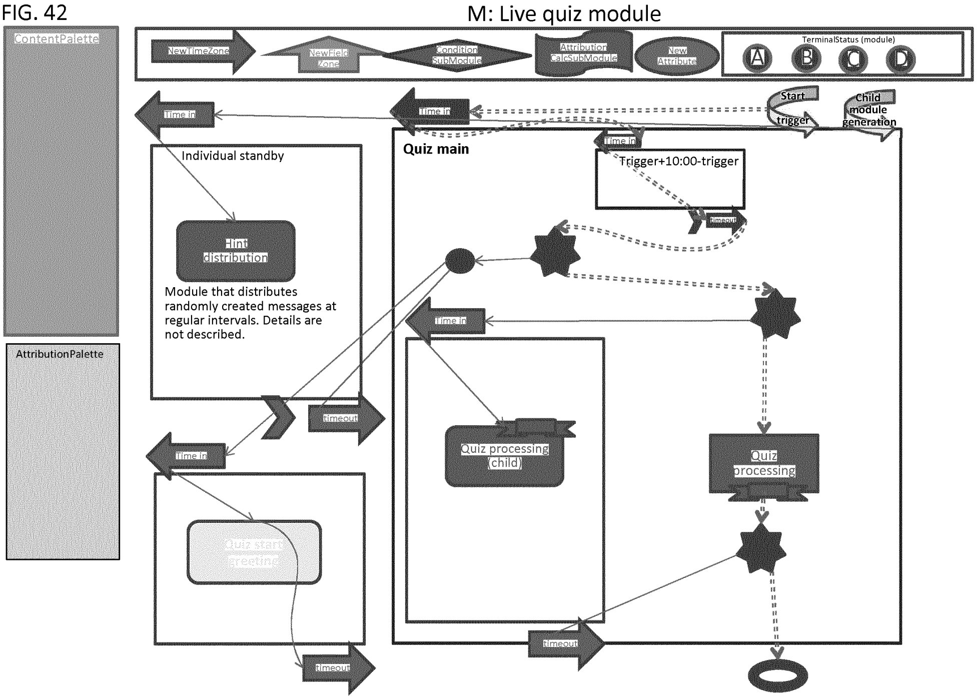


Fluctuation factor of participants (current scenario)
1: Late entrance (director's cut occurs before start of event main module (individual))
2: Irregular termination of live quiz module by participant (details are internal behavior)
3: Transition attribute condition not satisfied (non-participation is expressed in quiz participation confirmation)

4 (Sequential transition in internal behavior) >> If start condition is relaxed, participation may be possible after start.

FIG. 43

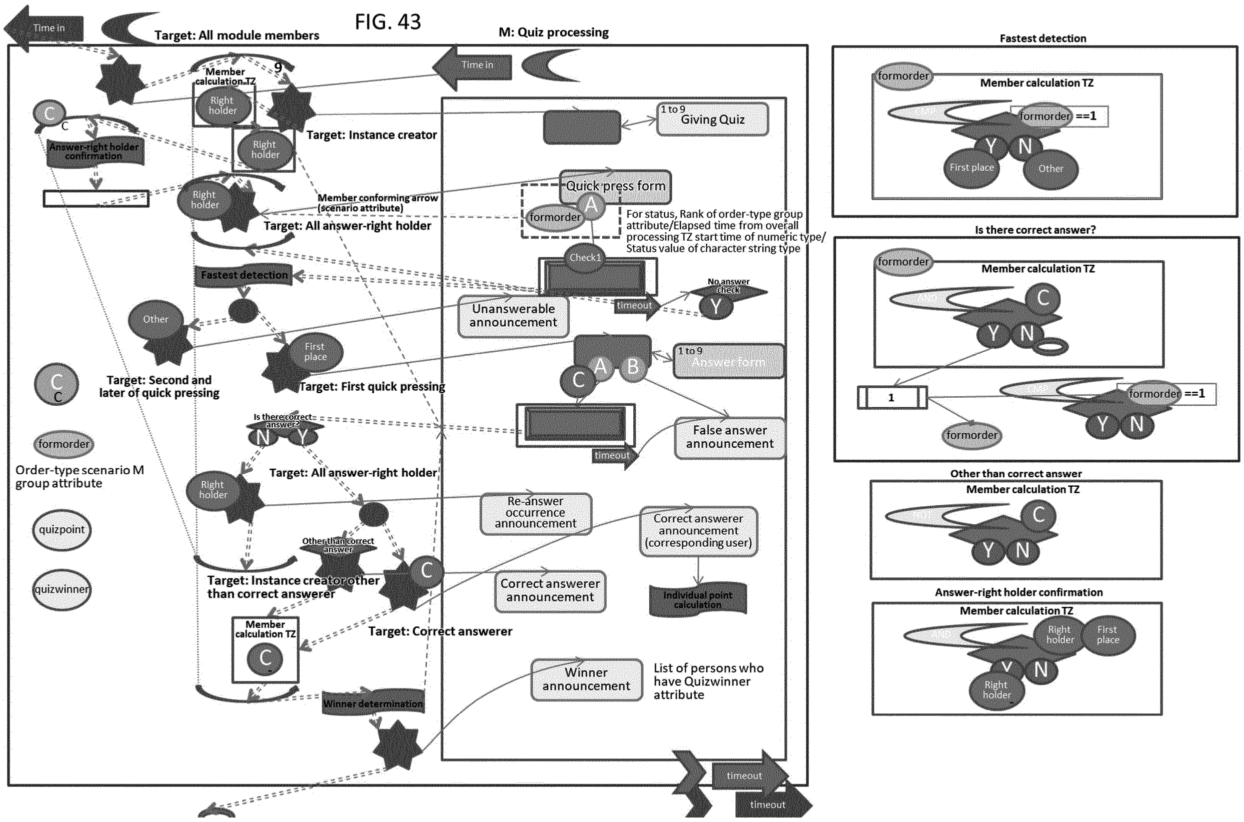

Time in
Target: All module members
M: Quiz processing
Member calculation TZ
Right holder
Target: Instance creator
Answer-right holder confirmation
1 to 9
Giving Quiz
Quick press form
Member conforming arrow (scenario attribute)
Target: All answer-right holder
formorder
For status, Rank of order-type group attribute/Elapsed time from overall processing TZ start time of numeric type/ Status value of character string type
Check1
Fastest detection
No answer check
timeout
Unanswerable announcement
Other
First place
Answer form
Target: Second and later of quick pressing
Target: First quick pressing
Is there correct answer?
False answer announcement
Order-type scenario M group attribute
quizpoint
quizwinner
Target: All answer-right holder
Re-answer occurrence announcement
Correct answerer announcement (corresponding user)
Other than correct answer
Correct answerer announcement
Individual point calculation
Target: Instance creator other than correct answerer
Target: Correct answerer
Winner determination
Winner announcement
List of persons who have Quizwinner attribute
Fastest detection
formorder ==1
First place
Is there correct answer?
Other than correct answer
Answer-right holder confirmation

FIG. 44

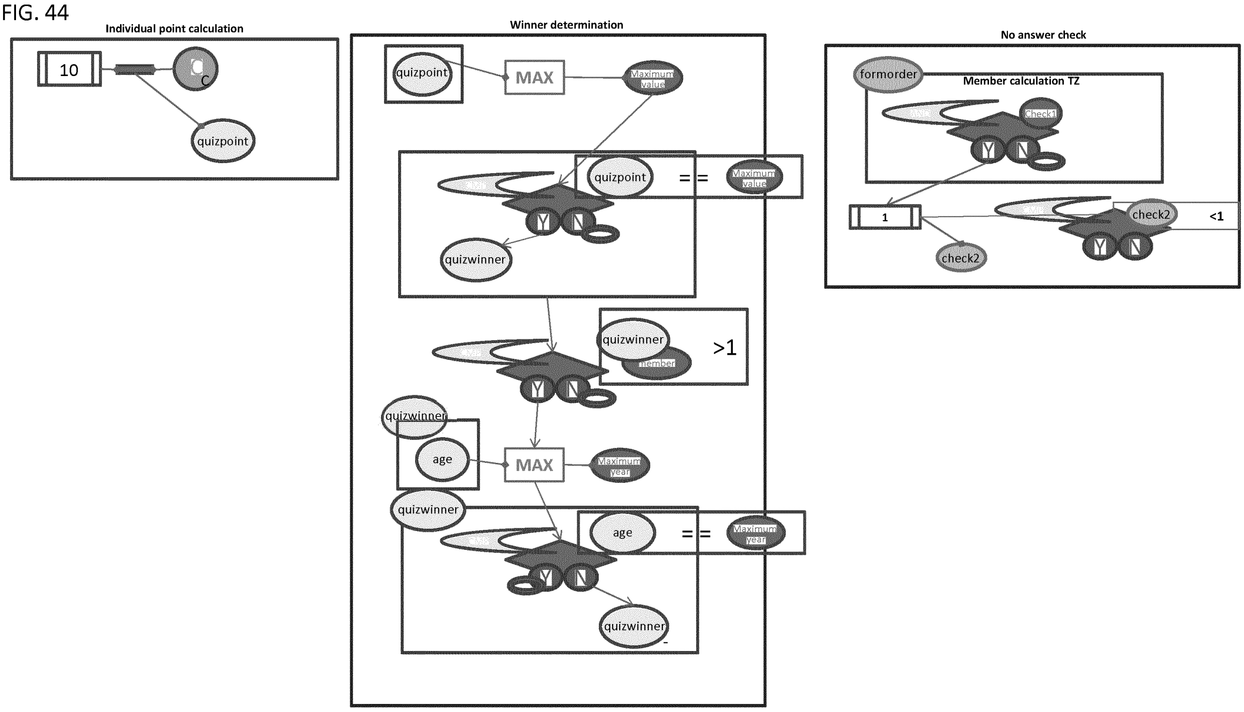
Individual point calculation
10
quizpoint
Winner determination
quizpoint
MAX
Maximum value
quizpoint
==
Maximum value
Y
N
quizwinner
quizwinner
member
>1
quizwinner
age
MAX
Maximum year
quizwinner
age
==
Maximum year
quizwinner
No answer check
formorder
Member calculation TZ
Check1
1
check2
<1
check2

FIG. 45

User screen design (browser, app)

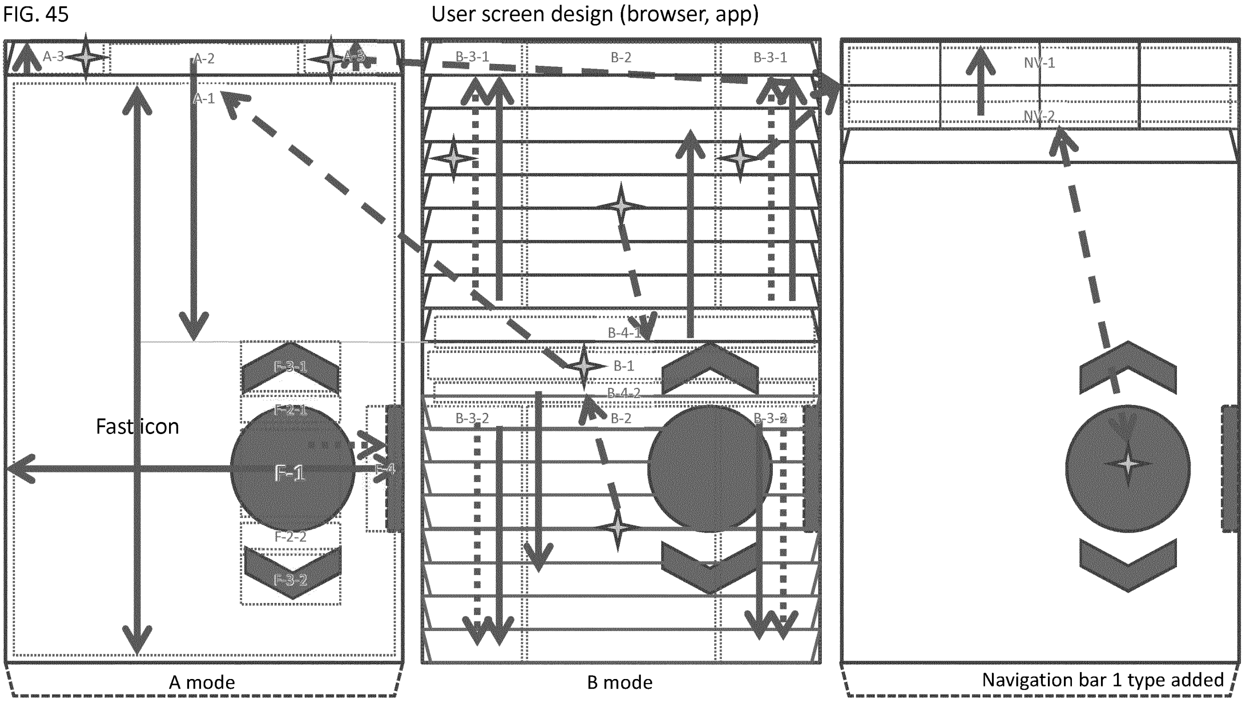

FIG. 46

User screen design (browser, app) 2

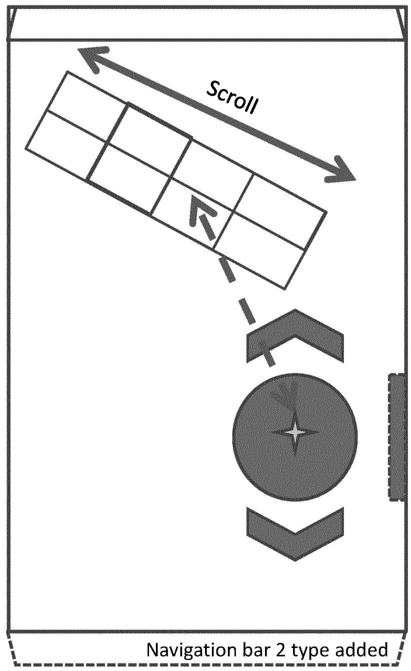

FIG. 47

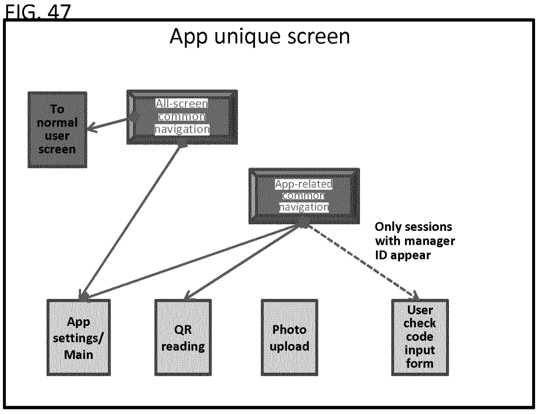


App settings
1: App name setting
2: GPS position acquisition frequency
3: Push notification setting
4: E-mail delivery setting
5: Persona selection screen (list/open/close)

QR reading page: QR reading function is called. For users, context information of other party's QR is shared. For manager staff, it is bound with user check code.
Photo upload: Called by transition from screen parts, to upload photo.
User check code input form: User check code acquired on manager screen is entered.

A-1: Browser contents screen (Swipe up/down: vertical scroll/Flick up/down: fast forward)

A-2: Browser tab top center (Swipe down: to B mode (at stop position, tab area lower limit and lower-tab area upper end also accordingly move))

A-3: Browser tab top both sides (Swipe up: browser tab bottom pulled down and browser tab top closed/Tap: navigation bar added)

Browser tab bottom functions in contrast to browser tab top.

B-1: Contents title part "Certain part of upper end of contents" (tap: transition to A mode of corresponding contents)

B-2: Tab part center (Tap: contents of tab at tapped position are set in B-1 contents title part/Double tap (or long press): contents of tab at tapped position are set in A mode)

B-3: Tab part left and right (Swipe (-1 is up, -2 is down): scroll tab up/Flick ((1 for up, -2 for down): fast forward of tab in up and down/Tap: navigation bar added)

B-4: Tab part terminal (Swipe to expand or reduce tab area width (-1 for up, -2 for down))

NV-1: Navigation main body (Tap to transition to page in corresponding area)

NV-2: Navigation terminal (Swipe up to close navigation)

F-1: Fast icon center (Swipe left/right to change left/right position/Flick to end to store at end in that direction/Tap to show navigation bar, and store when navigation bar is added)

Fast icon performs scroll up and down of browser in A mode, and up and down of tab in B mode.

F-2: Fast icon middle upper and lower parts (Tap in both A and B modes to next article at tab position (-1 for up, -2 for down))

F-3: Fast icon upper and lower parts (Double tap for certain distance, long press to upper and lower ends (-1 is up, -2 is down))

F-4: Fast icon storage mode (Flick or swipe in screen direction to normal mode)

FIG. 48

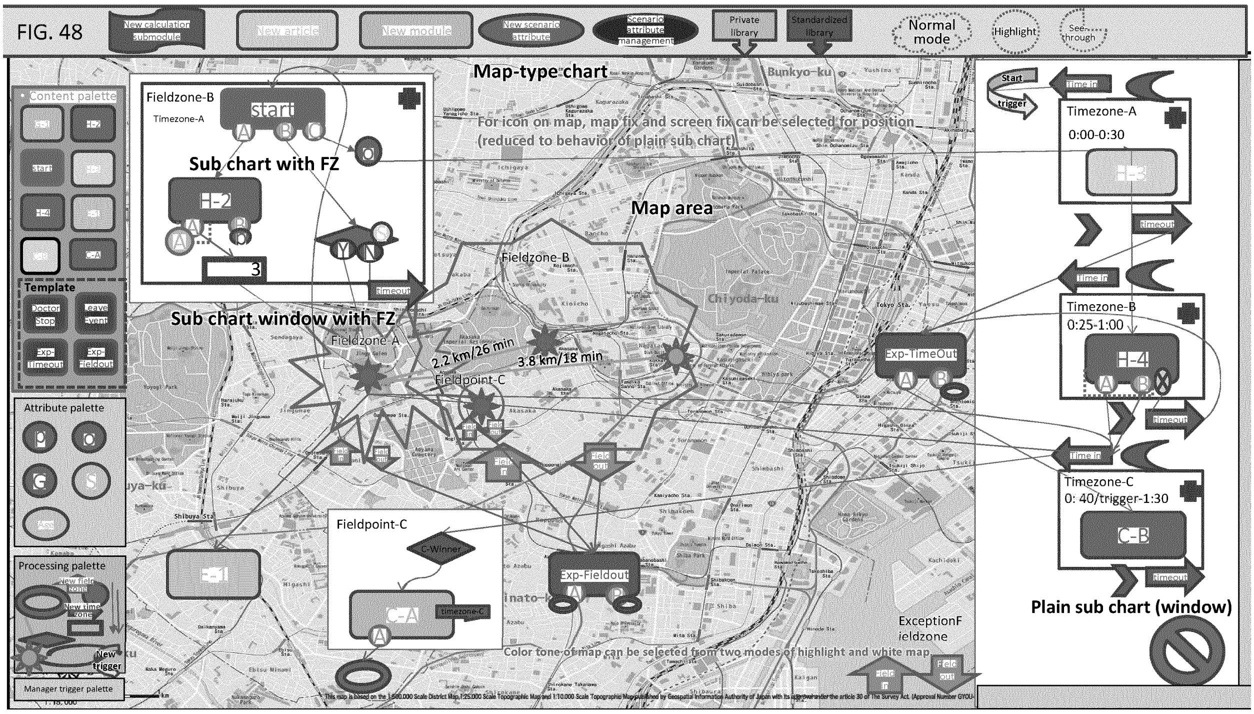
New calculation submodule
New article
New module
New scenario attribute
Scenario attribute management
Private library
Standardized library
Normal mode
Highlight
See-through
Map-type chart
Content palette
Template
Doctor Stop
Leave event
Exp-Timeout
Exp-Fieldout
Attribute palette
Processing palette
New field zone
New time zone
New trigger
Manager trigger palette
Fieldzone-B
Timezone-A
start
Sub chart with FZ
H-2
3
Timeout
Sub chart window with FZ
For icon on map, map fix and screen fix can be selected for position
(reduced to behavior of plain sub chart)
Map area
Fieldzone-B
Fieldzone-A
2.2 km/26 min
3.8 km/18 min
Fieldpoint-C
Exp-TimeOut
Fieldpoint-C
C-Winner
C-A
timezone-C
Exp-Fieldout
ExceptionFieldzone
Color tone of map can be selected from two modes of highlight and white map
Start trigger
Time in
Timezone-A
0:00-0:30
Timezone-B
0:25-1:00
H-4
Timezone-C
0: 40/trigger-1:30
C-B
Plain sub chart (window)

FIG. 49

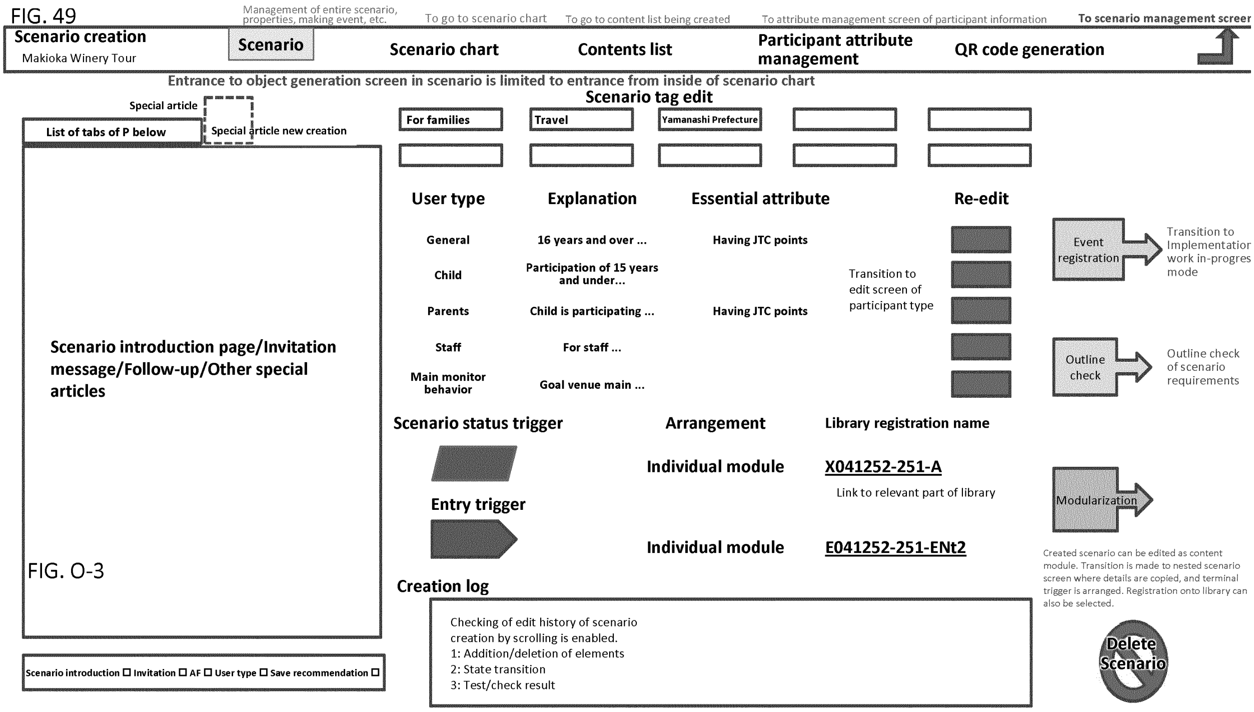
Management of entire scenario, properties, making event, etc.
To go to scenario chart
To go to content list being created
To attribute management screen of participant information
To scenario management screen
Scenario creation
Makioka Winery Tour
Scenario
Scenario chart
Contents list
Participant attribute management
QR code generation
Entrance to object generation screen in scenario is limited to entrance from inside of scenario chart
Scenario tag edit
Special article
List of tabs of P below
Special article new creation
For families
Travel
Yamanashi Prefecture
User type
Explanation
Essential attribute
Re-edit
General
16 years and over ...
Having JTC points
Child
Participation of 15 years and under...
Parents
Child is participating ...
Having JTC points
Staff
For staff ...
Main monitor behavior
Goal venue main ...
Transition to edit screen of participant type
Event registration
Transition to implementation work in-progress mode
Outline check
Outline check of scenario requirements
Scenario introduction page/Invitation message/Follow-up/Other special articles
Scenario status trigger
Arrangement
Library registration name
Individual module
X041252-251-A
Link to relevant part of library
Entry trigger
Individual module
E041252-251-ENt2
Modularization
Created scenario can be edited as content module. Transition is made to nested scenario screen where details are copied, and terminal trigger is arranged. Registration onto library can also be selected.
FIG. O-3
Creation log
Checking of edit history of scenario creation by scrolling is enabled.
1: Addition/deletion of elements
2: State transition
3: Test/check result
Delete Scenario
Scenario introduction ☐ Invitation ☐ AF ☐ User type ☐ Save recommendation ☐

FIG. 50

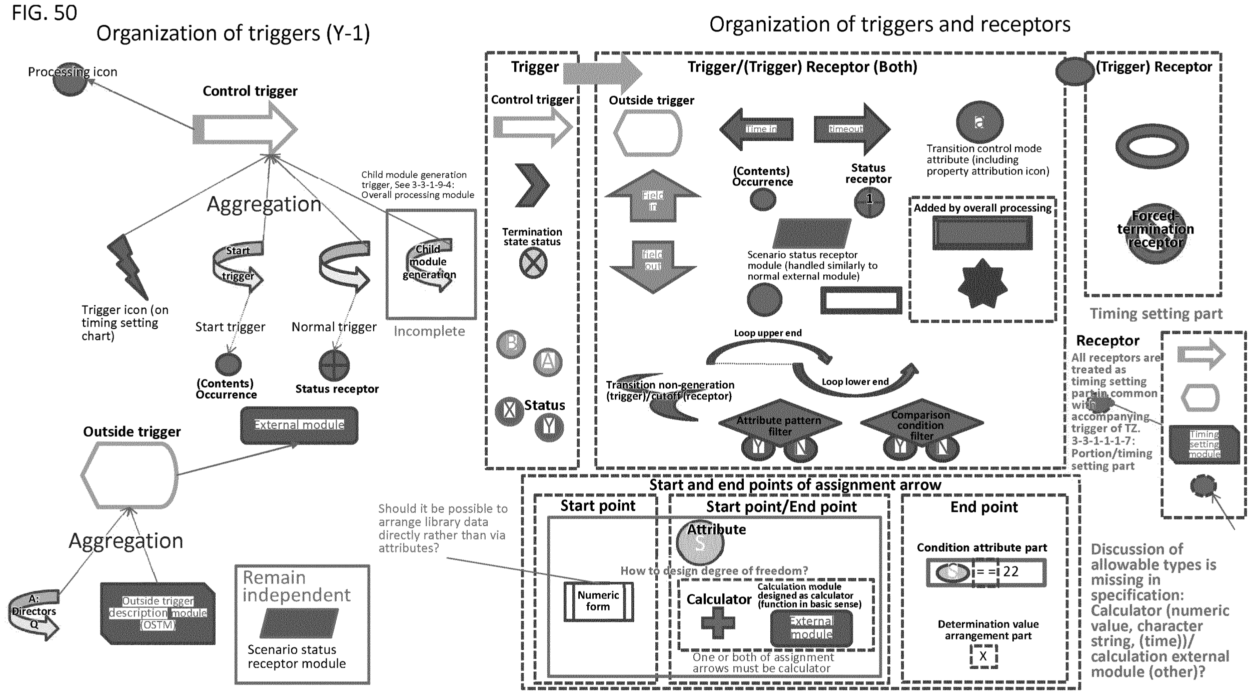
Organization of triggers (Y-1)
Processing icon
Control trigger
Aggregation
Child module generation trigger, See 3-3-1-9-4: Overall processing module
Start trigger
Child module generation
Trigger icon (on timing setting chart)
Start trigger
Normal trigger
Incomplete
(Contents) Occurrence
Status receptor
Outside trigger
External module
Aggregation
A: Directors Q
Outside trigger description module (OSTM)
Remain independent
Scenario status receptor module
Should it be possible to arrange library data directly rather than via attributes?
Organization of triggers and receptors
Trigger
Control trigger
Termination state status
Status
Trigger/(Trigger) Receptor (Both)
Outside trigger
Time in
timeout
(Contents) Occurrence
Status receptor
Transition control mode attribute (including property attribution icon)
Field in
field out
Scenario status receptor module (handled similarly to normal external module)
Added by overall processing
Loop upper end
Loop lower end
Transition non-generation (trigger)/cutoff (receptor)
Attribute pattern filter
Comparison condition filter
(Trigger) Receptor
Forced-termination receptor
Timing setting part
Receptor
All receptors are treated as timing setting part in common with accompanying trigger of TZ. 3-3-1-1-1-7: Portion/timing setting part
Timing setting module
Start and end points of assignment arrow
Start point
Start point/End point
End point
Attribute
How to design degree of freedom?
Numeric form
Calculator
Calculation module designed as calculator (function in basic sense)
External module
One or both of assignment arrows must be calculator
Condition attribute part
= = 22
Determination value arrangement part
Discussion of allowable types is missing in specification: Calculator (numeric value, character string, (time))/ calculation external module (other)?

FIG. 51

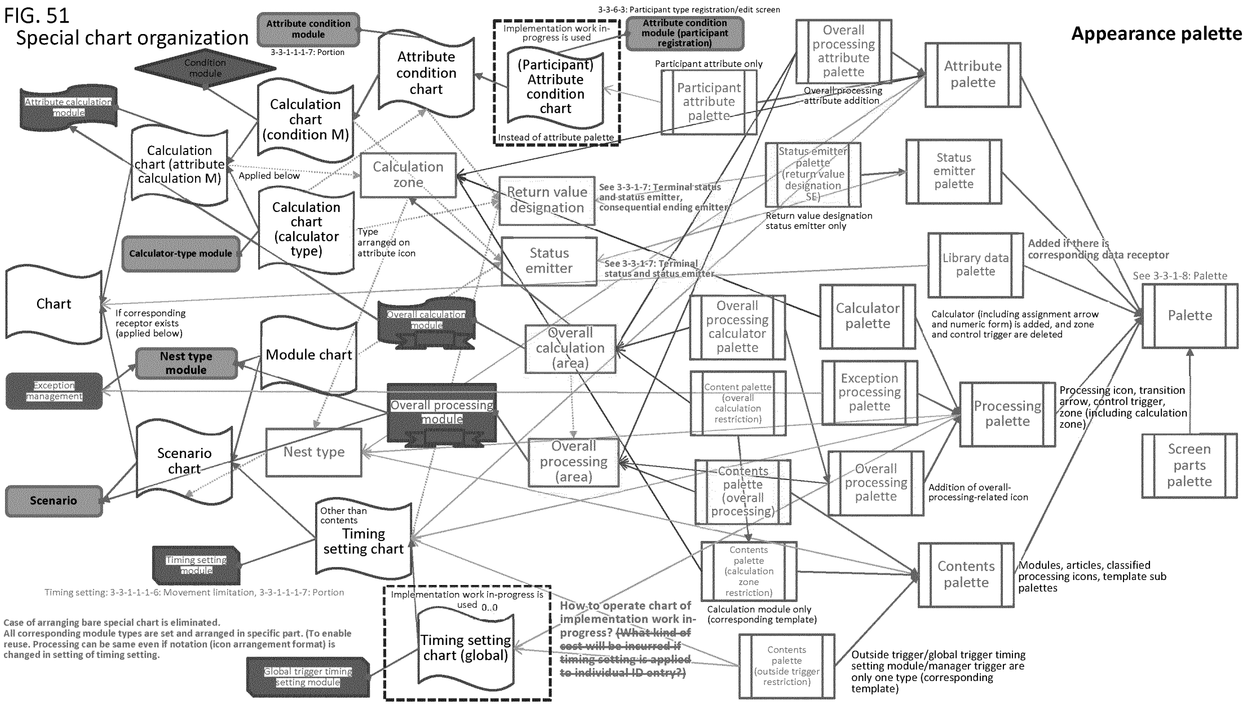

FIG. 52

Organization of library data usage (and organization of requirements regarding global trigger)

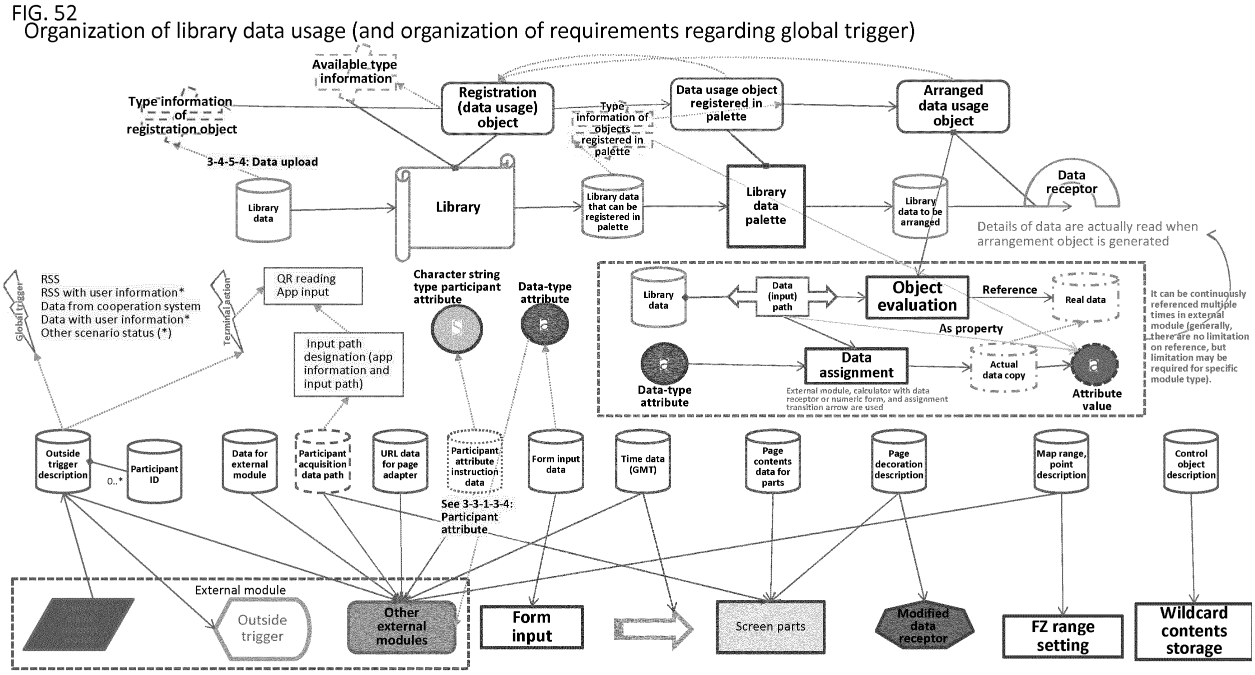

FIG. 53

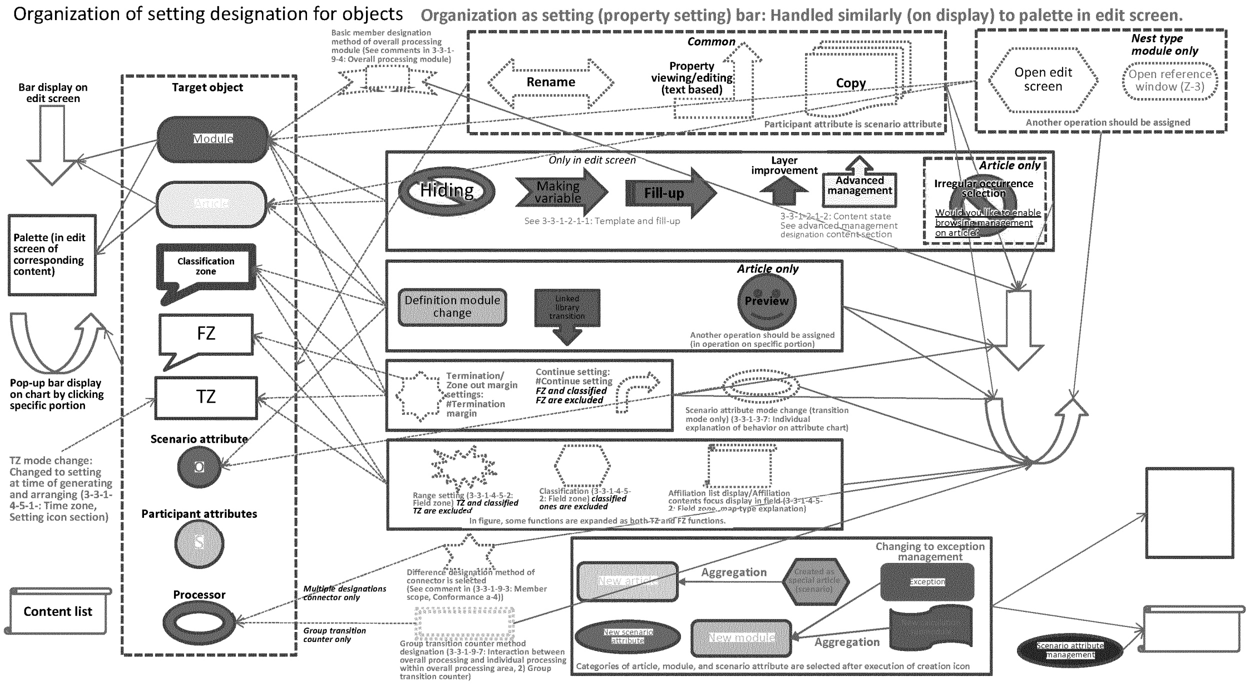
Organization of setting designation for objects
Organization as setting (property setting) bar: Handled similarly (on display) to palette in edit screen.
Bar display on edit screen
Target object
Module
Article
Classification zone
FZ
TZ
Scenario attribute
Participant attributes
S
Processor
Palette (in edit screen of corresponding content)
Pop-up bar display on chart by clicking specific portion
TZ mode change: Changed to setting at time of generating and arranging (3-3-1-4-5-1-: Time zone, Setting icon section)
Content list
Basic member designation method of overall processing module (See comments in 3-3-1-9-4: Overall processing module)
Common
Rename
Property viewing/editing (text based)
Copy
Participant attribute is scenario attribute
Nest type module only
Open edit screen
Open reference window (Z-3)
Another operation should be assigned
Only in edit screen
Hiding
Making variable
Fill-up
See 3-3-1-2-1-1: Template and fill-up
Layer improvement
Advanced management
3-3-1-2-1-2: Content state
See advanced management designation content section
Article only
Irregular occurrence selection
Would you like to enable browsing management on article?
Article only
Definition module change
Linked library transition
Preview
Another operation should be assigned (in operation on specific portion)
Termination/ Zone out margin settings: #Termination margin
Continue setting: #Continue setting
FZ and classified FZ are excluded
Scenario attribute mode change (transition mode only) (3-3-1-3-7: Individual explanation of behavior on attribute chart)
Range setting (3-3-1-4-5-2: Field zone) TZ and classified TZ are excluded
Classification (3-3-1-4-5-2: Field zone) classified ones are excluded
Affiliation list display/Affiliation contents focus display in field (3-3-1-4-5-2: Field zone, map-type explanation)
In figure, some functions are expanded as both TZ and FZ functions.
Difference designation method of connector is selected (See comment in (3-3-1-9-3: Member scope, Conformance a-4))
Multiple designations connector only
Group transition counter only
Group transition counter method designation (3-3-1-9-7: Interaction between overall processing and individual processing within overall processing area, 2) Group transition counter)
Changing to exception management
New article
Aggregation
Exception
New scenario attribute
New module
Aggregation
Categories of article, module, and scenario attribute are selected after execution of creation icon
Scenario attribute management

FIG. 54 Organization of input methods other than setting bar

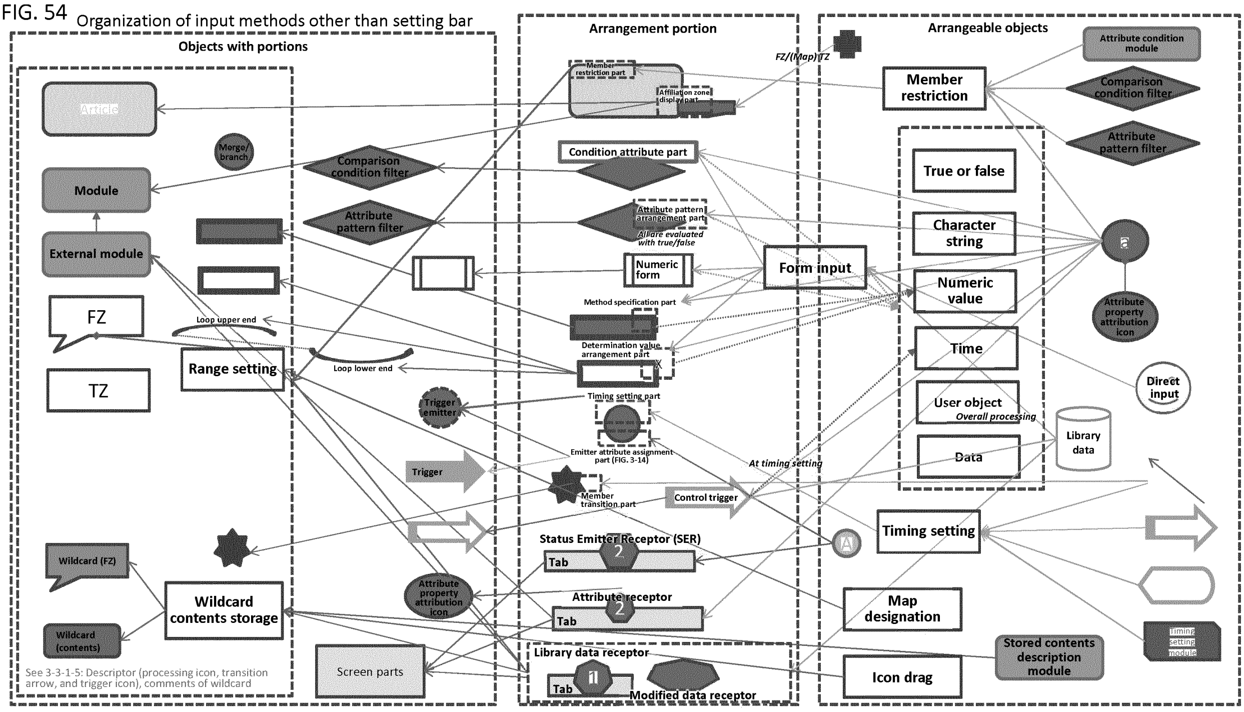

FIG. 55
Organization between elements

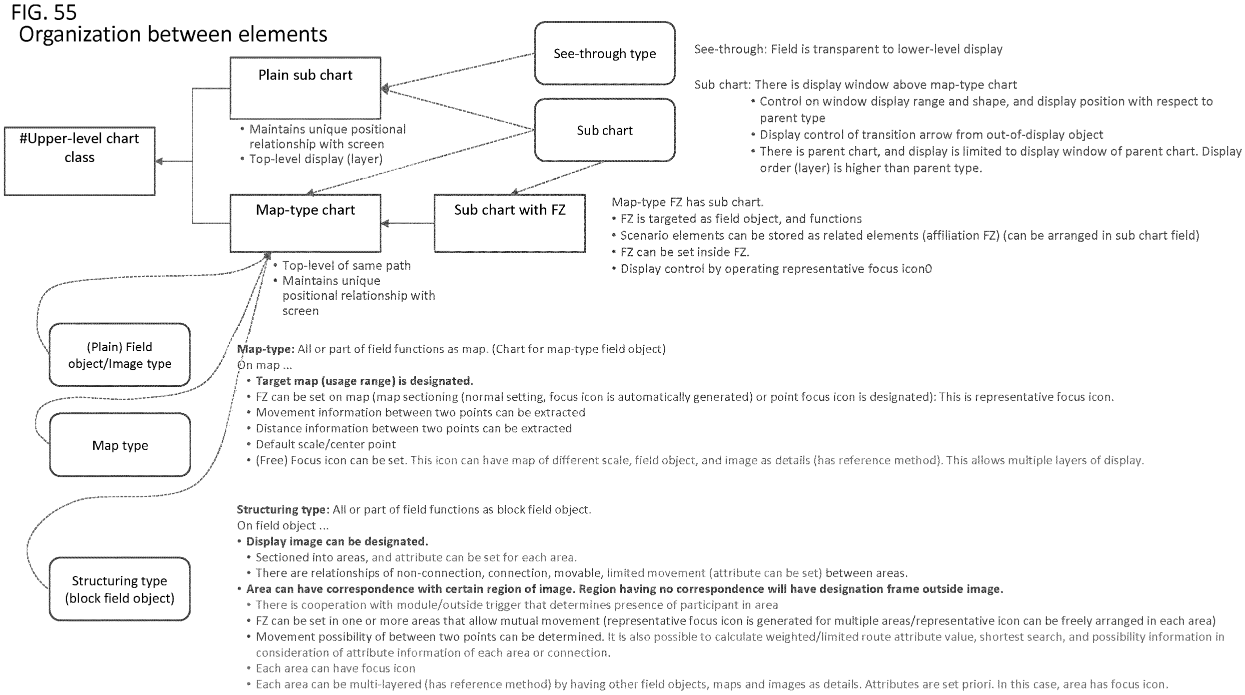

FIG. 56

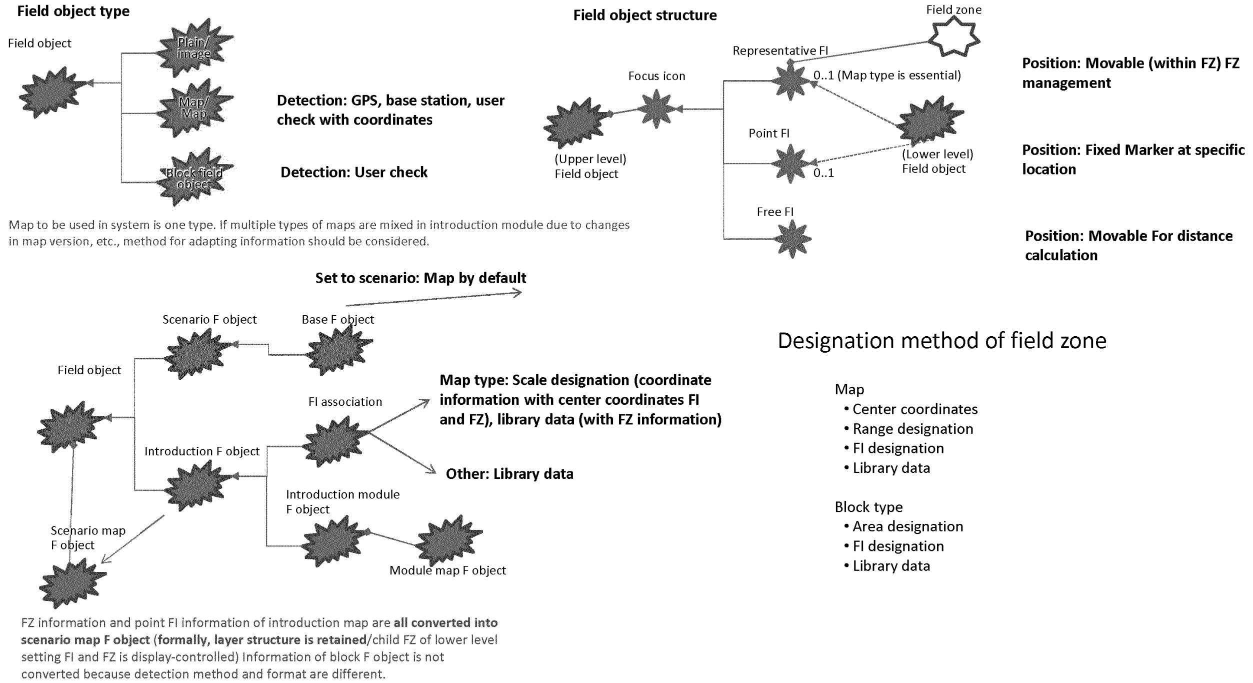
Field object type
Field object
Plain/image
Map/Map
Block field object
Detection: GPS, base station, user check with coordinates
Detection: User check
Map to be used in system is one type. If multiple types of maps are mixed in introduction module due to changes in map version, etc., method for adapting information should be considered.
Field object structure
Field zone
Representative FI
Focus icon
0..1 (Map type is essential)
(Upper level) Field object
Point FI
(Lower level) Field object
0..1
Free FI
Position: Movable (within FZ) FZ management
Position: Fixed Marker at specific location
Position: Movable For distance calculation
Set to scenario: Map by default
Scenario F object
Base F object
Field object
FI association
Map type: Scale designation (coordinate information with center coordinates FI and FZ), library data (with FZ information)
Introduction F object
Other: Library data
Introduction module F object
Scenario map F object
Module map F object
FZ information and point FI information of introduction map are all converted into scenario map F object (formally, layer structure is retained/child FZ of lower level setting FI and FZ is display-controlled) Information of block F object is not converted because detection method and format are different.
Designation method of field zone
Map
• Center coordinates
• Range designation
• FI designation
• Library data
Block type
• Area designation
• FI designation
• Library data

FIG. 57

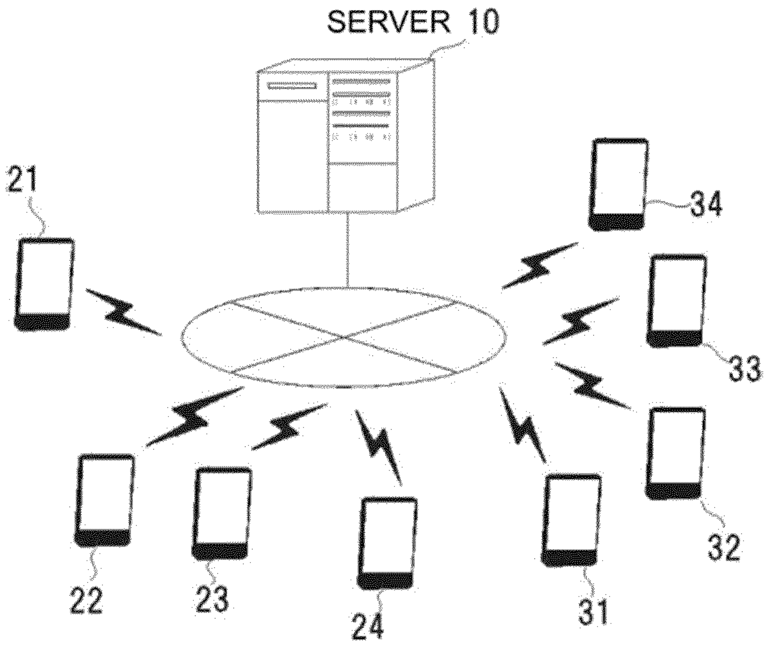

FIG. 58

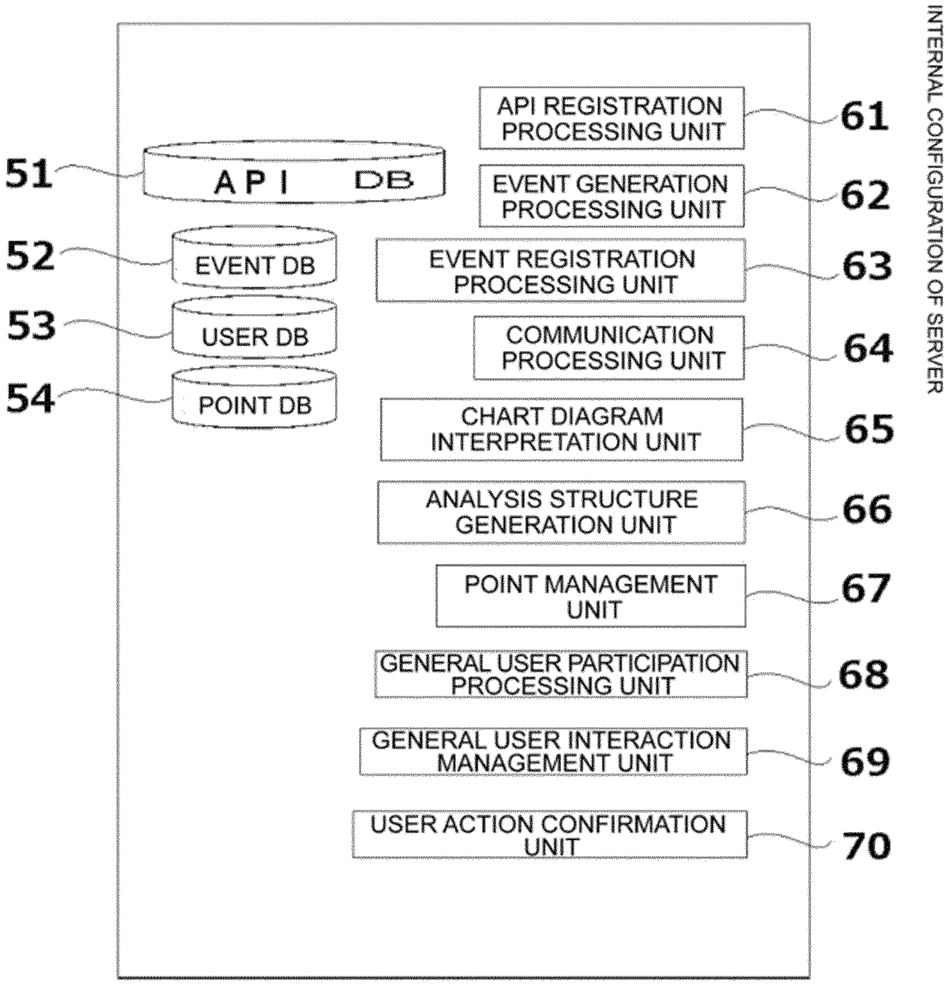
INTERNAL CONFIGURATION OF SERVER
API REGISTRATION PROCESSING UNIT
61
EVENT GENERATION PROCESSING UNIT
62
EVENT REGISTRATION PROCESSING UNIT
63
COMMUNICATION PROCESSING UNIT
64
CHART DIAGRAM INTERPRETATION UNIT
65
ANALYSIS STRUCTURE GENERATION UNIT
66
POINT MANAGEMENT UNIT
67
GENERAL USER PARTICIPATION PROCESSING UNIT
68
GENERAL USER INTERACTION MANAGEMENT UNIT
69
USER ACTION CONFIRMATION UNIT
70
51
API DB
52
EVENT DB
53
USER DB
54
POINT DB

FIG. 59

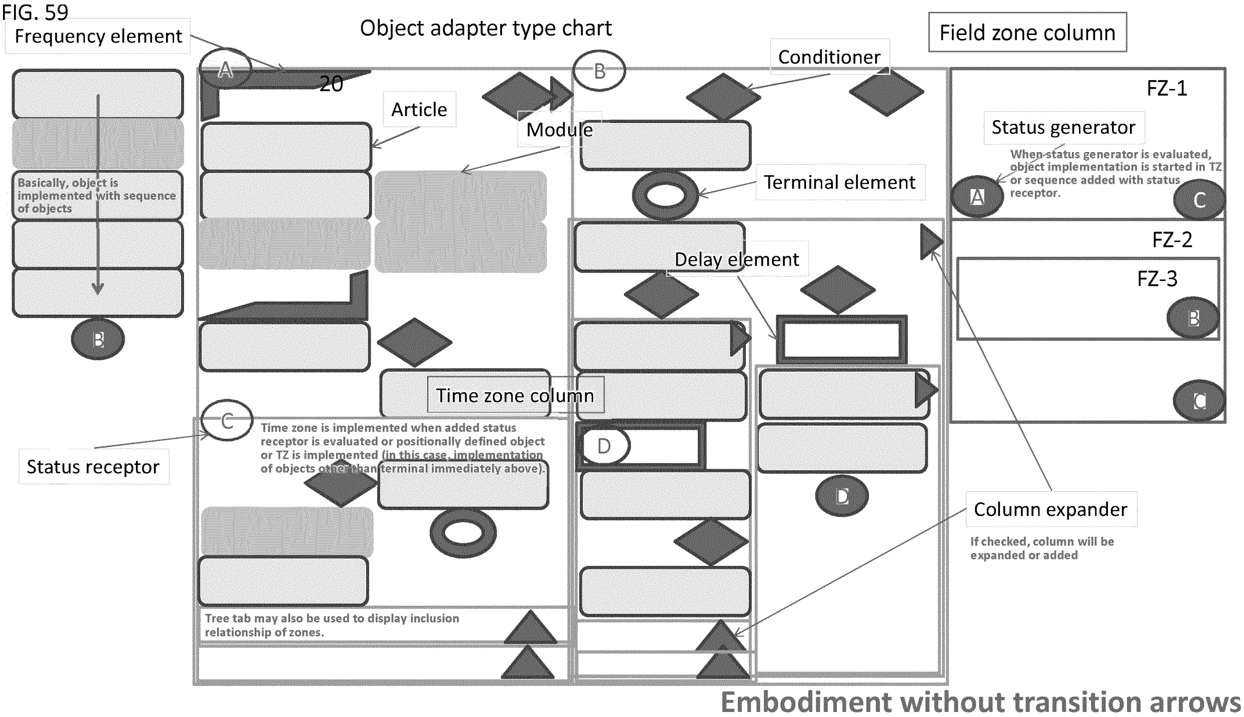


Embodiment without transition arrows

FIG. 60

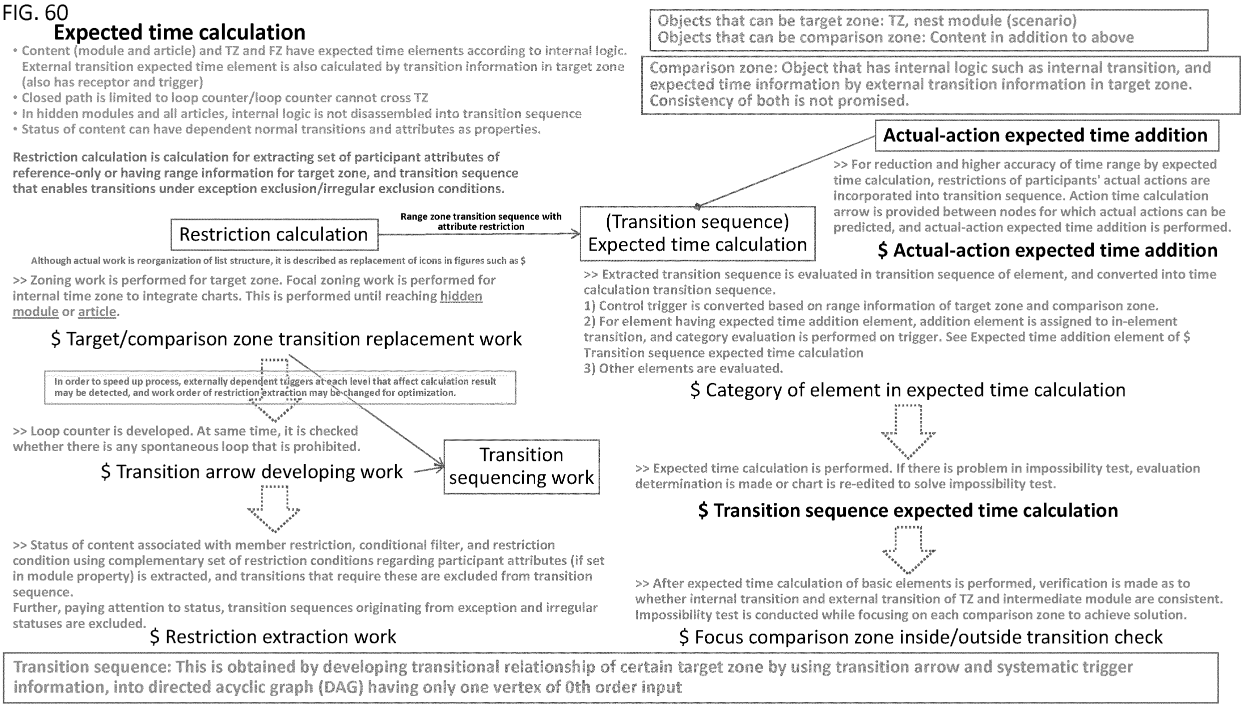
Expected time calculation
• Content (module and article) and TZ and FZ have expected time elements according to internal logic. External transition expected time element is also calculated by transition information in target zone (also has receptor and trigger)
• Closed path is limited to loop counter/loop counter cannot cross TZ
• In hidden modules and all articles, internal logic is not disassembled into transition sequence
• Status of content can have dependent normal transitions and attributes as properties.
Objects that can be target zone: TZ, nest module (scenario)
Objects that can be comparison zone: Content in addition to above
Comparison zone: Object that has internal logic such as internal transition, and expected time information by external transition information in target zone. Consistency of both is not promised.
Restriction calculation is calculation for extracting set of participant attributes of reference-only or having range information for target zone, and transition sequence that enables transitions under exception exclusion/irregular exclusion conditions.
Actual-action expected time addition
>> For reduction and higher accuracy of time range by expected time calculation, restrictions of participants' actual actions are incorporated into transition sequence. Action time calculation arrow is provided between nodes for which actual actions can be predicted, and actual-action expected time addition is performed.
Restriction calculation
Range zone transition sequence with attribute restriction
(Transition sequence) Expected time calculation
$ Actual-action expected time addition
Although actual work is reorganization of list structure, it is described as replacement of icons in figures such as $
>> Zoning work is performed for target zone. Focal zoning work is performed for internal time zone to integrate charts. This is performed until reaching hidden module or article.
$ Target/comparison zone transition replacement work
In order to speed up process, externally dependent triggers at each level that affect calculation result may be detected, and work order of restriction extraction may be changed for optimization.
>> Loop counter is developed. At same time, it is checked whether there is any spontaneous loop that is prohibited.
$ Transition arrow developing work
Transition sequencing work
>> Status of content associated with member restriction, conditional filter, and restriction condition using complementary set of restriction conditions regarding participant attributes (if set in module property) is extracted, and transitions that require these are excluded from transition sequence.
Further, paying attention to status, transition sequences originating from exception and irregular statuses are excluded.
$ Restriction extraction work
>> Extracted transition sequence is evaluated in transition sequence of element, and converted into time calculation transition sequence.
1) Control trigger is converted based on range information of target zone and comparison zone.
2) For element having expected time addition element, addition element is assigned to in-element transition, and category evaluation is performed on trigger. See Expected time addition element of $ Transition sequence expected time calculation
3) Other elements are evaluated.
$ Category of element in expected time calculation
>> Expected time calculation is performed. If there is problem in impossibility test, evaluation determination is made or chart is re-edited to solve impossibility test.
$ Transition sequence expected time calculation
>> After expected time calculation of basic elements is performed, verification is made as to whether internal transition and external transition of TZ and intermediate module are consistent. Impossibility test is conducted while focusing on each comparison zone to achieve solution.
$ Focus comparison zone inside/outside transition check
Transition sequence: This is obtained by developing transitional relationship of certain target zone by using transition arrow and systematic trigger information, into directed acyclic graph (DAG) having only one vertex of 0th order input

FIG. 61

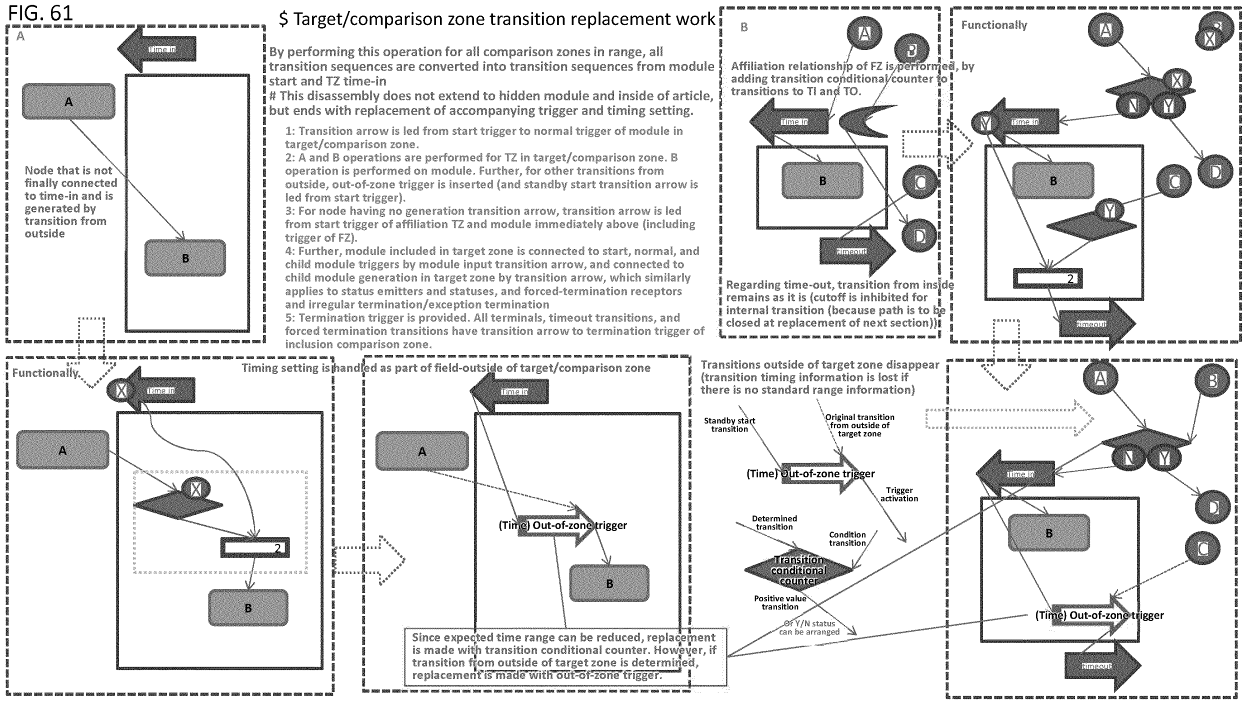
$ Target/comparison zone transition replacement work
A
Time-in
A
B
Node that is not finally connected to time-in and is generated by transition from outside
By performing this operation for all comparison zones in range, all transition sequences are converted into transition sequences from module start and TZ time-in
# This disassembly does not extend to hidden module and inside of article, but ends with replacement of accompanying trigger and timing setting.
1: Transition arrow is led from start trigger to normal trigger of module in target/comparison zone.
2: A and B operations are performed for TZ in target/comparison zone. B operation is performed on module. Further, for other transitions from outside, out-of-zone trigger is inserted (and standby start transition arrow is led from start trigger).
3: For node having no generation transition arrow, transition arrow is led from start trigger of affiliation TZ and module immediately above (including trigger of FZ).
4: Further, module included in target zone is connected to start, normal, and child module triggers by module input transition arrow, and connected to child module generation in target zone by transition arrow, which similarly applies to status emitters and statuses, and forced-termination receptors and irregular termination/exception termination
5: Termination trigger is provided. All terminals, timeout transitions, and forced termination transitions have transition arrow to termination trigger of inclusion comparison zone.
B
Affiliation relationship of FZ is performed, by adding transition conditional counter to transitions to TI and TO.
Regarding time-out, transition from inside remains as it is (cutoff is inhibited for internal transition (because path is to be closed at replacement of next section))
Functionally
Timeout
Functionally
Timing setting is handled as part of field-outside of target/comparison zone
(Time) Out-of-zone trigger
Since expected time range can be reduced, replacement is made with transition conditional counter. However, if transition from outside of target zone is determined, replacement is made with out-of-zone trigger.
Transitions outside of target zone disappear (transition timing information is lost if there is no standard range information)
Standby start transition
Original transition from outside of target zone
(Time) Out-of-zone trigger
Trigger activation
Determined transition
Condition transition
Transition conditional counter
Positive value transition
Of Y/N status can be arranged
(Time) Out-of-zone trigger

FIG. 62

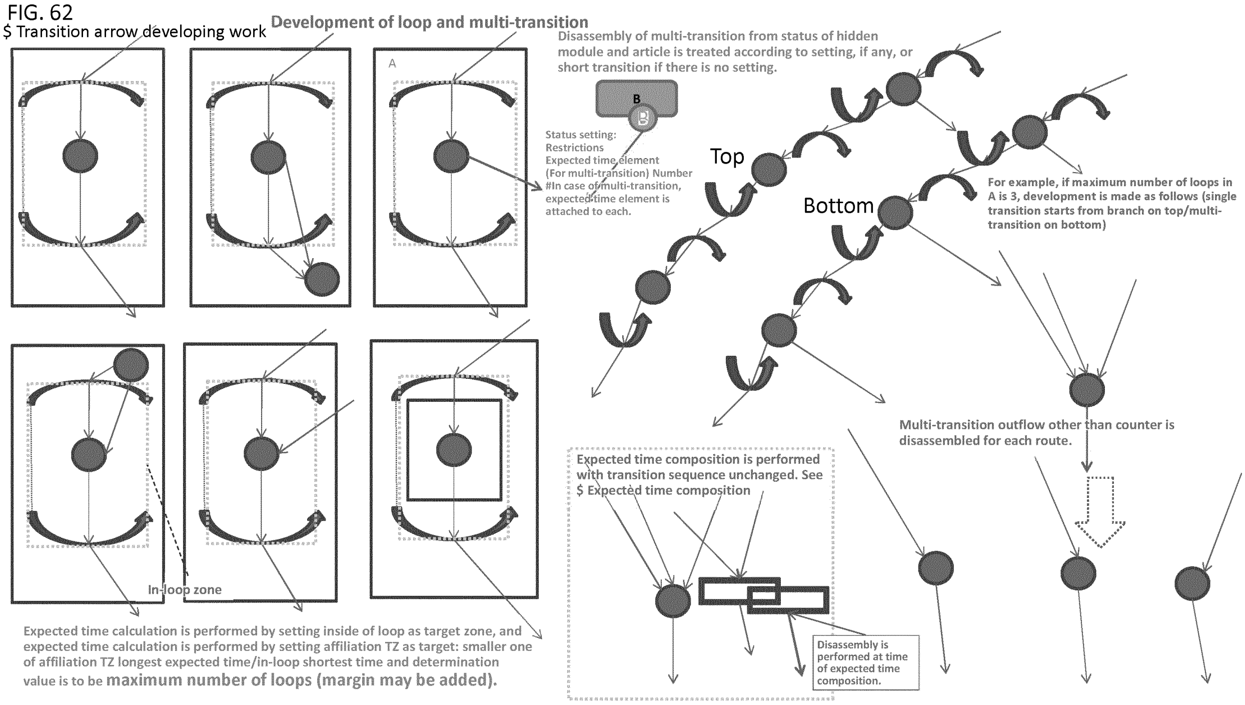
$ Transition arrow developing work
Development of loop and multi-transition
Disassembly of multi-transition from status of hidden module and article is treated according to setting, if any, or short transition if there is no setting.
A
B
Status setting:
Restrictions
Expected time element
(For multi-transition) Number
#In case of multi-transition, expected time element is attached to each.
Top
Bottom
For example, if maximum number of loops in A is 3, development is made as follows (single transition starts from branch on top/multi-transition on bottom)
In-loop zone
Expected time composition is performed with transition sequence unchanged. See $ Expected time composition
Multi-transition outflow other than counter is disassembled for each route.
Disassembly is performed at time of expected time composition.
Expected time calculation is performed by setting inside of loop as target zone, and expected time calculation is performed by setting affiliation TZ as target: smaller one of affiliation TZ longest expected time/in-loop shortest time and determination value is to be maximum number of loops (margin may be added).

FIG. 63

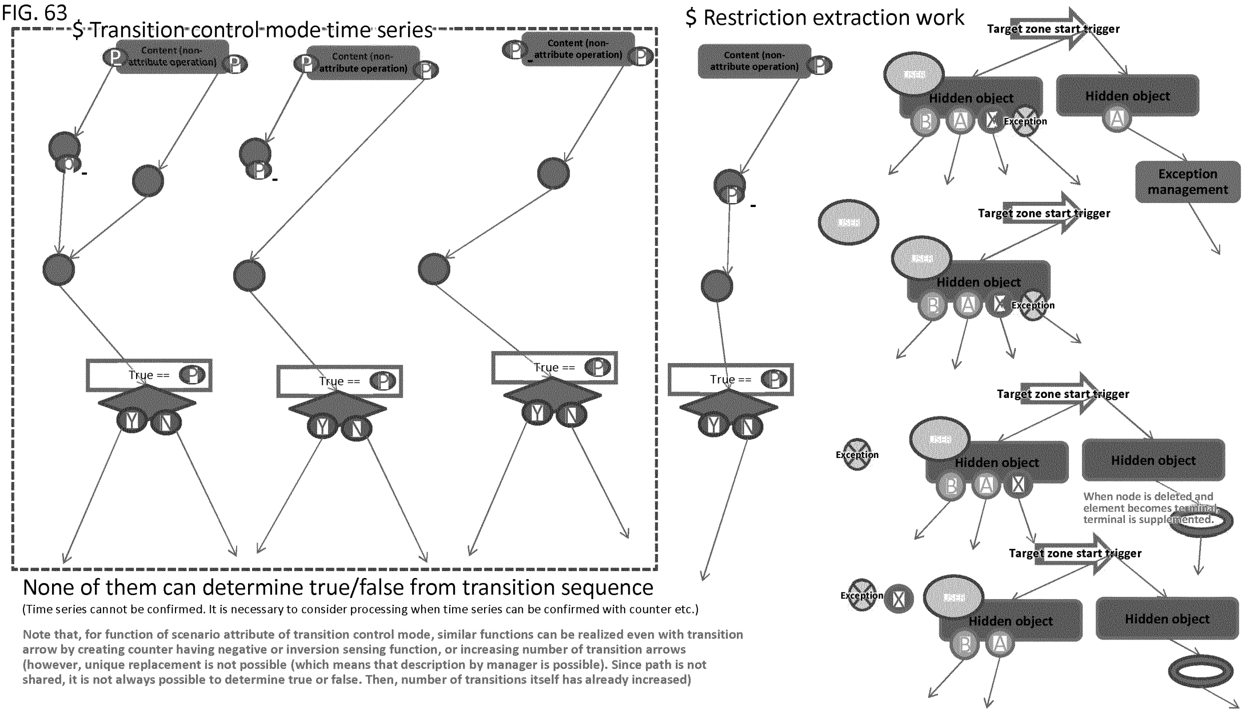
$ Transition control mode time series
Content (non-attribute operation)
True ==
$ Restriction extraction work
Target zone start trigger
Hidden object
Exception
Exception management
When node is deleted and element becomes terminal, terminal is supplemented.
None of them can determine true/false from transition sequence
(Time series cannot be confirmed. It is necessary to consider processing when time series can be confirmed with counter etc.)
Note that, for function of scenario attribute of transition control mode, similar functions can be realized even with transition arrow by creating counter having negative or inversion sensing function, or increasing number of transition arrows (however, unique replacement is not possible (which means that description by manager is possible). Since path is not shared, it is not always possible to determine true or false. Then, number of transitions itself has already increased)

FIG. 64

$ Category of element in expected time calculation

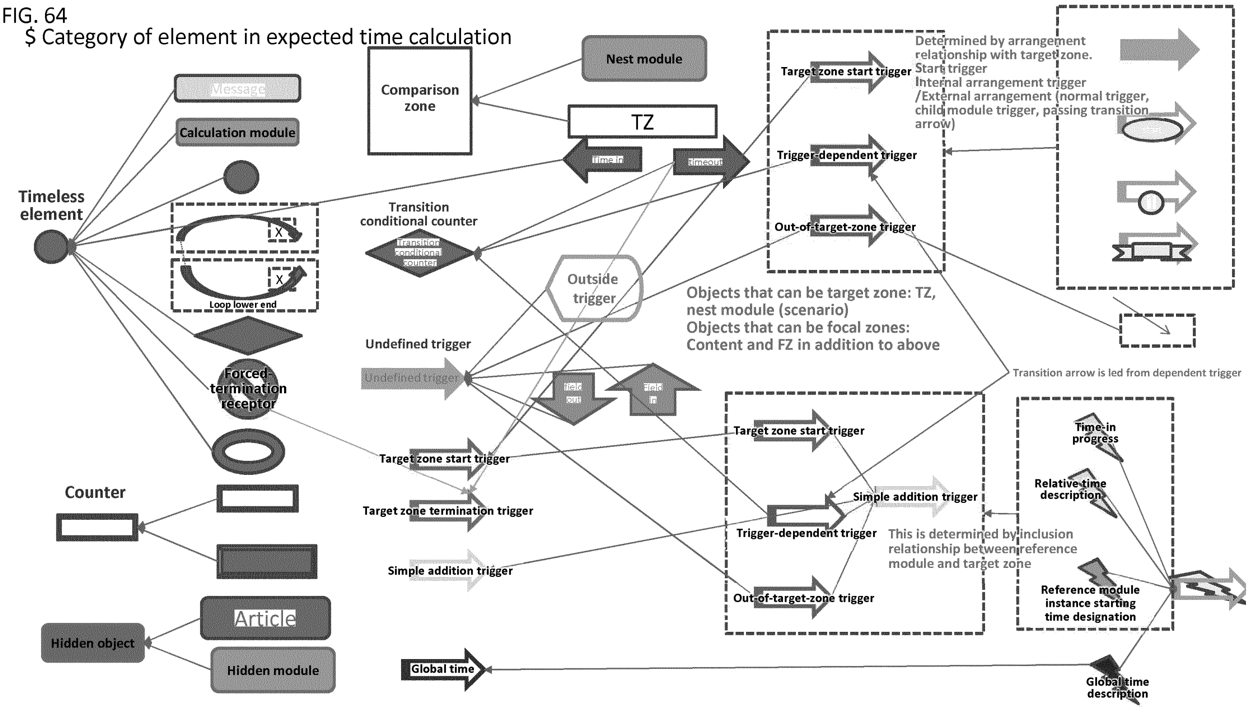

FIG. 65

$ Transition sequence expected time calculation

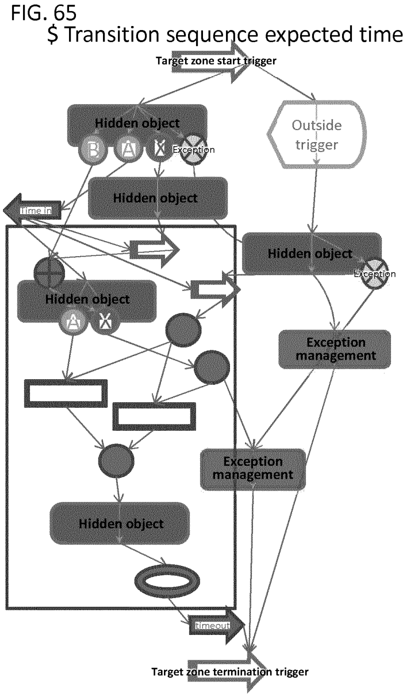


**Details of time calculation transition sequence**

Certain time calculation transition sequence forms directed acyclic graph (DAG) made up of elements connected by directed transition arrows originating from start trigger. Among connecting points with transition arrow of element, one for receiving is called receptor, and one for sending called trigger, which form DAG made up of transition arrows and in-element directed transitions that connect all receptors and triggers of certain element. Receptors and triggers at this time are called nodes.
Note that timeless element simply forms one node.

**Expected time**

Set of expected time when certain transition sequence (up to node) ends at shortest and expected time when transition sequence ends at longest.
In addition, range of most likely end time.

**Expected time addition element**

Certain in-element directed transition can have addition element related to expected time. It takes form of added value to element of each expected time, where
**Shortest time <= Longest time**
**Standard shortest <= Standard longest**
must be satisfied.
**(+MN +MX)(+MNs +MXs)/**
**+MN +MX**
**+MNs +MXs**

**For details, see $ Element category expected time addition element.**

**Transition sequence expected time**

Expected time of final terminal (node connected to termination receptor of target zone) and expected time of termination receptor, in following transition sequence of target zone

**Node transition sequence expected time**

Expected time from start trigger of transition sequence to any receptor or trigger (node).

**Shortest time Longest time**
**Standard shortest Standard longest**
**(MN MX)(MNs MXs)/**
**MN MX**
**MNs MXs**

**Expected time calculation**

1) All transitions are first traced from start trigger, and **node transition sequence expected time** is placed for each node.
2) **Expected time addition element** is individually added to expected time when passing through in-element directed transition.
3) Expected time is composed in accordance with $ Expected time composition at time of merging and branching.
4) At conditional counter, simple impossibility test is performed.
5) When result is not complete establishment, optimization is performed by using verification scheme of $ Focus comparison zone inside/outside transition check. (Progress is stopped)
6) Once zone termination trigger is reached, expected time calculation ends temporarily.

FIG. 66

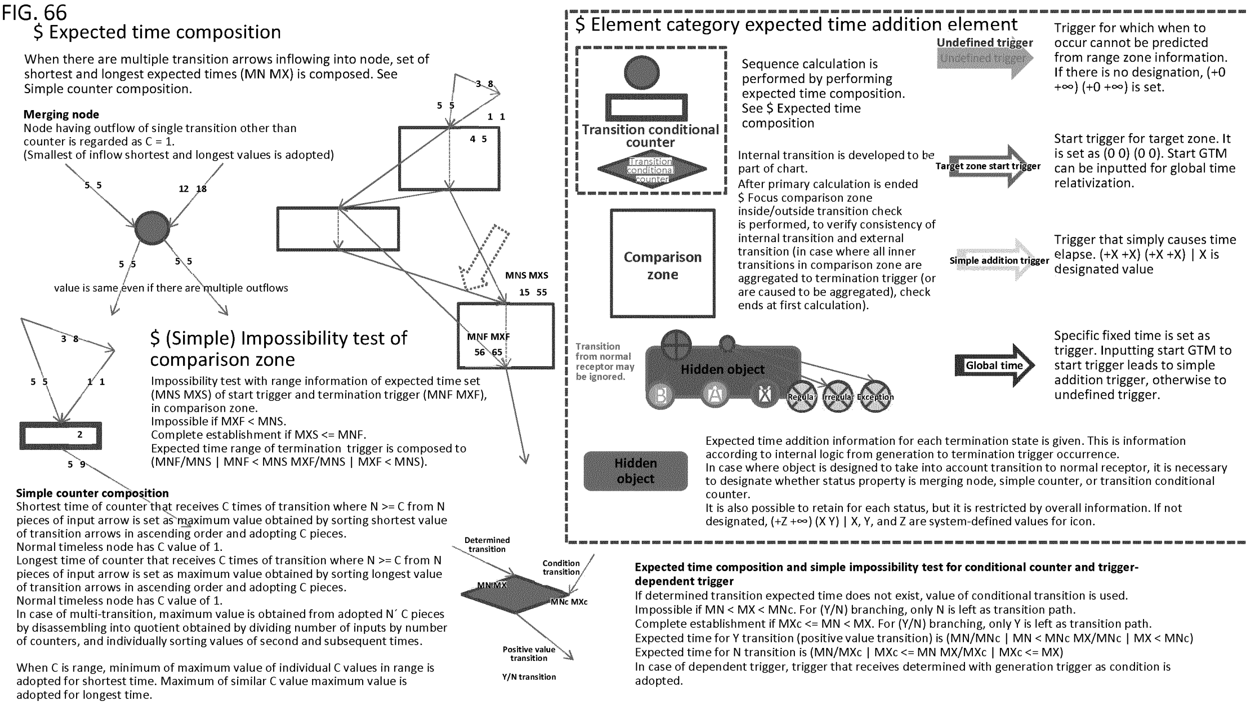
$ Expected time composition
When there are multiple transition arrows inflowing into node, set of shortest and longest expected times (MN MX) is composed. See Simple counter composition.
Merging node
Node having outflow of single transition other than counter is regarded as C = 1.
(Smallest of inflow shortest and longest values is adopted)
5 5
12 18
5 5
5 5
value is same even if there are multiple outflows
3 8
5 5
1 1
4 5
MNS MXS
15 55
MNF MXF
56 65
3 8
5 5
1 1
2
5 9
$ (Simple) Impossibility test of comparison zone
Impossibility test with range information of expected time set (MNS MXS) of start trigger and termination trigger (MNF MXF), in comparison zone.
Impossible if MXF < MNS.
Complete establishment if MXS <= MNF.
Expected time range of termination trigger is composed to (MNF/MNS | MNF < MNS MXF/MNS | MXF < MNS).
Simple counter composition
Shortest time of counter that receives C times of transition where N >= C from N pieces of input arrow is set as maximum value obtained by sorting shortest value of transition arrows in ascending order and adopting C pieces.
Normal timeless node has C value of 1.
Longest time of counter that receives C times of transition where N >= C from N pieces of input arrow is set as maximum value obtained by sorting longest value of transition arrows in ascending order and adopting C pieces.
Normal timeless node has C value of 1.
In case of multi-transition, maximum value is obtained from adopted N′ C pieces by disassembling into quotient obtained by dividing number of inputs by number of counters, and individually sorting values of second and subsequent times.
When C is range, minimum of maximum value of individual C values in range is adopted for shortest time. Maximum of similar C value maximum value is adopted for longest time.
Determined transition
Condition transition
MN MX
MNc MXc
Positive value transition
Y/N transition
$ Element category expected time addition element
Transition conditional counter
Transition conditional counter
Sequence calculation is performed by performing expected time composition. See $ Expected time composition
Internal transition is developed to be part of chart.
After primary calculation is ended $ Focus comparison zone inside/outside transition check is performed, to verify consistency of internal transition and external transition (in case where all inner transitions in comparison zone are aggregated to termination trigger (or are caused to be aggregated), check ends at first calculation).
Comparison zone
Undefined trigger
Undefined trigger
Trigger for which when to occur cannot be predicted from range zone information. If there is no designation, (+0 +∞) (+0 +∞) is set.
Target zone start trigger
Start trigger for target zone. It is set as (0 0) (0 0). Start GTM can be inputted for global time relativization.
Simple addition trigger
Trigger that simply causes time elapse. (+X +X) (+X +X) | X is designated value
Transition from normal receptor may be ignored.
Hidden object
B
A
X
Regula
Irregula
Exception
Global time
Specific fixed time is set as trigger. Inputting start GTM to start trigger leads to simple addition trigger, otherwise to undefined trigger.
Hidden object
Expected time addition information for each termination state is given. This is information according to internal logic from generation to termination trigger occurrence.
In case where object is designed to take into account transition to normal receptor, it is necessary to designate whether status property is merging node, simple counter, or transition conditional counter.
It is also possible to retain for each status, but it is restricted by overall information. If not designated, (+Z +∞) (X Y) | X, Y, and Z are system-defined values for icon.
Expected time composition and simple impossibility test for conditional counter and trigger-dependent trigger
If determined transition expected time does not exist, value of conditional transition is used.
Impossible if MN < MX < MNc. For (Y/N) branching, only N is left as transition path.
Complete establishment if MXc <= MN < MX. For (Y/N) branching, only Y is left as transition path.
Expected time for Y transition (positive value transition) is (MN/MNc | MN < MNc MX/MNc | MX < MNc)
Expected time for N transition is (MN/MXc | MXc <= MN MX/MXc | MXc <= MX)
In case of dependent trigger, trigger that receives determined with generation trigger as condition is adopted.

FIG. 67

$ Focus comparison zone inside/outside transition check

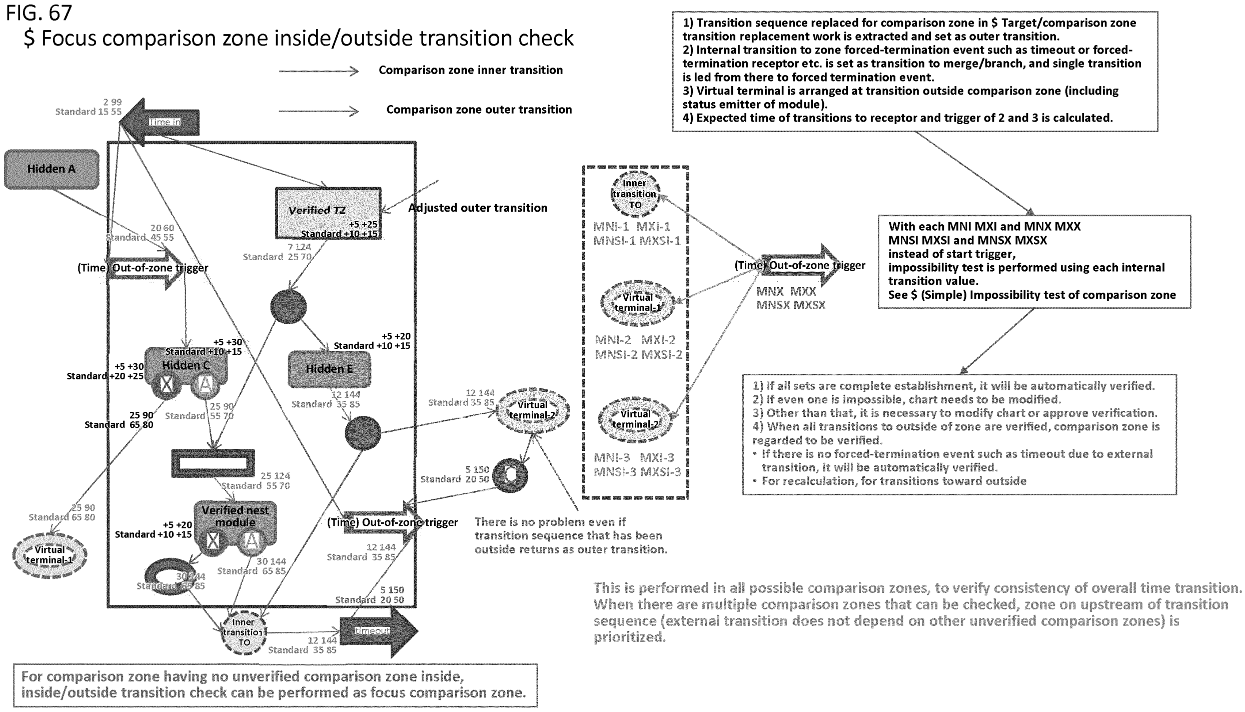

FIG. 68

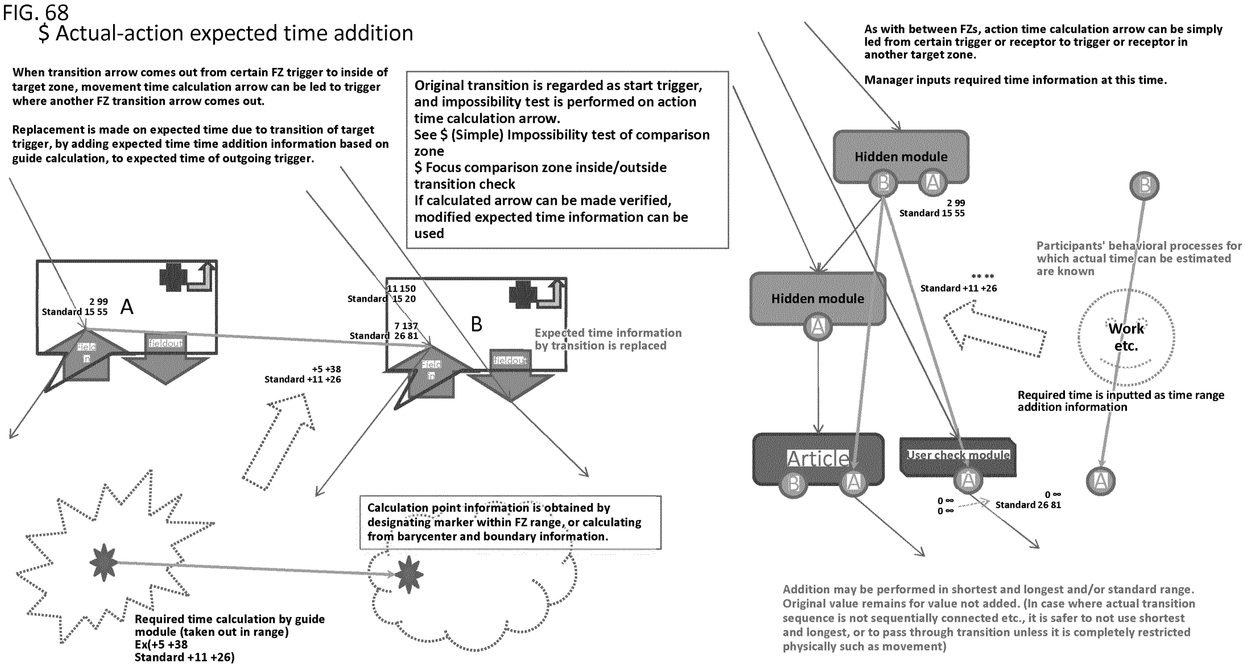
$ Actual-action expected time addition
When transition arrow comes out from certain FZ trigger to inside of target zone, movement time calculation arrow can be led to trigger where another FZ transition arrow comes out.
Replacement is made on expected time due to transition of target trigger, by adding expected time time addition information based on guide calculation, to expected time of outgoing trigger.
Original transition is regarded as start trigger, and impossibility test is performed on action time calculation arrow.
See $ (Simple) Impossibility test of comparison zone
$ Focus comparison zone inside/outside transition check
If calculated arrow can be made verified, modified expected time information can be used
2 99
Standard 15 55
A
Field in
fieldout
11 150
Standard 15 20
7 137
Standard 26 81
B
Field in
fieldout
Expected time information by transition is replaced
+5 +38
Standard +11 +26
Calculation point information is obtained by designating marker within FZ range, or calculating from barycenter and boundary information.
Required time calculation by guide module (taken out in range)
Ex(+5 +38
Standard +11 +26)
As with between FZs, action time calculation arrow can be simply led from certain trigger or receptor to trigger or receptor in another target zone.
Manager inputs required time information at this time.
Hidden module
B
A
2 99
Standard 15 55
B
Participants' behavioral processes for which actual time can be estimated are known
Hidden module
A
** **
Standard +11 +26
Work etc.
Required time is inputted as time range addition information
Article
B
A
User check module
A
A
0 ∞
0 ∞
0 ∞
Standard 26 81
Addition may be performed in shortest and longest and/or standard range. Original value remains for value not added. (In case where actual transition sequence is not sequentially connected etc., it is safer to not use shortest and longest, or to pass through transition unless it is completely restricted physically such as movement)

FIG. 69

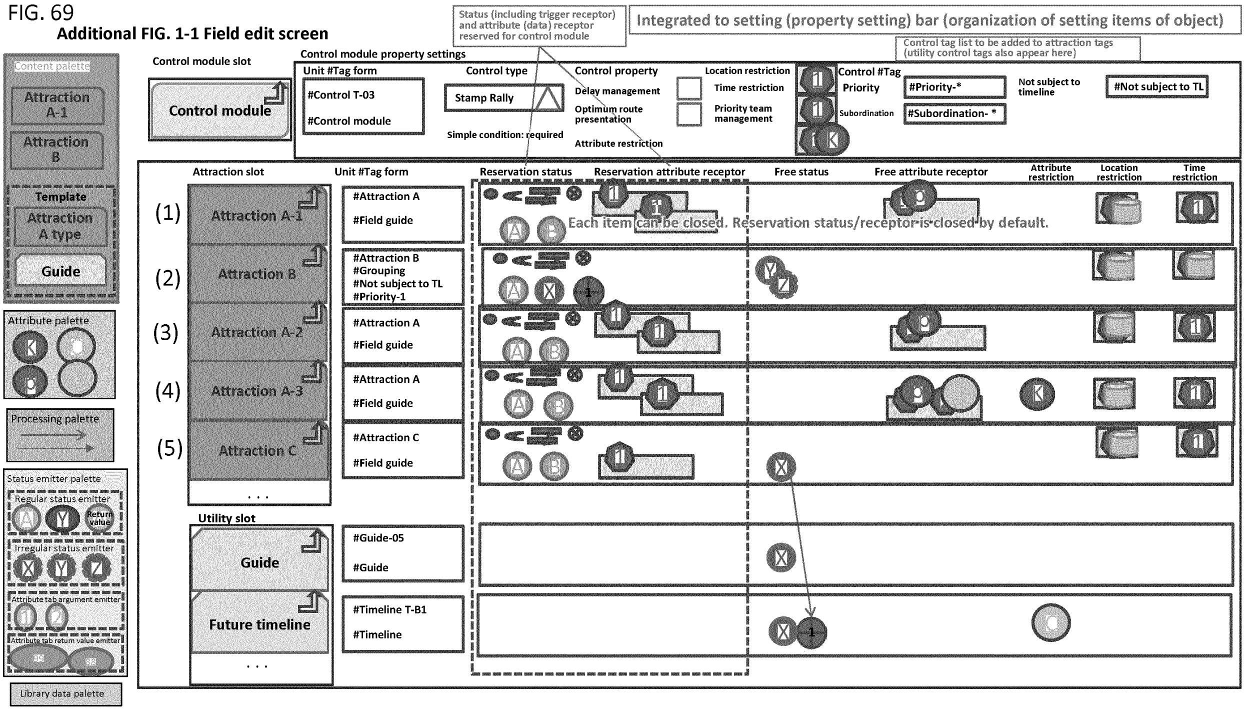
Additional FIG. 1-1 Field edit screen
Status (including trigger receptor) and attribute (data) receptor reserved for control module
Integrated to setting (property setting) bar (organization of setting items of object)
Control tag list to be added to attraction tags (utility control tags also appear here)
Content palette
Attraction A-1
Attraction B
Template
Attraction A type
Guide
Attribute palette
Processing palette
Status emitter palette
Regular status emitter
Return value
Irregular status emitter
Attribute tab argument emitter
Attribute tab return value emitter
Library data palette
Control module slot
Control module
Control module property settings
Unit #Tag form
#Control T-03
#Control module
Control type
Stamp Rally
Simple condition: required
Control property
Delay management
Optimum route presentation
Attribute restriction
Location restriction
Time restriction
Priority team management
Control #Tag
Priority
#Priority-*
Subordination
#Subordination- *
Not subject to timeline
#Not subject to TL
Attraction slot
Unit #Tag form
Reservation status
Reservation attribute receptor
Free status
Free attribute receptor
Attribute restriction
Location restriction
Time restriction
(1)
Attraction A-1
#Attraction A
#Field guide
Each item can be closed. Reservation status/receptor is closed by default.
(2)
Attraction B
#Attraction B
#Grouping
#Not subject to TL
#Priority-1
(3)
Attraction A-2
#Attraction A
#Field guide
(4)
Attraction A-3
#Attraction A
#Field guide
(5)
Attraction C
#Attraction C
#Field guide
Utility slot
Guide
#Guide-05
#Guide
Future timeline
#Timeline T-B1
#Timeline

FIG. 70 **Additional FIG. 1-2 Field structure schematic view**

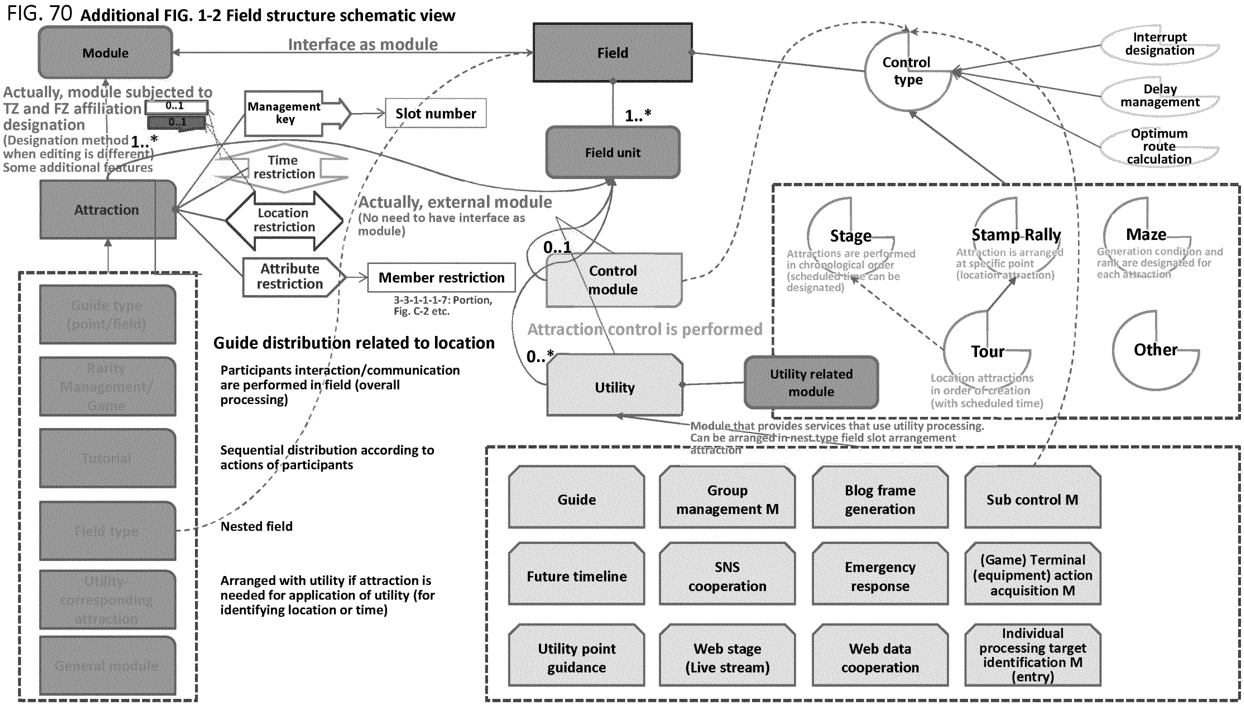

FIG. 71 **Additional FIG. 1-3 Control module property details**

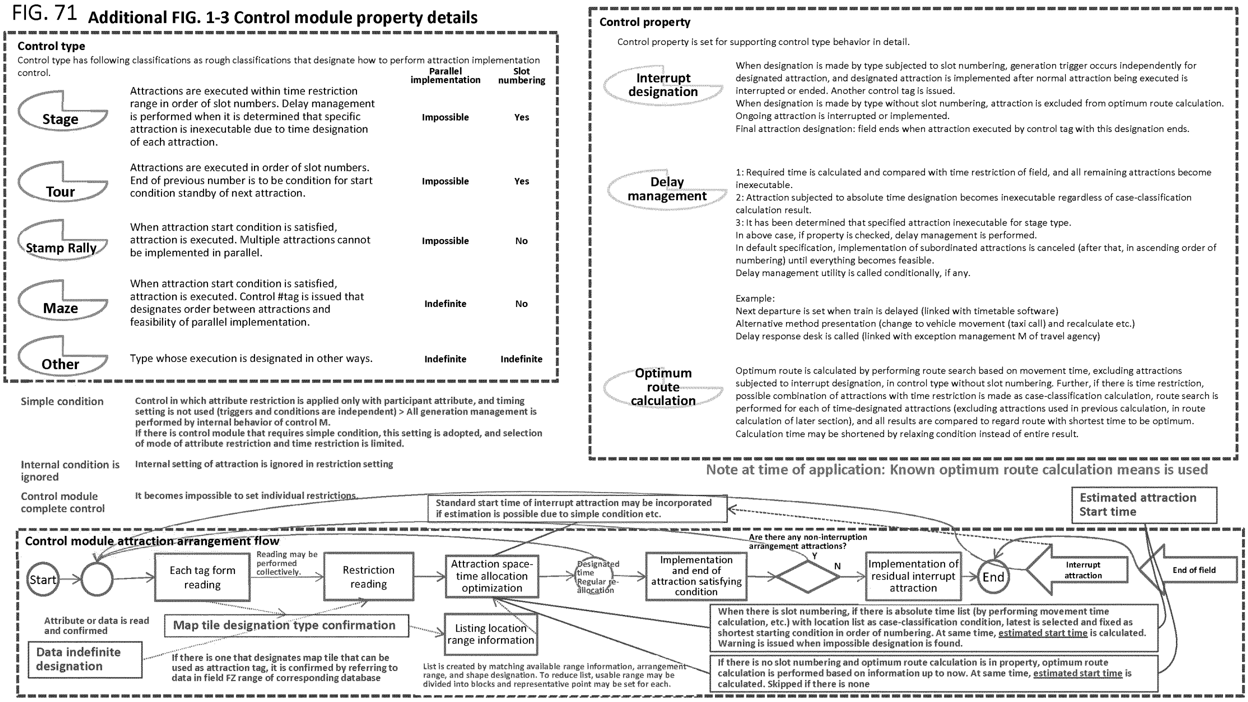

FIG. 72

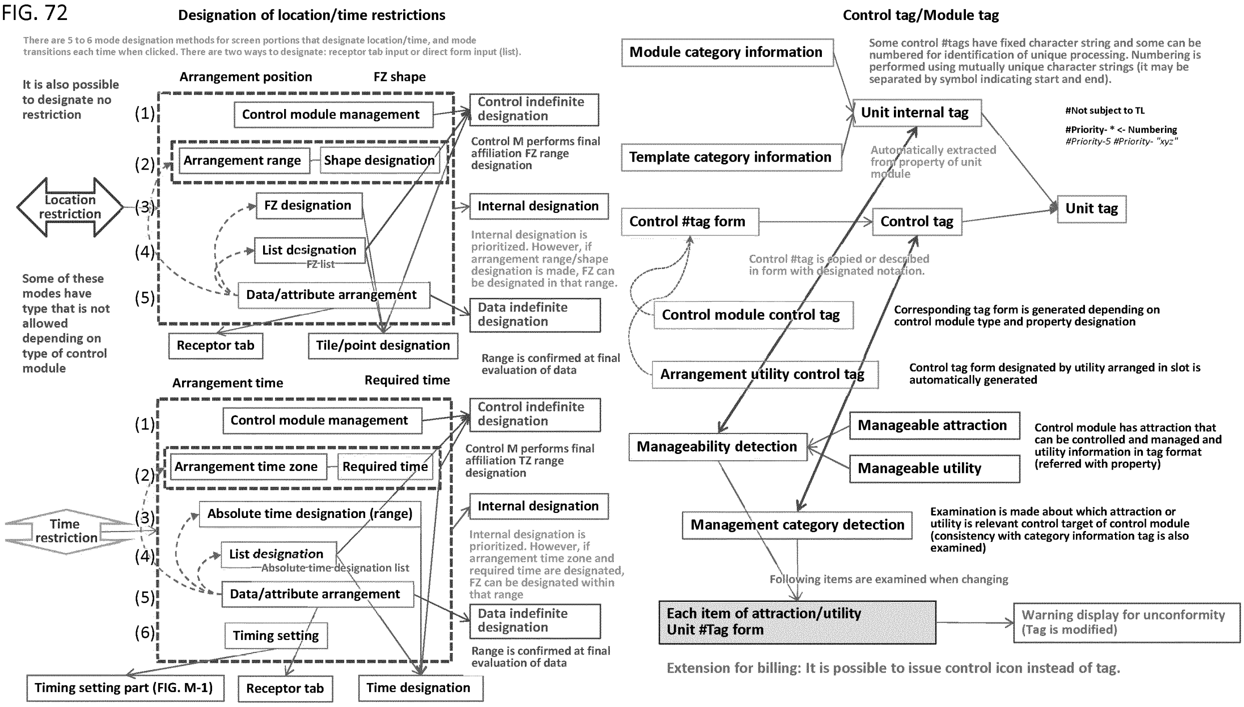
Designation of location/time restrictions
There are 5 to 6 mode designation methods for screen portions that designate location/time, and mode transitions each time when clicked. There are two ways to designate: receptor tab input or direct form input (list).
It is also possible to designate no restriction
Arrangement position
FZ shape
(1)
Control module management
Control indefinite designation
(2)
Arrangement range
Shape designation
Control M performs final affiliation FZ range designation
Location restriction
(3)
FZ designation
Internal designation
(4)
List designation
FZ list
Internal designation is prioritized. However, if arrangement range/shape designation is made, FZ can be designated in that range.
Some of these modes have type that is not allowed depending on type of control module
(5)
Data/attribute arrangement
Data indefinite designation
Receptor tab
Tile/point designation
Range is confirmed at final evaluation of data
Arrangement time
Required time
(1)
Control module management
Control indefinite designation
(2)
Arrangement time zone
Required time
Control M performs final affiliation TZ range designation
Time restriction
(3)
Absolute time designation (range)
Internal designation
(4)
List designation
Absolute time designation list
Internal designation is prioritized. However, if arrangement time zone and required time are designated, FZ can be designated within that range
(5)
Data/attribute arrangement
Data indefinite designation
(6)
Timing setting
Range is confirmed at final evaluation of data
Timing setting part (FIG. M-1)
Receptor tab
Time designation
Control tag/Module tag
Module category information
Some control #tags have fixed character string and some can be numbered for identification of unique processing. Numbering is performed using mutually unique character strings (it may be separated by symbol indicating start and end).
Unit internal tag
#Not subject to TL
#Priority- * <- Numbering
#Priority-5 #Priority- "xyz"
Template category information
Automatically extracted from property of unit module
Control #tag form
Control tag
Unit tag
Control #tag is copied or described in form with designated notation.
Control module control tag
Corresponding tag form is generated depending on control module type and property designation
Arrangement utility control tag
Control tag form designated by utility arranged in slot is automatically generated
Manageable attraction
Manageability detection
Manageable utility
Control module has attraction that can be controlled and managed and utility information in tag format (referred with property)
Management category detection
Examination is made about which attraction or utility is relevant control target of control module (consistency with category information tag is also examined)
Following items are examined when changing
Each item of attraction/utility
Unit #Tag form
Warning display for unconformity
(Tag is modified)
Extension for billing: It is possible to issue control icon instead of tag.

FIG. 73

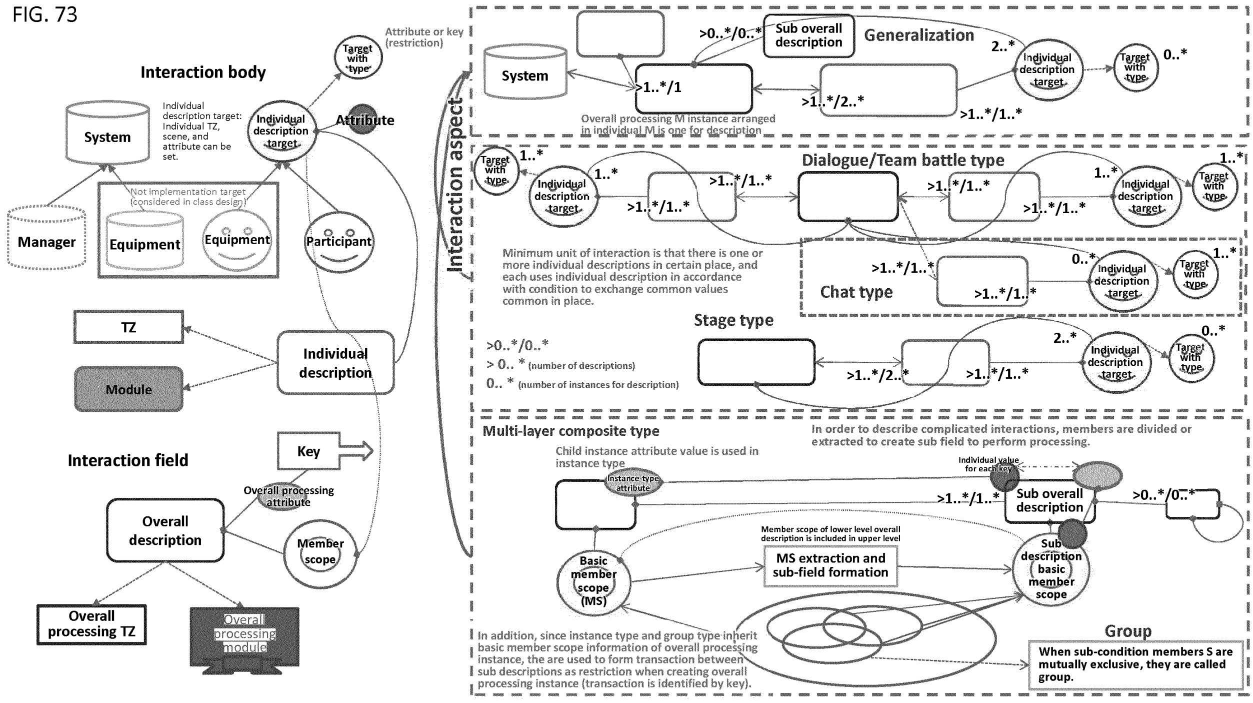
Interaction body
System
Manager
Equipment
Equipment
Participant
Not implementation target (considered in class design)
Individual description target: Individual TZ, scene, and attribute can be set.
Individual description target
Target with type
Attribute or key (restriction)
Attribute
TZ
Module
Individual description
Interaction field
Key
Overall processing attribute
Overall description
Member scope
Overall processing TZ
Overall processing module
Interaction aspect
System
>0..*/0..*
Sub overall description
Generalization
2..*
0..*
>1..*/1
>1..*/2..*
>1..*/1..*
Overall processing M instance arranged in individual M is one for description
Dialogue/Team battle type
1..*
>1..*/1..*
>1..*/1..*
>1..*/1..*
>1..*/1..*
Minimum unit of interaction is that there is one or more individual descriptions in certain place, and each uses individual description in accordance with condition to exchange common values common in place.
Chat type
>1..*/1..*
>1..*/1..*
0..*
Stage type
>0..*/0..*
> 0.. * (number of descriptions)
0.. * (number of instances for description)
>1..*/2..*
>1..*/1..*
2..*
Multi-layer composite type
Child instance attribute value is used in instance type
In order to describe complicated interactions, members are divided or extracted to create sub field to perform processing.
Instance-type attribute
Individual value for each key
>1..*/1..*
Sub overall description
>0..*/0..*
Member scope of lower level overall description is included in upper level
Basic member scope (MS)
MS extraction and sub-field formation
Sub description basic member scope
In addition, since instance type and group type inherit basic member scope information of overall processing instance, the are used to form transaction between sub descriptions as restriction when creating overall processing instance (transaction is identified by key).
Group
When sub-condition members S are mutually exclusive, they are called group.

FIG. 74

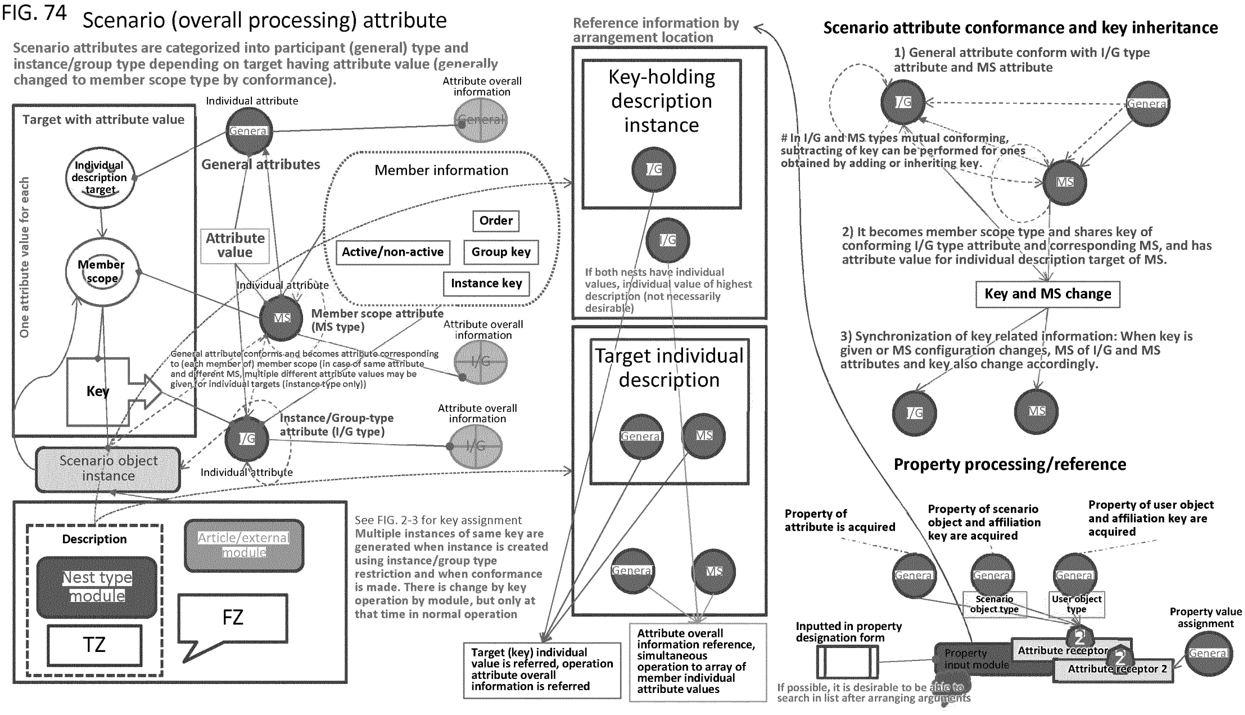
Scenario (overall processing) attribute
Scenario attributes are categorized into participant (general) type and instance/group type depending on target having attribute value (generally changed to member scope type by conformance).
Target with attribute value
One attribute value for each
Individual description target
Member scope
Key
Scenario object instance
Individual attribute
General attributes
Attribute value
Attribute overall information
Member information
Order
Active/non-active
Group key
Instance key
Member scope attribute (MS type)
Instance/Group-type attribute (I/G type)
Description
Nest type module
Article/external module
TZ
FZ
See FIG. 2-3 for key assignment
Multiple instances of same key are generated when instance is created using instance/group type restriction and when conformance is made. There is change by key operation by module, but only at that time in normal operation
Reference information by arrangement location
Key-holding description instance
If both nests have individual values, individual value of highest description (not necessarily desirable)
Target individual description
Target (key) individual value is referred, operation attribute overall information is referred
Attribute overall information reference, simultaneous operation to array of member individual attribute values
Scenario attribute conformance and key inheritance
1) General attribute conform with I/G type attribute and MS attribute
# In I/G and MS types mutual conforming, subtracting of key can be performed for ones obtained by adding or inheriting key.
2) It becomes member scope type and shares key of conforming I/G type attribute and corresponding MS, and has attribute value for individual description target of MS.
Key and MS change
3) Synchronization of key related information: When key is given or MS configuration changes, MS of I/G and MS attributes and key also change accordingly.
Property processing/reference
Property of attribute is acquired
Property of scenario object and affiliation key are acquired
Property of user object and affiliation key are acquired
Scenario object type
User object type
Property value assignment
Inputted in property designation form
Property input module
Attribute receptor
Attribute receptor 2
If possible, it is desirable to be able to search in list after arranging arguments

FIG. 75

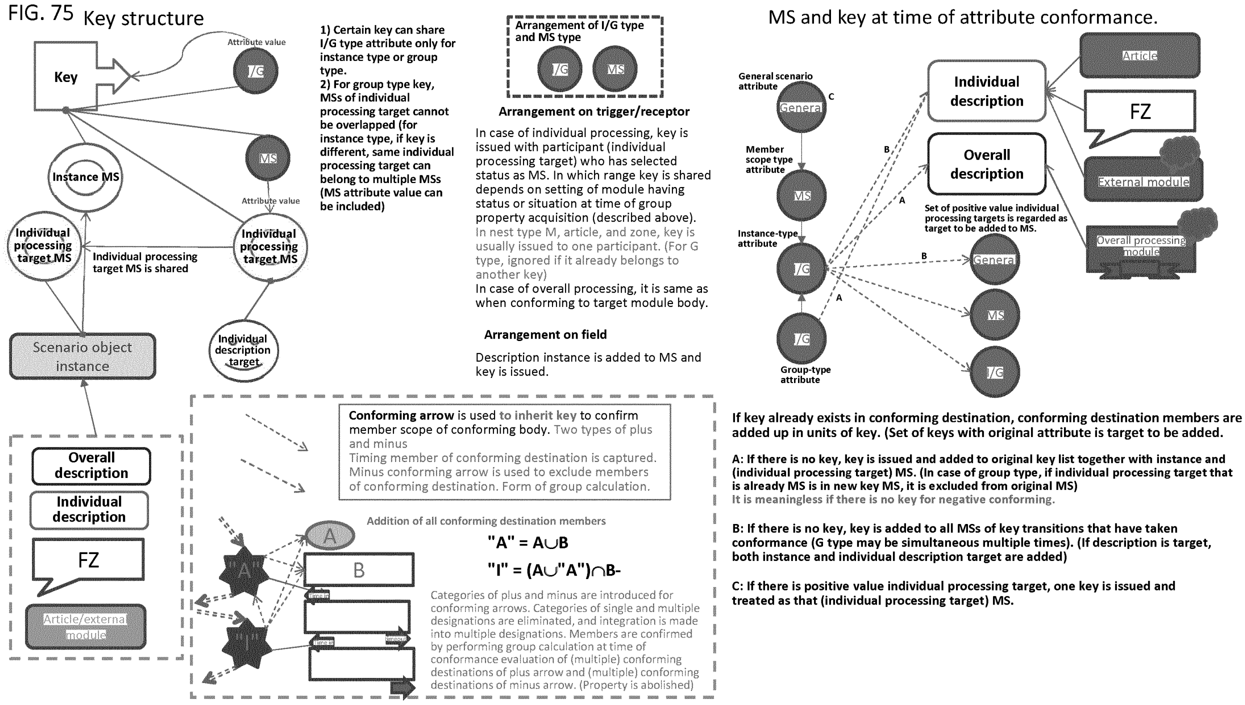
Key structure
Attribute value
Key
I/G
MS
Attribute value
Instance MS
Individual processing target MS
Individual processing target MS is shared
Individual processing target MS
Scenario object instance
Individual description target
Overall description
Individual description
FZ
Article/external module
1) Certain key can share I/G type attribute only for instance type or group type.
2) For group type key, MSs of individual processing target cannot be overlapped (for instance type, if key is different, same individual processing target can belong to multiple MSs (MS attribute value can be included)
Arrangement of I/G type and MS type
I/G
MS
Arrangement on trigger/receptor
In case of individual processing, key is issued with participant (individual processing target) who has selected status as MS. In which range key is shared depends on setting of module having status or situation at time of group property acquisition (described above).
In nest type M, article, and zone, key is usually issued to one participant. (For G type, ignored if it already belongs to another key)
In case of overall processing, it is same as when conforming to target module body.
Arrangement on field
Description instance is added to MS and key is issued.
Conforming arrow is used to inherit key to confirm member scope of conforming body. Two types of plus and minus
Timing member of conforming destination is captured.
Minus conforming arrow is used to exclude members of conforming destination. Form of group calculation.
Addition of all conforming destination members
"A" = A∪B
"I" = (A∪"A")∩B-
A
B
"A"
"I"
Time in
Time in
Timeout
Categories of plus and minus are introduced for conforming arrows. Categories of single and multiple designations are eliminated, and integration is made into multiple designations. Members are confirmed by performing group calculation at time of conformance evaluation of (multiple) conforming destinations of plus arrow and (multiple) conforming destinations of minus arrow. (Property is abolished)
MS and key at time of attribute conformance.
General scenario attribute
Genera
C
Member scope type attribute
MS
Instance-type attribute
I/G
I/G
Group-type attribute
A
B
A
B
Individual description
Overall description
Set of positive value individual processing targets is regarded as target to be added to MS.
Genera
MS
I/G
Article
FZ
External module
Overall processing module
If key already exists in conforming destination, conforming destination members are added up in units of key. (Set of keys with original attribute is target to be added.
A: If there is no key, key is issued and added to original key list together with instance and (individual processing target) MS. (In case of group type, if individual processing target that is already MS is in new key MS, it is excluded from original MS)
It is meaningless if there is no key for negative conforming.
B: If there is no key, key is added to all MSs of key transitions that have taken conformance (G type may be simultaneous multiple times). (If description is target, both instance and individual description target are added)
C: If there is positive value individual processing target, one key is issued and treated as that (individual processing target) MS.

FIG. 76 Transition in overall processing

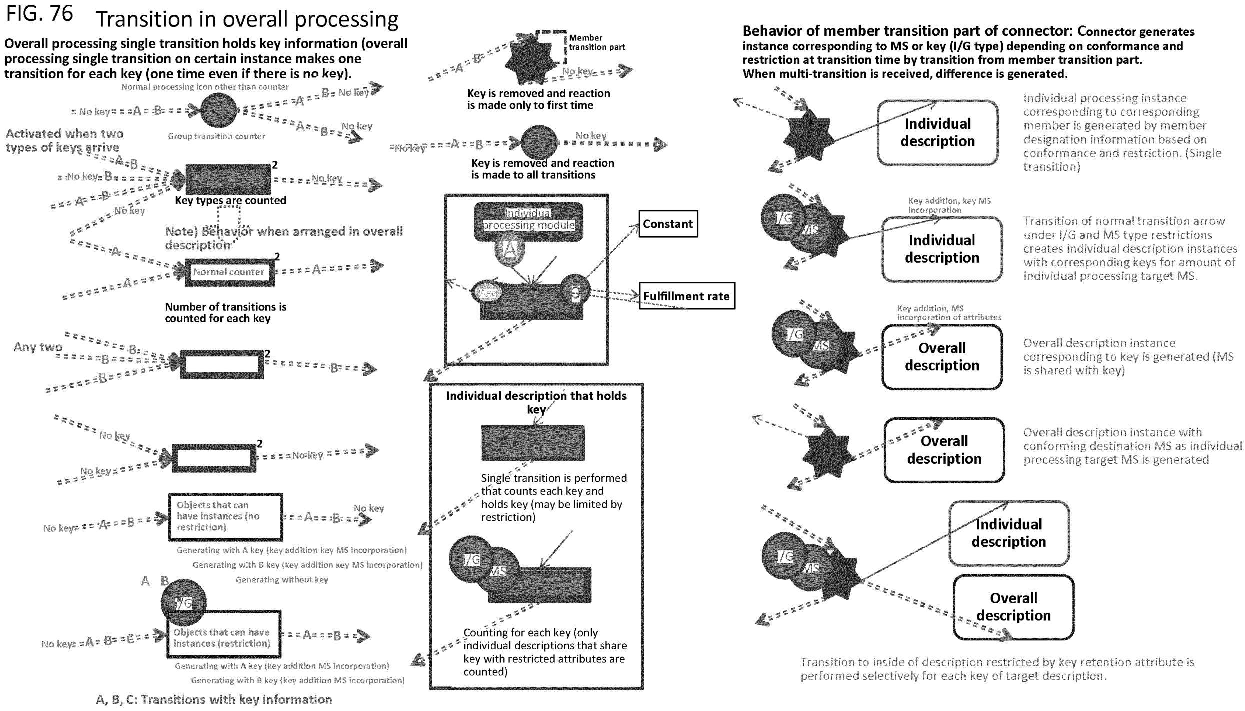

FIG. 77

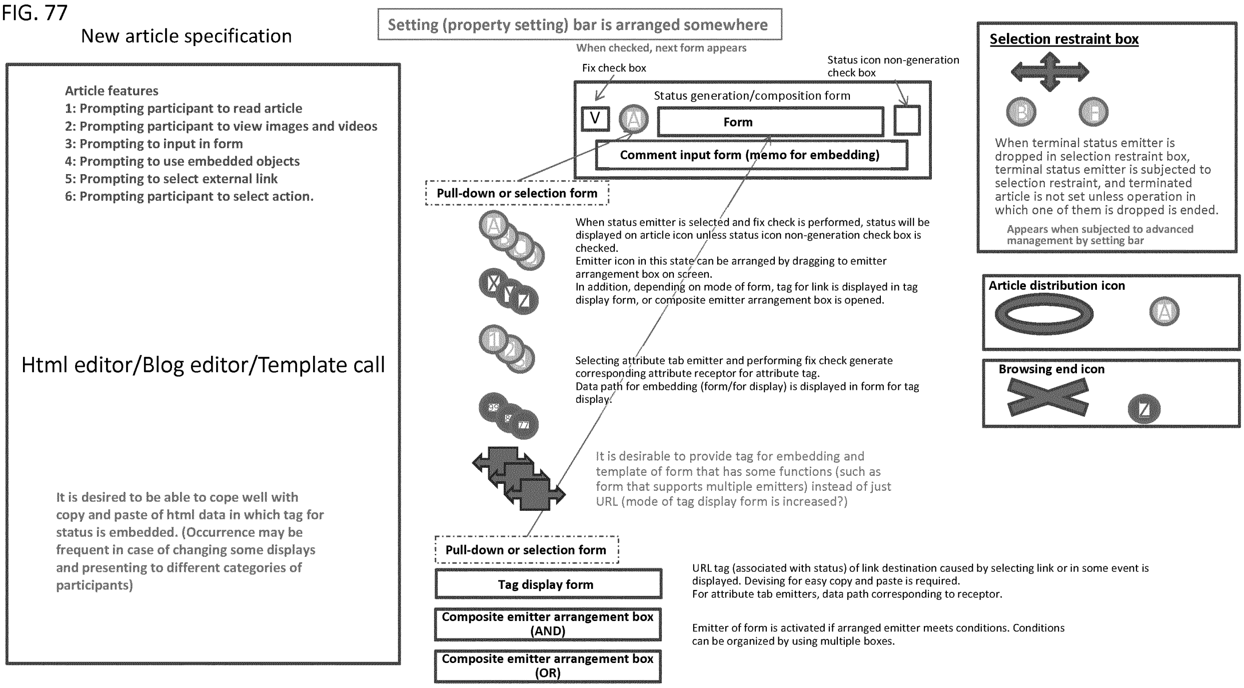
New article specification
Article features
1: Prompting participant to read article
2: Prompting participant to view images and videos
3: Prompting to input in form
4: Prompting to use embedded objects
5: Prompting to select external link
6: Prompting participant to select action.
Html editor/Blog editor/Template call
It is desired to be able to cope well with copy and paste of html data in which tag for status is embedded. (Occurrence may be frequent in case of changing some displays and presenting to different categories of participants)
Setting (property setting) bar is arranged somewhere
When checked, next form appears
Fix check box
Status icon non-generation check box
Status generation/composition form
V
Form
Comment input form (memo for embedding)
Pull-down or selection form
When status emitter is selected and fix check is performed, status will be displayed on article icon unless status icon non-generation check box is checked.
Emitter icon in this state can be arranged by dragging to emitter arrangement box on screen.
In addition, depending on mode of form, tag for link is displayed in tag display form, or composite emitter arrangement box is opened.
Selecting attribute tab emitter and performing fix check generate corresponding attribute receptor for attribute tag.
Data path for embedding (form/for display) is displayed in form for tag display.
It is desirable to provide tag for embedding and template of form that has some functions (such as form that supports multiple emitters) instead of just URL (mode of tag display form is increased?)
Pull-down or selection form
Tag display form
URL tag (associated with status) of link destination caused by selecting link or in some event is displayed. Devising for easy copy and paste is required.
For attribute tab emitters, data path corresponding to receptor.
Composite emitter arrangement box (AND)
Composite emitter arrangement box (OR)
Emitter of form is activated if arranged emitter meets conditions. Conditions can be organized by using multiple boxes.
Selection restraint box
When terminal status emitter is dropped in selection restraint box, terminal status emitter is subjected to selection restraint, and terminated article is not set unless operation in which one of them is dropped is ended.
Appears when subjected to advanced management by setting bar
Article distribution icon
Browsing end icon

FIG. 78

Emitter and status

Field zone range designation

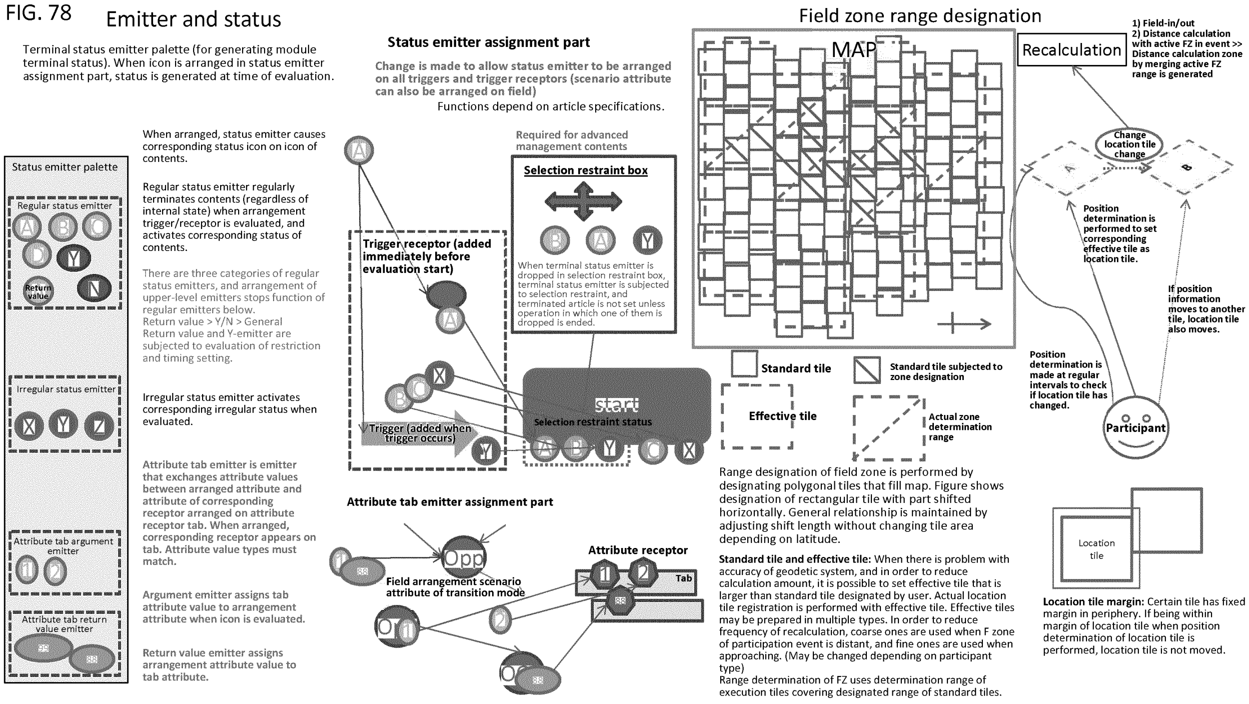

FIG. 79

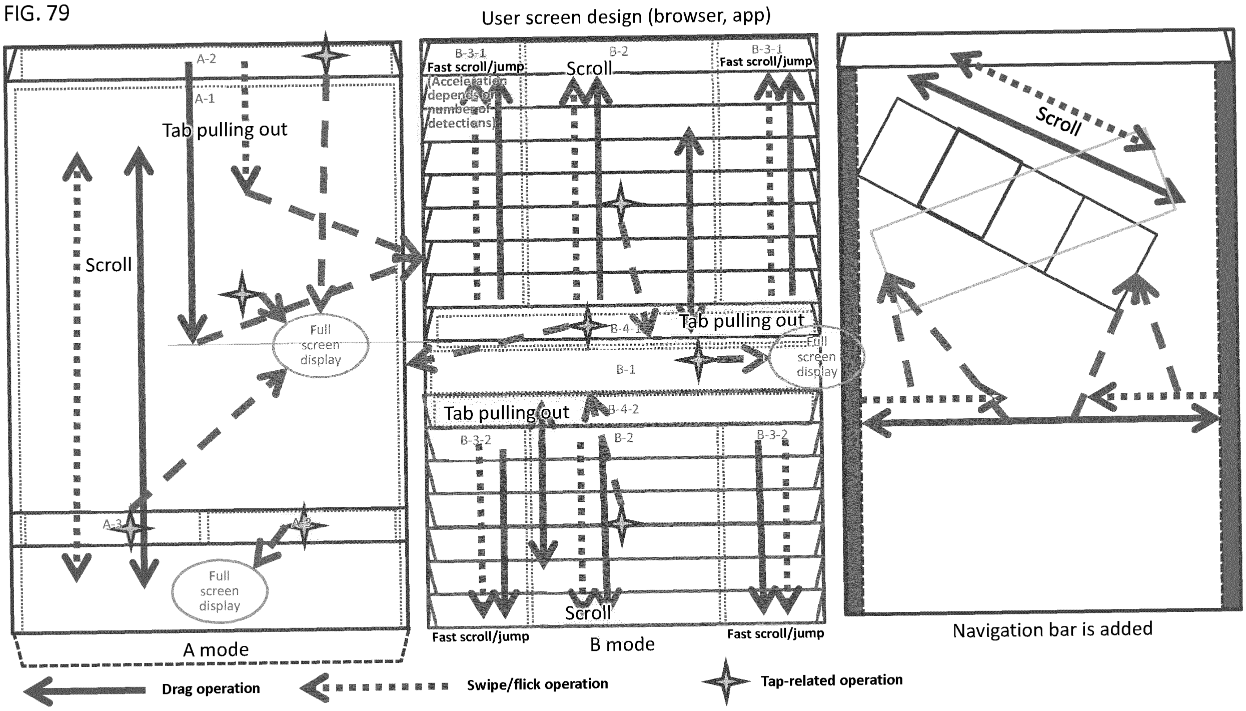
User screen design (browser, app)
A-2
A-1
Tab pulling out
Scroll
Full screen display
A-3
A-3
Full screen display
A mode
B-3-1
Fast scroll/jump
(Acceleration depends on number of detections)
B-2
Scroll
B-3-1
Fast scroll/jump
B-4-1
Tab pulling out
Full screen display
B-1
Tab pulling out
B-4-2
B-3-2
B-2
B-3-2
Scroll
Fast scroll/jump
B mode
Fast scroll/jump
Scroll
Navigation bar is added
Drag operation
Swipe/flick operation
Tap-related operation

FIG. 80

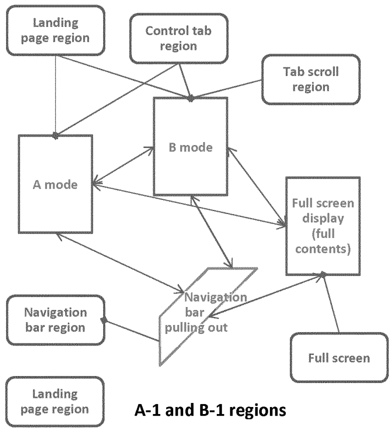


Landing page region

**A-1 and B-1 regions**

1) Pages subjected to display selection are arranged vertically in landing type.
2) Pages are moved by up/down dragging, flicking, and swiping.
3) Interval region to indicate page break is inserted between pages (A-3/Description is made to show which is indicated by upper and lower page names).
4) Tapping name part, screen, or tab changes corresponding screen to full screen display (corresponding to full contents display).

Full screen

On full screen, only selected page is displayed. Close button is arranged at end of screen at thumb position.

Control tab region

**A-2 and B-4 (-1/-2) regions**

Common behavior
1) Title display of page having largest area in displayed landing page region

A-mode behavior
1) Changing to full screen display by tap
2) Transitioning to B mode with downward swipe operation, and displaying page region with previous width
3) Transitioning to B mode by dragging downward, and displaying page with width when released

B-mode behavior
1) Transitioning to A mode by tap and up/down flick operation
2) Adjusting page width by dragging up/down

Tab scroll region

**B-2 and B-3 regions**

Tabs of pages subjected to display selection are arranged vertically. Shape (direction) of tab icon changes at top and bottom of center page.
When tab scrolls up and down, currently selected page is switched one after another.

Common behavior
2) Tab scrolls by amount of dragging up/down

B-2 Behavior
1) Tapping any tab sets page as currently selected page.
2) Swiping up and down scrolls certain amount of page with that strength

B-3 Behavior
1) Swiping up and down causes scroll at high speed
2) Speeding up at multiple times, jumping to end page at certain times
3) Canceled by any other operation

Navigation bar region

**Navigation bar is added**

Navigation bar is arranged diagonally to enable smooth scroll with thumb operation. Direction is opposite to pulling-out side.

Pulling-out and storage
1) For horizontal operation from side end, navigation bar is pulled out from end, and stored by performing operation in horizontal direction when it appears.
2) In dragging, direction changes gradually and angle at time of opening is stored. Pulling out with other operations is performed at that angle (left-right inversion)

Operation
1) Navigation bar is scrolled by swipe or drag on navigation bar in extension direction.
2) Transition is done by tap-related operation

**Items displayed in navigation bar are all-screen common navigation items + common navigation items by transition + search band (below)**
**Navigation bar can be selected by scrolling in developing and widening direction. (Number of buttons displayed at once is reduced)**

Search band display items
1: Check box
Persona-management-related common navigation: Displaying, Standby, Participating, Invited, Event Log, Local Entry
Started event common navigation: Displaying, Standby, Participating, Log P
Post-participation event common navigation: Displaying (Special P), Log P, Participating event, Invited event, Event log, Local entry
Other events common navigation: Participating event, Invited event, Event log, Local entry
Only checked targets are displayed
Display target of each P follows transition in FIG. 2-1. Local entry displays invited events popped out via Local entry.
2: Keyword search window: For tag name search
Content list
<2-5-1: Displayed content list
<2-5-2: Standby content list
Event list
<2-5-3: Participating event list
<2-5-4: Invited event list
<2-5-5: Event log list
Participation event contents list
<2-5-6: Participation event displayed contents
<2-5-7: Participation event standby contents
<2-5-8: Participation event contents log

**INTERNATIONAL SEARCH REPORT**

International application No.
PCT/JP2018/048118

A. CLASSIFICATION OF SUBJECT MATTER
Int.Cl. G06Q50/10(2012.01)i

According to International Patent Classification (IPC) or to both national classification and IPC

B. FIELDS SEARCHED

Minimum documentation searched (classification system followed by classification symbols)
Int.Cl. G06Q50/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-80785 A (FUGAKU TSUUN KK) 16 April 2009, entire text (Family: none) | 1-33 |
| A | JP 2009-176269 A (FUGAKU TSUUN KK) 06 August 2009, entire text (Family: none) | 1-33 |
| A | US 2016/0041894 A1 (MICROSOFT CORPORATION) 11 February 2016, entire text (Family: none) | 1-33 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31.01.2019 | 12.02.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5158302 B
- JP 5072003 B
- JP 5182854 B
- JP 2009176269 A